# EUROPEAN PATENT APPLICATION

(11) **EP 4 852 567 A1**
(43) Date of publication of application: **09.12.2026**
(21) Application number: 25767224.6
(22) Date of filing: 25.02.2025
(51) Int. Cl.: H04W 72/0453

(54) **COMMUNICATION METHOD, APPARATUS AND SYSTEM**

(30) Priority: 04.03.2024 CN 202410246296
(71) Applicant: HUAWEI TECHNOLOGIES CO., LTD., Shenzhen, Guangdong 518129 (CN)
(72) Inventor: GONG, Bo, Shenzhen, Guangdong 518129 (CN); GAN, Ming, Shenzhen, Guangdong 518129 (CN)
(74) Representative: Huawei European IPR
(86) International application number: PCT/CN2025/079051
(87) International publication number: WO 2025/185484

(57) **Abstract**

This application relates to the field of wireless communication technologies, and in particular, to a communication method, apparatus, and system. In this application, a tone plan corresponding to a first bandwidth may include two 996-tone DRUs, four 484-tone DRUs, eight 242-tone DRUs, or sixteen 106-tone DRUs. In this application, the tone plan corresponding to the first bandwidth is improved, so that each DRU can achieve a higher power amplification factor, thereby improving a transmit power of the communication apparatus. This application may support IEEE protocols such as IEEE 802.11be/Wi-Fi 7/EHT, IEEE 802.11bn/UHR/Wi-Fi 8, the IEEE 802.15/UWB, IEEE 802.11bf/sensing, and millimeter-wave MMW.

## Description

This application claims priority to Chinese Patent Application No. 202410246296.9, filed with the China National Intellectual Property Administration on March 4, 2024, and entitled "COMMUNICATION METHOD, APPARATUS, AND SYSTEM", which is incorporated herein by reference in its entirety.

### TECHNICAL FIELD

This application relates to the field of wireless communication technologies, and in particular, to a communication method, apparatus, and system.

### BACKGROUND

The European Telecommunications Standards Institute (European Telecommunications Standards Institute, ETSI) has released regulations on a 6 GHz spectrum, which limit a maximum transmit power to 23 dBm (decibel-milliwatts, dBm) and a maximum power spectral density to 10 dBm/MHz (decibel-milliwatts/megahertz, dBm/MHz). The Federal Communications Commission has also issued regulations on the 6 GHz spectrum, which define a low power indoor (low power indoor, LPI) communication mode and impose strict limits on the maximum transmit power and a maximum frequency spectral density. For an access point (access point, AP), a maximum transmit power is limited to 30 dBm, and a maximum power spectral density is limited to 5 dBm/MHz. For a station (Station, STA), a maximum transmit power is limited to 24 dBm, and a maximum power spectral density is limited to -1 dBm/MHz. A transmit power of a device is limited by both a maximum power and a maximum power spectral density. In other words, the transmit power cannot exceed the maximum power, and a sent power spectral density (power spectral density, PSD) cannot exceed the maximum power spectral density. Compared with that of the maximum power, a limit of the maximum power spectral density is stricter; and an allowed maximum transmit power is generally more limited by the power spectral density. For the station, when a bandwidth is 320 MHz, a transmit power of the station reaches a specified maximum power limit.. When the bandwidth is less than 320 MHz, due to the limit of the maximum power spectral density, the station can only use a lower power (which means a power lower than a specified maximum power herein) for transmission.

Based on this, a distributed resource unit (distributed resource unit, DRU) technology is proposed to increase the transmit power. A basic idea of the DRU is to discretize contiguous tones in a resource unit (resource unit, RU) onto a bandwidth as wide as possible, to reduce a quantity of tones in 1 MHz, thereby increasing a transmit power of each tone and further increasing a total transmit power.

Therefore, how to design a specific tone plan (tone plan) becomes an urgent problem to be resolved.

### SUMMARY

Embodiments of this application provide a communication method, apparatus, and system, which not only improve a tone plan at 160 MHz, but also enable each DRU to achieve a higher power amplification factor.

According to a first aspect, an embodiment of this application provides a communication method. The method includes:
sending or receiving an orthogonal frequency division multiplexing (orthogonal frequency division multiplexing, OFDM) symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 996-tone DRU 1 is distributed in the first data pilot area, the second data pilot area, the third data pilot area, and the fourth data pilot area, and the 996-tone DRU 1 includes tones whose indexes are even numbers in the first data pilot area, the second data pilot area, the third data pilot area, and the fourth data pilot area; and a 996-tone DRU 2 is distributed in the first data pilot area, the second data pilot area, the third data pilot area, and the fourth data pilot area, and the 996-tone DRU 2 includes tones whose indexes are odd numbers in the first data pilot area, the second data pilot area, the third data pilot area, and the fourth data pilot area.

In this embodiment of this application, the two 996-tone DRUs designed in the four data pilot areas can achieve a higher power amplification factor, thereby increasing a transmit power of a communication apparatus.

In a possible implementation, indexes of the first data pilot area are [-1012:-515], indexes of the second data pilot area are [-509:-12], indexes of the third data pilot area are [12:509], and indexes of the fourth data pilot area are [515:1012].

In this embodiment of this application, the areas are divided in the foregoing division manner, so that each of the four data pilot areas may include 498 tones, and a quantity of tones of the 996-tone DRU 1 or the 996-tone DRU 2 in each of the four data pilot areas may be 249. Therefore, 498 tones in each data pilot area may be used to design the 996-tone DRUs, thereby improving tone utilization efficiency.

According to a second aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 484-tone DRU 1, a 484-tone DRU 2, a 484-tone DRU 3, and a 484-tone DRU 4 are all distributed in the first data pilot area, the second data pilot area, the third data pilot area, and the fourth data pilot area; and the 484-tone DRU 1 to the 484-tone DRU 4 meet at least one of the following: An index difference between adjacent tones, of any one of the 484-tone DRU 1 to the 484-tone DRU 4, distributed in the first data pilot area is 4, an index difference between adjacent tones, of the any 484-tone DRU, distributed in the second data pilot area is 4, an index difference between adjacent tones, of the any 484-tone DRU, distributed in the third data pilot area is 4, and an index difference between adjacent tones, of the any 484-tone DRU, distributed in the fourth data pilot area is 4; and a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

In this embodiment of this application, the 484-tone DRUs can achieve a higher power amplification factor by meeting the foregoing conditions, so that a transmit power of a communication apparatus is improved. In addition, it ensures that the four 484-tone DRUs form an overall shifting relationship, thereby facilitating index storage and reading and simplifying sequence design.

In a possible implementation, the any 484-tone DRU includes 120 tones or 122 tones in the first data pilot area; the any 484-tone DRU includes 120 tones or 122 tones in the second data pilot area; the any 484-tone DRU includes 120 tones or 122 tones in the third data pilot area; and the any 484-tone DRU includes 120 tones or 122 tones in the fourth data pilot area.

In this embodiment of this application, when a 242-tone DRU is designed based on a 484-tone DRU meeting the foregoing condition, p^{th} tones of 242-tone DRUs corresponding to the 484-tone DRU are contiguous, where p∈[1, 242]. In this way, the 242-tone DRUs form an overall shifting relationship, which facilitates index storage and reading.

In a possible implementation, for the any 484-tone DRU, a difference between an index of a last tone of the 484-tone DRU in the first data pilot area and an index of a first tone of the 484-tone DRU in the second data pilot area is an integer multiple of 4, a difference between an index of a last tone of the 484-tone DRU in the second data pilot area and an index of a first tone of the 484-tone DRU in the third data pilot area is an integer multiple of 4, and a difference between an index of a last tone of the 484-tone DRU in the third data pilot area and an index of a first tone of the 484-tone DRU in the fourth data pilot area is an integer multiple of 4.

In this embodiment of this application, the 484-tone DRU may ensure that a peak to average power ratio (peak to average power ratio, PAPR) of the 484-tone DRU is relatively low by meeting the foregoing condition.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 484-tone DRU includes 120 tones in the first data pilot area includes:
indexes of 120 tones of the 484-tone DRU 1 in the first data pilot area are $\left[-1012:4:-536\right] + {k}_{1}^{1}$ ,
indexes of 120 tones of the 484-tone DRU 2 in the first data pilot area are $\left[-1010:4:-534\right] + {k}_{1}^{1}$ ,
indexes of 120 tones of the 484-tone DRU 3 in the first data pilot area are $\left[-1011:4:-535\right] + {k}_{1}^{1}$ , and
indexes of 120 tones of the 484-tone DRU 4 in the first data pilot area are $\left[-1009:4:-533\right] + {k}_{1}^{1}$ , where
${k}_{1}^{1} = 0 , 2 , 4 , 6 , 8 , 10 , 12 , 14 , 16$, or 18; or
that the any 484-tone DRU includes 122 tones in the first data pilot area includes:
   indexes of 122 tones of the 484-tone DRU 1 in the first data pilot area are $\left[-1012:4:-528\right] + {k}_{2}^{1}$ ,
   indexes of 122 tones of the 484-tone DRU 2 in the first data pilot area are $\left[-1010:4:-526\right] + {k}_{2}^{1}$ ,
   indexes of 122 tones of the 484-tone DRU 3 in the first data pilot area are $\left[-1011:4:-527\right] + {k}_{2}^{1}$ , and
   indexes of 122 tones of the 484-tone DRU 4 in the first data pilot area are $\left[-1009:4:-525\right] + {k}_{2}^{1}$ , where
   ${k}_{2}^{1} = 0 , 2 , 4 , 6 , 8$, or 10.

In a possible implementation, that the any 484-tone DRU includes 120 tones in the second data pilot area includes:
indexes of 120 tones of the 484-tone DRU 1 in the second data pilot area are $\left[-508:4:-32\right] + {k}_{1}^{2}$ ,
indexes of 120 tones of the 484-tone DRU 2 in the second data pilot area are $\left[-506:4:-30\right] + {k}_{1}^{2}$ ,
indexes of 120 tones of the 484-tone DRU 3 in the second data pilot area are $\left[-507:4:-31\right] + {k}_{1}^{2}$ , and
indexes of 120 tones of the 484-tone DRU 4 in the second data pilot area are $\left[-505:4:-29\right] + {k}_{1}^{2}$ , where
${k}_{1}^{2} = 0 , 2 , 4 , 6 , 8 , 10 , 12 , 14$, or 16; or
that the any 484-tone DRU includes 122 tones in the second data pilot area includes:
   indexes of 122 tones of the 484-tone DRU 1 in the second data pilot area are $\left[-508:4:-24\right] + {k}_{2}^{2}$ ,
   indexes of 122 tones of the 484-tone DRU 2 in the second data pilot area are $\left[-506:4:-22\right] + {k}_{2}^{2}$ ,
   indexes of 122 tones of the 484-tone DRU 3 in the second data pilot area are $\left[-507:4:-23\right] + {k}_{2}^{2}$ , and
   indexes of 122 tones of the 484-tone DRU 4 in the second data pilot area are $\left[-505:4:-21\right] + {k}_{2}^{2}$ , where
   ${k}_{2}^{2} = 0 , 2 , 4 , 6$, or 8.

In a possible implementation, that the any 484-tone DRU includes 120 tones in the third data pilot area includes:
indexes of 120 tones of the 484-tone DRU 1 in the third data pilot area are $\left[12:4:488\right] + {k}_{1}^{3}$,
indexes of 120 tones of the 484-tone DRU 2 in the third data pilot area are $\left[14:4:490\right] + {k}_{1}^{3}$,
indexes of 120 tones of the 484-tone DRU 3 in the third data pilot area are $\left[13:4:489\right] + {k}_{1}^{3}$, and
indexes of 120 tones of the 484-tone DRU 4 in the third data pilot area are $\left[15:4:491\right] + {k}_{1}^{3}$, where
${k}_{1}^{3} = 0 , 2 , 4 , 6 , 8 , 10 , 12 , 14 , 16$, or 18; or
that the any 484-tone DRU includes 122 tones in the third data pilot area includes:
   indexes of 122 tones of the 484-tone DRU 1 in the third data pilot area are $\left[12:4:496\right] + {k}_{2}^{3}$,
   indexes of 122 tones of the 484-tone DRU 2 in the third data pilot area are $\left[14:4:498\right] + {k}_{2}^{3}$,
   indexes of 122 tones of the 484-tone DRU 3 in the third data pilot area are $\left[13:4:497\right] + {k}_{2}^{3}$, and
   indexes of 122 tones of the 484-tone DRU 4 in the third data pilot area are $\left[15:4:499\right] + {k}_{2}^{3}$, where
   ${k}_{2}^{3} = 0 , 2 , 4 , 6 , 8$, or 10.

In a possible implementation, that the any 484-tone DRU includes 120 tones in the fourth data pilot area includes:
indexes of 120 tones of the 484-tone DRU 1 in the fourth data pilot area are $\left[516:4:992\right] + {k}_{1}^{4}$,
indexes of 120 tones of the 484-tone DRU 2 in the fourth data pilot area are $\left[518:4:994\right] + {k}_{1}^{4}$,
indexes of 120 tones of the 484-tone DRU 3 in the fourth data pilot area are $\left[517:4:993\right] + {k}_{1}^{4}$, and
indexes of 120 tones of the 484-tone DRU 4 in the fourth data pilot area are $\left[519:4:995\right] + {k}_{1}^{4}$, where
${k}_{1}^{4} = 0 , 2 , 4 , 6 , 8 , 10 , 12 , 14$, or 16; or
that the any 484-tone DRU includes 122 tones in the fourth data pilot area includes:
   indexes of 122 tones of the 484-tone DRU 1 in the fourth data pilot area are $\left[516:4:1000\right] + {k}_{2}^{4}$,
   indexes of 122 tones of the 484-tone DRU 2 in the fourth data pilot area are $\left[518:4:1002\right] + {k}_{2}^{4}$,
   indexes of 122 tones of the 484-tone DRU 3 in the fourth data pilot area are $\left[517:4:1001\right] + {k}_{2}^{4}$, and
   indexes of 122 tones of the 484-tone DRU 4 in the fourth data pilot area are $\left[519:4:1003\right] + {k}_{2}^{4}$, where
   ${k}_{2}^{4} = 0 , 2 , 4 , 6$, or 8.

In a possible implementation, indexes of the 484-tone DRU 1 are [-1012:4:-536, - 508:4:-24, 12:4:488, 516:4:1000];
indexes of the 484-tone DRU 2 are [-1010:4:-534, -506:4:-22, 14:4:490, 518:4:1002];
indexes of the 484-tone DRU 3 are [-1011:4:-535, -507:4:-23, 13:4:489, 517:4:1001]; and
indexes of the 484-tone DRU 4 are [-1009:4:-533, -505:4:-21, 15:4:491, 519:4:1003].

According to a third aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area, the second data pilot area, the third data pilot area, and the fourth data pilot area; and the 242-tone DRU 1 to the 242-tone DRU 8 meet at least one of the following: An index difference between adjacent tones, of any one of the 242-tone DRU 1 to the 242-tone DRU 8, distributed in the first data pilot area is 8, an index difference between adjacent tones, of the any 242-tone DRU, distributed in the second data pilot area is 8, an index difference between adjacent tones, of the any 242-tone DRU, distributed in the third data pilot area is 8, and an index difference between adjacent tones, of the any 242-tone DRU, distributed in the fourth data pilot area is 8; and a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

In this embodiment of this application, the 242-tone DRUs can achieve a higher power amplification factor by meeting the foregoing conditions, so that a transmit power of a communication apparatus is improved. In addition, it ensures that the eight 242-tone DRUs form an overall shifting relationship, thereby facilitating index storage and reading and simplifying sequence design.

In a possible implementation, the any 242-tone DRU includes 60 tones or 61 tones in the first data pilot area; the any 242-tone DRU includes 60 tones or 61 tones in the second data pilot area; the any 242-tone DRU includes 60 tones or 61 tones in the third data pilot area; and the any 242-tone DRU includes 60 tones or 61 tones in the fourth data pilot area.

In a possible implementation, for the any 242-tone DRU, a difference between an index of a last tone of the 242-tone DRU in the first data pilot area and an index of a first tone of the 242-tone DRU in the second data pilot area is an integer multiple of 8, a difference between an index of a last tone of the 242-tone DRU in the second data pilot area and an index of a first tone of the 242-tone DRU in the third data pilot area is an integer multiple of 8, and a difference between an index of a last tone of the 242-tone DRU in the third data pilot area and an index of a first tone of the 242-tone DRU in the fourth data pilot area is an integer multiple of 8.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 242-tone DRU includes 60 tones in the first data pilot area includes:
indexes of 60 tones of the 242-tone DRU 1 in the first data pilot area are $\left[-1012:8:-540\right] + {p}_{1}^{1}$ ,
indexes of 60 tones of the 242-tone DRU 2 in the first data pilot area are $\left[-1008:8:-536\right] + {p}_{1}^{1}$ ,
indexes of 60 tones of the 242-tone DRU 3 in the first data pilot area are $\left[-1010:8:-538\right] + {p}_{1}^{1}$ ,
indexes of 60 tones of the 242-tone DRU 4 in the first data pilot area are $\left[-1006:8:-534\right] + {p}_{1}^{1}$ ,
indexes of 60 tones of the 242-tone DRU 5 in the first data pilot area are $\left[-1011:8:-539\right] + {p}_{1}^{1}$ ,
indexes of 60 tones of the 242-tone DRU 6 in the first data pilot area are $\left[-1007:8:-535\right] + {p}_{1}^{1}$ ,
indexes of 60 tones of the 242-tone DRU 7 in the first data pilot area are $\left[-1009:8:-537\right] + {p}_{1}^{1}$ , and
indexes of 60 tones of the 242-tone DRU 8 in the first data pilot area are $\left[-1005:8:-533\right] + {p}_{1}^{1}$ , where ${p}_{1}^{1} = 0 , 2 , 4 , 8 , 10 , 12 , 14 , 16$, or 18; or
that the any 242-tone DRU includes 61 tones in the first data pilot area includes:
   indexes of 61 tones of the 242-tone DRU 1 in the first data pilot area are $\left[-1012:8:-532\right] + {p}_{2}^{1}$ ,
   indexes of 61 tones of the 242-tone DRU 2 in the first data pilot area are $\left[-1008:8:-524\right] + {p}_{2}^{1}$ ,
   indexes of 61 tones of the 242-tone DRU 3 in the first data pilot area are $\left[-1010:8:-530\right] + {p}_{2}^{1}$ ,
   indexes of 61 tones of the 242-tone DRU 4 in the first data pilot area are $\left[-1006:8:-526\right] + {p}_{2}^{1}$ ,
   indexes of 61 tones of the 242-tone DRU 5 in the first data pilot area are $\left[-1011:8:-531\right] + {p}_{2}^{1}$ ,
   indexes of 61 tones of the 242-tone DRU 6 in the first data pilot area are $\left[-1007:8:-527\right] + {p}_{2}^{1}$ ,
   indexes of 61 tones of the 242-tone DRU 7 in the first data pilot area are $\left[-1009:8:-529\right] + {p}_{2}^{1}$ , and
   indexes of 61 tones of the 242-tone DRU 8 in the first data pilot area are $\left[-1005:8:-525\right] + {p}_{2}^{1}$ , where
   ${p}_{2}^{1} = 0 , 2 , 4 , 6 , 8$, or 10.

In a possible implementation, that the any 242-tone DRU includes 60 tones in the second data pilot area includes:
indexes of 60 tones of the 242-tone DRU 1 in the second data pilot area are $\left[-508:8:-36\right] + {p}_{1}^{2}$ ,
indexes of 60 tones of the 242-tone DRU 2 in the second data pilot area are $\left[-504:8:-32\right] + {p}_{1}^{2}$ ,
indexes of 60 tones of the 242-tone DRU 3 in the second data pilot area are $\left[-506:8:-34\right] + {p}_{1}^{2}$ ,
indexes of 60 tones of the 242-tone DRU 4 in the second data pilot area are $\left[-502:8:-30\right] + {p}_{1}^{2}$ ,
indexes of 60 tones of the 242-tone DRU 5 in the second data pilot area are $\left[-507:8:-35\right] + {p}_{1}^{2}$ ,
indexes of 60 tones of the 242-tone DRU 6 in the second data pilot area are $\left[-503:8:-31\right] + {p}_{1}^{2}$ ,
indexes of 60 tones of the 242-tone DRU 7 in the second data pilot area are $\left[-505:8:-33\right] + {p}_{1}^{2}$ , and
indexes of 60 tones of the 242-tone DRU 8 in the second data pilot area are $\left[-501:8:-29\right] + {p}_{1}^{2}$ , where
${p}_{1}^{2} = 0 , 2 , 4 , 8 , 10 , 12 , 14$, or 16; or
that the any 242-tone DRU includes 61 tones in the second data pilot area includes:
   indexes of 61 tones of the 242-tone DRU 1 in the second data pilot area are $\left[-508:8:-28\right] + {p}_{2}^{2}$ ,
   indexes of 61 tones of the 242-tone DRU 2 in the second data pilot area are $\left[-504:8:-24\right] + {p}_{2}^{2}$ ,
   indexes of 61 tones of the 242-tone DRU 3 in the second data pilot area are $\left[-506:8:-26\right] + {p}_{2}^{2}$ ,
   indexes of 61 tones of the 242-tone DRU 4 in the second data pilot area are $\left[-502:8:-22\right] + {p}_{2}^{2}$ ,
   indexes of 61 tones of the 242-tone DRU 5 in the second data pilot area are $\left[-507:8:-27\right] + {p}_{2}^{2}$ ,
   indexes of 61 tones of the 242-tone DRU 6 in the second data pilot area are $\left[-503:8:-23\right] + {p}_{2}^{2}$ ,
   indexes of 61 tones of the 242-tone DRU 7 in the second data pilot area are $\left[-505:8:-25\right] + {p}_{2}^{2}$ , and
   indexes of 61 tones of the 242-tone DRU 8 in the second data pilot area are $\left[-501:8:-21\right] + {p}_{2}^{2}$ , where
   ${p}_{2}^{2} = 0 , 2 , 4 , 6$, or 8.

In a possible implementation, that the any 242-tone DRU includes 60 tones in the third data pilot area includes:
indexes of 60 tones of the 242-tone DRU 1 in the third data pilot area are $\left[12:8:484\right] + {p}_{1}^{3}$,
indexes of 60 tones of the 242-tone DRU 2 in the third data pilot area are $\left[16:8:488\right] + {p}_{1}^{3}$,
indexes of 60 tones of the 242-tone DRU 3 in the third data pilot area are $\left[14:8:486\right] + {p}_{1}^{3}$,
indexes of 60 tones of the 242-tone DRU 4 in the third data pilot area are $\left[18:8:490\right] + {p}_{1}^{3}$,
indexes of 60 tones of the 242-tone DRU 5 in the third data pilot area are $\left[13:8:485\right] + {p}_{1}^{3}$,
indexes of 60 tones of the 242-tone DRU 6 in the third data pilot area are $\left[17:8:489\right] + {p}_{1}^{3}$,
indexes of 60 tones of the 242-tone DRU 7 in the third data pilot area are $\left[15:8:487\right] + {p}_{1}^{3}$, and
indexes of 60 tones of the 242-tone DRU 8 in the third data pilot area are $\left[19:8:491\right] + {p}_{1}^{3}$, where
${p}_{1}^{3} = 0 , 2 , 4 , 8 , 10 , 12 , 14 , 16$, or 18; or
that the any 242-tone DRU includes 61 tones in the third data pilot area includes:
   indexes of 61 tones of the 242-tone DRU 1 in the third data pilot area are $\left[12:8:492\right] + {p}_{2}^{3}$,
   indexes of 61 tones of the 242-tone DRU 2 in the third data pilot area are $\left[16:8:496\right] + {p}_{2}^{3}$,
   indexes of 61 tones of the 242-tone DRU 3 in the third data pilot area are $\left[14:8:494\right] + {p}_{2}^{3}$,
   indexes of 61 tones of the 242-tone DRU 4 in the third data pilot area are $\left[18:8:498\right] + {p}_{2}^{3}$,
   indexes of 61 tones of the 242-tone DRU 5 in the third data pilot area are $\left[13:8:493\right] + {p}_{2}^{3}$,
   indexes of 61 tones of the 242-tone DRU 6 in the third data pilot area are $\left[17:8:497\right] + {p}_{2}^{3}$,
   indexes of 61 tones of the 242-tone DRU 7 in the third data pilot area are $\left[15:8:495\right] + {p}_{2}^{3}$, and
   indexes of 61 tones of the 242-tone DRU 8 in the third data pilot area are $\left[19:8:499\right] + {p}_{2}^{3}$, where
   ${p}_{2}^{3} = 0 , 2 , 4 , 6 , 8$, or 10.

In a possible implementation, that the any 242-tone DRU includes 60 tones in the fourth data pilot area includes:
indexes of 60 tones of the 242-tone DRU 1 in the fourth data pilot area are $\left[516:8:988\right] + {p}_{1}^{4}$,
indexes of 60 tones of the 242-tone DRU 2 in the fourth data pilot area are $\left[520:8:992\right] + {p}_{1}^{4}$,
indexes of 60 tones of the 242-tone DRU 3 in the fourth data pilot area are $\left[518:8:990\right] + {p}_{1}^{4}$,
indexes of 60 tones of the 242-tone DRU 4 in the fourth data pilot area are $\left[522:8:994\right] + {p}_{1}^{4}$,
indexes of 60 tones of the 242-tone DRU 5 in the fourth data pilot area are $\left[517:8:989\right] + {p}_{1}^{4}$,
indexes of 60 tones of the 242-tone DRU 6 in the fourth data pilot area are $\left[521:8:993\right] + {p}_{1}^{4}$,
indexes of 60 tones of the 242-tone DRU 7 in the fourth data pilot area are $\left[519:8:991\right] + {p}_{1}^{4}$, and
indexes of 60 tones of the 242-tone DRU 8 in the fourth data pilot area are $\left[523:8:995\right] + {p}_{1}^{4}$, where
${p}_{1}^{4} = 0 , 2 , 4 , 6 , 8 , 10 , 12 , 14$, or 16; or
that the any 242-tone DRU includes 61 tones in the fourth data pilot area includes:
   indexes of 61 tones of the 242-tone DRU 1 in the fourth data pilot area are $\left[516:8:996\right] + {p}_{2}^{4}$,
   indexes of 61 tones of the 242-tone DRU 2 in the fourth data pilot area are $\left[520:8:1000\right] + {p}_{2}^{4}$,
   indexes of 61 tones of the 242-tone DRU 3 in the fourth data pilot area are $\left[518:8:998\right] + {p}_{2}^{4}$,
   indexes of 61 tones of the 242-tone DRU 4 in the fourth data pilot area are $\left[522:8:1002\right] + {p}_{2}^{4}$,
   indexes of 61 tones of the 242-tone DRU 5 in the fourth data pilot area are $\left[517:8:997\right] + {p}_{2}^{4}$,
   indexes of 61 tones of the 242-tone DRU 6 in the fourth data pilot area are $\left[521:8:1001\right] + {p}_{2}^{4}$,
   indexes of 61 tones of the 242-tone DRU 7 in the fourth data pilot area are $\left[519:8:999\right] + {p}_{2}^{4}$, and
   indexes of 61 tones of the 242-tone DRU 8 in the fourth data pilot area are $\left[523:8:1003\right] + {p}_{2}^{4}$, where ${p}_{2}^{4} = 0 , 2 , 4 , 6$, or 8.

In a possible implementation,
indexes of the 242-tone DRU 1 are [-1012:8:-540, -508:8:-28, 12:8:484, 516:8:996];
indexes of the 242-tone DRU 2 are [-1008:8:-536, -504:8:-24, 16:8:488, 520:8:1000];
indexes of the 242-tone DRU 3 are [-1010:8:-538, -506:8:-26, 14:8:486, 518:8:998];
indexes of the 242-tone DRU 4 are [-1006:8:-534, -502:8:-22, 18:8:490, 522:8:1002];
indexes of the 242-tone DRU 5 are [-1011:8:-539, -507:8:-27, 13:8:485, 517:8:997];
indexes of the 242-tone DRU 6 are [-1007:8:-535, -503:8:-23, 17:8:489, 521:8:1001];
indexes of the 242-tone DRU 7 are [-1009:8:-537, -505:8:-25, 15:8:487, 519:8:999]; and
indexes of the 242-tone DRU 8 are [-1005:8:-533, -501:8:-21, 19:8:491, 523:8:1003].

According to a fourth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area, the second data pilot area, the third data pilot area, and the fourth data pilot area; and the 106-tone DRU 1 to the 106-tone DRU 16 meet at least one of the following: An index difference between adjacent tones, of any one of the 106-tone DRU 1 to the 106-tone DRU 16, distributed in the first data pilot area is 16, an index difference between adjacent tones, of the any 106-tone DRU, distributed in the second data pilot area is 16, an index difference between adjacent tones, of the any 106-tone DRU, distributed in the third data pilot area is 16, and an index difference between adjacent tones, of the any 106-tone DRU, distributed in the fourth data pilot area is 16; and a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous.

In a possible implementation, the any 106-tone DRU includes 26 tones or 27 tones in the first data pilot area; the any 106-tone DRU includes 26 tones or 27 tones in the second data pilot area; the any 106-tone DRU includes 26 tones or 27 tones in the third data pilot area; and the any 106-tone DRU includes 26 tones or 27 tones in the fourth data pilot area.

In a possible implementation, for the any 106-tone DRU, a difference between an index of a last tone of the 106-tone DRU in the first data pilot area and an index of a first tone of the 106-tone DRU in the second data pilot area is an integer multiple of 16, a difference between an index of a last tone of the 106-tone DRU in the second data pilot area and an index of a first tone of the 106-tone DRU in the third data pilot area is an integer multiple of 16, and a difference between an index of a last tone of the 106-tone DRU in the third data pilot area and an index of a first tone of the 106-tone DRU in the fourth data pilot area is an integer multiple of 16.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 106-tone DRU includes 26 tones in the first data pilot area includes:
indexes of 26 tones of the 106-tone DRU 1 in the first data pilot area are $\left[-1012:16:-612\right] + {q}_{1}^{1}$ ,
indexes of 26 tones of the 106-tone DRU 2 in the first data pilot area are $\left[-1004:16:-604\right] + {q}_{1}^{1}$ ,
indexes of 26 tones of the 106-tone DRU 3 in the first data pilot area are $\left[-1008:16:-608\right] + {q}_{1}^{1}$ ,
indexes of 26 tones of the 106-tone DRU 4 in the first data pilot area are $\left[-1000:16:-600\right] + {q}_{1}^{1}$ ,
indexes of 26 tones of the 106-tone DRU 5 in the first data pilot area are $\left[-1010:16:-610\right] + {q}_{1}^{1}$ ,
indexes of 26 tones of the 106-tone DRU 6 in the first data pilot area are $\left[-1002:16:-602\right] + {q}_{1}^{1}$ ,
indexes of 26 tones of the 106-tone DRU 7 in the first data pilot area are $\left[-1006:16:-606\right] + {q}_{1}^{1}$ ,
indexes of 26 tones of the 106-tone DRU 8 in the first data pilot area are $\left[-998:16:-598\right] + {q}_{1}^{1}$ ,
indexes of 26 tones of the 106-tone DRU 9 in the first data pilot area are $\left[-1011:16:-611\right] + {q}_{1}^{1}$ ,
indexes of 26 tones of the 106-tone DRU 10 in the first data pilot area are $\left[-1003:16:-603\right] + {q}_{1}^{1}$ ,
indexes of 26 tones of the 106-tone DRU 11 in the first data pilot area are $\left[-1007:16:-607\right] + {q}_{1}^{1}$ ,
indexes of 26 tones of the 106-tone DRU 12 in the first data pilot area are $\left[-999:16:-599\right] + {q}_{1}^{1}$ ,
indexes of 26 tones of the 106-tone DRU 13 in the first data pilot area are $\left[-1009:16:-609\right] + {q}_{1}^{1}$ ,
indexes of 26 tones of the 106-tone DRU 14 in the first data pilot area are $\left[-1001:16:-601\right] + {q}_{1}^{1}$ ,
indexes of 26 tones of the 106-tone DRU 15 in the first data pilot area are $\left[-1005:16:-605\right] + {q}_{1}^{1}$ , and
indexes of 26 tones of the 106-tone DRU 16 in the first data pilot area are $\left[-997:16:-597\right] + {q}_{1}^{1}$ ;
   or
that the any 106-tone DRU includes 27 tones in the first data pilot area includes:
   indexes of 27 tones of the 106-tone DRU 1 in the first data pilot area are $\left[-1012:16:-596\right] + {q}_{2}^{1}$ ,
   indexes of 27 tones of the 106-tone DRU 2 in the first data pilot area are $\left[-1004:16:-588\right] + {q}_{2}^{1}$ ,
   indexes of 27 tones of the 106-tone DRU 3 in the first data pilot area are $\left[-1008:16:-592\right] + {q}_{2}^{1}$ ,
   indexes of 27 tones of the 106-tone DRU 4 in the first data pilot area are $\left[-1000:16:-584\right] + {q}_{2}^{1}$ ,
   indexes of 27 tones of the 106-tone DRU 5 in the first data pilot area are $\left[-1010:16:-594\right] + {q}_{2}^{1}$ ,
   indexes of 27 tones of the 106-tone DRU 6 in the first data pilot area are $\left[-1002:16:-586\right] + {q}_{2}^{1}$ ,
   indexes of 27 tones of the 106-tone DRU 7 in the first data pilot area are $\left[-1006:16:-590\right] + {q}_{2}^{1}$ ,
   indexes of 27 tones of the 106-tone DRU 8 in the first data pilot area are $\left[-998:16:-592\right] + {q}_{2}^{1}$ ,
   indexes of 27 tones of the 106-tone DRU 9 in the first data pilot area are $\left[-1011:16:-595\right] + {q}_{2}^{1}$ ,
   indexes of 27 tones of the 106-tone DRU 10 in the first data pilot area are $\left[-1003:16:-587\right] + {q}_{2}^{1}$ ,
   indexes of 27 tones of the 106-tone DRU 11 in the first data pilot area are $\left[-1007:16:-591\right] + {q}_{2}^{1}$ ,
   indexes of 27 tones of the 106-tone DRU 12 in the first data pilot area are $\left[-999:16:-583\right] + {q}_{2}^{1}$ ,
   indexes of 27 tones of the 106-tone DRU 13 in the first data pilot area are $\left[-1009:16:-593\right] + {q}_{2}^{1}$ ,
   indexes of 27 tones of the 106-tone DRU 14 in the first data pilot area are $\left[-1001:16:-585\right] + {q}_{2}^{1}$ ,
   indexes of 27 tones of the 106-tone DRU 15 in the first data pilot area are $\left[-1005:16:-589\right] + {q}_{2}^{1}$ , and
   indexes of 27 tones of the 106-tone DRU 16 in the first data pilot area are $\left[-997:16:-581\right] + {q}_{2}^{1}$ .

In a possible implementation, that the any 106-tone DRU includes 26 tones in the second data pilot area includes:
indexes of 26 tones of the 106-tone DRU 1 in the second data pilot area are $\left[-500:16:-100\right] + {q}_{1}^{2}$ ,
indexes of 26 tones of the 106-tone DRU 2 in the second data pilot area are $\left[-492:16:-92\right] + {q}_{1}^{2}$ ,
indexes of 26 tones of the 106-tone DRU 3 in the second data pilot area are $\left[-496:16:-96\right] + {q}_{1}^{2}$ ,
indexes of 26 tones of the 106-tone DRU 4 in the second data pilot area are $\left[-488:16:-88\right] + {q}_{1}^{2}$ ,
indexes of 26 tones of the 106-tone DRU 5 in the second data pilot area are $\left[-498:16:-986\right] + {q}_{1}^{2}$ ,
indexes of 26 tones of the 106-tone DRU 6 in the second data pilot area are $\left[-490:16:-90\right] + {q}_{1}^{2}$ ,
indexes of 26 tones of the 106-tone DRU 7 in the second data pilot area are $\left[-494:16:-94\right] + {q}_{1}^{2}$ ,
indexes of 26 tones of the 106-tone DRU 8 in the second data pilot area are $\left[-486:16:-86\right] + {q}_{1}^{2}$ ,
indexes of 26 tones of the 106-tone DRU 9 in the second data pilot area are $\left[-499:16:-99\right] + {q}_{1}^{2}$ ,
indexes of 26 tones of the 106-tone DRU 10 in the second data pilot area are $\left[-491:16:-91\right] + {q}_{1}^{2}$ ,
indexes of 26 tones of the 106-tone DRU 11 in the second data pilot area are $\left[-495:16:-95\right] + {q}_{1}^{2}$ ,
indexes of 26 tones of the 106-tone DRU 12 in the second data pilot area are $\left[-487:16:-87\right] + {q}_{1}^{2}$ ,
indexes of 26 tones of the 106-tone DRU 13 in the second data pilot area are $\left[-497:16:-97\right] + {q}_{1}^{2}$ ,
indexes of 26 tones of the 106-tone DRU 14 in the second data pilot area are $\left[-489:16:-89\right] + {q}_{1}^{2}$ ,
indexes of 26 tones of the 106-tone DRU 15 in the second data pilot area are $\left[-493:16:-93\right] + {q}_{1}^{2}$ , and
indexes of 26 tones of the 106-tone DRU 16 in the second data pilot area are $\left[-485:16:-85\right] + {q}_{1}^{2}$ ;
   or
that the any 106-tone DRU includes 27 tones in the second data pilot area includes:
   indexes of 27 tones of the 106-tone DRU 1 in the second data pilot area are $\left[-500:16:-84\right] + {q}_{2}^{2}$ ,
   indexes of 27 tones of the 106-tone DRU 2 in the second data pilot area are $\left[-492:16:-76\right] + {q}_{2}^{2}$ ,
   indexes of 27 tones of the 106-tone DRU 3 in the second data pilot area are $\left[-496:16:-80\right] + {q}_{2}^{2}$ ,
   indexes of 27 tones of the 106-tone DRU 4 in the second data pilot area are $\left[-488:16:-72\right] + {q}_{2}^{2}$ ,
   indexes of 27 tones of the 106-tone DRU 5 in the second data pilot area are $\left[-498:16:-82\right] + {q}_{2}^{2}$ ,
   indexes of 27 tones of the 106-tone DRU 6 in the second data pilot area are $\left[-490:16:-74\right] + {q}_{2}^{2}$ ,
   indexes of 27 tones of the 106-tone DRU 7 in the second data pilot area are $\left[-494:16:-78\right] + {q}_{2}^{2}$ ,
   indexes of 27 tones of the 106-tone DRU 8 in the second data pilot area are $\left[-486:16:-70\right] + {q}_{2}^{2}$ ,
   indexes of 27 tones of the 106-tone DRU 9 in the second data pilot area are $\left[-499:16:-83\right] + {q}_{2}^{2}$ ,
   indexes of 27 tones of the 106-tone DRU 10 in the second data pilot area are $\left[-491:16:-75\right] + {q}_{2}^{2}$ ,
   indexes of 27 tones of the 106-tone DRU 11 in the second data pilot area are $\left[-495:16:-79\right] + {q}_{2}^{2}$ ,
   indexes of 27 tones of the 106-tone DRU 12 in the second data pilot area are $\left[-487:16:-71\right] + {q}_{2}^{2}$ ,
   indexes of 27 tones of the 106-tone DRU 13 in the second data pilot area are $\left[-497:16:-82\right] + {q}_{2}^{2}$ ,
   indexes of 27 tones of the 106-tone DRU 14 in the second data pilot area are $\left[-489:16:-73\right] + {q}_{2}^{2}$ ,
   indexes of 27 tones of the 106-tone DRU 15 in the second data pilot area are $\left[-493:16:-77\right] + {q}_{2}^{2}$ , and
   indexes of 27 tones of the 106-tone DRU 16 in the second data pilot area are $\left[-485:16:-69\right] + {q}_{2}^{2}$ .

In a possible implementation, that the any 106-tone DRU includes 26 tones in the third data pilot area includes:
indexes of 26 tones of the 106-tone DRU 1 in the third data pilot area are $\left[12:16:412\right] + {q}_{1}^{3}$,
indexes of 26 tones of the 106-tone DRU 2 in the third data pilot area are $\left[20:16:420\right] + {q}_{1}^{3}$,
indexes of 26 tones of the 106-tone DRU 3 in the third data pilot area are $\left[16:16:416\right] + {q}_{1}^{3}$,
indexes of 26 tones of the 106-tone DRU 4 in the third data pilot area are $\left[24:16:424\right] + {q}_{1}^{3}$,
indexes of 26 tones of the 106-tone DRU 5 in the third data pilot area are $\left[14:16:414\right] + {q}_{1}^{3}$,
indexes of 26 tones of the 106-tone DRU 6 in the third data pilot area are $\left[22:16:422\right] + {q}_{1}^{3}$,
indexes of 26 tones of the 106-tone DRU 7 in the third data pilot area are $\left[18:16:418\right] + {q}_{1}^{3}$,
indexes of 26 tones of the 106-tone DRU 8 in the third data pilot area are $\left[26:16:426\right] + {q}_{1}^{3}$,
indexes of 26 tones of the 106-tone DRU 9 in the third data pilot area are $\left[13:16:413\right] + {q}_{1}^{3}$,
indexes of 26 tones of the 106-tone DRU 10 in the third data pilot area are $\left[21:16:421\right] + {q}_{1}^{3}$,
indexes of 26 tones of the 106-tone DRU 11 in the third data pilot area are $\left[17:16:417\right] + {q}_{1}^{3}$,
indexes of 26 tones of the 106-tone DRU 12 in the third data pilot area are $\left[25:16:425\right] + {q}_{1}^{3}$,
indexes of 26 tones of the 106-tone DRU 13 in the third data pilot area are $\left[15:16:415\right] + {q}_{1}^{3}$,
indexes of 26 tones of the 106-tone DRU 14 in the third data pilot area are $\left[23:16:423\right] + {q}_{1}^{3}$,
indexes of 26 tones of the 106-tone DRU 15 in the third data pilot area are $\left[19:16:419\right] + {q}_{1}^{3}$, and
indexes of 26 tones of the 106-tone DRU 16 in the third data pilot area are $\left[27:16:427\right] + {q}_{1}^{3}$;
   or
that the any 106-tone DRU includes 27 tones in the third data pilot area includes:
   indexes of 27 tones of the 106-tone DRU 1 in the third data pilot area are $\left[12:16:428\right] + {q}_{1}^{3}$,
   indexes of 27 tones of the 106-tone DRU 2 in the third data pilot area are $\left[20:16:436\right] + {q}_{1}^{3}$,
   indexes of 27 tones of the 106-tone DRU 3 in the third data pilot area are $\left[16:16:432\right] + {q}_{1}^{3}$,
   indexes of 27 tones of the 106-tone DRU 4 in the third data pilot area are $\left[24:16:440\right] + {q}_{1}^{3}$,
   indexes of 27 tones of the 106-tone DRU 5 in the third data pilot area are $\left[14:16:430\right] + {q}_{1}^{3}$,
   indexes of 27 tones of the 106-tone DRU 6 in the third data pilot area are $\left[22:16:438\right] + {q}_{1}^{3}$,
   indexes of 27 tones of the 106-tone DRU 7 in the third data pilot area are $\left[18:16:434\right] + {q}_{1}^{3}$,
   indexes of 27 tones of the 106-tone DRU 8 in the third data pilot area are $\left[26:16:442\right] + {q}_{1}^{3}$,
   indexes of 27 tones of the 106-tone DRU 9 in the third data pilot area are $\left[13:16:429\right] + {q}_{1}^{3}$,
   indexes of 27 tones of the 106-tone DRU 10 in the third data pilot area are $\left[21:16:437\right] + {q}_{1}^{3}$,
   indexes of 27 tones of the 106-tone DRU 11 in the third data pilot area are $\left[17:16:433\right] + {q}_{1}^{3}$,
   indexes of 27 tones of the 106-tone DRU 12 in the third data pilot area are $\left[25:16:441\right] + {q}_{1}^{3}$,
   indexes of 27 tones of the 106-tone DRU 13 in the third data pilot area are $\left[15:16:431\right] + {q}_{1}^{3}$,
   indexes of 27 tones of the 106-tone DRU 14 in the third data pilot area are $\left[23:16:439\right] + {q}_{1}^{3}$,
   indexes of 27 tones of the 106-tone DRU 15 in the third data pilot area are $\left[19:16:435\right] + {q}_{1}^{3}$, and
   indexes of 27 tones of the 106-tone DRU 16 in the third data pilot area are $\left[27:16:443\right] + {q}_{1}^{3}$.

In a possible implementation, that the any 106-tone DRU includes 26 tones in the fourth data pilot area includes:
indexes of 26 tones of the 106-tone DRU 1 in the fourth data pilot area are $\left[524:16:924\right] + {q}_{1}^{4}$,
indexes of 26 tones of the 106-tone DRU 2 in the fourth data pilot area are $\left[532:16:932\right] + {q}_{1}^{4}$,
indexes of 26 tones of the 106-tone DRU 3 in the fourth data pilot area are $\left[528:16:928\right] + {q}_{1}^{4}$,
indexes of 26 tones of the 106-tone DRU 4 in the fourth data pilot area are $\left[536:16:936\right] + {q}_{1}^{4}$,
indexes of 26 tones of the 106-tone DRU 5 in the fourth data pilot area are $\left[526:16:926\right] + {q}_{1}^{4}$,
indexes of 26 tones of the 106-tone DRU 6 in the fourth data pilot area are $\left[534:16:934\right] + {q}_{1}^{4}$,
indexes of 26 tones of the 106-tone DRU 7 in the fourth data pilot area are $\left[530:16:930\right] + {q}_{1}^{4}$,
indexes of 26 tones of the 106-tone DRU 8 in the fourth data pilot area are $\left[538:16:938\right] + {q}_{1}^{4}$,
indexes of 26 tones of the 106-tone DRU 9 in the fourth data pilot area are $\left[525:16:925\right] + {q}_{1}^{4}$,
indexes of 26 tones of the 106-tone DRU 10 in the fourth data pilot area are $\left[533:16:933\right] + {q}_{1}^{4}$,
indexes of 26 tones of the 106-tone DRU 11 in the fourth data pilot area are $\left[529:16:929\right] + {q}_{1}^{4}$,
indexes of 26 tones of the 106-tone DRU 12 in the fourth data pilot area are $\left[537:16:937\right] + {q}_{1}^{4}$,
indexes of 26 tones of the 106-tone DRU 13 in the fourth data pilot area are $\left[527:16:927\right] + {q}_{1}^{4}$,
indexes of 26 tones of the 106-tone DRU 14 in the fourth data pilot area are $\left[535:16:935\right] + {q}_{1}^{4}$,
indexes of 26 tones of the 106-tone DRU 15 in the fourth data pilot area are $\left[531:16:931\right] + {q}_{1}^{4}$, and
indexes of 26 tones of the 106-tone DRU 16 in the fourth data pilot area are $\left[539:16:939\right] + {q}_{1}^{4}$;
   or
that the any 106-tone DRU includes 27 tones in the fourth data pilot area includes:
   indexes of 27 tones of the 106-tone DRU 1 in the fourth data pilot area are $\left[524:16:940\right] + {q}_{2}^{4}$,
   indexes of 27 tones of the 106-tone DRU 2 in the fourth data pilot area are $\left[532:16:948\right] + {q}_{2}^{4}$,
   indexes of 27 tones of the 106-tone DRU 3 in the fourth data pilot area are $\left[528:16:944\right] + {q}_{2}^{4}$,
   indexes of 27 tones of the 106-tone DRU 4 in the fourth data pilot area are $\left[536:16:952\right] + {q}_{2}^{4}$,
   indexes of 27 tones of the 106-tone DRU 5 in the fourth data pilot area are $\left[526:16:942\right] + {q}_{2}^{4}$,
   indexes of 27 tones of the 106-tone DRU 6 in the fourth data pilot area are $\left[534:16:950\right] + {q}_{2}^{4}$,
   indexes of 27 tones of the 106-tone DRU 7 in the fourth data pilot area are $\left[530:16:946\right] + {q}_{2}^{4}$,
   indexes of 27 tones of the 106-tone DRU 8 in the fourth data pilot area are $\left[538:16:954\right] + {q}_{2}^{4}$,
   indexes of 27 tones of the 106-tone DRU 9 in the fourth data pilot area are $\left[525:16:941\right] + {q}_{2}^{4}$,
   indexes of 27 tones of the 106-tone DRU 10 in the fourth data pilot area are $\left[533:16:949\right] + {q}_{2}^{4}$,
   indexes of 27 tones of the 106-tone DRU 11 in the fourth data pilot area are $\left[529:16:945\right] + {q}_{2}^{4}$,
   indexes of 27 tones of the 106-tone DRU 12 in the fourth data pilot area are $\left[537:16:953\right] + {q}_{2}^{4}$,
   indexes of 27 tones of the 106-tone DRU 13 in the fourth data pilot area are $\left[527:16:943\right] + {q}_{2}^{4}$,
   indexes of 27 tones of the 106-tone DRU 14 in the fourth data pilot area are $\left[535:16:951\right] + {q}_{2}^{4}$,
   indexes of 27 tones of the 106-tone DRU 15 in the fourth data pilot area are $\left[531:16:947\right] + {q}_{2}^{4}$, and
   indexes of 27 tones of the 106-tone DRU 16 in the fourth data pilot area are $\left[539:16:955\right] + {q}_{2}^{4}$.

In a possible implementation, indexes of the 106-tone DRU 1 are [-1012:16:-612, - 500:16:-84, 12:16:412, 524:16:940];
indexes of the 106-tone DRU 2 are [-1004:16:-604, -492:16:-76, 20:16:420, 532:16:948];
indexes of the 106-tone DRU 3 are [-1008:16:-608, -496:16:-80, 16:16:416, 528:16:944];
indexes of the 106-tone DRU 4 are [-1000:16:-600, -488:16:-72, 24:16:424, 536:16:952];
indexes of the 106-tone DRU 5 are [-1010:16:-610, -498:16:-82, 14:16:414, 526:16:942];
indexes of the 106-tone DRU 6 are [-1002:16:-602, -490:16:-74, 22:16:422, 534:16:950];
indexes of the 106-tone DRU 7 are [-1006:16:-606, -494:16:-78, 18:16:418, 530:16:946];
indexes of the 106-tone DRU 8 are [-998:16:-598, -486:16:-70, 26:16:426, 538:16:954];
indexes of the 106-tone DRU 9 are [-1011:16:-611, -499:16:-83, 13:16:413, 525:16:941];
indexes of the 106-tone DRU 10 are [-1003:16:-603, -491:16:-75, 21:16:421, 533:16:949];
indexes of the 106-tone DRU 11 are [-1007:16:-607, -495:16:-79, 17:16:417, 529:16:945];
indexes of the 106-tone DRU 12 are [-999:16:-599, -487:16:-71, 25:16:425, 537:16:953];
indexes of the 106-tone DRU 13 are [-1009:16:-609, -497:16:-81, 15:16:415, 527:16:943];
indexes of the 106-tone DRU 14 are [-1001:16:-601, -489:16:-73, 23:16:423, 535:16:951];
indexes of the 106-tone DRU 15 are [-1005:16:-605, -493:16:-77, 19:16:419, 531:16:947]; and
indexes of the 106-tone DRU 16 are [-997:16:-597, -485:16:-69, 27:16:427, 539:16:955].

According to a fifth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 996-tone DRU 1 is distributed in the first data pilot area, the second data pilot area, the third data pilot area, and the fourth data pilot area, and the 996-tone DRU 1 includes a tone whose index is an even number in the first data pilot area, a tone whose index is an odd number in the second data pilot area, a tone whose index is an even number in the third data pilot area, and a tone whose index is an odd number in the fourth data pilot area; and a 996-tone DRU 2 is distributed in the first data pilot area, the second data pilot area, the third data pilot area, and the fourth data pilot area, and the 996-tone DRU 2 includes a tone whose index is an odd number in the first data pilot area, a tone whose index is an even number in the second data pilot area, a tone whose index is an odd number in the third data pilot area, and a tone whose index is an even number in the fourth data pilot area.

When the conditions are met, indexes of the 996-tone DRUs may be designed in the four data pilot areas, so that not only a power amplification factor can be increased, but also a relatively low PAPR can be ensured.

In a possible implementation, indexes of the first data pilot area are [-1012:-515], indexes of the second data pilot area are [-509:-12], indexes of the third data pilot area are [12:509], and indexes of the fourth data pilot area are [515:1012].

According to a sixth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 484-tone DRU 1, a 484-tone DRU 2, a 484-tone DRU 3, and a 484-tone DRU 4 are all distributed in the first data pilot area, the second data pilot area, the third data pilot area, and the fourth data pilot area; and the 484-tone DRU 1 to the 484-tone DRU 4 meet at least one of the following: An index difference between adjacent tones, of any one of the 484-tone DRU 1 to the 484-tone DRU 4, distributed in the first data pilot area is 4, an index difference between adjacent tones, of the any 484-tone DRU, distributed in the second data pilot area is 4, an index difference between adjacent tones, of the any 484-tone DRU, distributed in the third data pilot area is 4, and an index difference between adjacent tones, of the any 484-tone DRU, distributed in the fourth data pilot area is 4; and a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

In a possible implementation, the any 484-tone DRU includes 120 tones or 122 tones in the first data pilot area; the any 484-tone DRU includes 120 tones or 122 tones in the second data pilot area; the any 484-tone DRU includes 120 tones or 122 tones in the third data pilot area; and the any 484-tone DRU includes 120 tones or 122 tones in the fourth data pilot area.

In a possible implementation, for the any 484-tone DRU, a difference between an index of a last tone of the 484-tone DRU in the first data pilot area and an index of a first tone of the 484-tone DRU in the second data pilot area is an integer multiple of 4, a difference between an index of a last tone of the 484-tone DRU in the second data pilot area and an index of a first tone of the 484-tone DRU in the third data pilot area is an integer multiple of 4, and a difference between an index of a last tone of the 484-tone DRU in the third data pilot area and an index of a first tone of the 484-tone DRU in the fourth data pilot area is an integer multiple of 4.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 484-tone DRU includes 120 tones in the first data pilot area includes:
indexes of 120 tones of the 484-tone DRU 1 in the first data pilot area are $\left[-1012:4:-536\right] + {k}_{1}^{1}$ ,
indexes of 120 tones of the 484-tone DRU 2 in the first data pilot area are $\left[-1010:4:-534\right] + {k}_{1}^{1}$ ,
indexes of 120 tones of the 484-tone DRU 3 in the first data pilot area are $\left[-1011:4:-535\right] + {k}_{1}^{1}$ , and
indexes of 120 tones of the 484-tone DRU 4 in the first data pilot area are $\left[-1009:4:-533\right] + {k}_{1}^{1}$ , where
${k}_{1}^{1} = 0 , 2 , 4 , 6 , 8 , 10 , 12 , 14 , 16$, or 18; or
that the any 484-tone DRU includes 122 tones in the first data pilot area includes:
   indexes of 122 tones of the 484-tone DRU 1 in the first data pilot area are $\left[-1012:4:-528\right] + {k}_{2}^{1}$ ,
   indexes of 122 tones of the 484-tone DRU 2 in the first data pilot area are $\left[-1010:4:-526\right] + {k}_{2}^{1}$ ,
   indexes of 122 tones of the 484-tone DRU 3 in the first data pilot area are $\left[-1011:4:-527\right] + {k}_{2}^{1}$ , and
   indexes of 122 tones of the 484-tone DRU 4 in the first data pilot area are $\left[-1009:4:-525\right] + {k}_{2}^{1}$ , where
   ${k}_{2}^{1} = 0 , 2 , 4 , 6 , 8$, or 10.

In a possible implementation, that the any 484-tone DRU includes 120 tones in the second data pilot area includes:
indexes of 120 tones of the 484-tone DRU 1 in the second data pilot area are $\left[-509:4:-33\right] + {k}_{1}^{2}$ ,
indexes of 120 tones of the 484-tone DRU 2 in the second data pilot area are $\left[-507:4:-31\right] + {k}_{1}^{2}$ ,
indexes of 120 tones of the 484-tone DRU 3 in the second data pilot area are $\left[-508:4:-32\right] + {k}_{1}^{2}$ , and
indexes of 120 tones of the 484-tone DRU 4 in the second data pilot area are $\left[-506:4:-30\right] + {k}_{1}^{2}$ , where
${k}_{1}^{2} = 0 , 2 , 4 , 6 , 8 , 10 , 12 , 14 , 16$, or 18; or
that the any 484-tone DRU includes 122 tones in the second data pilot area includes:
   indexes of 122 tones of the 484-tone DRU 1 in the second data pilot area are $\left[-509:4:-25\right] + {k}_{2}^{2}$ ,
   indexes of 122 tones of the 484-tone DRU 2 in the second data pilot area are $\left[-507:4:-23\right] + {k}_{2}^{2}$ ,
   indexes of 122 tones of the 484-tone DRU 3 in the second data pilot area are $\left[-508:4:-24\right] + {k}_{2}^{2}$ , and
   indexes of 122 tones of the 484-tone DRU 4 in the second data pilot area are $\left[-506:4:-22\right] + {k}_{2}^{2}$ , where
   ${k}_{2}^{2} = 0 , 2 , 4 , 6 , 8$, or 10.

In a possible implementation, that the any 484-tone DRU includes 120 tones in the third data pilot area includes:
indexes of 120 tones of the 484-tone DRU 1 in the third data pilot area are $\left[12:4:488\right] + {k}_{1}^{3}$,
indexes of 120 tones of the 484-tone DRU 2 in the third data pilot area are $\left[14:4:490\right] + {k}_{1}^{3}$,
indexes of 120 tones of the 484-tone DRU 3 in the third data pilot area are $\left[13:4:489\right] + {k}_{1}^{3}$, and
indexes of 120 tones of the 484-tone DRU 4 in the third data pilot area are $\left[15:4:491\right] + {k}_{1}^{3}$, where
${k}_{1}^{3} = 0 , 2 , 4 , 6 , 8 , 10 , 12 , 14 , 16$, or 18; or
that the any 484-tone DRU includes 122 tones in the third data pilot area includes:
   indexes of 122 tones of the 484-tone DRU 1 in the third data pilot area are $\left[12:4:496\right] + {k}_{2}^{3}$,
   indexes of 122 tones of the 484-tone DRU 2 in the third data pilot area are $\left[14:4:498\right] + {k}_{2}^{3}$,
   indexes of 122 tones of the 484-tone DRU 3 in the third data pilot area are $\left[13:4:497\right] + {k}_{2}^{3}$, and
   indexes of 122 tones of the 484-tone DRU 4 in the third data pilot area are $\left[15:4:499\right] + {k}_{2}^{3}$, where
   ${k}_{2}^{3} = 0 , 2 , 4 , 6 , 8$, or 10.

In a possible implementation, that the any 484-tone DRU includes 120 tones in the fourth data pilot area includes:
indexes of 120 tones of the 484-tone DRU 1 in the fourth data pilot area are $\left[515:4:991\right] + {k}_{1}^{4}$,
indexes of 120 tones of the 484-tone DRU 2 in the fourth data pilot area are $\left[517:4:993\right] + {k}_{1}^{4}$,
indexes of 120 tones of the 484-tone DRU 3 in the fourth data pilot area are $\left[516:4:992\right] + {k}_{1}^{4}$, and
indexes of 120 tones of the 484-tone DRU 4 in the fourth data pilot area are $\left[518:4:994\right] + {k}_{1}^{4}$, where
${k}_{1}^{4} = 0 , 2 , 4 , 6 , 8 , 10 , 12 , 14 , 16$, or 18; or
that the any 484-tone DRU includes 122 tones in the fourth data pilot area includes:
   indexes of 122 tones of the 484-tone DRU 1 in the fourth data pilot area are $\left[515:4:999\right] + {k}_{2}^{4}$,
   indexes of 122 tones of the 484-tone DRU 2 in the fourth data pilot area are $\left[517:4:1001\right] + {k}_{2}^{4}$,
   indexes of 122 tones of the 484-tone DRU 3 in the fourth data pilot area are $\left[516:4:1000\right] + {k}_{2}^{4}$, and
   indexes of 122 tones of the 484-tone DRU 4 in the fourth data pilot area are $\left[518:4:1002\right] + {k}_{2}^{4}$, where
   ${k}_{2}^{4} = 0 , 2 , 4 , 6 , 8$, or 10.

In a possible implementation,
indexes of the 484-tone DRU 1 are [-1012:4:-536, -509:4:-25, 12:4:488, 515:4:999];
indexes of the 484-tone DRU 2 are [-1010:4:-534, -507:4:-23, 14:4:490, 517:4:1001];
indexes of the 484-tone DRU 3 are [-1011:4:-535, -508:4:-24, 13:4:489, 516:4:1000]; and
indexes of the 484-tone DRU 4 are [-1009:4:-533, -506:4:-22, 15:4:491, 518:4:1002].

According to a seventh aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area, the second data pilot area, the third data pilot area, and the fourth data pilot area; and the 242-tone DRU 1 to the 242-tone DRU 8 meet at least one of the following: An index difference between adjacent tones, of any one of the 242-tone DRU 1 to the 242-tone DRU 8, distributed in the first data pilot area is 8, an index difference between adjacent tones, of the any 242-tone DRU, distributed in the second data pilot area is 8, an index difference between adjacent tones, of the any 242-tone DRU, distributed in the third data pilot area is 8, and an index difference between adjacent tones, of the any 242-tone DRU, distributed in the fourth data pilot area is 8; and a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

In a possible implementation, the any 242-tone DRU includes 60 tones or 61 tones in the first data pilot area; the any 242-tone DRU includes 60 tones or 61 tones in the second data pilot area; the any 242-tone DRU includes 60 tones or 61 tones in the third data pilot area; and the any 242-tone DRU includes 60 tones or 61 tones in the fourth data pilot area.

In a possible implementation, for the any 242-tone DRU, a difference between an index of a last tone of the 242-tone DRU in the first data pilot area and an index of a first tone of the 242-tone DRU in the second data pilot area is an integer multiple of 8, a difference between an index of a last tone of the 242-tone DRU in the second data pilot area and an index of a first tone of the 242-tone DRU in the third data pilot area is an integer multiple of 8, and a difference between an index of a last tone of the 242-tone DRU in the third data pilot area and an index of a first tone of the 242-tone DRU in the fourth data pilot area is an integer multiple of 8.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 242-tone DRU includes 60 tones in the first data pilot area includes:
indexes of 60 tones of the 242-tone DRU 1 in the first data pilot area are $\left[-1012:8:-540\right] + {p}_{1}^{1}$ ,
indexes of 60 tones of the 242-tone DRU 2 in the first data pilot area are $\left[-1008:8:-536\right] + {p}_{1}^{1}$ ,
indexes of 60 tones of the 242-tone DRU 3 in the first data pilot area are $\left[-1010:8:-538\right] + {p}_{1}^{1}$ ,
indexes of 60 tones of the 242-tone DRU 4 in the first data pilot area are $\left[-1006:8:-534\right] + {p}_{1}^{1}$ ,
indexes of 60 tones of the 242-tone DRU 5 in the first data pilot area are $\left[-1011:8:-539\right] + {p}_{1}^{1}$ ,
indexes of 60 tones of the 242-tone DRU 6 in the first data pilot area are $\left[-1007:8:-535\right] + {p}_{1}^{1}$ ,
indexes of 60 tones of the 242-tone DRU 7 in the first data pilot area are $\left[-1009:8:-537\right] + {p}_{1}^{1}$ , and
indexes of 60 tones of the 242-tone DRU 8 in the first data pilot area are $\left[-1005:8:-533\right] + {p}_{1}^{1}$ , where ${p}_{1}^{1} = 0 , 2 , 4 , 8 , 10 , 12 , 14 , 16$, or 18; or
that the any 242-tone DRU includes 61 tones in the first data pilot area includes:
   indexes of 61 tones of the 242-tone DRU 1 in the first data pilot area are $\left[-1012:8:-532\right] + {p}_{2}^{1}$ ,
   indexes of 61 tones of the 242-tone DRU 2 in the first data pilot area are $\left[-1008:8:-524\right] + {p}_{2}^{1}$ ,
   indexes of 61 tones of the 242-tone DRU 3 in the first data pilot area are $\left[-1010:8:-530\right] + {p}_{2}^{1}$ ,
   indexes of 61 tones of the 242-tone DRU 4 in the first data pilot area are $\left[-1006:8:-526\right] + {p}_{2}^{1}$ ,
   indexes of 61 tones of the 242-tone DRU 5 in the first data pilot area are $\left[-1011:8:-531\right] + {p}_{2}^{1}$ ,
   indexes of 61 tones of the 242-tone DRU 6 in the first data pilot area are $\left[-1007:8:-527\right] + {p}_{2}^{1}$ ,
   indexes of 61 tones of the 242-tone DRU 7 in the first data pilot area are $\left[-1009:8:-529\right] + {p}_{2}^{1}$ , and
   indexes of 61 tones of the 242-tone DRU 8 in the first data pilot area are $\left[-1005:8:-525\right] + {p}_{2}^{1}$ , where
   ${p}_{2}^{1} = 0 , 2 , 4 , 6 , 8$, or 10.

In a possible implementation, that the any 242-tone DRU includes 60 tones in the second data pilot area includes:
indexes of 60 tones of the 242-tone DRU 1 in the second data pilot area are $\left[-509:8:-37\right] + {p}_{1}^{2}$ ,
indexes of 60 tones of the 242-tone DRU 2 in the second data pilot area are $\left[-505:8:-33\right] + {p}_{1}^{2}$ ,
indexes of 60 tones of the 242-tone DRU 3 in the second data pilot area are $\left[-507:8:-35\right] + {p}_{1}^{2}$ ,
indexes of 60 tones of the 242-tone DRU 4 in the second data pilot area are $\left[-503:8:-31\right] + {p}_{1}^{2}$ ,
indexes of 60 tones of the 242-tone DRU 5 in the second data pilot area are $\left[-508:8:-36\right] + {p}_{1}^{2}$ ,
indexes of 60 tones of the 242-tone DRU 6 in the second data pilot area are $\left[-504:8:-32\right] + {p}_{1}^{2}$ ,
indexes of 60 tones of the 242-tone DRU 7 in the second data pilot area are $\left[-506:8:-34\right] + {p}_{1}^{2}$ , and
indexes of 60 tones of the 242-tone DRU 8 in the second data pilot area are $\left[-502:8:-30\right] + {p}_{1}^{2}$ , where
${p}_{1}^{2} = 0 , 2 , 4 , 8 , 10 , 12 , 14 , 16$, or 18; or
that the any 242-tone DRU includes 61 tones in the second data pilot area includes:
   indexes of 61 tones of the 242-tone DRU 1 in the second data pilot area are $\left[-509:8:-29\right] + {p}_{2}^{2}$ ,
   indexes of 61 tones of the 242-tone DRU 2 in the second data pilot area are $\left[-505:8:-25\right] + {p}_{2}^{2}$ ,
   indexes of 61 tones of the 242-tone DRU 3 in the second data pilot area are $\left[-507:8:-27\right] + {p}_{2}^{2}$ ,
   indexes of 61 tones of the 242-tone DRU 4 in the second data pilot area are $\left[-503:8:-23\right] + {p}_{2}^{2}$ ,
   indexes of 61 tones of the 242-tone DRU 5 in the second data pilot area are $\left[-508:8:-28\right] + {p}_{2}^{2}$ ,
   indexes of 61 tones of the 242-tone DRU 6 in the second data pilot area are $\left[-504:8:-24\right] + {p}_{2}^{2}$ ,
   indexes of 61 tones of the 242-tone DRU 7 in the second data pilot area are $\left[-506:8:-26\right] + {p}_{2}^{2}$ , and
   indexes of 61 tones of the 242-tone DRU 8 in the second data pilot area are $\left[-502:8:-22\right] + {p}_{2}^{2}$ , where
   ${p}_{2}^{2} = 0 , 2 , 4 , 6 , 8$, or 10.

In a possible implementation, that the any 242-tone DRU includes 60 tones in the third data pilot area includes:
indexes of 60 tones of the 242-tone DRU 1 in the third data pilot area are $\left[12:8:484\right] + {p}_{1}^{3}$,
indexes of 60 tones of the 242-tone DRU 2 in the third data pilot area are $\left[16:8:488\right] + {p}_{1}^{3}$,
indexes of 60 tones of the 242-tone DRU 3 in the third data pilot area are $\left[14:8:486\right] + {p}_{1}^{3}$,
indexes of 60 tones of the 242-tone DRU 4 in the third data pilot area are $\left[18:8:490\right] + {p}_{1}^{3}$,
indexes of 60 tones of the 242-tone DRU 5 in the third data pilot area are $\left[13:8:485\right] + {p}_{1}^{3}$,
indexes of 60 tones of the 242-tone DRU 6 in the third data pilot area are $\left[17:8:489\right] + {p}_{1}^{3}$,
indexes of 60 tones of the 242-tone DRU 7 in the third data pilot area are $\left[15:8:487\right] + {p}_{1}^{3}$, and
indexes of 60 tones of the 242-tone DRU 8 in the third data pilot area are $\left[19:8:491\right] + {p}_{1}^{3}$, where
${p}_{1}^{3} = 0 , 2 , 4 , 8 , 10 , 12 , 14 , 16$, or 18; or
that the any 242-tone DRU includes 61 tones in the third data pilot area includes:
   indexes of 61 tones of the 242-tone DRU 1 in the third data pilot area are $\left[12:8:492\right] + {p}_{2}^{3}$,
   indexes of 61 tones of the 242-tone DRU 2 in the third data pilot area are $\left[16:8:496\right] + {p}_{2}^{3}$,
   indexes of 61 tones of the 242-tone DRU 3 in the third data pilot area are $\left[14:8:494\right] + {p}_{2}^{3}$,
   indexes of 61 tones of the 242-tone DRU 4 in the third data pilot area are $\left[18:8:498\right] + {p}_{2}^{3}$,
   indexes of 61 tones of the 242-tone DRU 5 in the third data pilot area are $\left[13:8:493\right] + {p}_{2}^{3}$,
   indexes of 61 tones of the 242-tone DRU 6 in the third data pilot area are $\left[17:8:497\right] + {p}_{2}^{3}$,
   indexes of 61 tones of the 242-tone DRU 7 in the third data pilot area are $\left[15:8:495\right] + {p}_{2}^{3}$, and
   indexes of 61 tones of the 242-tone DRU 8 in the third data pilot area are $\left[19:8:499\right] + {p}_{2}^{3}$, where
   ${p}_{2}^{3} = 0 , 2 , 4 , 6 , 8$, or 10.

In a possible implementation, that the any 242-tone DRU includes 60 tones in the fourth data pilot area includes:
indexes of 60 tones of the 242-tone DRU 1 in the fourth data pilot area are $\left[515:8:987\right] + {p}_{1}^{4}$,
indexes of 60 tones of the 242-tone DRU 2 in the fourth data pilot area are $\left[519:8:991\right] + {p}_{1}^{4}$,
indexes of 60 tones of the 242-tone DRU 3 in the fourth data pilot area are $\left[517:8:989\right] + {p}_{1}^{4}$,
indexes of 60 tones of the 242-tone DRU 4 in the fourth data pilot area are $\left[521:8:993\right] + {p}_{1}^{4}$,
indexes of 60 tones of the 242-tone DRU 5 in the fourth data pilot area are $\left[516:8:988\right] + {p}_{1}^{4}$,
indexes of 60 tones of the 242-tone DRU 6 in the fourth data pilot area are $\left[520:8:992\right] + {p}_{1}^{4}$,
indexes of 60 tones of the 242-tone DRU 7 in the fourth data pilot area are $\left[518:8:990\right] + {p}_{1}^{4}$, and
indexes of 60 tones of the 242-tone DRU 8 in the fourth data pilot area are $\left[522:8:994\right] + {p}_{1}^{4}$, where
${p}_{1}^{4} = 0 , 2 , 4 , 6 , 8 , 10 , 12 , 14 , 16$, or 18; or
that the any 242-tone DRU includes 61 tones in the fourth data pilot area includes:
   indexes of 61 tones of the 242-tone DRU 1 in the fourth data pilot area are $\left[515:8:995\right] + {p}_{2}^{4}$,
   indexes of 61 tones of the 242-tone DRU 2 in the fourth data pilot area are $\left[519:8:999\right] + {p}_{2}^{4}$,
   indexes of 61 tones of the 242-tone DRU 3 in the fourth data pilot area are $\left[517:8:997\right] + {p}_{2}^{4}$,
   indexes of 61 tones of the 242-tone DRU 4 in the fourth data pilot area are $\left[521:8:1001\right] + {p}_{2}^{4}$,
   indexes of 61 tones of the 242-tone DRU 5 in the fourth data pilot area are $\left[516:8:996\right] + {p}_{2}^{4}$,
   indexes of 61 tones of the 242-tone DRU 6 in the fourth data pilot area are $\left[520:8:1000\right] + {p}_{2}^{4}$,
   indexes of 61 tones of the 242-tone DRU 7 in the fourth data pilot area are $\left[518:8:998\right] + {p}_{2}^{4}$, and
   indexes of 61 tones of the 242-tone DRU 8 in the fourth data pilot area are $\left[522:8:1002\right] + {p}_{2}^{4}$, where
   ${p}_{2}^{4} = 0 , 2 , 4 , 6 , 8$, or 10.

In a possible implementation,
indexes of the 242-tone DRU 1 are [-1012:8:-540, -509:8:-29, 12:8:484, 515:8:995];
indexes of the 242-tone DRU 2 are [-1008:8:-536, -505:8:-25, 16:8:488, 519:8:999];
indexes of the 242-tone DRU 3 are [-1010:8:-538, -507:8:-27, 14:8:486, 517:8:997];
indexes of the 242-tone DRU 4 are [-1006:8:-534, -503:8:-23, 18:8:490, 521:8:1001];
indexes of the 242-tone DRU 5 are [-1011:8:-539, -508:8:-28, 13:8:485, 516:8:996];
indexes of the 242-tone DRU 6 are [-1007:8:-535, -504:8:-24, 17:8:489, 520:8:1000];
indexes of the 242-tone DRU 7 are [-1009:8:-537, -506:8:-26, 15:8:487, 518:8:998]; and
indexes of the 242-tone DRU 8 are [-1005:8:-533, -502:8:-22, 19:8:491, 522:8:1002].

According to an eighth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a first direct current area, a second data pilot area, a second direct current area, a third data pilot area, a third direct current area, a fourth data pilot area, and a second guard area; the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area; and
a 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area, the second data pilot area, the third data pilot area, and the fourth data pilot area; and the 106-tone DRU 1 to the 106-tone DRU 16 meet at least one of the following: An index difference between adjacent tones, of any one of the 106-tone DRU 1 to the 106-tone DRU 16, distributed in the first data pilot area is 16, an index difference between adjacent tones, of the any 106-tone DRU, distributed in the second data pilot area is 16, an index difference between adjacent tones, of the any 106-tone DRU, distributed in the third data pilot area is 8, and an index difference between adjacent tones, of the any 106-tone DRU, distributed in the fourth data pilot area is 16; and a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous.

In a possible implementation, the any 106-tone DRU includes 26 tones or 27 tones in the first data pilot area; the any 106-tone DRU includes 26 tones or 27 tones in the second data pilot area; the any 106-tone DRU includes 26 tones or 27 tones in the third data pilot area; and the any 106-tone DRU includes 26 tones or 27 tones in the fourth data pilot area.

In a possible implementation, for the any 106-tone DRU, a difference between an index of a last tone of the 106-tone DRU in the first data pilot area and an index of a first tone of the 106-tone DRU in the second data pilot area is an integer multiple of 16, a difference between an index of a last tone of the 106-tone DRU in the second data pilot area and an index of a first tone of the 106-tone DRU in the third data pilot area is an integer multiple of 16, and a difference between an index of a last tone of the 106-tone DRU in the third data pilot area and an index of a first tone of the 106-tone DRU in the fourth data pilot area is an integer multiple of 16.

In a possible implementation, indexes of the first data pilot area are [-1012:-515], indexes of the second data pilot area are [-509:-12], indexes of the third data pilot area are [12:509], and indexes of the fourth data pilot area are [515:1012].

In a possible implementation, that the any 106-tone DRU includes 26 tones in the first data pilot area includes:
indexes of 26 tones of the 106-tone DRU 1 in the first data pilot area are $\left[-1012:16:-612\right] + {q}_{1}^{1}$ ,
indexes of 26 tones of the 106-tone DRU 2 in the first data pilot area are $\left[-1004:16:-604\right] + {q}_{1}^{1}$ ,
indexes of 26 tones of the 106-tone DRU 3 in the first data pilot area are $\left[-1008:16:-608\right] + {q}_{1}^{1}$ ,
indexes of 26 tones of the 106-tone DRU 4 in the first data pilot area are $\left[-1000:16:-600\right] + {q}_{1}^{1}$ ,
indexes of 26 tones of the 106-tone DRU 5 in the first data pilot area are $\left[-1010:16:-610\right] + {q}_{1}^{1}$ ,
indexes of 26 tones of the 106-tone DRU 6 in the first data pilot area are $\left[-1002:16:-602\right] + {q}_{1}^{1}$ ,
indexes of 26 tones of the 106-tone DRU 7 in the first data pilot area are $\left[-1006:16:-606\right] + {q}_{1}^{1}$ ,
indexes of 26 tones of the 106-tone DRU 8 in the first data pilot area are $\left[-998:16:-598\right] + {q}_{1}^{1}$ ,
indexes of 26 tones of the 106-tone DRU 9 in the first data pilot area are $\left[-1011:16:-611\right] + {q}_{1}^{1}$ ,
indexes of 26 tones of the 106-tone DRU 10 in the first data pilot area are $\left[-1003:16:-603\right] + {q}_{1}^{1}$ ,
indexes of 26 tones of the 106-tone DRU 11 in the first data pilot area are $\left[-1007:16:-607\right] + {q}_{1}^{1}$ ,
indexes of 26 tones of the 106-tone DRU 12 in the first data pilot area are $\left[-999:16:-599\right] + {q}_{1}^{1}$ ,
indexes of 26 tones of the 106-tone DRU 13 in the first data pilot area are $\left[-1009:16:-609\right] + {q}_{1}^{1}$ ,
indexes of 26 tones of the 106-tone DRU 14 in the first data pilot area are $\left[-1001:16:-601\right] + {q}_{1}^{1}$ ,
indexes of 26 tones of the 106-tone DRU 15 in the first data pilot area are $\left[-1005:16:-605\right] + {q}_{1}^{1}$ , and
indexes of 26 tones of the 106-tone DRU 16 in the first data pilot area are $\left[-997:16:-597\right] + {q}_{1}^{1}$ ;
   or
that the any 106-tone DRU includes 27 tones in the first data pilot area includes:
   indexes of 27 tones of the 106-tone DRU 1 in the first data pilot area are $\left[-1012:16:-596\right] + {q}_{2}^{1}$ ,
   indexes of 27 tones of the 106-tone DRU 2 in the first data pilot area are $\left[-1004:16:-588\right] + {q}_{2}^{1}$ ,
   indexes of 27 tones of the 106-tone DRU 3 in the first data pilot area are $\left[-1008:16:-592\right] + {q}_{2}^{1}$ ,
   indexes of 27 tones of the 106-tone DRU 4 in the first data pilot area are $\left[-1000:16:-584\right] + {q}_{2}^{1}$ ,
   indexes of 27 tones of the 106-tone DRU 5 in the first data pilot area are $\left[-1010:16:-594\right] + {q}_{2}^{1}$ ,
   indexes of 27 tones of the 106-tone DRU 6 in the first data pilot area are $\left[-1002:16:-586\right] + {q}_{2}^{1}$ ,
   indexes of 27 tones of the 106-tone DRU 7 in the first data pilot area are $\left[-1006:16:-590\right] + {q}_{2}^{1}$ ,
   indexes of 27 tones of the 106-tone DRU 8 in the first data pilot area are $\left[-998:16:-592\right] + {q}_{2}^{1}$ ,
   indexes of 27 tones of the 106-tone DRU 9 in the first data pilot area are $\left[-1011:16:-595\right] + {q}_{2}^{1}$ ,
   indexes of 27 tones of the 106-tone DRU 10 in the first data pilot area are $\left[-1003:16:-587\right] + {q}_{2}^{1}$ ,
   indexes of 27 tones of the 106-tone DRU 11 in the first data pilot area are $\left[-1007:16:-591\right] + {q}_{2}^{1}$ ,
   indexes of 27 tones of the 106-tone DRU 12 in the first data pilot area are $\left[-999:16:-583\right] + {q}_{2}^{1}$ ,
   indexes of 27 tones of the 106-tone DRU 13 in the first data pilot area are $\left[-1009:16:-593\right] + {q}_{2}^{1}$ ,
   indexes of 27 tones of the 106-tone DRU 14 in the first data pilot area are $\left[-1001:16:-585\right] + {q}_{2}^{1}$ ,
   indexes of 27 tones of the 106-tone DRU 15 in the first data pilot area are $\left[-1005:16:-589\right] + {q}_{2}^{1}$ , and
   indexes of 27 tones of the 106-tone DRU 16 in the first data pilot area are $\left[-997:16:-581\right] + {q}_{2}^{1}$ .

In a possible implementation, that the any 106-tone DRU includes 26 tones in the second data pilot area includes:
indexes of 26 tones of the 106-tone DRU 1 in the second data pilot area are $\left[-509:16:-109\right] + {q}_{1}^{2}$ ,
indexes of 26 tones of the 106-tone DRU 2 in the second data pilot area are $\left[-501:16:-101\right] + {q}_{1}^{2}$ ,
indexes of 26 tones of the 106-tone DRU 3 in the second data pilot area are $\left[-505:16:-105\right] + {q}_{1}^{2}$ ,
indexes of 26 tones of the 106-tone DRU 4 in the second data pilot area are $\left[-497:16:-97\right] + {q}_{1}^{2}$ ,
indexes of 26 tones of the 106-tone DRU 5 in the second data pilot area are $\left[-507:16:-107\right] + {q}_{1}^{2}$ ,
indexes of 26 tones of the 106-tone DRU 6 in the second data pilot area are $\left[-499:16:-99\right] + {q}_{1}^{2}$ ,
indexes of 26 tones of the 106-tone DRU 7 in the second data pilot area are $\left[-503:16:-103\right] + {q}_{1}^{2}$ ,
indexes of 26 tones of the 106-tone DRU 8 in the second data pilot area are $\left[-495:16:-95\right] + {q}_{1}^{2}$ ,
indexes of 26 tones of the 106-tone DRU 9 in the second data pilot area are $\left[-508:16:-108\right] + {q}_{1}^{2}$ ,
indexes of 26 tones of the 106-tone DRU 10 in the second data pilot area are $\left[-500:16:-100\right] + {q}_{1}^{2}$ ,
indexes of 26 tones of the 106-tone DRU 11 in the second data pilot area are $\left[-504:16:-104\right] + {q}_{1}^{2}$ ,
indexes of 26 tones of the 106-tone DRU 12 in the second data pilot area are $\left[-496:16:-96\right] + {q}_{1}^{2}$ ,
indexes of 26 tones of the 106-tone DRU 13 in the second data pilot area are $\left[-506:16:-106\right] + {q}_{1}^{2}$ ,
indexes of 26 tones of the 106-tone DRU 14 in the second data pilot area are $\left[-498:16:-98\right] + {q}_{1}^{2}$ ,
indexes of 26 tones of the 106-tone DRU 15 in the second data pilot area are $\left[-502:16:-102\right] + {q}_{1}^{2}$ , and
indexes of 26 tones of the 106-tone DRU 16 in the second data pilot area are $\left[-494:16:-94\right] + {q}_{1}^{2}$ ;
   or
that the any 106-tone DRU includes 27 tones in the second data pilot area includes:
   indexes of 27 tones of the 106-tone DRU 1 in the second data pilot area are $\left[-509:16:-93\right] + {q}_{2}^{2}$ ,
   indexes of 27 tones of the 106-tone DRU 2 in the second data pilot area are $\left[-501:16:-85\right] + {q}_{2}^{2}$ ,
   indexes of 27 tones of the 106-tone DRU 3 in the second data pilot area are $\left[-505:16:-89\right] + {q}_{2}^{2}$ ,
   indexes of 27 tones of the 106-tone DRU 4 in the second data pilot area are $\left[-497:16:-81\right] + {q}_{2}^{2}$ ,
   indexes of 27 tones of the 106-tone DRU 5 in the second data pilot area are $\left[-507:16:-91\right] + {q}_{2}^{2}$ ,
   indexes of 27 tones of the 106-tone DRU 6 in the second data pilot area are $\left[-499:16:-83\right] + {q}_{2}^{2}$ ,
   indexes of 27 tones of the 106-tone DRU 7 in the second data pilot area are $\left[-503:16:-87\right] + {q}_{2}^{2}$ ,
   indexes of 27 tones of the 106-tone DRU 8 in the second data pilot area are $\left[-495:16:-79\right] + {q}_{2}^{2}$ ,
   indexes of 27 tones of the 106-tone DRU 9 in the second data pilot area are $\left[-508:16:-92\right] + {q}_{2}^{2}$ ,
   indexes of 27 tones of the 106-tone DRU 10 in the second data pilot area are $\left[-500:16:-84\right] + {q}_{2}^{2}$ ,
   indexes of 27 tones of the 106-tone DRU 11 in the second data pilot area are $\left[-504:16:-88\right] + {q}_{2}^{2}$ ,
   indexes of 27 tones of the 106-tone DRU 12 in the second data pilot area are $\left[-496:16:-80\right] + {q}_{2}^{2}$ ,
   indexes of 27 tones of the 106-tone DRU 13 in the second data pilot area are $\left[-506:16:-90\right] + {q}_{2}^{2}$ ,
   indexes of 27 tones of the 106-tone DRU 14 in the second data pilot area are $\left[-498:16:-82\right] + {q}_{2}^{2}$ ,
   indexes of 27 tones of the 106-tone DRU 15 in the second data pilot area are $\left[-502:16:-86\right] + {q}_{2}^{2}$ , and
   indexes of 27 tones of the 106-tone DRU 16 in the second data pilot area are $\left[-494:16:-78\right] + {q}_{2}^{2}$ .

In a possible implementation, that the any 106-tone DRU includes 26 tones in the third data pilot area includes:
indexes of 26 tones of the 106-tone DRU 1 in the third data pilot area are $\left[12:16:412\right] + {q}_{1}^{3}$,
indexes of 26 tones of the 106-tone DRU 2 in the third data pilot area are $\left[20:16:420\right] + {q}_{1}^{3}$,
indexes of 26 tones of the 106-tone DRU 3 in the third data pilot area are $\left[16:16:416\right] + {q}_{1}^{3}$,
indexes of 26 tones of the 106-tone DRU 4 in the third data pilot area are $\left[24:16:424\right] + {q}_{1}^{3}$,
indexes of 26 tones of the 106-tone DRU 5 in the third data pilot area are $\left[14:16:414\right] + {q}_{1}^{3}$,
indexes of 26 tones of the 106-tone DRU 6 in the third data pilot area are $\left[22:16:422\right] + {q}_{1}^{3}$,
indexes of 26 tones of the 106-tone DRU 7 in the third data pilot area are $\left[18:16:418\right] + {q}_{1}^{3}$,
indexes of 26 tones of the 106-tone DRU 8 in the third data pilot area are $\left[26:16:426\right] + {q}_{1}^{3}$,
indexes of 26 tones of the 106-tone DRU 9 in the third data pilot area are $\left[13:16:413\right] + {q}_{1}^{3}$,
indexes of 26 tones of the 106-tone DRU 10 in the third data pilot area are $\left[21:16:421\right] + {q}_{1}^{3}$,
indexes of 26 tones of the 106-tone DRU 11 in the third data pilot area are $\left[17:16:417\right] + {q}_{1}^{3}$,
indexes of 26 tones of the 106-tone DRU 12 in the third data pilot area are $\left[25:16:425\right] + {q}_{1}^{3}$,
indexes of 26 tones of the 106-tone DRU 13 in the third data pilot area are $\left[15:16:415\right] + {q}_{1}^{3}$,
indexes of 26 tones of the 106-tone DRU 14 in the third data pilot area are $\left[23:16:423\right] + {q}_{1}^{3}$,
indexes of 26 tones of the 106-tone DRU 15 in the third data pilot area are $\left[19:16:419\right] + {q}_{1}^{3}$, and
indexes of 26 tones of the 106-tone DRU 16 in the third data pilot area are $\left[27:16:427\right] + {q}_{1}^{3}$;
   or
that the any 106-tone DRU includes 27 tones in the third data pilot area includes:
   indexes of 27 tones of the 106-tone DRU 1 in the third data pilot area are $\left[12:16:428\right] + {q}_{1}^{3}$,
   indexes of 27 tones of the 106-tone DRU 2 in the third data pilot area are $\left[20:16:436\right] + {q}_{1}^{3}$,
   indexes of 27 tones of the 106-tone DRU 3 in the third data pilot area are $\left[16:16:432\right] + {q}_{1}^{3}$,
   indexes of 27 tones of the 106-tone DRU 4 in the third data pilot area are $\left[24:16:440\right] + {q}_{1}^{3}$,
   indexes of 27 tones of the 106-tone DRU 5 in the third data pilot area are $\left[14:16:430\right] + {q}_{1}^{3}$,
   indexes of 27 tones of the 106-tone DRU 6 in the third data pilot area are $\left[22:16:438\right] + {q}_{1}^{3}$,
   indexes of 27 tones of the 106-tone DRU 7 in the third data pilot area are $\left[18:16:434\right] + {q}_{1}^{3}$,
   indexes of 27 tones of the 106-tone DRU 8 in the third data pilot area are $\left[26:16:442\right] + {q}_{1}^{3}$,
   indexes of 27 tones of the 106-tone DRU 9 in the third data pilot area are $\left[13:16:429\right] + {q}_{1}^{3}$,
   indexes of 27 tones of the 106-tone DRU 10 in the third data pilot area are $\left[21:16:437\right] + {q}_{1}^{3}$,
   indexes of 27 tones of the 106-tone DRU 11 in the third data pilot area are $\left[17:16:433\right] + {q}_{1}^{3}$,
   indexes of 27 tones of the 106-tone DRU 12 in the third data pilot area are $\left[25:16:441\right] + {q}_{1}^{3}$,
   indexes of 27 tones of the 106-tone DRU 13 in the third data pilot area are $\left[15:16:431\right] + {q}_{1}^{3}$,
   indexes of 27 tones of the 106-tone DRU 14 in the third data pilot area are $\left[23:16:439\right] + {q}_{1}^{3}$,
   indexes of 27 tones of the 106-tone DRU 15 in the third data pilot area are $\left[19:16:435\right] + {q}_{1}^{3}$, and
   indexes of 27 tones of the 106-tone DRU 16 in the third data pilot area are $\left[27:16:443\right] + {q}_{1}^{3}$.

In a possible implementation, that the any 106-tone DRU includes 26 tones in the fourth data pilot area includes:
indexes of 26 tones of the 106-tone DRU 1 in the fourth data pilot area are $\left[515:16:915\right] + {q}_{1}^{4}$,
indexes of 26 tones of the 106-tone DRU 2 in the fourth data pilot area are $\left[523:16:923\right] + {q}_{1}^{4}$,
indexes of 26 tones of the 106-tone DRU 3 in the fourth data pilot area are $\left[519:16:919\right] + {q}_{1}^{4}$,
indexes of 26 tones of the 106-tone DRU 4 in the fourth data pilot area are $\left[527:16:927\right] + {q}_{1}^{4}$,
indexes of 26 tones of the 106-tone DRU 5 in the fourth data pilot area are $\left[517:16:917\right] + {q}_{1}^{4}$,
indexes of 26 tones of the 106-tone DRU 6 in the fourth data pilot area are $\left[525:16:925\right] + {q}_{1}^{4}$,
indexes of 26 tones of the 106-tone DRU 7 in the fourth data pilot area are $\left[521:16:921\right] + {q}_{1}^{4}$,
indexes of 26 tones of the 106-tone DRU 8 in the fourth data pilot area are $\left[529:16:929\right] + {q}_{1}^{4}$,
indexes of 26 tones of the 106-tone DRU 9 in the fourth data pilot area are $\left[516:16:916\right] + {q}_{1}^{4}$,
indexes of 26 tones of the 106-tone DRU 10 in the fourth data pilot area are $\left[524:16:924\right] + {q}_{1}^{4}$,
indexes of 26 tones of the 106-tone DRU 11 in the fourth data pilot area are $\left[520:16:920\right] + {q}_{1}^{4}$,
indexes of 26 tones of the 106-tone DRU 12 in the fourth data pilot area are $\left[528:16:928\right] + {q}_{1}^{4}$,
indexes of 26 tones of the 106-tone DRU 13 in the fourth data pilot area are $\left[518:16:918\right] + {q}_{1}^{4}$,
indexes of 26 tones of the 106-tone DRU 14 in the fourth data pilot area are $\left[526:16:926\right] + {q}_{1}^{4}$,
indexes of 26 tones of the 106-tone DRU 15 in the fourth data pilot area are $\left[522:16:922\right] + {q}_{1}^{4}$, and
indexes of 26 tones of the 106-tone DRU 16 in the fourth data pilot area are $\left[530:16:930\right] + {q}_{1}^{4}$;
   or
that the any 106-tone DRU includes 27 tones in the fourth data pilot area includes:
   indexes of 27 tones of the 106-tone DRU 1 in the fourth data pilot area are $\left[515:16:931\right] + {q}_{2}^{4}$,
   indexes of 27 tones of the 106-tone DRU 2 in the fourth data pilot area are $\left[523:16:939\right] + {q}_{2}^{4}$,
   indexes of 27 tones of the 106-tone DRU 3 in the fourth data pilot area are $\left[519:16:935\right] + {q}_{2}^{4}$,
   indexes of 27 tones of the 106-tone DRU 4 in the fourth data pilot area are $\left[527:16:943\right] + {q}_{2}^{4}$,
   indexes of 27 tones of the 106-tone DRU 5 in the fourth data pilot area are $\left[517:16:933\right] + {q}_{2}^{4}$,
   indexes of 27 tones of the 106-tone DRU 6 in the fourth data pilot area are $\left[525:16:941\right] + {q}_{2}^{4}$,
   indexes of 27 tones of the 106-tone DRU 7 in the fourth data pilot area are $\left[521:16:937\right] + {q}_{2}^{4}$,
   indexes of 27 tones of the 106-tone DRU 8 in the fourth data pilot area are $\left[529:16:945\right] + {q}_{2}^{4}$,
   indexes of 27 tones of the 106-tone DRU 9 in the fourth data pilot area are $\left[516:16:932\right] + {q}_{2}^{4}$,
   indexes of 27 tones of the 106-tone DRU 10 in the fourth data pilot area are $\left[524:16:940\right] + {q}_{2}^{4}$,
   indexes of 27 tones of the 106-tone DRU 11 in the fourth data pilot area are $\left[520:16:936\right] + {q}_{2}^{4}$,
   indexes of 27 tones of the 106-tone DRU 12 in the fourth data pilot area are $\left[528:16:944\right] + {q}_{2}^{4}$,
   indexes of 27 tones of the 106-tone DRU 13 in the fourth data pilot area are $\left[518:16:934\right] + {q}_{2}^{4}$,
   indexes of 27 tones of the 106-tone DRU 14 in the fourth data pilot area are $\left[526:16:942\right] + {q}_{2}^{4}$,
   indexes of 27 tones of the 106-tone DRU 15 in the fourth data pilot area are $\left[522:16:938\right] + {q}_{2}^{4}$, and
   indexes of 27 tones of the 106-tone DRU 16 in the fourth data pilot area are $\left[530:16:946\right] + {q}_{2}^{4}$.

In a possible implementation,
indexes of the 106-tone DRU 1 are [-1012:16:-612, -509:16:-93, 12:16:412, 515:16:931];
indexes of the 106-tone DRU 2 are [-1004:16:-604, -501:16:-85, 20:16:420, 523:16:939];
indexes of the 106-tone DRU 3 are [-1008:16:-608, -505:16:-89, 16:16:416, 519:16:935];
indexes of the 106-tone DRU 4 are [-1000:16:-600, -497:16:-81, 24:16:424, 527:16:943];
indexes of the 106-tone DRU 5 are [-1010:16:-610, -507:16:-91, 14:16:414, 517:16:933];
indexes of the 106-tone DRU 6 are [-1002:16:-602, -499:16:-83, 22:16:422, 525:16:941];
indexes of the 106-tone DRU 7 are [-1006:16:-606, -503:16:-87, 18:16:418, 521:16:937];
indexes of the 106-tone DRU 8 are [-998:16:-598, -495:16:-79, 26:16:426, 529:16:945];
indexes of the 106-tone DRU 9 are [-1011:16:-611, -508:16:-92, 13:16:413, 516:16:932];
indexes of the 106-tone DRU 10 are [-1003:16:-603, -500:16:-84, 21:16:421, 524:16:940];
indexes of the 106-tone DRU 11 are [-1007:16:-607, -504:16:-88, 17:16:417, 520:16:936];
indexes of the 106-tone DRU 12 are [-999:16:-599, -496:16:-80, 25:16:425, 528:16:944];
indexes of the 106-tone DRU 13 are [-1009:16:-609, -506:16:-90, 15:16:415, 518:16:934];
indexes of the 106-tone DRU 14 are [-1001:16:-601, -498:16:-82, 23:16:423, 526:16:942];
indexes of the 106-tone DRU 15 are [-1005:16:-605, -502:16:-86, 19:16:419, 522:16:938]; and
indexes of the 106-tone DRU 16 are [-997:16:-597, -494:16:-78, 27:16:427, 530:16:946].

According to a ninth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a direct current area, a second data pilot area, and a second guard area, the first data pilot area is located between the first guard area and the direct current area, and the second data pilot area is located between the direct current area and the second guard area; and
a 996-tone DRU 1 is distributed in the first data pilot area and the second data pilot area, and a 996-tone DRU 2 is distributed in the first data pilot area and the second data pilot area; and the 996-tone DRU 1 or the 996-tone DRU 2 meets at least one of the following: An index difference between adjacent tones, of the 996-tone DRU 1 or the 996-tone DRU 2, distributed in the first data pilot area is 2, and an index difference between adjacent tones, of the 996-tone DRU 1 or the 996-tone DRU 2, distributed in the second data pilot area is 2; and a p^{th} tone in the 996-tone DRU 1 and a p^{th} tone in the 996-tone DRU 2 are contiguous.

In this embodiment of this application, the 996-tone DRUs can achieve a higher power amplification factor by meeting the foregoing conditions, so that a transmit power of a communication apparatus is improved. In addition, it ensures that the two 996-tone DRUs form an overall shifting relationship, thereby facilitating index storage and simplifying sequence design.

In a possible implementation, the 996-tone DRU 1 or the 996-tone DRU 2 includes 498 tones in the first data pilot area, and the 996-tone DRU 1 or the 996-tone DRU 2 includes 498 tones in the second data pilot area.

In this embodiment of this application, the first data pilot area includes the 498 tones of the 996-tone DRU 1 and the 498 tones of the 996-tone DRU 2, and the second data pilot area includes the 498 tones of the 996-tone DRU 1 and the 498 tones of the 996-tone DRU 2, so that the 996-tone DRUs are evenly distributed in the two data pilot areas. Therefore, when a 484-tone DRU, a 242-tone DRU, or a 106-tone DRU is designed based on a 996-tone DRU, DRUs of different sizes can form an overall shifting relationship, which facilitates index storage and reading.

In a possible implementation, for the 996-tone DRU 1 or the 996-tone DRU 2, a difference between an index of a last tone of the 996-tone DRU 1 or the 996-tone DRU 2 in the first data pilot area and an index of a first tone of the 996-tone DRU 1 or the 996-tone DRU 2 in the second data pilot area is an integer multiple of 2.

In this embodiment of this application, the 996-tone DRUs may ensure that PAPRs of the 996-tone DRUs are relatively low by meeting the foregoing condition.

In a possible implementation, indexes of the first data pilot area are [-1012:-12], and indexes of the second data pilot area are [12:1012].

In a possible implementation, that the 996-tone DRU 1 or the 996-tone DRU 2 includes 498 tones in the first data pilot area includes:
indexes of the 498 tones of the 996-tone DRU 1 in the first data pilot area are [-1012:2:-18]+*t*¹, and
indexes of the 498 tones of the 996-tone DRU 2 in the first data pilot area are [-1011:2:-17]+*t*¹, where
*t*¹=0, 2, or 4.

In a possible implementation, that the 996-tone DRU 1 or the 996-tone DRU 2 includes 498 tones in the second data pilot area includes:
indexes of the 498 tones of the 996-tone DRU 1 in the second data pilot area are [12:2:1006]+*t*², and
indexes of the 498 tones of the 996-tone DRU 2 in the second data pilot area are [13:2:1007]+*t*², where
*t*²=0, 2, or 4.

In a possible implementation, indexes of the 996-tone DRU 1 are [-1008:2:-14, 12:2:1006], and indexes of the 996-tone DRU 2 are [-1007:2:-13, 13:2:1007].

In a possible implementation, indexes of the first data pilot area are [-1012:-3], and indexes of the second data pilot area are [3:1012].

In a possible implementation, that the 996-tone DRU 1 or the 996-tone DRU 2 includes 498 tones in the first data pilot area includes:
indexes of the 498 tones of the 996-tone DRU 1 in the first data pilot area are [-997:2:-3]+*t*¹, and
indexes of the 498 tones of the 996-tone DRU 2 in the first data pilot area are [-998:2:-4]+*t*¹, where
*t*¹=0, -2, -4, -6, -8, -10, -12, or -14.

In a possible implementation, that the 996-tone DRU 1 or the 996-tone DRU 2 includes 498 tones in the second data pilot area includes:
indexes of the 498 tones of the 996-tone DRU 1 in the second data pilot area are [5:2:999]+*t*², and
indexes of the 498 tones of the 996-tone DRU 2 in the second data pilot area are [4:2:998]+*t*², where
*t*²=0, 2, 4, 6, 8, 10, or 12.

In a possible implementation, indexes of the 996-tone DRU 1 are [-997:2:-3, 5:2:999], and indexes of the 996-tone DRU 2 are [-998:2:-4, 4:2:998].

According to a tenth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a direct current area, a second data pilot area, and a second guard area, the first data pilot area is located between the first guard area and the direct current area, and the second data pilot area is located between the direct current area and the second guard area; and
a 484-tone DRU 1, a 484-tone DRU 2, a 484-tone DRU 3, and a 484-tone DRU 4 are all distributed in the first data pilot area and the second data pilot area; and the 484-tone DRU 1 to the 484-tone DRU 4 meet at least one of the following: An index difference between adjacent tones, of any one of the 484-tone DRU 1 to the 484-tone DRU 4, distributed in the first data pilot area is 4, and an index difference between adjacent tones, of the any 484-tone DRU, distributed in the second data pilot area is 4; and a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

In a possible implementation, the any 484-tone DRU includes 242 tones in the first data pilot area; and the any 484-tone DRU includes 242 tones in the second data pilot area.

In a possible implementation, for the any 484-tone DRU, a difference between an index of a last tone of the 484-tone DRU in the first data pilot area and an index of a first tone of the 484-tone DRU in the second data pilot area is an integer multiple of 4.

In a possible implementation, indexes of the first data pilot area are [-1012:-12], and indexes of the second data pilot area are [12:1012].

In a possible implementation, that the any 484-tone DRU includes 242 tones in the first data pilot area includes:
indexes of 242 tones of the 484-tone DRU 1 in the first data pilot area are [-988:4:-24]+k¹,
indexes of 242 tones of the 484-tone DRU 2 in the first data pilot area are [-986:4:-22]+k¹,
indexes of 242 tones of the 484-tone DRU 3 in the first data pilot area are [-987:4:-23]+k¹, and
indexes of 242 tones of the 484-tone DRU 4 in the first data pilot area are [-985:4:-21]+k¹, where
k¹=-24, -22, -20, -18, -16, -14, -12, -10, -8, -6, -4, -2, 0, 2, 4, 6, or 8.

In a possible implementation, that the any 484-tone DRU includes 242 tones in the second data pilot area includes:
indexes of 242 tones of the 484-tone DRU 1 in the second data pilot area are [12:4:976]+k²,
indexes of 242 tones of the 484-tone DRU 2 in the second data pilot area are [14:4:978]+k²,
indexes of 242 tones of the 484-tone DRU 3 in the second data pilot area are [13:4:977]+k², and
indexes of 242 tones of the 484-tone DRU 4 in the second data pilot area are [15:4:979]+k², where
k²=0, 2, 4, 6, 8, 10, 12, 14, 16, 18, 20, 22, 24, 26, 28, 30, or 32.

In a possible implementation,
indexes of the 484-tone DRU 1 are [-988:4:-24, 12:4:976];
indexes of the 484-tone DRU 2 are [-986:4:-22, 14:4:978];
indexes of the 484-tone DRU 3 are [-987:4:-23, 13:4:977]; and
indexes of the 484-tone DRU 4 are [-985:4:-21, 15:4:979].

In a possible implementation, indexes of the first data pilot area are [-1012:-3], and indexes of the second data pilot area are [3:1012].

In a possible implementation, that the any 484-tone DRU includes 242 tones in the first data pilot area includes:
indexes of 242 tones of the 484-tone DRU 1 in the first data pilot area are [-967:4:-3]+k¹;
indexes of 242 tones of the 484-tone DRU 2 in the first data pilot area are [-969:4:-5]+k¹;
indexes of 242 tones of the 484-tone DRU 3 in the first data pilot area are [-968:4:-4]+k¹; and
indexes of 242 tones of the 484-tone DRU 4 in the first data pilot area are [-970:4:-6]+k¹, where
k¹=-42, -40, -38, -36, ..., -8, -6, -4, -2, or 0.

In a possible implementation, that the any 484-tone DRU includes 242 tones in the second data pilot area includes:
indexes of 242 tones of the 484-tone DRU 1 in the second data pilot area are [9:4:973]+k²,
indexes of 242 tones of the 484-tone DRU 2 in the second data pilot area are [7:4:971]+k²,
indexes of 242 tones of the 484-tone DRU 3 in the second data pilot area are [8:4:972]+k², and
indexes of 242 tones of the 484-tone DRU 4 in the second data pilot area are [6:4:970]+k², where
k²=0, 2, 4, 6, 8, ..., 30, 32, 34, 36, or 38.

In a possible implementation,
indexes of the 484-tone DRU 1 are [-967:4:-3, 9:4:973];
indexes of the 484-tone DRU 2 are [-969:4:-5, 7:4:971];
indexes of the 484-tone DRU 3 are [-968:4:-4, 8:4:972]; and
indexes of the 484-tone DRU 4 are [-970:4:-6, 6:4:970].

According to an eleventh aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a direct current area, a second data pilot area, and a second guard area, the first data pilot area is located between the first guard area and the direct current area, and the second data pilot area is located between the direct current area and the second guard area; and
a 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area and the second data pilot area; and the 242-tone DRU 1 to the 242-tone DRU 8 meet at least one of the following: An index difference between adjacent tones, of any one of the 242-tone DRU 1 to the 242-tone DRU 8, distributed in the first data pilot area is 8, and an index difference between adjacent tones, of the any 242-tone DRU, distributed in the second data pilot area is 8; and a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

In a possible implementation, the any 242-tone DRU includes 121 tones in the first data pilot area; and the any 242-tone DRU includes 121 tones in the second data pilot area.

In a possible implementation, for the any 242-tone DRU, a difference between an index of a last tone of the 242-tone DRU in the first data pilot area and an index of a first tone of the 242-tone DRU in the second data pilot area is an integer multiple of 8.

In a possible implementation, indexes of the first data pilot area are [-1012:-12], and indexes of the second data pilot area are [12:1012].

In a possible implementation, that the any 242-tone DRU includes 121 tones in the first data pilot area includes:
indexes of the 242-tone DRU 1 in the first data pilot area are [-988:8:-28]+*p*¹;
indexes of the 242-tone DRU 2 in the first data pilot area are [-984:8:-24]+*p*¹;
indexes of the 242-tone DRU 3 in the first data pilot area are [-986:8:-26]+*p*¹;
indexes of the 242-tone DRU 4 in the first data pilot area are [-982:8:-22]+*p*¹;
indexes of the 242-tone DRU 5 in the first data pilot area are [-987:8:-27]+*p*¹;
indexes of the 242-tone DRU 6 in the first data pilot area are [-983:8:-23]+*p*¹;
indexes of the 242-tone DRU 7 in the first data pilot area are [-985:8:-25]+*p*¹; and
indexes of the 242-tone DRU 8 in the first data pilot area are [-981:8:-21]+*p*¹; where
*p*¹=-24, -22, -20, -18, -16, -14, -12, -10, -8, -6, -4, -2, 0, 2, 4, 6, or 8.

In a possible implementation, that the any 242-tone DRU includes 121 tones in the second data pilot area includes:
indexes of the 242-tone DRU 1 in the second data pilot area are [12:8:972]+*p*²;
indexes of the 242-tone DRU 2 in the second data pilot area are [16:8:976]+*p*²;
indexes of the 242-tone DRU 3 in the second data pilot area are [14:8:974]+*p*²;
indexes of the 242-tone DRU 4 in the second data pilot area are [18:8:978]+*p*²;
indexes of the 242-tone DRU 5 in the second data pilot area are [13:8:973]+*p*²;
indexes of the 242-tone DRU 6 in the second data pilot area are [17:8:977]+*p*²;
indexes of the 242-tone DRU 7 in the second data pilot area are [15:8:975]+*p*²; and
indexes of the 242-tone DRU 8 in the second data pilot area are [19:8:979]+*p*²; where
*p*²=0, 2, 4, 6, 8, 10, 12, 14, 16, 18, 20, 22, 24, 26, 28, 30, or 32.

In a possible implementation,
indexes of the 242-tone DRU 1 are [-988:8:-28, 12:8:972];
indexes of the 242-tone DRU 2 are [-984:8:-24, 16:8:976];
indexes of the 242-tone DRU 3 are [-986:8:-26, 14:8:974];
indexes of the 242-tone DRU 4 are [-982:8:-22, 18:8:978];
indexes of the 242-tone DRU 5 are [-987:8:-27, 13:8:973];
indexes of the 242-tone DRU 6 are [-983:8:-23, 17:8:977];
indexes of the 242-tone DRU 7 are [-985:8:-25, 15:8:975]; and
indexes of the 242-tone DRU 8 are [-981:8:-21, 19:8:979].

In a possible implementation, indexes of the first data pilot area are [-1012:-3], and indexes of the second data pilot area are [3:1012].

In a possible implementation, that the any 242-tone DRU includes 121 tones in the first data pilot area includes:
indexes of the 242-tone DRU 1 in the first data pilot area are [-967:8:-7]+*p*¹;
indexes of the 242-tone DRU 2 in the first data pilot area are [-963:8:-3]+*p*¹;
indexes of the 242-tone DRU 3 in the first data pilot area are [-969:8:-9]+*p*¹;
indexes of the 242-tone DRU 4 in the first data pilot area are [-965:8:-5]+*p*¹;
indexes of the 242-tone DRU 5 in the first data pilot area are [-968:8:-8]+*p*¹;
indexes of the 242-tone DRU 6 in the first data pilot area are [-964:8:-4]+*p*¹;
indexes of the 242-tone DRU 7 in the first data pilot area are [-970:8:-10]+*p*¹; and
indexes of the 242-tone DRU 8 in the first data pilot area are [-966:8:-6]+*p*¹; where
*p*¹=-42, -40, -38, -36, ..., -8, -6, -4, -2, or 0.

In a possible implementation, that the any 242-tone DRU includes 121 tones in the second data pilot area includes:
indexes of the 242-tone DRU 1 in the second data pilot area are [9:8:969]+*p*²;
indexes of the 242-tone DRU 2 in the second data pilot area are [13:8:973]+*p*²;
indexes of the 242-tone DRU 3 in the second data pilot area are [7:8:967]+*p*²;
indexes of the 242-tone DRU 4 in the second data pilot area are [11:8:971]+*p*²;
indexes of the 242-tone DRU 5 in the second data pilot area are [8:8:968]+*p*²;
indexes of the 242-tone DRU 6 in the second data pilot area are [12:8:972]+*p*²;
indexes of the 242-tone DRU 7 in the second data pilot area are [6:8:966]+*p*²; and
indexes of the 242-tone DRU 8 in the second data pilot area are [10:8:970]+*p*², where
*p*²=0, 2, 4, 6, 8, ..., 30, 32, 34, 36, or 38.

In a possible implementation,
indexes of the 242-tone DRU 1 are [-967:8:-7, 9:8:969];
indexes of the 242-tone DRU 2 are [-963:8:-3, 13:8:973];
indexes of the 242-tone DRU 3 are [-969:8:-9, 7:8:967];
indexes of the 242-tone DRU 4 are [-965:8:-5, 11:8:971];
indexes of the 242-tone DRU 5 are [-968:8:-8, 8:8:968];
indexes of the 242-tone DRU 6 are [-964:8:-4, 12:8:972];
indexes of the 242-tone DRU 7 are [-970:8:-10, 6:8:966]; and
indexes of the 242-tone DRU 8 are [-966:8:-6, 10:8:970].

According to a twelfth aspect, an embodiment of this application provides a communication method. The method includes:
sending or receiving an orthogonal frequency division multiplexing OFDM symbol based on a tone plan corresponding to a first bandwidth, where
the tone plan corresponding to the first bandwidth includes a first guard area, a first data pilot area, a direct current area, a second data pilot area, and a second guard area, the first data pilot area is located between the first guard area and the direct current area, and the second data pilot area is located between the direct current area and the second guard area; and
a 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area and the second data pilot area; and the 106-tone DRU 1 to the 106-tone DRU 16 meet at least one of the following: An index difference between adjacent tones, of any one of the 106-tone DRU 1 to the 106-tone DRU 16, distributed in the first data pilot area is 16, and an index difference between adjacent tones, of the any 106-tone DRU, distributed in the second data pilot area is 16; and a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous.

In a possible implementation, the any 106-tone DRU includes 53 tones in the first data pilot area, and the any 106-tone DRU includes 53 tones in the second data pilot area.

In a possible implementation, for the any 106-tone DRU, a difference between an index of a last tone of the any 106-tone DRU in the first data pilot area and an index of a first tone of the any 106-tone DRU in the second data pilot area is an integer multiple of 16.

In a possible implementation, indexes of the first data pilot area are [-1012:-12], and indexes of the second data pilot area are [12:1012].

In a possible implementation, that the any 106-tone DRU includes 53 tones in the first data pilot area includes:
indexes of the 106-tone DRU 1 in the first data pilot area are [-868:16:-36]+*q*¹;
indexes of the 106-tone DRU 2 in the first data pilot area are [-860:16:-28]+*q*¹;
indexes of the 106-tone DRU 3 in the first data pilot area are [-864:16:-32]+*q*¹;
indexes of the 106-tone DRU 4 in the first data pilot area are [-856:16:-24]+*q*¹;
indexes of the 106-tone DRU 5 in the first data pilot area are [-866:16:-34]+*q*¹;
indexes of the 106-tone DRU 6 in the first data pilot area are [-858:16:-26]+*q*¹;
indexes of the 106-tone DRU 7 in the first data pilot area are [-862:16:-30]+*q*¹;
indexes of the 106-tone DRU 8 in the first data pilot area are [-854:16:-22]+*q*¹;
indexes of the 106-tone DRU 9 in the first data pilot area are [-867:16:-35]+*q*¹;
indexes of the 106-tone DRU 10 in the first data pilot area are [-859:16:-27]+*q*¹;
indexes of the 106-tone DRU 11 in the first data pilot area are [-863:16:-31]+*q*¹;
indexes of the 106-tone DRU 12 in the first data pilot area are [-855:16:-23]+*q*¹;
indexes of the 106-tone DRU 13 in the first data pilot area are [-865:16:-33]+*q*¹;
indexes of the 106-tone DRU 14 in the first data pilot area are [-857:16:-25]+*q*¹;
indexes of the 106-tone DRU 15 in the first data pilot area are [-861:16:-29]+*q*¹; and
indexes of the 106-tone DRU 16 in the first data pilot area are [-853:16:-21]+*q*¹.

In a possible implementation, that the any 106-tone DRU includes 53 tones in the second data pilot area includes:
indexes of the 106-tone DRU 1 in the second data pilot area are [12:16:844]+*q*²;
indexes of the 106-tone DRU 2 in the second data pilot area are [20:16:852]+*q*²;
indexes of the 106-tone DRU 3 in the second data pilot area are [16:16:848]+*q*²;
indexes of the 106-tone DRU 4 in the second data pilot area are [24:16:856]+*q*²;
indexes of the 106-tone DRU 5 in the second data pilot area are [14:16:846]+*q*²;
indexes of the 106-tone DRU 6 in the second data pilot area are [22:16:854]+*q*²;
indexes of the 106-tone DRU 7 in the second data pilot area are [18:16:850]+*q*²;
indexes of the 106-tone DRU 8 in the second data pilot area are [26:16:858]+*q*²;
indexes of the 106-tone DRU 9 in the second data pilot area are [13:16:845]+*q*²;
indexes of the 106-tone DRU 10 in the second data pilot area are [21:16:853]+*q*²;
indexes of the 106-tone DRU 11 in the second data pilot area are [17:16:849]+*q*²;
indexes of the 106-tone DRU 12 in the second data pilot area are [25:16:857]+*q*²;
indexes of the 106-tone DRU 13 in the second data pilot area are [15:16:847]+*q*²;
indexes of the 106-tone DRU 14 in the second data pilot area are [23:16:855]+*q*²;
indexes of the 106-tone DRU 15 in the second data pilot area are [19:16:851]+*q*²; and
indexes of the 106-tone DRU 16 in the second data pilot area are [27:16:859]+*q*².

In a possible implementation,
indexes of the 106-tone DRU 1 are [-868:16:-36, 12:16:844];
indexes of the 106-tone DRU 2 are [-860:16:-28, 20:16:852];
indexes of the 106-tone DRU 3 are [-864:16:-32, 16:16:848];
indexes of the 106-tone DRU 4 are [-856:16:-24, 24:16:856];
indexes of the 106-tone DRU 5 are [-866:16:-34, 14:16:846];
indexes of the 106-tone DRU 6 are [-858:16:-26, 22:16:854];
indexes of the 106-tone DRU 7 are [-862:16:-30, 18:16:850];
indexes of the 106-tone DRU 8 are [-854:16:-22, 26:16:858];
indexes of the 106-tone DRU 9 are [-867:16:-35, 13:16:845];
indexes of the 106-tone DRU 10 are [-859:16:-27, 21:16:853];
indexes of the 106-tone DRU 11 are [-863:16:-31, 17:16:849];
indexes of the 106-tone DRU 12 are [-855:16:-23, 25:16:857];
indexes of the 106-tone DRU 13 are [-865:16:-33, 15:16:847];
indexes of the 106-tone DRU 14 are [-857:16:-25, 23:16:855];
indexes of the 106-tone DRU 15 are [-861:16:-29, 19:16:851]; and
indexes of the 106-tone DRU 16 are [-853:16:-21, 27:16:859].

In a possible implementation, indexes of the first data pilot area are [-1012:-3], and indexes of the second data pilot area are [3:1012].

In a possible implementation, that the any 106-tone DRU includes 53 tones in the first data pilot area includes:
indexes of the 106-tone DRU 1 in the first data pilot area are [-839:16:-7]+*q*¹;
indexes of the 106-tone DRU 2 in the first data pilot area are [-847:16:-15]+*q*¹;
indexes of the 106-tone DRU 3 in the first data pilot area are [-835:16:-3]+*q*¹;
indexes of the 106-tone DRU 4 in the first data pilot area are [-843:16:-11]+*q*¹;
indexes of the 106-tone DRU 5 in the first data pilot area are [-841:16:-9]+*q*¹;
indexes of the 106-tone DRU 6 in the first data pilot area are [-849:16:-17]+*q*¹;
indexes of the 106-tone DRU 7 in the first data pilot area are [-837:16:-5]+*q*¹;
indexes of the 106-tone DRU 8 in the first data pilot area are [-845:16:-13]+*q*¹;
indexes of the 106-tone DRU 9 in the first data pilot area are [-840:16:-8]+*q*¹;
indexes of the 106-tone DRU 10 in the first data pilot area are [-848:16:-16]+*q*¹;
indexes of the 106-tone DRU 11 in the first data pilot area are [-836:16:-4]+*q*¹;
indexes of the 106-tone DRU 12 in the first data pilot area are [-844:16:-12]+*q*¹;
indexes of the 106-tone DRU 13 in the first data pilot area are [-842:16:-10]+*q*¹;
indexes of the 106-tone DRU 14 in the first data pilot area are [-850:16:-18]+*q*¹;
indexes of the 106-tone DRU 15 in the first data pilot area are [-838:16:-6]+*q*¹; and
indexes of the 106-tone DRU 16 in the first data pilot area are [-846:16:-14]+*q*¹.

In a possible implementation, that the any 106-tone DRU includes 53 tones in the second data pilot area includes:
indexes of the 106-tone DRU 1 in the second data pilot area are [25:16:857]+*q*²;
indexes of the 106-tone DRU 2 in the second data pilot area are [17:16:849]+*q*²;
indexes of the 106-tone DRU 3 in the second data pilot area are [29:16:861]+*q*²;
indexes of the 106-tone DRU 4 in the second data pilot area are [21:16:853]+*q*²;
indexes of the 106-tone DRU 5 in the second data pilot area are [23:16:855]+*q*²;
indexes of the 106-tone DRU 6 in the second data pilot area are [15:16:847]+*q*²;
indexes of the 106-tone DRU 7 in the second data pilot area are [27:16:859]+*q*²;
indexes of the 106-tone DRU 8 in the second data pilot area are [19:16:851]+*q*²;
indexes of the 106-tone DRU 9 in the second data pilot area are [24:16:856]+*q*²;
indexes of the 106-tone DRU 10 in the second data pilot area are [16:16:848]+*q*²;
indexes of the 106-tone DRU 11 in the second data pilot area are [28:16:860]+*q*²;
indexes of the 106-tone DRU 12 in the second data pilot area are [20:16:852]+*q*²;
indexes of the 106-tone DRU 13 in the second data pilot area are [22:16:854]+*q*²;
indexes of the 106-tone DRU 14 in the second data pilot area are [14:16:846]+*q*²;
indexes of the 106-tone DRU 15 in the second data pilot area are [26:16:858]+*q*²; and
indexes of the 106-tone DRU 16 in the second data pilot area are [18:16:850]+*q*².

In a possible implementation,
indexes of the 106-tone DRU 1 are [-839:16:-7, 25:16:857];
indexes of the 106-tone DRU 2 are [-847:16:-15, 17:16:849];
indexes of the 106-tone DRU 3 are [-835:16:-3, 29:16:861];
indexes of the 106-tone DRU 4 are [-843:16:-11, 21:16:853];
indexes of the 106-tone DRU 5 are [-841:16:-9, 23:16:855];
indexes of the 106-tone DRU 6 are [-849:16:-17, 15:16:847];
indexes of the 106-tone DRU 7 are [-837:16:-5, 27:16:859];
indexes of the 106-tone DRU 8 are [-845:16:-13, 19:16:851];
indexes of the 106-tone DRU 9 are [-840:16:-8, 24:16:856];
indexes of the 106-tone DRU 10 are [-848:16:-16, 16:16:848];
indexes of the 106-tone DRU 11 are [-836:16:-4, 28:16:860];
indexes of the 106-tone DRU 12 are [-844:16:-12, 20:16:852];
indexes of the 106-tone DRU 13 are [-842:16:-10, 22:16:854];
indexes of the 106-tone DRU 14 are [-850:16:-18, 14:16:846];
indexes of the 106-tone DRU 15 are [-838:16:-6, 26:16:858]; and
indexes of the 106-tone DRU 16 are [-846:16:-14, 18:16:850].

According to a thirteenth aspect, an embodiment of this application provides a communication apparatus, to perform the method according to any one of the first aspect to the twelfth aspect or the possible implementations of the first aspect to the twelfth aspect. The first communication apparatus includes a module that performs the method according to any one of the first aspect to the twelfth aspect or the possible implementations of the first aspect to the twelfth aspect.

According to a fourteenth aspect, an embodiment of this application provides a communication apparatus. The communication apparatus includes a processor, configured to perform the method according to any one of the first aspect to the twelfth aspect or the possible implementations of the first aspect to the twelfth aspect. The processor is configured to execute a program stored in a memory. When the program is executed, the method according to any one of the first aspect to the twelfth aspect or the possible implementations of the first aspect to the twelfth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive information or send information.

According to a fifteenth aspect, an embodiment of this application provides a communication apparatus. The communication apparatus includes a logic circuit and an interface. The logic circuit is coupled to the interface. The interface is configured to input and/or output information. The logic circuit is configured to perform the method according to any one of the first aspect to the twelfth aspect or the possible implementations of the first aspect to the twelfth aspect.

According to a sixteenth aspect, an embodiment of this application provides a computer-readable storage medium. The computer-readable storage medium is configured to store a computer program. When the computer program is run on a computer, the method according to any one of the first aspect to the twelfth aspect or the possible implementations of the first aspect to the twelfth aspect is performed.

According to a seventeenth aspect, an embodiment of this application provides a computer program product. When the computer program product runs on a computer, the method according to any one of the first aspect to the twelfth aspect or the possible implementations of the first aspect to the twelfth aspect is performed.

### BRIEF DESCRIPTION OF DRAWINGS

FIG. 1 is a diagram of an architecture of a communication system according to an embodiment of this application;
FIG. 2a is a diagram of a tone plan and an RU plan at 20 MHz according to an embodiment of this application;
FIG. 2b is a diagram of a tone plan and an RU plan at 40 MHz according to an embodiment of this application;
FIG. 2c is a diagram of a tone plan and an RU plan at 80 MHz according to an embodiment of this application;
FIG. 3a is a schematic flowchart of uplink multi-user transmission according to an embodiment of this application;
FIG. 3b is a diagram of a frame format of an EHT variant user information field according to an embodiment of this application;
FIG. 4 is a schematic flowchart of a communication method according to an embodiment of this application;
FIG. 5a is a diagram of area division according to an embodiment of this application;
FIG. 5b is another diagram of area division according to an embodiment of this application;
FIG. 6 is a diagram of a structure of a communication apparatus according to an embodiment of this application;
FIG. 7 is a diagram of another structure of a communication apparatus according to an embodiment of this application; and
FIG. 8 is a diagram of still another structure of a communication apparatus according to an embodiment of this application.

### DESCRIPTION OF EMBODIMENTS

For ease of understanding technical solutions this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by persons skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, "sending" and "receiving" indicate signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface by another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

Embodiments of this application provide a communication method, apparatus, and system, to improve a tone plan corresponding to 160 MHz. Each DRU in the tone plan can reach a higher power amplification factor.

The following describes a system in embodiments of this application.

Technical solutions provided in embodiments of this application may be applied to a wireless local area network (wireless local area network, WLAN) system, for example, Wi-Fi. For example, the technical solutions provided in embodiments of this application may be applicable to the Institute of Electrical and Electronics Engineers IEEE 802.11 series protocols (or referred to as standards), for example, the 802.11be protocol, the 802.11bn protocol (or referred to as Wi-Fi 8, or referred to as ultra-high reliability (ultra-high reliability, UHR) or ultra-high reliability and throughput (ultra-high reliability and throughput, UHRT)), or a next-generation protocol of the 802.11bn protocol, or a protocol that supports ambient power (ambient power, AMP). Examples are not enumerated herein. The technical solutions provided in embodiments of this application may be further applied to a wireless personal area network (wireless personal area network, WPAN) based on millimeter wave (millimeter wave, MMW) and ultra-wideband (ultra-wideband, UWB) technologies, and the like. For example, the method provided in embodiments of this application may be applied to the IEEE 802.15 series protocols such as 802.15.4a, 802.15.4z, 802.15.4ab, or a future-generation UWB WPAN protocol. Examples are not enumerated herein. The technical solutions provided in embodiments of this application may also be applied to a SparkLink (SparkLink or NearLink) standard. The technical solutions provided in embodiments of this application may be further applied to the following communication systems, for example, an internet of things (internet of things, IoT) system, vehicle-to-everything (vehicle-to-everything, V2X, where X may represent everything), device-to-device (device-to-device, D2D), a narrowband internet of things (narrowband internet of things, NB-IoT) system, a long term evolution (long term evolution, LTE) system, a 5th-generation (5th-generation, 5G) communication system, and a new communication system emerging in future communication development. For example, the V2X may include vehicle to vehicle (vehicle to vehicle, V2V), vehicle to infrastructure (vehicle to infrastructure, V2I), vehicle to pedestrian (vehicle to pedestrian, V2P), or vehicle to network (vehicle to network, V2N) communication.

The WLAN system can provide high-speed and low-latency transmission. With continuous evolution of WLAN application scenarios, the WLAN system is to be used in more scenarios or industries, for example, the internet of things industry, the internet of vehicles industry, the banking industry, enterprise offices, stadiums, exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an augmented reality (augmented reality, AR) wearable device or a virtual reality (virtual reality, VR) wearable device), a smart device (for example, a printer, a projector, a loudspeaker, or a speaker) in a smart office, an internet of vehicles device in an internet of vehicles, infrastructure (for example, a vending machine, a self-service navigation console of a supermarket, a self-service cash register device, or a self-service ordering machine) in a daily life scenario, a device in a large stadium or music venue, or the like.

Although embodiments of this application mainly use a WLAN as an example, and are especially applied to a network using the IEEE 802.11 series standards, aspects in embodiments of this application may be extended to another network using various standards or protocols, for example, Bluetooth (Bluetooth), a high performance radio LAN (high performance radio LAN, HIPERLAN) (a wireless standard similar to the IEEE 802.11 standard), a wide area network (wide area network, WAN), or another network known currently or developed in the future.

In a possible implementation, the method provided in embodiments of this application may be implemented by a communication apparatus in the communication system. For example, the communication apparatus may be an access point (access point, AP) or a station (station, STA).

The AP is an apparatus having a wireless communication function, supports communication, sensing, transmitting energy by using a WLAN protocol, has a function of communicating with, sensing, transmitting energy to another device (for example, a non-access point station (non-access point station, non-AP STA) or another access point) in the WLAN network, and certainly may further have a function of communicating with, sensing, transmitting energy to another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip, a processing system, a functional module, or the like installed in the entire device. The device in which the chip, the processing system, or the functional module is installed may implement the method, a function, and the like in embodiments of this application under control of the chip, the processing system, or the functional module. The AP in embodiments of this application is an apparatus that provides a service for the non-AP STA, and may support the 802.11 series protocols, subsequent protocols, or the like. For example, the access point may be an access point for a terminal (for example, a mobile phone) to access a wired (or wireless) network, and is mainly deployed at home, inside a building, or inside a campus. A typical coverage radius is tens of meters to hundreds of meters. Certainly, the access point may alternatively be deployed outdoors. For another example, the AP may be a communication entity like a communication server, a router, a switch, or a bridge. The AP may include a macro base station, a micro base station, a relay station, and the like that are in various forms. Certainly, the AP may alternatively be a chip, a processing system, or a module in the foregoing devices in the various forms, to implement the method and the function in embodiments of this application.

A STA is an apparatus having a wireless communication function, supports communication, sensing, or transmitting energy by using the WLAN protocol, and has a capability of communicating with, sensing, or transmitting energy to another non-AP STA or access point in the WLAN network. In the WLAN system, the station may be referred to as a non-access point station (non-access point station, non-AP STA). For example, the STA is any user communication device that allows a user to communicate with, sense, or transmit energy to the AP and then communicate with the WLAN. The apparatus having the wireless communication function may be an entire device, or may be a chip, a processing system, a functional module, or the like installed in the entire device. The device in which the chip, the processing system, or the functional module is installed may implement the method and the function in embodiments of this application under control of the chip, the processing system, or the functional module. For example, the STA may be a wireless communication chip, a wireless sensor, or a wireless communication terminal; and may also be referred to as a user. For another example, the STA may be a mobile phone that supports a Wi-Fi communication function, a tablet computer that supports the Wi-Fi communication function, a set-top box that supports the Wi-Fi communication function, a smart television that supports the Wi-Fi communication function, a smart wearable device that supports the Wi-Fi communication function, a vehicle-mounted communication device that supports the Wi-Fi communication function, or a computer that supports the Wi-Fi communication function. Certainly, the STA may alternatively be a chip, a processing system, or a module in the foregoing devices in the various forms, to implement the method and the function in embodiments of this application.

For example, the communication system to which the method provided in embodiments of this application may be applied may include the access point and the station. For example, embodiments of this application are applicable to a scenario of communication or sensing between the AP and the STA, between APs, or between STAs in the WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be further classified into downlink transmission in which the AP simultaneously sends signals to the plurality of STAs and uplink transmission in which the plurality of STAs send signals to the AP. A WLAN communication protocol may be supported between the AP and the STA, between the APs, and between the STAs. The communication protocol may include the IEEE 802.11 series protocols, for example, the 802.11bn protocol is applicable, and certainly a protocol later than 802.11bn is also applicable.

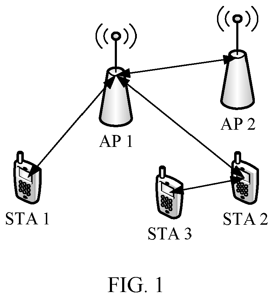

FIG. 1 is a diagram of an architecture of a communication system according to an embodiment of this application. The communication system may include one or more APs and one or more STAs. FIG. 1 shows two access points, for example, an AP 1 and an AP 2; and three stations, for example, a STA 1, a STA 2, and a STA 3. In an example, the method provided in embodiments of this application may be applicable to data communication, sensing, energy transmission, or the like between one AP and one or more STAs, for example, communication or sensing between the AP 1 and the STA 1 shown in FIG. 1, or communication or sensing between the AP 1 and the STA 1 and the STA 2 shown in FIG. 1. In another example, the method provided in embodiments of this application may be applicable to communication between APs, for example, communication or sensing between the AP 1 and the AP 2 shown in FIG. 1. In still another example, the method provided in embodiments of this application may be applicable to communication or sensing between STAs, for example, communication or sensing between the STA 2 and the STA 3 shown in FIG. 1.

In FIG. 1, an example in which the STA is a mobile phone and the AP is a router is used. This does not mean that types of the AP and the STA in this embodiment of this application are limited. In addition, a quantity of the APs and a quantity of the STAs shown in FIG. 1 are merely examples. In a specific implementation, there may alternatively be more or fewer APs or STAs. This is not limited in embodiments of this application.

From different perspectives of sending an OFDM symbol and receiving the OFDM symbol, a first communication apparatus shown below may be understood as a communication apparatus that sends the OFDM symbol, and a second communication apparatus shown below may be understood as a communication apparatus that receives the OFDM symbol. Alternatively, the first communication apparatus may also be referred to as a transmit end, and the second communication apparatus may also be referred to as a receive end.

From perspectives of different devices, in an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a non-AP STA. In still another example, both the first communication apparatus and the second communication apparatus may be non-AP STAs or APs. In yet another example, the first communication apparatus may be a non-AP STA, and the second communication apparatus may be an AP. In still yet another example, at least one of the first communication apparatus and the second communication apparatus may be a multi-link device (multi-link device, MLD) or the like. Details are not enumerated in embodiments of this application. For example, the MLD is a device that simultaneously includes a plurality of stations (such as APs or non-AP STAs) respectively operating on different frequency bands or channels. The multi-link device includes a plurality of affiliated stations. The affiliated station may be a physical station, or may be a logical station. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in the entire device. The device in which the chip, the processing system, or the module is installed may implement the method and a function in embodiments of this application under control of the chip, the processing system, or the module. The multi-link device may implement wireless communication according to the 802.11 series protocols, to communicate with another device. The another device herein may be a multi-link device, or may not be a multi-link device. Frequency bands on which the multi-link device operates may include but are not limited to sub 1 GHz, 2.4 GHz, 5 GHz, 6 GHz, and the like. Details are not enumerated herein.

In this embodiment of this application, the method provided in embodiments of this application is described from perspectives of the first communication apparatus and the second communication apparatus. However, in a process in which the first communication apparatus and the second communication apparatus transmit a signal, the signal may be further forwarded by another apparatus. For example, the signal between the first communication apparatus and the second communication apparatus is forwarded by a forwarding apparatus. An apparatus other than the first communication apparatus and the second communication apparatus is not limited in embodiments of this application.

The following describes terms or nouns related in embodiments of this application.

### 1. Tone plan (tone plan) based on a resource unit (resource unit, RU)

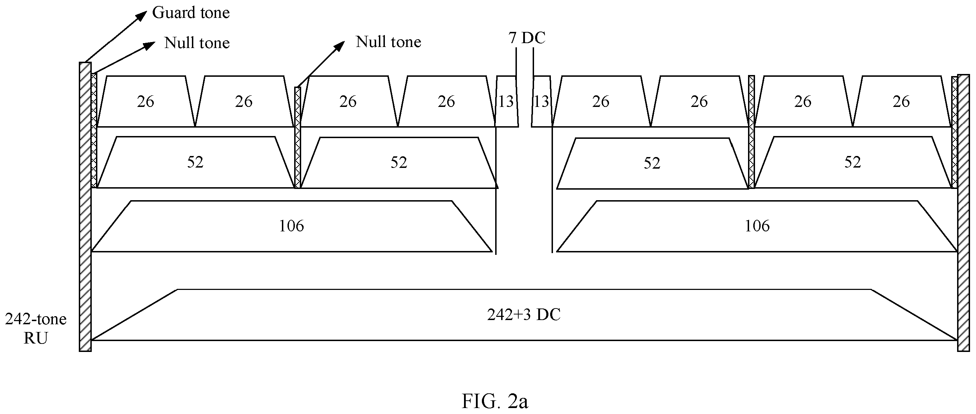

In an example, when a bandwidth is 20 MHz, the entire bandwidth (that is, 20 MHz) may include one entire 242-tone RU, or may include various combinations of 26-tone RUs, 52-tone RUs, and 106-tone RUs. FIG. 2a is a diagram of a tone plan and an RU plan at 20 MHz according to an embodiment of this application. As shown in FIG. 2a, 20 MHz may include nine 26-tone RUs, four 52-tone RUs, two 106-tone RUs, or one 242-tone RU.

A 26-tone RU is an RU including 26 tones, a 52-tone RU is an RU including 52 tones, a 106-tone RU is an RU including 106 tones, a 242-tone RU is an RU including 242 tones, and so on. Each RU may include a data tone and a pilot tone. For example, the data tone may be for carrying data information, and the pilot tone may be for estimating a phase offset and/or a frequency offset. In addition to the RU, the 20 MHz bandwidth may further include at least one of the following: one or more guard (guard) tones, one or more null (null) tones, or one or more direct current (direct current, DC) tones. For a subcarrier range (subcarrier range) included in each RU, refer to a related standard or protocol. Details are not described herein again. The descriptions of an RU or a tone herein are also applicable to another bandwidth shown below, and details are not described again in the following. The descriptions of the tone herein are also applicable to the following descriptions of the DRU, and details are not described again in the following.

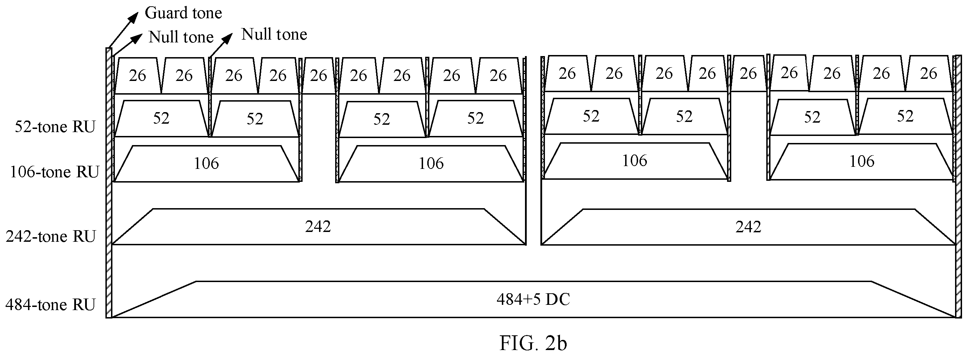

In another example, when a bandwidth is 40 MHz, the entire bandwidth (that is, 40 MHz) may include one entire 484-tone RU, or may include various combinations of 26-tone RUs, 52-tone RUs, 106-tone RUs, and 242-tone RUs. The entire bandwidth is roughly equivalent to a replication of a tone plan of the 20 MHz. As shown in FIG. 2b, 40 MHz may include eighteen 26-tone RUs, eight 52-tone RUs, four 106-tone RUs, two 242-tone RUs, or one 484-tone RU.

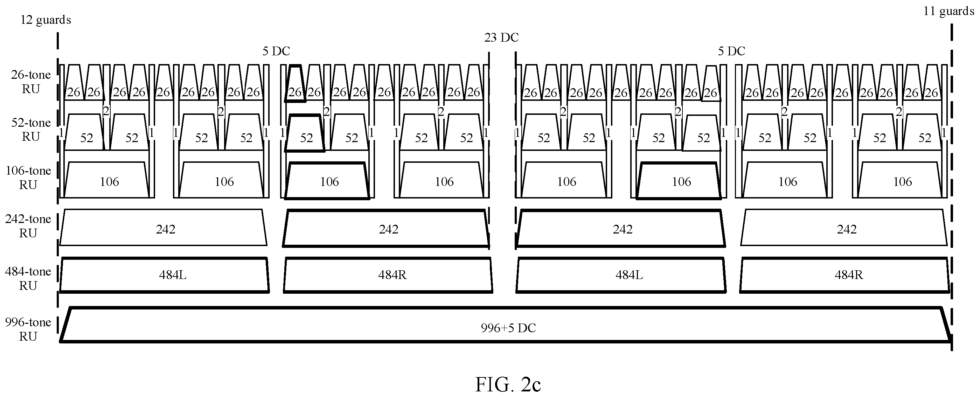

In still another example, when a bandwidth is 80 MHz, the entire bandwidth (that is, 80 MHz) may include one entire 996-tone RU, or may include various combinations of 26-tone RUs, 52-tone RUs, 106-tone RUs, 242-tone RUs, and 484-tone RUs. As shown in FIG. 2c, 80 MHz may include thirty-six 26-tone RUs, sixteen 52-tone RUs, eight 106-tone RUs, four 242-tone RUs, two 484-tone RUs, or one 996-tone RU. 484L and 484R represent a left half part and a right half part of a 484-tone RU, which include 242 tones respectively and are another representation of 484+5 DC. For example, if a subcarrier range of the 484-tone RU is [-500:-12], "484L" is a low frequency part relative to a frequency domain center of the 484-tone RU, that is, [-500:-259], and "484R" is a high frequency part relative to the frequency domain center of the 484-tone RU, that is, [-253:-12]. Similarly, for example, if the subcarrier range of the 484-tone RU is [12:500], "484L" is [12:253], and "484R" is [259:500]. Examples are not enumerated herein.

In this application, [a:b] may mean all integers from a to b (where a and b are also integers), that is, a, (a+1), (a+2), (a+3), ..., and b. Details are not described below again. For example, [259:500] represents 259, 260, 261, 262, ..., 498, 499, and 500. For another example, [-500:-259] represents -500, -499, -498, -497, ..., -260, and -259.

In yet another example, when a bandwidth is 160 MHz, the entire bandwidth may be considered as two replications of a tone plan of the 80 MHz. For example, the entire bandwidth may include one entire 2*996-tone RU, or may include various combinations of 26-tone RUs, 52-tone RUs, 106-tone RUs, 242-tone RUs, 484-tone RUs, and 996-tone RUs. When a bandwidth is 320 MHz, the entire bandwidth may be considered as four replications of the tone plan of the 80 MHz. Examples are not enumerated herein.

In the foregoing tone plans, the 242-tone RU (that is, 20 MHz) is used as a unit. The leftmost sides of FIG 2a to FIG. 2c may be lowest frequencies, and the rightmost sides of FIG 2a to FIG. 2c may be highest frequencies. From left to right, the 242-tone RUs may be numbered: first (1^{st}), second (2^{nd}), ..., and sixteenth (16^{th}). A 320 MHz bandwidth is used as an example. A data (data) field in a radio frame may occupy a maximum of sixteen 242-tone RUs. In other words, in the data field, a maximum of sixteen 242-tone RUs may be in a one-to-one correspondence with sixteen 20 MHz channels in ascending order of frequencies.

Generally, a plurality of RUs may be allocated to one STA, in other words, the plurality of RUs may be combined and allocated to one STA. Therefore, the 802.11be standard supports a multiple resource unit (multiple RU, MRU). In other words, in the 802.11be standard, in addition to the RUs mentioned above, some MRUs are also included. For example, one 52-tone RU and one 26-tone RU form a 52+26-tone MRU. For another example, one 106-tone RU and one 26-tone RU form a 106+26-tone MRU. For still another example, one 996-tone RU and one 484-tone RU form a 996+484-tone MRU. For yet another example, two 996-tone RUs and one 484-tone RU form a 2*996+484-tone MRU. For still yet another example, three 996-tone RUs form a 3*996-tone MRU. For further example, three 996-tone RUs and one 484-tone RU form a 3*996+484-tone MRU. The symbol "*" in this application represents "multiply" or "multiplied by".

In terms of a bandwidth, when a subcarrier spacing is 78.125 kHz, a 26-tone RU may correspond to approximately 2 MHz (namely, 26*78.125 kHz=2031.25 kHz≈2 MHz), a 52-tone RU corresponds to approximately 4 MHz, a 106-tone RU corresponds to approximately 8 MHz, and a 242-tone RU corresponds to approximately 20 MHz. A size of another RU may be deduced by performing addition or multiplication accordingly. Details are not described in this application.

The RU may be referred to as a regular RU (regular RU, rRU). Compared with a distributed RU, the regular RU has a smaller bandwidth and a lower transmit power. The "lower" herein is relative to the distributed RU. For example, relative to the regular RU, the distributed RU may have a higher transmit power.

### 2. Uplink multi-user transmission

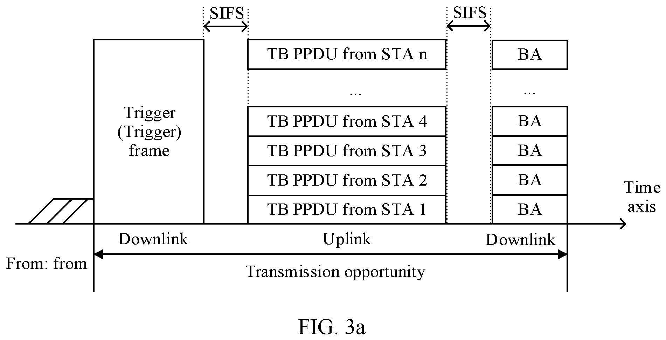

Uplink multi-user transmission is an important technology. FIG. 3a is a schematic flowchart of uplink multi-user transmission according to an embodiment of this application. As shown in FIG. 3a, a procedure of uplink multi-user transmission may include: An AP sends a trigger frame, where the trigger frame is used to trigger uplink multi-user transmission, and the trigger frame carries identifier information and resource allocation information of one or more stations. After receiving the trigger frame, each station sends an uplink data frame on an allocated resource unit (RU) by using a trigger-based physical layer protocol data unit (trigger-based physical layer protocol data unit, TB PPDU); and receives, after a short inter-frame space (short inter-frame space, SIFS), a block acknowledgment (block acknowledgment, BA) frame sent by the AP.

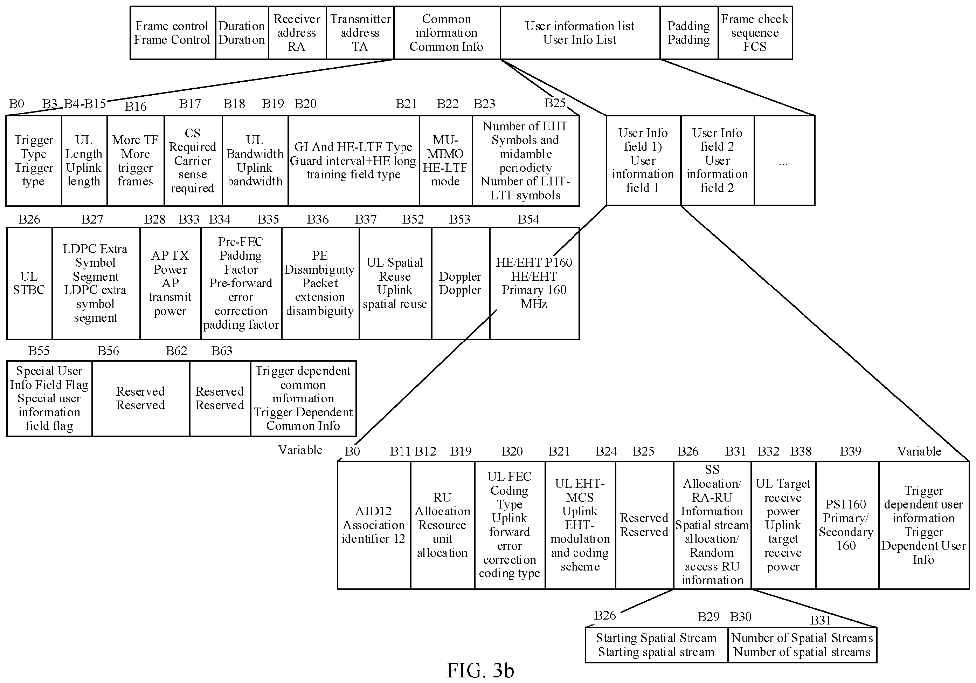

In a possible implementation, the trigger frame may include but is not limited to a common information field and a user information list field. The common information field may include common information that needs to be read by all STAs scheduled by the trigger frame. In the 802.11be, the user information list field of the trigger frame may include but is not limited to one or more EHT variant user information fields (EHT variant User Info field). One EHT variant user information field may include information that needs to be read by one EHT STA. FIG. 3b is a diagram of a frame format of an EHT variant user information field according to an embodiment of this application. As shown in FIG. 3b, the EHT variant user information field includes but is not limited to a resource unit allocation subfield (RU Allocation subfield) and a primary/secondary 160 subfield (PS160 subfield).

Generally, an RU or MRU allocated to a STA may be indicated by the following subfields: the resource unit allocation subfield (RU Allocation subfield), the primary/secondary 160 subfield (PS160 subfield), an uplink bandwidth subfield (UL BW subfield) in the common information field, or an uplink bandwidth extension subfield (UL BW extension subfield) in a special user information field. In the common information field, B55 indicates whether a special user information field is present in the user information field. A bandwidth of an EHT TB PPDU is jointly determined by the UL BW subfield and the UL BW extension subfield in the special user information field.

A B0 bit in the RU allocation subfield, B7 to B1 bits in the RU allocation subfield, the PS160 subfield, and a mapping relationship between an RU and an MRU are shown in the following Table 1. The bandwidth is jointly determined by the UL BW subfield and the UL BW extension subfield. Table 1 show interpretation of the RU allocation subfield and the PS160 subfield in the 802.11be trigger frame.

**Table 1**

| PS160 subfield (PS160 subfield) | B0 of the RU allocation subfield (B0 of the resource unit allocation subfield) | B7-B1 of the RU allocation subfield (B7-B1 of the resource unit allocation subfield) | Bandwidth (MHz) (Bandwidth) | RU/MRU size (RU/MRU size) | RU or MRU index (RU or MRU index) | PHY RU/MRU index (Physical RU or MRU index) |
|---|---|---|---|---|---|---|
| 0-3: (indicates 80 MHz where the RU is located) | | 0-8 | 20, 40, 80, 160, or 320 | 26 | RU 1 to RU 9, respectively (separately/ sequentially /in sequence) | 37×N+RU index |
| | | 9-17 | 40, 80, 160, or 320 | | RU 10 to RU 18, respectively | |
| | | 18 | 80, 160, or 320 | | Reserved (reserved) | |
| | | 19-36 | 80, 160, or 320 | | RU 20 to RU 37 respectively | |
| | | 37-40 | 20, 40, 80, 160, or 320 | 52 | RU 1 to RU 4, respectively | 16×N+RU index |
| | | 41-44 | 40, 80, 160, or 320 | | RU 5 to RU 8, respectively | |
| | | 45-52 | 80, 160, or 320 | | RU 9 to RU | |
| | | | | | 16, respectively | |
| | | 53, 54 | 20, 40, 80, 160, or 320 | 106 | RU 1 and RU 2, respectively | 8×N+RU index |
| | | 55, 56 | 40, 80, 160, or 320 | | RU 3 and RU 4, respectively | |
| | | 57-60 | 80, 160, or 320 | | RU 5 to RU 8, respectively | |
| | | 61 | 20, 40, 80, 160, or 320 | 242 | RU 1 | 4×N+RU index |
| | | 62 | 40, 80, 160, or 320 | | RU 2 | |
| | | 63, 64 | 80, 160, or 320 | | RU 3 and RU 4, respectively | |
| | | 65 | 40, 80, 160, or 320 | 484 | RU 1 | 2×N+RU index |
| | | 66 | 80, 160, or 320 | | RU 2 | |
| | | 67 | 80, 160, or 320 | 996 | RU 1 | N+RU index |
| 0-1: (indicates 160 MHz | 0 | 68 | Reserved (reserved) | | | Reserved (reserved) |
| | 1 | | 160 or 320 | 2×996 | RU 1 | X1+RU |
| where the RU is located) | | | | | | index |
| 0 | 0 | 69 | Reserved (reserved) | | | Reserved (reserved) |
| 0 | 1 | | | | | |
| 1 | 0 | | | | | |
| 1 | 1 | | 320 | 4×996 | RU 1 | RU 1 |
| 0-3: indicates 80 MHz where the MRU is located | | 70-72 | 20, 40, 80, 160, or 320 | 52+26 | MRU 1 to MRU 3, respectively | 12×N+MRU index |
| | | 73-75 | 40, 80, 160, or 320 | 52+26 | MRU 4 to MRU 6, respectively | |
| | | 76-81 | 80, 160, or 320 | 52+26 | MRU 7 to MRU 12, respectively | |
| | | 82, 83 | 20, 40, 80, 160, or 320 | 106+26 | MRU 1 and MRU 2, respectively | 8×N+MRU index |
| | | 84, 85 | 40, 80, 160, or 320 | 106+26 | MRU 3 and MRU 4, respectively | |
| | | 86-89 | 80, 160, or 320 | 106+26 | MRU 5 to MRU 8, respectively | |
| | | 90-93 | 80, 160, or 320 | 484+242 | MRU 1 to MRU 4, respectively | 4×N+MRU index |
| 0-1: indicates 160 MHz where the MRU is located | 0 | 94, 95 | 160 or 320 | 996+484 | MRU 1 and MRU 2, respectively | 4×X1+MRU index |
| | 1 | | | | MRU 3 and MRU 4, respectively | |
| 0-1: indicates 160 MHz where the MRU is located | 0 | 96-99 | 160 or 320 | 996+484+242 | MRU 1 to MRU 4, respectively | 8×X1+MRU index |
| | 1 | | | | MRU 5 to MRU 8, respectively | |
| 0 | 0 | 100-103 | 320 | 2×996+484 | MRU 1 to MRU 4, respectively | MRU index |
| 0 | 1 | | | | MRU 5 and MRU 6, respectively | |
| 1 | 0 | | | | MRU 7 and MRU 8, respectively | |
| 1 | 1 | | | | MRU 12, respectively | |
| 0 | 0 | 104 | 320 | 3×996 | MRU 1 | MRU index |
| 0 | 1 | | | | MRU 2 | |
| 1 | 0 | | | | MRU 3 | |
| 1 | 1 | | | | MRU 4 | |
| 0 | 0 | 105, 106 | 320 | 3×996+484 | MRU 1 and MRU 2, respectively | MRU index |
| 0 | 1 | | | | MRU 3 and MRU 4, respectively | |
| 1 | 0 | | | | MRU 5 and MRU 6, respectively | |
| 1 | 1 | | | | MRU 7 and MRU 8, respectively | |
| Any | Any | 107-127 | Any (Any) | Reserved | Reserved | Reserved |
| Note: In a primary 160 MHz, if B0 in the RU allocation subfield is set to 0, it indicates that RU/MRU allocation is applied to a primary 80 MHz; and if B0 is set to 1, it indicates that RU/MRU allocation is applied to a secondary 80 MHz. In a secondary 160 MHz, if B0 in the RU allocation subfield is set to 0, it indicates that RU/MRU allocation is applied to a lower 80 MHz; and if B0 is set to 1, it indicates that RU/MRU allocation is applied to a higher 80 MHz. | | | | | | |

In a possible implementation, N in Table 1 may be obtained according to a formula N=2*X1+X0. Values of X1 and X0 may be shown in the following Table 2. Table 2 shows a lookup table for X1 and N (Lookup table for X1 and N).

**Table 2**

| Bandwidth (MHz) | Inputs Inputs | | | Outputs Outputs | | |
|---|---|---|---|---|---|---|
| | Configuration (Configuration) | PS160 | B0 | X0 | X1 | N |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

In Table 2, P80 represents a primary 80 MHz channel, S80 represents a secondary 80 MHz channel, and S 160 represents a secondary 160 MHz channel.

The configuration in Table 2 indicates a sequence of P80, S80, and S160 in absolute frequencies, which are sequentially arranged from a low frequency to a high frequency from left to right. For example, [P80 S80] indicates that the primary 80 MHz channel is the first 80 MHz channel in ascending order of frequencies, and the secondary 80 MHz channel is the second 80 MHz channel in ascending order of frequencies. Alternatively, [P80 S80] indicates that the primary 80 MHz channel is a low 80 MHz channel, and the secondary 80 MHz channel is a high 80 MHz channel. For another example, [S80 P80 S160] indicates that the secondary 80 MHz channel is a low 80 MHz channel in a low 160 MHz channel, the primary 80 MHz channel is a high 80 MHz channel in the low 160 MHz channel, and the secondary 160 MHz channel is a high 160 MHz channel.

### 3. Distributed resource unit

Recently, the Federal Communications Commission has issued regulations on a 6 GHz spectrum, which define a low power indoor (low power indoor, LPI) communication mode and impose strict limits on a maximum transmit power and a maximum frequency spectral density. For example, for a station (Station, STA), a maximum power is 24 dBm, and a maximum power spectral density is -1 dBm/MHz. A transmit power of a device is limited by both a maximum power and a maximum power spectral density. The transmit power cannot exceed the maximum power, and a sent power spectral density cannot exceed the maximum power spectral density. Compared with that of the maximum power, a limit of the maximum power spectral density is stricter, and an allowed maximum transmit power is generally more limited by a power spectral density. For the station, when a bandwidth is 320 MHz, a transmit power of the station reaches a specified maximum power limit. Within this bandwidth, a transmit power is limited by the maximum power spectrum density and therefore can only be lower. On June 30, 2021, Europe has also released regulations on the 6 GHz spectrum. For LPI communication, the maximum power is 23 dBm and the maximum power spectral density is 10 dBm/MHz. When a bandwidth does not exceed 20 MHz, a transmit power of an AP/STA is mainly limited by a power spectral density. When the bandwidth is greater than 20 MHz, the transmit power of the AP/STA is mainly limited by a maximum power.

Due to limitations of the power spectral density, a limited quantity of tones (such as a 26-tone RU) are discretized to a wider bandwidth, that is, more tones (such as odd-numbered tones of two 26-tone RUs), to increase the transmit power. This is referred to as a discrete RU, or a distributed RU. The discrete RU is mainly used in uplink multi-user transmission. A plurality of users send discrete RUs in an interleaved mode, to improve a transmit power of each user under a specific bandwidth. It should be noted that the maximum power spectral density is limited in a form in which a transmit power of 1 MHz does not exceed x MW. In consideration of a subcarrier spacing of 78.125 kHz, 1 MHz includes 12.8 (about 13) tones. In one transmission process, average powers of the tones are the same. For any 13 contiguous tones, the average power of each tone and even a transmit power of a signal are determined based on a maximum quantity of tones carrying signals that are included in the 13 tones. For example, in a 20M bandwidth (242 tones in total), a maximum of 5 tones carrying signals are included in all the 13 contiguous tones. In this case, the average power of each tone is x(MW)/5. It is considered that there are 26 tones in total that carry signals. In this case, a total transmit power is x(MW)/5*26.

A meta DRU in this application includes a plurality of tones that are discrete in frequency domain, or includes a plurality of tones whose indexes (or referred to as index values) are discrete, or includes a plurality of tones whose indexes are non-contiguous. The plurality of discrete tones may be partially discrete or fully discrete. For example, the plurality of discrete tones may include some tones that are contiguous in frequency, and include some tones that are non-contiguous in frequency. For another example, the plurality of discrete tones may also be completely non-contiguous in frequency. The foregoing "contiguous in frequency" may also be referred to that indexes of tones are contiguous, and "non-contiguous in frequency" may also be referred to that indexes of tones are non-contiguous. In this application, "distributed RU", "DRU", and "discrete RU" may be used interchangeably. It should be further understood that the DRU mentioned in this application is an RU of which tones are discrete in frequency domain. In other words, an RU having this feature is referred to as a distributed RU or a discrete RU in this application. However, in practice, an RU having this feature may also have another name. This is not limited in this application.

The contiguous RU in this application is an RU including a plurality of contiguous tones, or the contiguous RU is an RU including two contiguous tone groups. A plurality of tones included in each contiguous tone group are contiguous, and the two contiguous tone groups are spaced apart only by a guard tone, a null tone, or a direct current tone. Certainly, the contiguous RU may also have another name, for example, a regular RU (regular RU, rRU). The "contiguous RU" and the "regular RU" may be used interchangeably. A name of the contiguous RU is not limited in this application.

The following describes a method provided in an embodiment of this application.

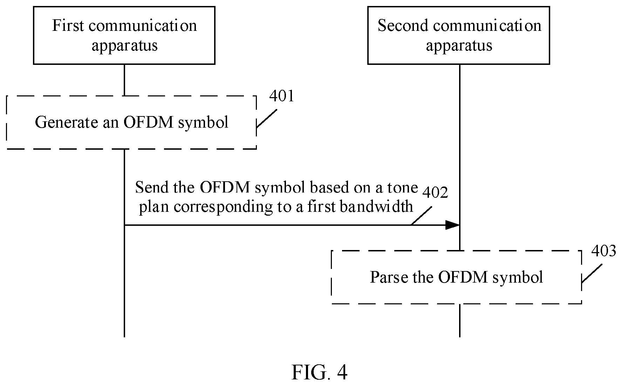

FIG. 4 is a schematic flowchart of a communication method according to an embodiment of this application. For descriptions of a first communication apparatus and a second communication apparatus in FIG. 4, refer to the foregoing descriptions. Details are not described herein again. As shown in FIG. 4, the method includes the following steps.

401: The first communication apparatus generates an OFDM symbol.

402: The first communication apparatus sends the OFDM symbol based on a tone plan corresponding to a first bandwidth.

Correspondingly, the second communication apparatus receives the OFDM symbol based on the tone plan corresponding to the first bandwidth.

403: The second communication apparatus parses the OFDM symbol.

The first bandwidth is 160 MHz; and the tone plan corresponding to the first bandwidth includes a 996-tone DRU 1 and a 996-tone DRU 2, or includes a 484-tone DRU 1 to a 484-tone DRU 4, or includes a 242-tone DRU 1 to a 242-tone DRU 8, or includes a 106-tone DRU 1 to a 106-tone DRU 16.

The 996-tone DRU represents a DRU including 996 tones, the 484-tone DRU represents a DRU including 484 tones, the 242-tone DRU represents a DRU including 242 tones, and the 106-tone DRU represents a DRU including 106 tones.

One 996-tone DRU may be divided into two 484-tone DRUs, one 484-tone DRU may be divided into two 242-tone DRUs, and one 242-tone DRU may be divided into two 106-tone DRUs.

For example, for different DRU sizes in a same bandwidth, indexes of DRUs may have the following relationship.

A 242-tone DRU 1 may include a 106-tone DRU 1+a 106-tone DRU 2, a 242-tone DRU 2 may include a 106-tone DRU 3+a 106-tone DRU 4, and a 242-tone DRU 3 may include a 106-tone DRU 5+a 106-tone DRU 6, ..., a 242-tone DRU 7 may include a 106-tone DRU 13+a 106-tone DRU 14, and a 242-tone DRU 8 may include a 106-tone DRU 15+a 106-tone DRU 16;
a 484-tone DRU 1 may include a 242-tone DRU 1+a 242-tone DRU 2, a 484-tone DRU 2 may include a 242-tone DRU 3+a 242-tone DRU 4, a 484-tone DRU 3 may include a 242-tone DRU 5+a 242-tone DRU 6, and a 484-tone DRU 4 may include a 242-tone DRU 7+a 242-tone DRU 8; and
a 996-tone DRU 1 may include a 484-tone DRU 1+a 484-tone DRU 2, and a 996-tone DRU 2 may include a 484-tone DRU 3+a 484-tone DRU 4.

For descriptions of the tone plan corresponding to the first bandwidth, refer to the following. Details are not described herein. Numbers in this application are used to distinguish between different DRUs, and do not constitute a limitation on this application.

Generally, an index range of a tone (subcarrier index range) may be used to indicate a frequency domain location of the tone in the tone plan corresponding to the first bandwidth. For the index range, the middle index may be 0, the right side of 0 may be +1, and the left side of 0 may be -1. A quantity of tones (which may also be understood as an index range) included on the left side of 0 and a quantity of tones (which may also be understood as an index range) included on the right side of 0 may be determined by a total quantity of tones. When the total quantity of tones is an odd number greater than 1, the quantity of tones included on the left of 0 may be the same as the quantity of tones included on the right of 0. However, when the total quantity of tones is an even number greater than 2, the quantity of tones included on the left of 0 is different from the quantity of tones included on the right of 0. Generally, the quantity of tones included on the right side of 0 may be less than the quantity of tones included on the left side of 0. However, this application is not limited thereto.

An index range involved in the tone plan corresponding to the first bandwidth may be determined based on the first bandwidth and a subcarrier spacing. For example, if the subcarrier spacing is 78.125 kHz, 160 MHz may have 2048 (that is, 160 MHz/78.125 kHz=2048) tones. For example, the quantity of tones included on the left side of 0 is greater than the quantity of tones included on the right side of 0. In this case, an index range of the 2048 tones may be [-1024:1023]. In other words, in ascending order of frequencies, indexes of the 2048 tones may be [-1024:1023]. Certainly, as the standards progress, the subcarrier spacing may also change. When the subcarrier spacing changes, the quantity of tones and indexes of tones in each DRU in this application may also change accordingly. Regardless of how the subcarrier spacing changes, as long as a method for determining indexes of each DRU is the same as that described below, the method falls within the protection scope of embodiments of this application.

In embodiments of this application, a tone plan corresponding to 160 MHz is designed in detail. Each DRU in the tone plan can achieve a higher power amplification factor, thereby improving a transmit power of the communication apparatus.

The following describes the tone plan in embodiments of this application.

The following provides tone plans of four types for 160 MHz. In a specific implementation, the standard may define one of the tone plans, or may define two of the tone plans, or the like. This is not limited in embodiments of this application. For any one of the tone plans, at 160 MHz, the standard may directly define indexes of two 996-tone DRUs, indexes of four 484-tone DRUs, indexes of eight 242-tone DRUs, and indexes of sixteen106-tone DRUs. Alternatively, the standard may provide index expressions of different DRUs, or the like. A specific manner of the standard is not limited in this application.

### First tone plan:

In a possible implementation, the tone plan corresponding to the first bandwidth may include a first guard area, a first data pilot area, a first direct current area, a second data pilot area, a second direct current area, a third data pilot area, a third direct current area, a fourth data pilot area, and a second guard area.

Tones in the first guard area and the second guard area may be guard tones, and tones in the first direct current area and the third direct current area may be direct current tones. Generally, tones in the second direct current area may be direct current tones. However, this is not limited in this application. The first data pilot area, the second data pilot area, the third data pilot area, and the fourth data pilot area may include data tones and pilot tones. Optionally, the four data pilot areas may include null (null) tones. Names of the foregoing areas are merely examples, and should not be construed as a limitation on embodiments of this application.

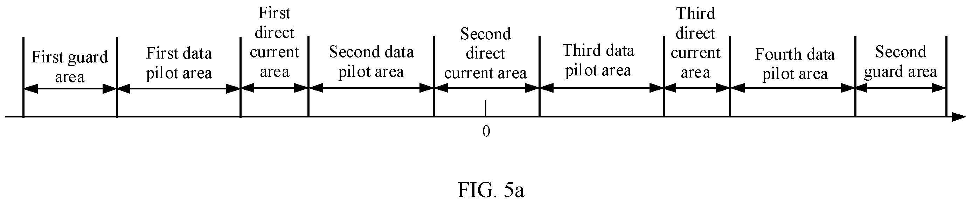

The first data pilot area may be located between the first guard area and the first direct current area, the second data pilot area may be located between the first direct current area and the second direct current area, the third data pilot area may be located between the second direct current area and the third direct current area, and the fourth data pilot area may be located between the third direct current area and the second guard area. FIG. 5a is a diagram of area division according to an embodiment of this application. FIG. 5a shows an example of frequency domain locations of the foregoing areas.

In this embodiment of this application, DRUs of different sizes are designed in the first data pilot area, the second data pilot area, the third data pilot area, and the fourth data pilot area. For example, for the four data pilot areas, in this embodiment of this application, two 996-tone DRUs (for example, a 996-tone DRU 1 and a 996-tone DRU 2), four 484-tone DRUs (for example, a 484-tone DRU 1, a 484-tone DRU 2, a 484-tone DRU 3, and a 484-tone DRU 4), eight 242-tone DRUs (for example, a 242-tone DRU 1 to a 242-tone DRU 8), and sixteen 106-tone DRUs (for example, a 106-tone DRU 1 to a 106-tone DRU 16) are separately designed. The DRUs of different sizes may be separate embodiments, or the DRUs of different sizes may be combined into one embodiment. This is not limited in this application. The details are as follows.

### 1A. 996-tone DRU

The 996-tone DRU 1 may meet the following condition.

Condition 1: The 996-tone DRU 1 is distributed in the first data pilot area, the second data pilot area, the third data pilot area, and the fourth data pilot area; and the 996-tone DRU 1 includes tones whose indexes are even numbers in the first data pilot area, the second data pilot area, the third data pilot area, and the fourth data pilot area.

The 996-tone DRU 2 may meet the following condition.

Condition 2: The 996-tone DRU 2 is distributed in the first data pilot area, the second data pilot area, the third data pilot area, and the fourth data pilot area; and the 996-tone DRU 2 includes tones whose indexes are odd numbers in the first data pilot area, the second data pilot area, the third data pilot area, and the fourth data pilot area.

In an example, the first data pilot area to the fourth data pilot area may not include a null tone. For example, a total quantity of tones in the four data pilot areas is 996*2=1992. In other words, a total quantity of tones in the first guard area, the second direct current area, the second guard area, the first direct current area, and the third direct current area is 2048-1992=56.

In another example, the first data pilot area to the fourth data pilot area may include null tones. For example, a total quantity of remaining tones other than the null tones in the four data pilot areas may be 1992. In other words, the total quantity of tones in the first guard area, the second direct current area, the second guard area, the first direct current area, and the third direct current area may be less than 56.

Descriptions of the areas herein are also applicable to the following 1B to 1D, and details are not described below again.

In this application, for ease of subsequent reference, when a condition met by a DRU is involved, different conditions met by different DRUs are distinguished by using different numbers. However, this should not be construed as a limitation on embodiments of this application.

The 996-tone DRU 1 may meet the following condition.

Condition 3: A difference between an index of a last tone of the 996-tone DRU 1 in the first data pilot area and an index of a first tone of the 996-tone DRU 1 in the second data pilot area is an integer multiple of 2, a difference between an index of a last tone of the 996-tone DRU 1 in the second data pilot area and an index of a first tone of the 996-tone DRU 1 in the third data pilot area is an integer multiple of 2, and a difference between an index of a last tone of the 996-tone DRU 1 in the third data pilot area and an index of a first tone of the 996-tone DRU 1 in the fourth data pilot area is an integer multiple of 2.

In other words, the difference between the index of the last tone of the 996-tone DRU 1 in the first data pilot area and the index of the first tone of the 996-tone DRU 1 in the second data pilot area is an integer multiple of an index difference between adjacent tones of the 996-tone DRU 1 in a same data pilot area, the difference between the index of the last tone of the 996-tone DRU 1 in the second data pilot area and the index of the first tone of the 996-tone DRU 1 in the third data pilot area is an integer multiple of an index difference between adjacent tones of the 996-tone DRU 1 in a same data pilot area, and the difference between the index of the last tone of the 996-tone DRU 1 in the third data pilot area and the index of the first tone of the 996-tone DRU 1 in the fourth data pilot area is an integer multiple of an index difference between adjacent tones of the 996-tone DRU 1 in a same data pilot area.

For example, the difference between the index of the last tone of the 996-tone DRU 1 in the first data pilot area (that is, an end index in the first data pilot area) and the index of the first tone of the 996-tone DRU 1 in the second data pilot area (that is, a start index in the second data pilot area) may be 2, 4, 6, 8, 10, 12, 14, 16, 18, 20, or the like. This is not enumerated herein.

The difference between the index of the last tone of the 996-tone DRU 1 in the first data pilot area and the index of the first tone of the 9996-tone DRU 1 in the second data pilot area, the difference between the index of the last tone of the 9996-tone DRU 1 in the second data pilot area and the index of the first tone of the 9996-tone DRU 1 in the third data pilot area, and the difference between the index of the last tone of the 9996-tone DRU 1 in the third data pilot area and the index of the first tone of the 9996-tone DRU 1 in the fourth data pilot area are 2. Whether the foregoing differences are the same is not limited in this embodiment of this application.

The 996-tone DRU 2 may meet the following relationship.

Condition 4: A difference between an index of a last tone of the 996-tone DRU 2 in the first data pilot area and an index of a first tone of the 996-tone DRU 2 in the second data pilot area is an integer multiple of 2, a difference between an index of a last tone of the 996-tone DRU 2 in the second data pilot area and an index of a first tone of the 996-tone DRU 2 in the third data pilot area is an integer multiple of 2, and a difference between an index of a last tone of the 996-tone DRU 2 in the third data pilot area and an index of a first tone of the 996-tone DRU 2 in the fourth data pilot area is an integer multiple of 2.

For descriptions of the condition 4, refer to the condition 3. Details are not described herein again.

In this embodiment of this application, the 996-tone DRU 1 or the 996-tone DRU 2 meets the conditions in the data pilot areas, so that it can be ensured that a peak to average power ratio (peak to average power ratio, PAPR) of the 996-tone DRU is relatively low.

When the conditions are met, indexes of the 996-tone DRUs may be designed in the four data pilot areas in the tone plan, so that not only a power amplification factor is increased, but also the relatively low PAPR is ensured.

In a possible implementation 1, indexes of the first data pilot area are [-1012:-515], indexes of the second data pilot area are [-509:-12], indexes of the third data pilot area are [12:509], and indexes of the fourth data pilot area are [515:1012].

Because an index of a first tone in the first data pilot area is an even number, an index of a first tone in the second data pilot area is an odd number, an index of a first tone in the third data pilot area is an even number, and an index of a first tone in the fourth data pilot area is an odd number, that the 996-tone DRU 1 includes tones whose indexes are even numbers in the first data pilot area, the second data pilot area, the third data pilot area, and the fourth data pilot area may be replaced with that the 996-tone DRU 1 includes odd-numbered tones in the first data pilot area, even-numbered tones in the second data pilot area, odd-numbered tones in the third data pilot area, and even-numbered tones in the fourth data pilot area. Similarly, the 996-tone DRU 2 includes even-numbered tones in the first data pilot area, odd-numbered tones in the second data pilot area, even-numbered tones in the third data pilot area, and odd-numbered tones in the fourth data pilot area.

Indexes of the first guard area may be [-1024:-1013], and indexes of the second guard area are [1013:1024]. To be specific, in ascending order of frequencies, the first to the twelfth tones in the 2048 tones are guard tones, and the 2038^{th} to the 2048^{th} tones are guard tones.

Indexes of the first direct current sub-area may be [-514:-510], indexes of the second direct current area may be [-11:11], and indexes of the third direct current area may be [510:514]. To be specific, in ascending order of frequencies, the 511^{th} to 515^{th} tones in the 2048 tones are direct current tones, the 1014^{th} to 1036^{th} tones are direct current tones (or referred to as guard tones), and the 1535^{th} to 1539^{th} tones are direct current tones.

In this embodiment of this application, the areas are divided in the foregoing division manner, so that each of the four data pilot areas may include 498 tones, and a quantity of tones of the 996-tone DRU 1 or the 996-tone DRU 2 in each of the four data pilot areas may be 249. Therefore, the 498 tones in each data pilot area may be used to design the 996-tone DRUs, thereby improving tone utilization efficiency.

Certainly, index ranges of the areas listed in the implementation 1 are merely examples. For example, in a specific implementation, an index range of at least one of the first guard area, the second direct current area, the second guard area, the first direct current area, or the third direct current area may be smaller. This is not limited in this embodiment of this application. When the index range of at least one of the first guard area, the second guard area, the first direct current area, the second direct current area, or the third direct current area is smaller, index ranges of the first data pilot area to the fourth data pilot area may be larger. In this case, the four data pilot areas may include null tones.

In this application, for ease of subsequent reference, different implementations are distinguished by using numbers. However, this should not be construed as a limitation on embodiments of this application.

With reference to the condition 1 or the condition 3 that the 996-tone DRU 1 meets and the indexes of the areas shown in the implementation 1, this embodiment of this application further provides indexes of the 996-tone DRU 1, which are shown below.

The indexes of tones in the 996-tone DRU 1 are [-1012:2:-516, -508:2:-12, 12:2:508, 516:2:1012]. In other words, the indexes of the tones in the 996-tone DRU 1 are [-1012, -1010, - 1008, ..., -518, -516, -508, -506, ..., -14, -12, 12, 14, 16, ..., 506, 508, 516, 518, ..., 1010, 1012].

In this application, [a:x:b] may represent integers from a to b with x as an increment, that is, a, (a+x), (a+2x), (a+3x), ..., and b. For example, [-1012:2:-516] represents -1012, (-1012+2=-1010), (-1012+2*2=-1008), ..., -518, and -516.

With reference to the condition 2 or the condition 4 that the 996-tone DRU 2 meets and the indexes of the area shown in the implementation 1, this embodiment of this application further provides indexes of the 996-tone DRU 2, which are shown below.

The indexes of tones in the 996-tone DRU 2 are [-1011:2:-515, -509:2:-13, 13:2:509, 515:2:1011]. In other words, the indexes of the tones in the 996-tone DRU 2 are [-1011, -1009, - 1007, ..., -517, -515, -509, -507, ..., -15, -13, 13, 15, 17, ..., 507, 509, 515, 517, ..., 1009, 1011].

It can be learned from the foregoing indexes that, for the 996-tone DRU 1, the index of the last tone in the first data pilot area is -516, the index of the first tone in the second data pilot area is -508, and -508-(-516)=8, in other words, an index difference is 8. The index of the last tone in the second data pilot area is -12, the index of the first tone in the third data pilot area is 12, and an index difference is 24 (12-(-12)=24). The index of the last tone in the third data pilot area is 508, the index of the first tone in the fourth data pilot area is 516, and the index difference is 8 (516-508=8). In addition, for the 996-tone DRU 1, an index difference between adjacent tones in each data pilot area is 2. That is, the indexes of the 996-tone DRU meet the condition 1 and the condition 3. Similarly, the 996-tone DRU 2 meets the condition 2 and the condition 4.

In this embodiment of this application, the 996-tone DRU 1 or the 996-tone DRU 2 is evenly distributed in the four data pilot areas, which is more conducive to channel smoothing. In addition, a low PAPR can be ensured by meeting the condition 3 or the condition 4. In this embodiment of this application, a power amplification factor achieved by the 996-tone DRU may be 2.69 dB. For a specific calculation method, refer to the foregoing descriptions of the terms related to the distributed resource unit.

### 1B. 484-tone DRU

A 484-tone DRU 1, a 484-tone DRU 2, a 484-tone DRU 3, and a 484-tone DRU 4 are all distributed in the first data pilot area, the second data pilot area, the third data pilot area, and the fourth data pilot area. In other words, the 484-tone DRU 1 is distributed in the four data pilot areas, the 484-tone DRU 2 is distributed in the four data pilot areas, the 484-tone DRU 3 is distributed in the four data pilot areas, and the 484-tone DRU 4 is distributed in the four data pilot areas.

The 484-tone DRU 1 to the 484-tone DRU 4 meet at least one of the following conditions.

Condition 1: An index difference between adjacent tones, of any one of the 484-tone DRU 1 to the 484-tone DRU 4, distributed in the first data pilot area is 4, an index difference between adjacent tones, of the any 484-tone DRU, distributed in the second data pilot area is 4, an index difference between adjacent tones, of the any 484-tone DRU, distributed in the third data pilot area is 4, and an index difference between adjacent tones, of the any 484-tone DRU, distributed in the fourth data pilot area is 4.

In other words, for any 484-tone DRU in the 484-tone DRU 1 to the 484-tone DRU 4, an index difference between adjacent tones, of the DRU, distributed in each data pilot area is 4.

For example, if tone indexes are 1, 5, 9, and 13, 1 and 5 may be referred to as adjacent tones, 5 and 9 may be referred to as adjacent tones, or 9 and 13 may be referred to as adjacent tones. The tone indexes shown herein are merely examples, and do not represent tones in the 484-tone DRUs shown in this embodiment of this application.

In this embodiment of this application, a 484-tone DRU can reach a higher power amplification factor by meeting the condition 1, for example, 5.12 dB.

Condition 2: A p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

For example, the p^{th} tone in the 484-tone DRU 1, the p^{th} tone in the 484-tone DRU 3, the p^{th} tone in the 484-tone DRU 2, and the p^{th} tone in the 484-tone DRU 4 are sequentially contiguous. Certainly, the sequence shown herein is merely an example. As numbers of the 484-tone DRUs change, the sequence shown herein also changes. This is not limited in this application.

p may be a positive integer less than or equal to 484. In other words, a value of p may be the same as a quantity of tones in a DRU. When a tone with the lowest frequency is referred to as a 0^{th} tone in ascending order of frequencies, the value of p may be an integer greater than or equal to 0 and less than 484. A specific value range of p is not limited in this application. The descriptions of p herein are also applicable to the following descriptions. Details are not described below again.

In this embodiment of this application, the 484-tone DRUs may ensure, by meeting the condition 2, that the four 484-tone DRUs form an overall shifting relationship, which facilitates index storage and reading. In addition, for a same LTF sequence, PAPRs of the four 484-tone DRUs may be the same. Therefore, the four 484-tone DRUs may share a same sequence, thereby simplifying sequence design.

For example, the 484-tone DRUs may further meet the following condition 3:

Any 484-tone DRU includes 120 tones or 122 tones in the first data pilot area;
any 484-tone DRU includes 120 tones or 122 tones in the second data pilot area;
any 484-tone DRU includes 120 tones or 122 tones in the third data pilot area; and
any 484-tone DRU includes 120 tones or 122 tones in the fourth data pilot area.

Because 120*2+122*2=484, for any 484-tone DRU, the 484-tone DRU may include 120 tones (or 122 tones) in any two of the four data pilot areas, and include 122 tones (or 120 tones) in remaining two data pilot areas. For example, for different 484-tone DRUs, quantities of tones that belong to the different 484-tone DRUs in a same data pilot area may be the same.

In an example 1, any 484-tone DRU may include 120 tones in the first data pilot area and the second data pilot area, and may include 122 tones in the third data pilot area and the fourth data pilot area. Numbers of the examples shown in this application are for ease of subsequent reference, and should not be construed as a limitation on embodiments of this application.

In another example 2, any 484-tone DRU may include 120 tones in the first data pilot area and the third data pilot area, and may include 122 tones in the second data pilot area and the fourth data pilot area.

In still another example 3, any 484-tone DRU may include 120 tones in the first data pilot area and the fourth data pilot area, and may include 122 tones in the second data pilot area and the third data pilot area.

In yet another example 4, any 484-tone DRU may include 122 tones in the first data pilot area and the second data pilot area, and include 120 tones in the third data pilot area and the fourth data pilot area.

In still yet another example 5, any 484-tone DRU may include 122 tones in the first data pilot area and the third data pilot area, and may include 120 tones in the second data pilot area and the fourth data pilot area.

In a further example 6, any 484-tone DRU may include 122 tones in the first data pilot area and the fourth data pilot area, and may include 120 tones in the second data pilot area and the third data pilot area.

In this embodiment of this application, when a 242-tone DRU is designed based on a 484-tone DRU meeting the condition 3, p^{th} tones of 242-tone DRUs corresponding to the 484-tone DRU are contiguous, where p∈[1, 242]. In this way, the 242-tone DRUs form an overall shifting relationship, which facilitates index storage and reading.

For example, the 484-tone DRUs may further meet the following condition 4:

For any 484-tone DRU, a difference between an index of a last tone of the 484-tone DRU in the first data pilot area and an index of a first tone of the 484-tone DRU in the second data pilot area is an integer multiple of 4, a difference between an index of a last tone of the 484-tone DRU in the second data pilot area and an index of a first tone of the 484-tone DRU in the third data pilot area is an integer multiple of 4, and a difference between an index of a last tone of the 484-tone DRU in the third data pilot area and an index of a first tone of the 484-tone DRU in the fourth data pilot area is an integer multiple of 4.

In other words, for any 484-tone DRU, the difference between the index of the last tone of the 484-tone DRU in the first data pilot area and the index of the first tone of the 484-tone DRU in the second data pilot area is an integer multiple of an index difference between adjacent tones of the 484-tone DRU in a same data pilot area (that is, 4), the difference between the index of the last tone of the 484-tone DRU in the second data pilot area and the index of the first tone of the 484-tone DRU in the third data pilot area is an integer multiple of an index difference between adjacent tones of the 484-tone DRU in a same data pilot area, and the difference between the index of the last tone of the 484-tone DRU in the third data pilot area and the index of the first tone of the 484-tone DRU in the fourth data pilot area is an integer multiple of an index difference between adjacent tones of the 484-tone DRU in a same data pilot area.

For example, for any 484-tone DRU, the difference between the index of the last tone of the 484-tone DRU in the first data pilot area and the index of the first tone of the 484-tone DRU in the second data pilot area may be 4, 8, 12, 16, 20, 24, 28, 32, or the like. This is not enumerated herein.

For any 484-tone DRU, whether the difference between the index of the last tone of the 484-tone DRU in the first data pilot area and the index of the first tone of the 484-tone DRU in the second data pilot area, the difference between the index of the last tone of the 484-tone DRU in the second data pilot area and the index of the first tone of the 484-tone DRU in the third data pilot area, and the difference between the index of the last tone of the 484-tone DRU in the third data pilot area and the index of the first tone of the 484-tone DRU in the fourth data pilot area are the same is not limited in this embodiment of this application.

In this embodiment of this application, a 484-tone DRU may ensure that a PAPR of the 484-tone DRU is relatively low by meeting the condition 4.

For example, the 484-tone DRUs may further meet the following condition 5:
For any 484-tone DRU, 120 tones or 122 tones of the 484-tone DRU in the first data pilot area may be shifted in the first data pilot area; 120 tones or 122 tones of the 484-tone DRU in the second data pilot area may be shifted in the second data pilot area; 120 tones or 122 tones of the 484-tone DRU in the third data pilot area may be shifted in the third data pilot area; or 120 tones or 122 tones of the 484-tone DRU in the fourth data pilot area may be shifted in the fourth data pilot area.

For descriptions of shifting, refer to the index expressions shown below. For example, a 484-tone DRU may meet the condition 5 when meeting the conditions 1 to 4. In a specific implementation, when the 484-tone DRU meets the condition 5, one index may be determined from a plurality of different indexes of the four 484-tone DRUs. For example, one index may be defined in the standard as an index of the 484-tone DRU, or an index expression shown below may be defined. This is not limited in this embodiment of this application.

In this embodiment of this application, when the conditions 1 to 4 are met, indexes of the 484-tone DRUs may be designed in the four data pilot areas.

In a possible implementation, indexes of the first data pilot area are [-1012:-515], indexes of the second data pilot area are [-509:-12], indexes of the third data pilot area are [12:509], and indexes of the fourth data pilot area are [515:1012].

For descriptions of indexes of the first guard area, the second direct current area, the second guard area, the first direct current area, and the third direct current area, refer to the implementation 1. Details are not described herein again.

In the four data pilot areas, four 484-tone DRUs may be designed when the conditions 1 to 4 or conditions 1 to 5 are met. In an example, four 484-tone DRUs may be independently designed in the four data pilot areas. In another example, four 484-tone DRUs may be designed in the four data pilot areas with reference to the indexes of the 996-tone DRUs shown above. The following describes the indexes of the 484-tone DRUs with reference to the two 996-tone DRUs shown above. For a relationship between a 484-tone DRU and a 996-tone DRU, refer to the descriptions in FIG. 4. Details are not described herein again.

The following describes a plurality of possibilities of the indexes of the 484-tone DRUs.

For the first data pilot area:
When the any 484-tone DRU includes 120 tones in the first data pilot area, indexes may be represented as:
indexes of 120 tones of the 484-tone DRU 1 in the first data pilot area are $\left[-1012:4:-536\right] + {k}_{1}^{1}$ ,
indexes of 120 tones of the 484-tone DRU 2 in the first data pilot area are $\left[-1010:4:-534\right] + {k}_{1}^{1}$ ,
indexes of 120 tones of the 484-tone DRU 3 in the first data pilot area are $\left[-1011:4:-535\right] + {k}_{1}^{1}$ , and
indexes of 120 tones of the 484-tone DRU 4 in the first data pilot area are $\left[-1009:4:-533\right] + {k}_{1}^{1}$ , where
${k}_{1}^{1} = 0 , 2 , 4 , 6 , 8 , 10 , 12 , 14 , 16$, or 18.

In this embodiment of this application, ${k}_{1}^{1}$ may be referred to as a shifting value (or an offset value, an offset, or the like), and may be an integer. For example, when a start index in the expression shown in this application is a start index of a data pilot area, a minimum value may be 0, and a maximum value may be determined based on an index of a last tone in the data pilot area. When the 484-tone DRU is designed based on the 996-tone DRU, the 484-tone DRU may be shifted within an index range of the 996-tone DRU. For example, when the 484-tone DRU 1 and the 484-tone DRU 2 are designed with reference to the 996-tone DRU 1, both a range in which the 484-tone DRU 1 may be shifted and a range in which the 484-tone DRU 2 may be shifted are less than or equal to an index range of the 996-tone DRU 1. For example, a maximum value of a shifting value of the 484-tone DRU 1 (or the 484-tone DRU 2) may be determined based on an end index of the 996-tone DRU 1. Further, the shifting value of the 484-tone DRU 1 in the first data pilot area may be determined based on the conditions 1 to 4 and an index of a last tone of the 996-tone DRU 1 in the first data pilot area. Similarly, ${k}_{2}^{1} , { k}_{1}^{2} , { k}_{2}^{2} , { k}_{1}^{3} , { k}_{2}^{3} , { k}_{1}^{4}$ and ${k}_{2}^{4}$ each may be an integer. For example, a minimum value may be 0, and a maximum value may also be determined based on an index of a last tone of a 996-tone DRU in a corresponding data pilot area. Methods for determining a maximum value (or a minimum value) of each shifting value in the second tone plan, the third tone plan, and the fourth tone plan below are similar, and details are not described below again. The expressions shown in embodiments of this application are merely examples, and should not be construed as a limitation on embodiments of this application. For example, in some other expressions, the shifting value may alternatively be a negative number, which is not listed herein.

For example, when DRUs of different sizes are combined to design indexes, for example, when a 242-tone DRU is designed with reference to a 484-tone DRU, when a 242-tone DRU is designed with reference to a 996-tone DRU, when a 106-tone DRU is designed with reference to a 242-tone DRU, or when a 106-tone DRU is designed with reference to a 484-tone DRU (which is not enumerated herein), each shifting value in this application needs to meet at least one of the following: (1) For any size of DRU, a difference between an index of a last tone of the DRU in the first data pilot area and an index of a first tone of the DRU in the second data pilot area is an integer multiple of an index difference of adjacent tones of the DRU, a difference between an index of a last tone of the DRU in the second data pilot area and an index of a first tone of the DRU in the third data pilot area is an integer multiple of an index difference of adjacent tones of the DRU, and a difference between an index of a last tone of the DRU in the third data pilot area and an index of a first tone of the DRU in the fourth data pilot area is an integer multiple of an index difference of adjacent tones of the DRU. (2) A shifting value of a 484-tone DRU is equal to a shifting value of a 242-tone DRU. (3) A shifting value of a 106-tone DRU is equal to a shifting value of a 484-tone DRU, that is, 8k, where k is a positive integer. In addition to the foregoing conditions, each shifting value further needs to meet a condition met by a corresponding DRU.

In this application, ${k}_{1}^{1}$ may correspond to the first data pilot area and 120 tones. To be specific, "1" or "2" in the subscript may distinguish 120 or 122, and "1" to "4" in the superscript may represent an area number. The descriptions are applicable to all embodiments of this application.

When the any 484-tone DRU includes 122 tones in the first data pilot area, indexes may be represented as:
indexes of 122 tones of the 484-tone DRU 1 in the first data pilot area are $\left[-1012:4:-528\right] + {k}_{2}^{1}$ ,
indexes of 122 tones of the 484-tone DRU 2 in the first data pilot area are $\left[-1010:4:-526\right] + {k}_{2}^{1}$ ,
indexes of 122 tones of the 484-tone DRU 3 in the first data pilot area are $\left[-1011:4:-527\right] + {k}_{2}^{1}$ , and
indexes of 122 tones of the 484-tone DRU 4 in the first data pilot area are $\left[-1009:4:-525\right] + {k}_{2}^{1}$ , where
${k}_{2}^{1} = 0 , 2 , 4 , 6 , 8$, or 10.

For the second data pilot area:
When the any 484-tone DRU includes 120 tones in the second data pilot area, indexes may be represented as:
indexes of 120 tones of the 484-tone DRU 1 in the second data pilot area are $\left[-508:4:-32\right] + {k}_{1}^{2}$ ,
indexes of 120 tones of the 484-tone DRU 2 in the second data pilot area are $\left[-506:4:-30\right] + {k}_{1}^{2}$ ,
indexes of 120 tones of the 484-tone DRU 3 in the second data pilot area are $\left[-507:4:-31\right] + {k}_{1}^{2}$ , and
indexes of 120 tones of the 484-tone DRU 4 in the second data pilot area are $\left[-505:4:-29\right] + {k}_{1}^{2}$ , where
${k}_{1}^{2} = 0 , 2 , 4 , 6 , 8 , 10 , 12 , 14$, or 16.

When the any 484-tone DRU includes 122 tones in the second data pilot area, indexes may be represented as:
indexes of 122 tones of the 484-tone DRU 1 in the second data pilot area is $\left[-508:4:-24\right] + {k}_{2}^{2}$ ,
indexes of 122 tones of the 484-tone DRU 2 in the second data pilot area are $\left[-506:4:-22\right] + {k}_{2}^{2}$ ,
indexes of 122 tones of the 484-tone DRU 3 in the second data pilot area are $\left[-507:4:-23\right] + {k}_{2}^{2}$ , and
indexes of 122 tones of the 484-tone DRU 4 in the second data pilot area are $\left[-505:4:-21\right] + {k}_{2}^{2}$ , where
${k}_{2}^{2} = 0 , 2 , 4 , 6$, or 8.

For the third data pilot area:
When the any 484-tone DRU includes 120 tones in the third data pilot area, indexes may be represented as:
indexes of 120 tones of the 484-tone DRU 1 in the third data pilot area are $\left[12:4:488\right] + {k}_{1}^{3}$,
indexes of 120 tones of the 484-tone DRU 2 in the third data pilot area are $\left[14:4:490\right] + {k}_{1}^{3}$,
indexes of 120 tones of the 484-tone DRU 3 in the third data pilot area are $\left[13:4:489\right] + {k}_{1}^{3}$, and
indexes of 120 tones of the 484-tone DRU 4 in the third data pilot area are $\left[15:4:491\right] + {k}_{1}^{3}$, where
${k}_{1}^{3} = 0 , 2 , 4 , 6 , 8 , 10 , 12 , 14 , 16$, or 18.

When the any 484-tone DRU includes 122 tones in the third data pilot area, indexes may be represented as:
indexes of 122 tones of the 484-tone DRU 1 in the third data pilot area are $\left[12:4:496\right] + {k}_{2}^{3}$,
indexes of 122 tones of the 484-tone DRU 2 in the third data pilot area are $\left[14:4:498\right] + {k}_{2}^{3}$,
indexes of 122 tones of the 484-tone DRU 3 in the third data pilot area are $\left[13:4:497\right] + {k}_{2}^{3}$, and
indexes of 122 tones of the 484-tone DRU 4 in the third data pilot area are $\left[15:4:499\right] + {k}_{2}^{3}$, where
${k}_{2}^{3} = 0 , 2 , 4 , 6 , 8$, or 10.

For the fourth data pilot area:
When the any 484-tone DRU includes 120 tones in the fourth data pilot area, indexes may be represented as:
indexes of 120 tones of the 484-tone DRU 1 in the fourth data pilot area are $\left[516:4:992\right] + {k}_{1}^{4}$,
indexes of 120 tones of the 484-tone DRU 2 in the fourth data pilot area are $\left[518:4:994\right] + {k}_{1}^{4}$,
indexes of 120 tones of the 484-tone DRU 3 in the fourth data pilot area are $\left[517:4:993\right] + {k}_{1}^{4}$, and
indexes of 120 tones of the 484-tone DRU 4 in the fourth data pilot area are $\left[519:4:995\right] + {k}_{1}^{4}$, where
${k}_{1}^{4} = 0 , 2 , 4 , 6 , 8 , 10 , 12 , 14$, or 16.

When the any 484-tone DRU includes 122 tones in the fourth data pilot area, indexes may be represented as:
indexes of 122 tones of the 484-tone DRU 1 in the fourth data pilot area are $\left[516:4:1000\right] + {k}_{2}^{4}$,
indexes of 122 tones of the 484-tone DRU 2 in the fourth data pilot area are $\left[518:4:1002\right] + {k}_{2}^{4}$,
indexes of 122 tones of the 484-tone DRU 3 in the fourth data pilot area are $\left[517:4:1001\right] + {k}_{2}^{4}$, and
indexes of 122 tones of the 484-tone DRU 4 in the fourth data pilot area are $\left[519:4:1003\right] + {k}_{2}^{4}$, where ${k}_{2}^{4} = 0 , 2 , 4 , 6$, or 8.

The indexes shown in the foregoing expressions meet the conditions 1 to 4.

The following describes examples of indexes of each 484-tone DRU.

The following uses ${k}_{1}^{1} = 0 , { k}_{2}^{1} = 0 , { k}_{1}^{2} = 0 , { k}_{2}^{2} = 0 , { k}_{1}^{3} = 0 , { k}_{2}^{3} = 0 , { k}_{1}^{4} = 0$, and ${k}_{2}^{4} = 0$ as examples to describe the indexes of the 484-tone DRUs.

Example 1 is used as an example. To be specific, quantities of tones of any 484-tone DRU in the four data pilot areas are sequentially 120, 120, 122, and 122:
indexes of the 484-tone DRU 1 are [-1012:4:-536, -508:4:-32, 12:4:496, 516:4:1000],
indexes of the 484-tone DRU 2 are [-1010:4:-534, -506:4:-30, 14:4:498, 518:4:1002],
indexes of the 484-tone DRU 3 are [-1011:4:-535, -507:4:-31, 13:4:497, 517:4:1001], and
indexes of the 484-tone DRU 4 are [-1009:4:-533, -505:4:-29, 15:4:499, 519:4:1003].

Example 2 is used as an example. To be specific, quantities of tones of any 484-tone DRU in the four data pilot areas are sequentially 120, 122, 120, and 122:
indexes of the 484-tone DRU 1 are [-1012:4:-536, -508:4:-24, 12:4:488, 516:4:1000],
indexes of the 484-tone DRU 2 are [-1010:4:-534, -506:4:-22, 14:4:490, 518:4:1002],
indexes of the 484-tone DRU 3 are [-1011:4:-535, -507:4:-23, 13:4:489, 517:4:1001], and
indexes of the 484-tone DRU 4 are [-1009:4:-533, -505:4:-21, 15:4:491, 519:4:1003].

Example 3 is used as an example. To be specific, quantities of tones of any 484-tone DRU in the four data pilot areas are sequentially 120, 122, 122, and 120:
indexes of the 484-tone DRU 1 are [-1012:4:-536, -508:4:-24, 12:4:496, 516:4:992],
indexes of the 484-tone DRU 2 are [-1010:4:-534, -506:4:-22, 14:4:498, 518:4:994],
indexes of the 484-tone DRU 3 are [-1011:4:-535, -507:4:-23, 13:4:497, 517:4:993], and
indexes of the 484-tone DRU 4 are [-1009:4:-533, -505:4:-21, 15:4:499, 519:4:995].

Example 4 to example 6 above or indexes corresponding to other values of the shifting value are not enumerated herein.

In this embodiment of this application, other indexes of the 484-tone DRUs may be further obtained based on the foregoing content. For brevity, the other indexes are not enumerated herein.

### 1C. 242-tone DRU

A 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area, the second data pilot area, the third data pilot area, and the fourth data pilot area. In other words, the 242-tone DRU 1 is distributed in the first data pilot area, the second data pilot area, the third data pilot area, and the fourth data pilot area; the 242-tone DRU 2 is distributed in the first data pilot area, the second data pilot area, the third data pilot area, and the fourth data pilot area; the 242-tone DRU 3 is distributed in the first data pilot area, the second data pilot area, the third data pilot area, and the fourth data pilot area; the 242-tone DRU 4 is distributed in the first data pilot area, the second data pilot area, the third data pilot area, and the fourth data pilot area; the 242-tone DRU 5 is distributed in the first data pilot area, the second data pilot area, the third data pilot area, and the fourth data pilot area; the 242-tone DRU 6 is distributed in the first data pilot area, the second data pilot area, the third data pilot area, and the fourth data pilot area; the 242-tone DRU 7 is distributed in the first data pilot area, the second data pilot area, the third data pilot area, and the fourth data pilot area; and the 242-tone DRU 8 is distributed in the first data pilot area, the second data pilot area, the third data pilot area, and the fourth data pilot area.

The 242-tone DRU 1 to the 242-tone DRU 8 meet at least one of the following conditions.

Condition 1: An index difference between adjacent tones, of any one of the 242-tone DRU 1 to the 242-tone DRU 8, distributed in the first data pilot area is 8; an index difference between adjacent tones, of the any 242-tone DRU, distributed in the second data pilot area is 8; an index difference between adjacent tones, of the any 242-tone DRU, distributed in the third data pilot area is 8; and an index difference between adjacent tones, of the any 242-tone DRU, distributed in the fourth data pilot area is 8.

In other words, for any one of the 242-tone DRU 1 to the 242-tone DRU 8, an index difference between adjacent tones, of the DRU, distributed in each data pilot area is 8. For descriptions of adjacent tones, refer to 1B. Details are not described herein again.

In this embodiment of this application, a 242-tone DRU can reach a higher power amplification factor by meeting the condition 1, for example, 8.13 dB.

Condition 2: A p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

For example, the p^{th} tone in the 242-tone DRU 1, the p^{th} tone in the 242-tone DRU 5, the p^{th} tone in the 242-tone DRU 3, the p^{th} tone in the 242-tone DRU 7, the p^{th} tone in the 242-tone DRU 2, the p^{th} tone in the 242-tone DRU 6, the p^{th} tone in the 242-tone DRU 4, and the p^{th} tone in the 242-tone DRU 8 are sequentially contiguous. Certainly, the sequence shown herein is merely an example. As numbers of the 242-tone DRUs change, the sequence shown herein also changes. This is not limited in this application.

p may be a positive integer less than or equal to 242.

In this embodiment of this application, the 242-tone DRUs meet the condition 2, so that it can be ensured that the eight 242-tone DRUs form an overall shifting relationship, which facilitates index storage and sequence design simplification.

For example, the 242-tone DRUs may further meet the following condition 3:
Any 242-tone DRU includes 60 tones or 61 tones in the first data pilot area;
any 242-tone DRU includes 60 tones or 61 tones in the second data pilot area;
any 242-tone DRU includes 60 tones or 61 tones in the third data pilot area; and
any 242-tone DRU includes 60 tones or 61 tones in the fourth data pilot area.

Because 60*2+61*2=242, for any 242-tone DRU, any two of the four data pilot areas may include 60 tones (or 61 tones) of the 242-tone DRU, and remaining two data pilot areas include 61 tones (or 60 tones) of the 242-tone DRU. For example, for different 242-tone DRUs, quantities of tones that belong to the different 242-tone DRUs in a same data pilot area may be the same.

In an example 1, any 242-tone DRU may include 60 tones in the first data pilot area and the second data pilot area, and include 61 tones in the third data pilot area and the fourth data pilot area.

In another example 2, any 242-tone DRU may include 60 tones in the first data pilot area and the third data pilot area, and may include 61 tones in the second data pilot area and the fourth data pilot area.

In still another example 3, any 242-tone DRU may include 60 tones in the first data pilot area and the fourth data pilot area, and may include 61 tones in the second data pilot area and the third data pilot area.

In yet another example 4, any 242-tone DRU may include 61 tones in the first data pilot area and the second data pilot area, and include 60 tones in the third data pilot area and the fourth data pilot area.

In still yet another example 5, any 242-tone DRU may include 61 tones in the first data pilot area and the third data pilot area, and may include 60 tones in the second data pilot area and the fourth data pilot area.

In a further example 6, any 242-tone DRU may include 61 tones in the first data pilot area and the fourth data pilot area, and may include 60 tones in the second data pilot area and the third data pilot area.

For example, the 242-tone DRUs may further meet the following condition 4:
For any 242-tone DRU, a difference between an index of a last tone of the 242-tone DRU in the first data pilot area and an index of a first tone of the 242-tone DRU in the second data pilot area is an integer multiple of 8, a difference between an index of a last tone of the 242-tone DRU in the second data pilot area and an index of a first tone of the 242-tone DRU in the third data pilot area is an integer multiple of 8, and a difference between an index of a last tone of the 242-tone DRU in the third data pilot area and an index of a first tone of the 242-tone DRU in the fourth data pilot area is an integer multiple of 8.

In other words, for any 242-tone DRU, the difference between the index of the last tone of the 242-tone DRU in the first data pilot area and the index of the first tone of the 242-tone DRU in the second data pilot area is an integer multiple of an index difference between adjacent tones of the 242-tone DRU in a same data pilot area (that is, 8); the difference between the index of the last tone of the 242-tone DRU in the second data pilot area and the index of the first tone of the 242-tone DRU in the third data pilot area is an integer multiple of an index difference between adjacent tones of the 242-tone DRU in a same data pilot area; and the difference between the index of the last tone of the 242-tone DRU in the third data pilot area and the index of the first tone of the 242-tone DRU in the fourth data pilot area is an integer multiple of an index difference between adjacent tones of the 242-tone DRU in a same data pilot area.

For example, for any 242-tone DRU, the difference between the index of the last tone of the 242-tone DRU in the first data pilot area and the index of the first tone of the 242-tone DRU in the second data pilot area may be 8, 16, 24, 32, 40, or the like. This is not enumerated herein.

For any 242-tone DRU, whether the difference between the index of the last tone of the 242-tone DRU in the first data pilot area and the index of the first tone of the 242-tone DRU in the second data pilot area, the difference between the index of the last tone of the 242-tone DRU in the second data pilot area and the index of the first tone of the 242-tone DRU in the third data pilot area, and the difference between the index of the last tone of the 242-tone DRU in the third data pilot area and the index of the first tone of the 242-tone DRU in the fourth data pilot area are the same is not limited in this embodiment of this application.

In this embodiment of this application, the 242-tone DRU meets the condition 4, so that it can be ensured that a PAPR of the 242-tone DRU is relatively low.

For example, the 242-tone DRUs may further meet the following condition 5:
For any 242-tone DRU, 60 tones or 61 tones of the 242-tone DRU in the first data pilot area may be shifted in the first data pilot area; 60 tones or 61 tones of the 242-tone DRU in the second data pilot area may be shifted in the second data pilot area; 60 tones or 61 tones of the 242-tone DRU in the third data pilot area may be shifted in the third data pilot area; or 60 tones or 61 tones of the 242-tone DRU in the fourth data pilot area may be shifted in the fourth data pilot area.

For descriptions of shifting, refer to the index expressions shown below. For example, a 242-tone DRU may meet the condition 5 when meeting the conditions 1 to 4. In a specific implementation, when the 242-tone DRU meets the condition 5, one index may be determined from a plurality of different indexes of the four 242-tone DRUs. For example, one index may be defined in the standard as an index of the 242-tone DRU, or an index expression shown below may be defined. This is not limited in this application.

In this embodiment of this application, when the conditions 1 to 4 are met, indexes of the 242-tone DRUs may be designed in the four data pilot areas.

In a possible implementation, indexes of the first data pilot area are [-1012:-515], indexes of the second data pilot area are [-509:-12], indexes of the third data pilot area are [12:509], and indexes of the fourth data pilot area are [515:1012].

For descriptions of indexes of the first guard area, the second direct current area, the second guard area, the first direct current area, and the third direct current area, refer to the implementation 1. Details are not described herein again.

In the four data pilot areas, eight 242-tone DRUs may be designed. In an example, eight 242-tone DRUs may be independently designed in the four data pilot areas. In another example, eight 242-tone DRUs may be designed in the four data pilot areas with reference to the 996-tone DRU. In still another example, eight 242-tone DRUs may be designed in the four data pilot areas with reference to the 484-tone DRU. For a relationship between the 242-tone DRU, the 484-tone DRU, and the 996-tone DRU, refer to the descriptions in FIG. 4. Details are not described herein again. When the 242-tone DRU is designed with reference to the 484-tone DRU or the 996-tone DRU shown above, an index range of the 242-tone DRU cannot exceed an index range of the 484-tone DRU or an index range of the 996-tone DRU. Descriptions of combination design herein are also applicable below.

The following describes a plurality of possibilities of indexes of the 242-tone DRUs. For descriptions of the shifting value, refer to 1B. Details are not described below again.

For the first data pilot area:
When the any 242-tone DRU includes 60 tones in the first data pilot area, indexes may be represented as:
indexes of 60 tones of the 242-tone DRU 1 in the first data pilot area are $\left[-1012:8:-540\right] + {p}_{1}^{1}$ ,
indexes of 60 tones of the 242-tone DRU 2 in the first data pilot area are $\left[-1008:8:-536\right] + {p}_{1}^{1}$ ,
indexes of 60 tones of the 242-tone DRU 3 in the first data pilot area are $\left[-1010:8:-538\right] + {p}_{1}^{1}$ ,
indexes of 60 tones of the 242-tone DRU 4 in the first data pilot area are $\left[-1006:8:-534\right] + {p}_{1}^{1}$ ,
indexes of 60 tones of the 242-tone DRU 5 in the first data pilot area are $\left[-1011:8:-539\right] + {p}_{1}^{1}$ ,
indexes of 60 tones of the 242-tone DRU 6 in the first data pilot area are $\left[-1007:8:-535\right] + {p}_{1}^{1}$ ,
indexes of 60 tones of the 242-tone DRU 7 in the first data pilot area are $\left[-1009:8:-537\right] + {p}_{1}^{1}$ , and
indexes of 60 tones of the 242-tone DRU 8 in the first data pilot area are $\left[-1005:8:-533\right] + {p}_{1}^{1}$ , where
${p}_{1}^{1} = 0 , 2 , 4 , 8 , 10 , 12 , 14 , 16$ or 18.

When the any 242-tone DRU includes 61 tones in the first data pilot area, indexes may be represented as:
indexes of 61 tones of the 242-tone DRU 1 in the first data pilot area are $\left[-1012:8:-532\right] + {p}_{2}^{1}$ ,
indexes of 61 tones of the 242-tone DRU 2 in the first data pilot area are $\left[-1008:8:-524\right] + {p}_{2}^{1}$ ,
indexes of 61 tones of the 242-tone DRU 3 in the first data pilot area are $\left[-1010:8:-530\right] + {p}_{2}^{1}$ ,
indexes of 61 tones of the 242-tone DRU 4 in the first data pilot area are $\left[-1006:8:-526\right] + {p}_{2}^{1}$ ,
indexes of 61 tones of the 242-tone DRU 5 in the first data pilot area are $\left[-1011:8:-531\right] + {p}_{2}^{1}$ ,
indexes of 61 tones of the 242-tone DRU 6 in the first data pilot area are $\left[-1007:8:-527\right] + {p}_{2}^{1}$ ,
indexes of 61 tones of the 242-tone DRU 7 in the first data pilot area are $\left[-1009:8:-529\right] + {p}_{2}^{1}$ , and
indexes of 61 tones of the 242-tone DRU 8 in the first data pilot area are $\left[-1005:8:-525\right] + {p}_{2}^{1}$ , where
${p}_{2}^{1} = 0 , 2 , 4 , 6 , 8$, or 10.

For the second data pilot area:
When the any 242-tone DRU includes 60 tones in the second data pilot area, indexes may be represented as:
indexes of 60 tones of the 242-tone DRU 1 in the second data pilot area are $\left[-508:8:-36\right] + {p}_{1}^{2}$ ,
indexes of 60 tones of the 242-tone DRU 2 in the second data pilot area are $\left[-504:8:-32\right] + {p}_{1}^{2}$ ,
indexes of 60 tones of the 242-tone DRU 3 in the second data pilot area are $\left[-506:8:-34\right] + {p}_{1}^{2}$ ,
indexes of 60 tones of the 242-tone DRU 4 in the second data pilot area are $\left[-502:8:-30\right] + {p}_{1}^{2}$ ,
indexes of 60 tones of the 242-tone DRU 5 in the second data pilot area are $\left[-507:8:-35\right] + {p}_{1}^{2}$ ,
indexes of 60 tones of the 242-tone DRU 6 in the second data pilot area are $\left[-503:8:-31\right] + {p}_{1}^{2}$ ,
indexes of 60 tones of the 242-tone DRU 7 in the second data pilot area are $\left[-505:8:-33\right] + {p}_{1}^{2}$ , and
indexes of 60 tones of the 242-tone DRU 8 in the second data pilot area are $\left[-501:8:-29\right] + {p}_{1}^{2}$ , where
${p}_{1}^{2} = 0 , 2 , 4 , 8 , 10 , 12 , 14$, or 16.

When the any 242-tone DRU includes 61 tones in the second data pilot area, indexes may be represented as:
indexes of 61 tones of the 242-tone DRU 1 in the second data pilot area are $\left[-508:8:-28\right] + {p}_{2}^{2}$ ,
indexes of 61 tones of the 242-tone DRU 2 in the second data pilot area are $\left[-504:8:-24\right] + {p}_{2}^{2}$ ,
indexes of 61 tones of the 242-tone DRU 3 in the second data pilot area are $\left[-506:8:-26\right] + {p}_{2}^{2}$ ,
indexes of 61 tones of the 242-tone DRU 4 in the second data pilot area are $\left[-502:8:-22\right] + {p}_{2}^{2}$ ,
indexes of 61 tones of the 242-tone DRU 5 in the second data pilot area are $\left[-507:8:-27\right] + {p}_{2}^{2}$ ,
indexes of 61 tones of the 242-tone DRU 6 in the second data pilot area are $\left[-503:8:-23\right] + {p}_{2}^{2}$ ,
indexes of 61 tones of the 242-tone DRU 7 in the second data pilot area are $\left[-505:8:-25\right] + {p}_{2}^{2}$ , and
indexes of 61 tones of the 242-tone DRU 8 in the second data pilot area are $\left[-501:8:-21\right] + {p}_{2}^{2}$ , where
${p}_{2}^{2} = 0 , 2 , 4 , 6$, or 8.

For the third data pilot area:
When the any 242-tone DRU includes 60 tones in the third data pilot area, indexes may be represented as:
indexes of 60 tones of the 242-tone DRU 1 in the third data pilot area are $\left[12:8:484\right] + {p}_{1}^{3}$,
indexes of 60 tones of the 242-tone DRU 2 in the third data pilot area are $\left[16:8:488\right] + {p}_{1}^{3}$,
indexes of 60 tones of the 242-tone DRU 3 in the third data pilot area are $\left[14:8:486\right] + {p}_{1}^{3}$,
indexes of 60 tones of the 242-tone DRU 4 in the third data pilot area are $\left[18:8:490\right] + {p}_{1}^{3}$,
indexes of 60 tones of the 242-tone DRU 5 in the third data pilot area are $\left[13:8:485\right] + {p}_{1}^{3}$,
indexes of 60 tones of the 242-tone DRU 6 in the third data pilot area are $\left[17:8:489\right] + {p}_{1}^{3}$,
indexes of 60 tones of the 242-tone DRU 7 in the third data pilot area are $\left[15:8:487\right] + {p}_{1}^{3}$, and
indexes of 60 tones of the 242-tone DRU 8 in the third data pilot area are $\left[19:8:491\right] + {p}_{1}^{3}$, where
${p}_{1}^{3} = 0 , 2 , 4 , 8 , 10 , 12 , 14 , 16$ or 18.

When the any 242-tone DRU includes 61 tones in the third data pilot area, indexes may be represented as:
indexes of 61 tones of the 242-tone DRU 1 in the third data pilot area are $\left[12:8:492\right] + {p}_{2}^{3}$,
indexes of 61 tones of the 242-tone DRU 2 in the third data pilot area are $\left[16:8:496\right] + {p}_{2}^{3}$,
indexes of 61 tones of the 242-tone DRU 3 in the third data pilot area are $\left[14:8:494\right] + {p}_{2}^{3}$,
indexes of 61 tones of the 242-tone DRU 4 in the third data pilot area are $\left[18:8:498\right] + {p}_{2}^{3}$,
indexes of 61 tones of the 242-tone DRU 5 in the third data pilot area are $\left[13:8:493\right] + {p}_{2}^{3}$,
indexes of 61 tones of the 242-tone DRU 6 in the third data pilot area are $\left[17:8:497\right] + {p}_{2}^{3}$,
indexes of 61 tones of the 242-tone DRU 7 in the third data pilot area are $\left[15:8:495\right] + {p}_{2}^{3}$, and
indexes of 61 tones of the 242-tone DRU 8 in the third data pilot area are $\left[19:8:499\right] + {p}_{2}^{3}$, where
${p}_{2}^{3} = 0 , 2 , 4 , 6 , 8$, or 10.

For the fourth data pilot area:
When the any 242-tone DRU includes 60 tones in the fourth data pilot area, indexes may be represented as:
indexes of 60 tones of the 242-tone DRU 1 in the fourth data pilot area are $\left[516:8:988\right] + {p}_{1}^{4}$,
indexes of 60 tones of the 242-tone DRU 2 in the fourth data pilot area are $\left[520:8:992\right] + {p}_{1}^{4}$,
indexes of 60 tones of the 242-tone DRU 3 in the fourth data pilot area are $\left[518:8:990\right] + {p}_{1}^{4}$,
indexes of 60 tones of the 242-tone DRU 4 in the fourth data pilot area are $\left[522:8:994\right] + {p}_{1}^{4}$,
indexes of 60 tones of the 242-tone DRU 5 in the fourth data pilot area are $\left[517:8:989\right] + {p}_{1}^{4}$,
indexes of 60 tones of the 242-tone DRU 6 in the fourth data pilot area are $\left[521:8:993\right] + {p}_{1}^{4}$,
indexes of 60 tones of the 242-tone DRU 7 in the fourth data pilot area are $\left[519:8:991\right] + {p}_{1}^{4}$, and
indexes of 60 tones of the 242-tone DRU 8 in the fourth data pilot area are $\left[523:8:995\right] + {p}_{1}^{4}$, where
${p}_{1}^{4} = 0 , 2 , 4 , 6 , 8 , 10 , 12 , 14$ or 16.

When the any 242-tone DRU includes 61 tones in the fourth data pilot area, indexes may be represented as:
indexes of 61 tones of the 242-tone DRU 1 in the fourth data pilot area are $\left[516:8:996\right] + {p}_{2}^{4}$,
indexes of 61 tones of the 242-tone DRU 2 in the fourth data pilot area are $\left[520:8:1000\right] + {p}_{2}^{4}$,
indexes of 61 tones of the 242-tone DRU 3 in the fourth data pilot area are $\left[518:8:998\right] + {p}_{2}^{4}$,
indexes of 61 tones of the 242-tone DRU 4 in the fourth data pilot area are $\left[522:8:1002\right] + {p}_{2}^{4}$,
indexes of 61 tones of the 242-tone DRU 5 in the fourth data pilot area are $\left[517:8:997\right] + {p}_{2}^{4}$,
indexes of 61 tones of the 242-tone DRU 6 in the fourth data pilot area are $\left[521:8:1001\right] + {p}_{2}^{4}$,
indexes of 61 tones of the 242-tone DRU 7 in the fourth data pilot area are $\left[519:8:999\right] + {p}_{2}^{4}$, and
indexes of 61 tones of the 242-tone DRU 8 in the fourth data pilot area are $\left[523:8:1003\right] + {p}_{2}^{4}$, where
${p}_{2}^{4} = 0 , 2 , 4 , 6$, or 8.

The following describes examples of the indexes of each 242-tone DRU.

The following uses ${p}_{1}^{1} = 0 , { p}_{2}^{1} = 0 , { p}_{1}^{2} = 0 , { p}_{2}^{2} = 0 , { p}_{1}^{3} = 0 , { p}_{2}^{3} = 0 , { p}_{1}^{4} = 0 , { p}_{2}^{4} = 0$ as examples to describe the indexes of the 242-tone DRU.

Example 1 is used as an example. To be specific, quantities of tones of any 242-tone DRU in the four data pilot areas are sequentially 60, 60, 61, and 61:
indexes of the 242-tone DRU 1 are [-1012:8:-540, -508:8:-36, 12:8:492, 516:8:996];
indexes of the 242-tone DRU 2 are [-1008:8:-536, -504:8:-32, 16:8:496, 520:8:1000];
indexes of the 242-tone DRU 3 are [-1010:8:-538, -506:8:-34, 14:8:494, 518:8:998];
indexes of the 242-tone DRU 4 are [-1006:8:-534, -502:8:-30, 18:8:498, 522:8:1002];
indexes of the 242-tone DRU 5 are [-1011:8:-539, -507:8:-35, 13:8:493, 517:8:997];
indexes of the 242-tone DRU 6 are [-1007:8:-535, -503:8:-31, 17:8:497, 521:8:1001];
indexes of the 242-tone DRU 7 are [-1009:8:-537, -505:8:-33, 15:8:495, 519:8:999]; and
indexes of the 242-tone DRU 8 are [-1005:8:-533, -501:8:-29, 19:8:499, 523:8:1003].

Example 2 is used as an example. To be specific, quantities of tones of any 242-tone DRU in the four data pilot areas are sequentially 60, 61, 60, and 61:
indexes of the 242-tone DRU 1 are [-1012:8:-540, -508:8:-28, 12:8:484, 516:8:996];
indexes of the 242-tone DRU 2 are [-1008:8:-536, -504:8:-24, 16:8:488, 520:8:1000];
indexes of the 242-tone DRU 3 are [-1010:8:-538, -506:8:-26, 14:8:486, 518:8:998];
indexes of the 242-tone DRU 4 are [-1006:8:-534, -502:8:-22, 18:8:490, 522:8:1002];
indexes of the 242-tone DRU 5 are [-1011:8:-539, -507:8:-27, 13:8:485, 517:8:997];
indexes of the 242-tone DRU 6 are [-1007:8:-535, -503:8:-23, 17:8:489, 521:8:1001];
indexes of the 242-tone DRU 7 are [-1009:8:-537, -505:8:-25, 15:8:487, 519:8:999]; and
indexes of the 242-tone DRU 8 are [-1005:8:-533, -501:8:-21, 19:8:491, 523:8:1003].

Example 3 is used as an example. To be specific, quantities of tones of any 242-tone DRU in the four data pilot areas are sequentially 60, 61, 61, and 60:
indexes of the 242-tone DRU 1 are [-1012:8:-540, -508:8:-28, 12:8:492, 516:8:998];
indexes of the 242-tone DRU 2 are [-1008:8:-536, -504:8:-24, 16:8:496, 520:8:992];
indexes of the 242-tone DRU 3 are [-1010:8:-538, -506:8:-26, 14:8:494, 518:8:990];
indexes of the 242-tone DRU 4 are [-1006:8:-534, -502:8:-22, 18:8:498, 522:8:994];
indexes of the 242-tone DRU 5 are [-1011:8:-539, -507:8:-27, 13:8:493, 517:8:989];
indexes of the 242-tone DRU 6 are [-1007:8:-535, -503:8:-23, 17:8:497, 521:8:993];
indexes of the 242-tone DRU 7 are [-1009:8:-537, -505:8:-25, 15:8:495, 519:8:991]; and
indexes of the 242-tone DRU 8 are [-1005:8:-533, -501:8:-21, 19:8:499, 523:8:995].

Example 4 to example 6 above or indexes corresponding to other values of the shifting value are not enumerated herein.

In this embodiment of this application, other indexes of the 242-tone DRUs may be further obtained based on the foregoing content. For brevity, the other indexes are not enumerated herein.

When a 242-tone DRU is obtained based on a 484-tone DRU, for example, odd-numbered tones of each 484-tone DRU in 1B may form one 242-tone DRU, and even-numbered tones of the 484-tone DRU may form another 242-tone DRU. For example, the 242-tone DRU 1 includes odd-numbered tones (or even-numbered tones) in the 484-tone DRU 1, the 242-tone DRU 2 includes even-numbered tones (or odd-numbered tones) in the 484-tone DRU 1, the 242-tone DRU 3 includes odd-numbered tones (or even-numbered tones) in the 484-tone DRU 2, the 242-tone DRU 4 includes even-numbered tones (or odd-numbered tones) in the 484-tone DRU 2, the 242-tone DRU 5 includes odd-numbered tones (or even-numbered tones) in the 484-tone DRU 3, the 242-tone DRU 6 includes even-numbered tones (or odd-numbered tones) in the 484-tone DRU 3, the 242-tone DRU 7 includes an odd-numbered tones (or even-numbered tones) in the 484-tone DRU 4, and the 242-tone DRU 8 includes even-numbered tones (or odd-numbered tones) in the 484-tone DRU 4. In the method, the indexes of each 242-tone DRU may be determined based on the indexes of the 484-tone DRU. Details are not described herein.

### 1D. 106-tone DRU

A 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15, and a 106-tone DRU 16 are all distributed in the first data pilot area, the second data pilot area, the third data pilot area, and the fourth data pilot area.

In other words, the 106-tone DRU 1 is distributed in the first data pilot area, the second data pilot area, the third data pilot area, and the fourth data pilot area; the 106-tone DRU 2 is distributed in the first data pilot area, the second data pilot area, the third data pilot area, and the fourth data pilot area; the 106-tone DRU 3 is distributed in the first data pilot area, the second data pilot area, the third data pilot area, and the fourth data pilot area; the 106-tone DRU 4 is distributed in the first data pilot area, the second data pilot area, the third data pilot area, and the fourth data pilot area; the 106-tone DRU 5 is distributed in the first data pilot area, the second data pilot area, the third data pilot area, and the fourth data pilot area; the 106-tone DRU 6 is distributed in the first data pilot area, the second data pilot area, the third data pilot area, and the fourth data pilot area; the 106-tone DRU 7 is distributed in the first data pilot area, the second data pilot area, the third data pilot area, and the fourth data pilot area; the 106-tone DRU 8 is distributed in the first data pilot area, the second data pilot area, the third data pilot area, and the fourth data pilot area; the 106-tone DRU 9 is distributed in the first data pilot area, the second data pilot area, the third data pilot area, and the fourth data pilot area; the 106-tone DRU 10 is distributed in the first data pilot area, the second data pilot area, the third data pilot area, and the fourth data pilot area; the 106-tone DRU 11 is distributed in the first data pilot area, the second data pilot area, the third data pilot area, and the fourth data pilot area; the 106-tone DRU 12 is distributed in the first data pilot area, the second data pilot area, the third data pilot area, and the fourth data pilot area; the 106-tone DRU 13 is distributed in the first data pilot area, the second data pilot area, the third data pilot area, and the fourth data pilot area; the 106-tone DRU 14 is distributed in the first data pilot area, the second data pilot area, the third data pilot area, and the fourth data pilot area; the 106-tone DRU 15 is distributed in the first data pilot area, the second data pilot area, the third data pilot area, and the fourth data pilot area; and the 106-tone DRU 16 is distributed in the first data pilot area, the second data pilot area, the third data pilot area, and the fourth data pilot area.

The 106-tone DRU 1 to the 106-tone DRU 16 meet at least one of the following conditions.

Condition 1: An index difference between adjacent tones, of any one of the 106-tone DRU 1 to the 106-tone DRU 16, distributed in the first data pilot area is 16; an index difference between adjacent tones, of the any 106-tone DRU, distributed in the second data pilot area is 16; an index difference between adjacent tones, of the any 106-tone DRU, distributed in the third data pilot area is 8; and an index difference between adjacent tones, of the any 106-tone DRU, distributed in the fourth data pilot area is 16.

In other words, for any one of the 106-tone DRU 1 to the 106-tone DRU 16, an index difference between adjacent tones, of the DRU, distributed in each data pilot area is 16. For descriptions of adjacent tones, refer to 1B. Details are not described herein again.

In this embodiment of this application, a 106-tone DRU can reach a higher power amplification factor by meeting the condition 1, for example, 11.14 dB.

Condition 2: A p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous. Certainly, the sequence shown herein is merely an example. As numbers of the 106-tone DRUs change, the sequence shown herein also changes. This is not limited in this application.

p may be a positive integer less than or equal to 106.

In this embodiment of this application, the 106-tone DRUs meet the condition 2, so that it can be ensured that the sixteen 106-tone DRUs form an overall shifting relationship, which facilitates index storage and sequence design simplification.

For example, the 106-tone DRUs may further meet the following condition 3:

Any 106-tone DRU includes 26 tones or 27 tones in the first data pilot area;
any 106-tone DRU includes 26 tones or 27 tones in the second data pilot area;
any 106-tone DRU includes 26 tones or 27 tones in the third data pilot area; and
any 106-tone DRU includes 26 tones or 27 tones in the fourth data pilot area.

Any 106-tone DRU may include 26 tones (or 27 tones) in any two of the four data pilot areas, and include 27 tones (or 26 tones) in remaining two data pilot areas. For example, for different 106-tone DRUs, quantities of tones that belong to the different 106-tone DRUs in a same data pilot area may be the same.

In an example 1, any 106-tone DRU may include 26 tones in the first data pilot area and the second data pilot area, and include 27 tones in the third data pilot area and the fourth data pilot area.

In another example 2, any 106-tone DRU may include 26 tones in the first data pilot area and the third data pilot area, and may include 27 tones in the second data pilot area and the fourth data pilot area.

In still another example 3, any 106-tone DRU may include 26 tones in the first data pilot area and the fourth data pilot area, and may include 27 tones in the second data pilot area and the third data pilot area.

In yet another example 4, any 106-tone DRU may include 27 tones in the first data pilot area and the second data pilot area, and include 26 tones in the third data pilot area and the fourth data pilot area.

In still yet another example 5, any 106-tone DRU may include 27 tones in the first data pilot area and the third data pilot area, and may include 26 tones in the second data pilot area and the fourth data pilot area.

In a further example 6, any 106-tone DRU may include 27 tones in the first data pilot area and the fourth data pilot area, and may include 26 tones in the second data pilot area and the third data pilot area.

For example, the 106-tone DRUs may further meet the following condition 4:
For any 106-tone DRU, a difference between an index of a last tone of the 106-tone DRU in the first data pilot area and an index of a first tone of the 106-tone DRU in the second data pilot area is an integer multiple of 16; a difference between an index of a last tone of the 106-tone DRU in the second data pilot area and an index of a first tone of the 106-tone DRU in the third data pilot area is an integer multiple of 16; and a difference between an index of a last tone of the 106-tone DRU in the third data pilot area and an index of a first tone of the 106-tone DRU in the fourth data pilot area is an integer multiple of 16.

In other words, for any 106-tone DRU, the difference between the index of the last tone of the 106-tone DRU in the first data pilot area and the index of the first tone of the 106-tone DRU in the second data pilot area is an integer multiple of an index difference between adjacent tones of the 106-tone DRU in a same data pilot area (that is, 16); the difference between the index of the last tone of the 106-tone DRU in the second data pilot area and the index of the first tone of the 106-tone DRU in the third data pilot area is an integer multiple of an index difference between adjacent tones of the 106-tone DRU in a same data pilot area; and the difference between the index of the last tone of the 106-tone DRU in the third data pilot area and the index of the first tone of the 106-tone DRU in the fourth data pilot area is an integer multiple of an index difference between adjacent tones of the 106-tone DRU in a same data pilot area.

For example, for any 106-tone DRU, the difference between the index of the last tone of the 106-tone DRU in the first data pilot area and the index of the first tone of the 106-tone DRU in the second data pilot area may be 16, 32, or the like. This is not enumerated herein.

For any 106-tone DRU, whether the difference between the index of the last tone of the 106-tone DRU in the first data pilot area and the index of the first tone of the 106-tone DRU in the second data pilot area, the difference between the index of the last tone of the 106-tone DRU in the second data pilot area and the index of the first tone of the 106-tone DRU in the third data pilot area, and the difference between the index of the last tone of the 106-tone DRU in the third data pilot area and the index of the first tone of the 106-tone DRU in the fourth data pilot area are the same is not limited in this embodiment of this application.

In this embodiment of this application, a 106-tone DRU meets the condition 4, so that it can be ensured that a PAPR of the 106-tone DRU is relatively low.

For example, the 106-tone DRUs may further meet the following condition 5:
For any 106-tone DRU, 26 tones or 27 tones of the 106-tone DRU in the first data pilot area may be shifted in the first data pilot area; 26 tones or 27 tones of the 106-tone DRU in the second data pilot area may be shifted in the second data pilot area; 26 tones or 27 tones of the 106-tone DRU in the third data pilot area may be shifted in the third data pilot area; or 26 tones or 27 tones of the 106-tone DRU in the fourth data pilot area may be shifted in the fourth data pilot area.

For descriptions of shifting, refer to the index expressions shown below. For example, a 106-tone DRU may meet the condition 5 when meeting the conditions 1 to 4. In a specific implementation, when the 106-tone DRU meets the condition 5, one index may be determined from a plurality of different indexes of the four 106-tone DRUs. For example, one index may be defined in the standard as an index of the 106-tone DRU, or an index expression shown below may be defined. This is not limited in this application.

In this embodiment of this application, when the conditions 1 to 4 are met, indexes of the 106-tone DRUs may be designed in the four data pilot areas.

In a possible implementation, indexes of the first data pilot area are [-1012:-515], indexes of the second data pilot area are [-509:-12], indexes of the third data pilot area are [12:509], and indexes of the fourth data pilot area are [515:1012].

For descriptions of indexes of the first guard area, the second direct current area, the second guard area, the first direct current area, and the third direct current area, refer to the implementation 1. Details are not described herein again.

In the four data pilot areas, sixteen 106-tone DRUs may be designed. In an example, sixteen 106-tone DRUs may be independently designed in the four data pilot areas. In another example, sixteen 106-tone DRUs may be designed in the four data pilot areas with reference to the 996-tone DRU. In still another example, eight 106-tone DRUs may be designed in the four data pilot areas with reference to the 484-tone DRU. In yet another example, sixteen 106-tone DRUs may be designed in the four data pilot areas with reference to the 242-tone DRU. For a relationship between the 106-tone DRU, the 242-tone DRU, the 484-tone DRU, and the 996-tone DRU, refer to the descriptions in FIG. 4. Details are not described herein again. When the 106-tone DRU is designed with reference to the 242-tone DRU, the 484-tone DRU, or the 996-tone DRU shown above, an index range of the 106-tone DRU cannot exceed an index range of the 242-tone DRU, an index range of the 484-tone DRU, or an index range of the 996-tone DRU. Descriptions of combination design herein are also applicable below.

The following describes a plurality of possibilities of indexes of the 106-tone DRUs. For descriptions of the shifting value, refer to 1B. Details are not described below again.

For the first data pilot area:
When the any 106-tone DRU includes 26 tones in the first data pilot area, indexes may be represented as:
indexes of 26 tones of the 106-tone DRU 1 in the first data pilot area are $\left[-1012:16:-612\right] + {q}_{1}^{1}$ ,
indexes of 26 tones of the 106-tone DRU 2 in the first data pilot area are $\left[-1004:16:-604\right] + {q}_{1}^{1}$ ,
indexes of 26 tones of the 106-tone DRU 3 in the first data pilot area are $\left[-1008:16:-608\right] + {q}_{1}^{1}$ ,
indexes of 26 tones of the 106-tone DRU 4 in the first data pilot area are $\left[-1000:16:-600\right] + {q}_{1}^{1}$ ,
indexes of 26 tones of the 106-tone DRU 5 in the first data pilot area are $\left[-1010:16:-610\right] + {q}_{1}^{1}$
indexes of 26 tones of the 106-tone DRU 6 in the first data pilot area are $\left[-1002:16:-602\right] + {q}_{1}^{1}$ ,
indexes of 26 tones of the 106-tone DRU 7 in the first data pilot area are $\left[-1006:16:-606\right] + {q}_{1}^{1}$ ,
indexes of 26 tones of the 106-tone DRU 8 in the first data pilot area are $\left[-998:16:-598\right] + {q}_{1}^{1}$ ,
indexes of 26 tones of the 106-tone DRU 9 in the first data pilot area are $\left[-1011:16:-611\right] + {q}_{1}^{1}$ ,
indexes of 26 tones of the 106-tone DRU 10 in the first data pilot area are $\left[-1003:16:-603\right] + {q}_{1}^{1}$ ,
indexes of 26 tones of the 106-tone DRU 11 in the first data pilot area are $\left[-1007:16:-607\right] + {q}_{1}^{1}$ ,
indexes of 26 tones of the 106-tone DRU 12 in the first data pilot area are $\left[-999:16:-599\right] + {q}_{1}^{1}$ ,
indexes of 26 tones of the 106-tone DRU 13 in the first data pilot area are $\left[-1009:16:-609\right] + {q}_{1}^{1}$ ,
indexes of 26 tones of the 106-tone DRU 14 in the first data pilot area are $\left[-1001:16:-601\right] + {q}_{1}^{1}$ ,
indexes of 26 tones of the 106-tone DRU 15 in the first data pilot area are $\left[-1005:16:-605\right] + {q}_{1}^{1}$ , and
indexes of 26 tones of the 106-tone DRU 16 in the first data pilot area are $\left[-997:16:-597\right] + {q}_{1}^{1}$ .

Shifting values in the 106-tone DRUs are not enumerated in this application. For descriptions of a specific value of the shifting value, refer to 1B. Details are not described again in this embodiment of this application.

When the any 106-tone DRU includes 27 tones in the first data pilot area, indexes may be represented as:
indexes of 27 tones of the 106-tone DRU 1 in the first data pilot area are $\left[-1012:16:-596\right] + {q}_{2}^{1}$ ,
indexes of 27 tones of the 106-tone DRU 2 in the first data pilot area are $\left[-1004:16:-588\right] + {q}_{2}^{1}$ ,
indexes of 27 tones of the 106-tone DRU 3 in the first data pilot area are $\left[-1008:16:-592\right] + {q}_{2}^{1}$ ,
indexes of 27 tones of the 106-tone DRU 4 in the first data pilot area are $\left[-1000:16:-584\right] + {q}_{2}^{1}$ ,
indexes of 27 tones of the 106-tone DRU 5 in the first data pilot area are $\left[-1010:16:-594\right] + {q}_{2}^{1}$ ,
indexes of 27 tones of the 106-tone DRU 6 in the first data pilot area are $\left[-1002:16:-586\right] + {q}_{2}^{1}$ ,
indexes of 27 tones of the 106-tone DRU 7 in the first data pilot area are $\left[-1006:16:-590\right] + {q}_{2}^{1}$ ,
indexes of 27 tones of the 106-tone DRU 8 in the first data pilot area are $\left[-998:16:-592\right] + {q}_{2}^{1}$ ,
indexes of 27 tones of the 106-tone DRU 9 in the first data pilot area are $\left[-1011:16:-595\right] + {q}_{2}^{1}$ ,
indexes of 26 tones of the 106-tone DRU 10 in the first data pilot area are $\left[-1003:16:-587\right] + {q}_{2}^{1}$ ,
indexes of 27 tones of the 106-tone DRU 11 in the first data pilot area are $\left[-1007:16:-591\right] + {q}_{2}^{1}$ ,
indexes of 27 tones of the 106-tone DRU 12 in the first data pilot area are $\left[-999:16:-583\right] + {q}_{2}^{1}$ ,
indexes of 27 tones of the 106-tone DRU 13 in the first data pilot area are $\left[-1009:16:-593\right] + {q}_{2}^{1}$ ,
indexes of 27 tones of the 106-tone DRU 14 in the first data pilot area are $\left[-1001:16:-585\right] + {q}_{2}^{1}$ ,
indexes of 27 tones of the 106-tone DRU 15 in the first data pilot area are $\left[-1005:16:-589\right] + {q}_{2}^{1}$ , and
indexes of 27 tones of the 106-tone DRU 16 in the first data pilot area are $\left[-997:16:-581\right] + {q}_{2}^{1}$ .

For the second data pilot area:
When the any 106-tone DRU includes 26 tones in the second data pilot area, indexes may be represented as:
indexes of 26 tones of the 106-tone DRU 1 in the second data pilot area are $\left[-500:16:-100\right] + {q}_{1}^{2}$ ,
indexes of 26 tones of the 106-tone DRU 2 in the second data pilot area are $\left[-492:16:-92\right] + {q}_{1}^{2}$ ,
indexes of 26 tones of the 106-tone DRU 3 in the second data pilot area are $\left[-496:16:-96\right] + {q}_{1}^{2}$ ,
indexes of 26 tones of the 106-tone DRU 4 in the second data pilot area are $\left[-488:16:-88\right] + {q}_{1}^{2}$ ,
indexes of 26 tones of the 106-tone DRU 5 in the second data pilot area are $\left[-498:16:-98\right] + {q}_{1}^{2}$ ,
indexes of 26 tones of the 106-tone DRU 6 in the second data pilot area are $\left[-490:16:-90\right] + {q}_{1}^{2}$ ,
indexes of 26 tones of the 106-tone DRU 7 in the second data pilot area are $\left[-494:16:-94\right] + {q}_{1}^{2}$ ,
indexes of 26 tones of the 106-tone DRU 8 in the second data pilot area are $\left[-486:16:-86\right] + {q}_{1}^{2}$ ,
indexes of 26 tones of the 106-tone DRU 9 in the second data pilot area are $\left[-499:16:-99\right] + {q}_{1}^{2}$ ,
indexes of 26 tones of the 106-tone DRU 10 in the second data pilot area are $\left[-491:16:-91\right] + {q}_{1}^{2}$ ,
indexes of 26 tones of the 106-tone DRU 11 in the second data pilot area are $\left[-495:16:-95\right] + {q}_{1}^{2}$ ,
indexes of 26 tones of the 106-tone DRU 12 in the second data pilot area are $\left[-487:16:-87\right] + {q}_{1}^{2}$ ,
indexes of 26 tones of the 106-tone DRU 13 in the second data pilot area are $\left[-497:16:-97\right] + {q}_{1}^{2}$ ,
indexes of 26 tones of the 106-tone DRU 14 in the second data pilot area are $\left[-489:16:-89\right] + {q}_{1}^{2}$ ,
indexes of 26 tones of the 106-tone DRU 15 in the second data pilot area are $\left[-493:16:-93\right] + {q}_{1}^{2}$ , and
indexes of 26 tones of the 106-tone DRU 16 in the second data pilot area are $\left[-485:16:-85\right] + {q}_{1}^{2}$ .

When the any 106-tone DRU includes 27 tones in the second data pilot area, indexes may be represented as:
indexes of 27 tones of the 106-tone DRU 1 in the second data pilot area are $\left[-500:16:-84\right] + {q}_{2}^{2}$ ,
indexes of 27 tones of the 106-tone DRU 2 in the second data pilot area are $\left[-492:16:-76\right] + {q}_{2}^{2}$ ,
indexes of 27 tones of the 106-tone DRU 3 in the second data pilot area are $\left[-496:16:-80\right] + {q}_{2}^{2}$ ,
indexes of 27 tones of the 106-tone DRU 4 in the second data pilot area are $\left[-488:16:-72\right] + {q}_{2}^{2}$ ,
indexes of 27 tones of the 106-tone DRU 5 in the second data pilot area are $\left[-498:16:-82\right] + {q}_{2}^{2}$ ,
indexes of 27 tones of the 106-tone DRU 6 in the second data pilot area are $\left[-490:16:-74\right] + {q}_{2}^{2}$ ,
indexes of 27 tones of the 106-tone DRU 7 in the second data pilot area are $\left[-494:16:-78\right] + {q}_{2}^{2}$ ,
indexes of 27 tones of the 106-tone DRU 8 in the second data pilot area are $\left[-486:16:-70\right] + {q}_{2}^{2}$ ,
indexes of 27 tones of the 106-tone DRU 9 in the second data pilot area are $\left[-499:16:-83\right] + {q}_{2}^{2}$ ,
indexes of 27 tones of the 106-tone DRU 10 in the second data pilot area are $\left[-491:16:-75\right] + {q}_{2}^{2}$ ,
indexes of 27 tones of the 106-tone DRU 11 in the second data pilot area are $\left[-495:16:-79\right] + {q}_{2}^{2}$ ,
indexes of 27 tones of the 106-tone DRU 12 in the second data pilot area are $\left[-487:16:-71\right] + {q}_{2}^{2}$ ,
indexes of 27 tones of the 106-tone DRU 13 in the second data pilot area are $\left[-497:16:-82\right] + {q}_{2}^{2}$ ,
indexes of 27 tones of the 106-tone DRU 14 in the second data pilot area are $\left[-489:16:-73\right] + {q}_{2}^{2}$ ,
indexes of 27 tones of the 106-tone DRU 15 in the second data pilot area are $\left[-493:16:-77\right] + {q}_{2}^{2}$ , and
indexes of 27 tones of the 106-tone DRU 16 in the second data pilot area are $\left[-485:16:-69\right] + {q}_{2}^{2}$ .

For the third data pilot area:
When the any 106-tone DRU includes 26 tones in the third data pilot area, indexes may be represented as:
indexes of 26 tones of the 106-tone DRU 1 in the third data pilot area are $\left[12:16:412\right] + {q}_{1}^{3}$,
indexes of 26 tones of the 106-tone DRU 2 in the third data pilot area are $\left[20:16:420\right] + {q}_{1}^{3}$,
indexes of 26 tones of the 106-tone DRU 3 in the third data pilot area are $\left[16:16:416\right] + {q}_{1}^{3}$,
indexes of 26 tones of the 106-tone DRU 4 in the third data pilot area are $\left[24:16:424\right] + {q}_{1}^{3}$,
indexes of 26 tones of the 106-tone DRU 5 in the third data pilot area are $\left[14:16:414\right] + {q}_{1}^{3}$,
indexes of 26 tones of the 106-tone DRU 6 in the third data pilot area are $\left[22:16:422\right] + {q}_{1}^{3}$,
indexes of 26 tones of the 106-tone DRU 7 in the third data pilot area are $\left[18:16:418\right] + {q}_{1}^{3}$,
indexes of 26 tones of the 106-tone DRU 8 in the third data pilot area are $\left[26:16:426\right] + {q}_{1}^{3}$,
indexes of 26 tones of the 106-tone DRU 9 in the third data pilot area are $\left[13:16:413\right] + {q}_{1}^{3}$,
indexes of 26 tones of the 106-tone DRU 10 in the third data pilot area are $\left[21:16:421\right] + {q}_{1}^{3}$,
indexes of 26 tones of the 106-tone DRU 11 in the third data pilot area are $\left[17:16:417\right] + {q}_{1}^{3}$,
indexes of 26 tones of the 106-tone DRU 12 in the third data pilot area are $\left[25:16:425\right] + {q}_{1}^{3}$,
indexes of 26 tones of the 106-tone DRU 13 in the third data pilot area are $\left[15:16:415\right] + {q}_{1}^{3}$,
indexes of 26 tones of the 106-tone DRU 14 in the third data pilot area are $\left[23:16:423\right] + {q}_{1}^{3}$,
indexes of 26 tones of the 106-tone DRU 15 in the third data pilot area are $\left[19:16:419\right] + {q}_{1}^{3}$, and
indexes of 26 tones of the 106-tone DRU 16 in the third data pilot area are $\left[27:16:427\right] + {q}_{1}^{3}$.

When the any 106-tone DRU includes 27 tones in the third data pilot area, indexes may be represented as:
indexes of 27 tones of the 106-tone DRU 1 in the third data pilot area are $\left[12:16:428\right] + {q}_{1}^{3}$,
indexes of 27 tones of the 106-tone DRU 2 in the third data pilot area are $\left[20:16:436\right] + {q}_{1}^{3}$,
indexes of 27 tones of the 106-tone DRU 3 in the third data pilot area are $\left[16:16:432\right] + {q}_{1}^{3}$,
indexes of 27 tones of the 106-tone DRU 4 in the third data pilot area are $\left[24:16:440\right] + {q}_{1}^{3}$,
indexes of 27 tones of the 106-tone DRU 5 in the third data pilot area are $\left[14:16:430\right] + {q}_{1}^{3}$,
indexes of 27 tones of the 106-tone DRU 6 in the third data pilot area are $\left[22:16:438\right] + {q}_{1}^{3}$,
indexes of 27 tones of the 106-tone DRU 7 in the third data pilot area are $\left[18:16:434\right] + {q}_{1}^{3}$,
indexes of 27 tones of the 106-tone DRU 8 in the third data pilot area are $\left[26:16:442\right] + {q}_{1}^{3}$,
indexes of 27 tones of the 106-tone DRU 9 in the third data pilot area are $\left[13:16:429\right] + {q}_{1}^{3}$,
indexes of 27 tones of the 106-tone DRU 10 in the third data pilot area are $\left[21:16:437\right] + {q}_{1}^{3}$,
indexes of 27 tones of the 106-tone DRU 11 in the third data pilot area are $\left[17:16:433\right] + {q}_{1}^{3}$,
indexes of 27 tones of the 106-tone DRU 12 in the third data pilot area are $\left[25:16:441\right] + {q}_{1}^{3}$,
indexes of 27 tones of the 106-tone DRU 13 in the third data pilot area are $\left[15:16:431\right] + {q}_{1}^{3}$,
indexes of 27 tones of the 106-tone DRU 14 in the third data pilot area are $\left[23:16:439\right] + {q}_{1}^{3}$,
indexes of 27 tones of the 106-tone DRU 15 in the third data pilot area are $\left[19:16:435\right] + {q}_{1}^{3}$, and
indexes of 27 tones of the 106-tone DRU 16 in the third data pilot area are $\left[27:16:443\right] + {q}_{1}^{3}$.

For the fourth data pilot area:
When the any 106-tone DRU includes 26 tones in the fourth data pilot area, indexes may be represented as:
indexes of 26 tones of the 106-tone DRU 1 in the fourth data pilot area are $\left[524:16:924\right] + {q}_{1}^{4}$,
indexes of 26 tones of the 106-tone DRU 2 in the fourth data pilot area are $\left[532:16:932\right] + {q}_{1}^{4}$,
indexes of 26 tones of the 106-tone DRU 3 in the fourth data pilot area are $\left[528:16:928\right] + {q}_{1}^{4}$,
indexes of 26 tones of the 106-tone DRU 4 in the fourth data pilot area are $\left[536:16:936\right] + {q}_{1}^{4}$,
indexes of 26 tones of the 106-tone DRU 5 in the fourth data pilot area are $\left[526:16:926\right] + {q}_{1}^{4}$,
indexes of 26 tones of the 106-tone DRU 6 in the fourth data pilot area are $\left[534:16:934\right] + {q}_{1}^{4}$,
indexes of 26 tones of the 106-tone DRU 7 in the fourth data pilot area are $\left[530:16:930\right] + {q}_{1}^{4}$,
indexes of 26 tones of the 106-tone DRU 8 in the fourth data pilot area are $\left[538:16:938\right] + {q}_{1}^{4}$,
indexes of 26 tones of the 106-tone DRU 9 in the fourth data pilot area are $\left[525:16:925\right] + {q}_{1}^{4}$,
indexes of 26 tones of the 106-tone DRU 10 in the fourth data pilot area are $\left[533:16:933\right] + {q}_{1}^{4}$,
indexes of 26 tones of the 106-tone DRU 11 in the fourth data pilot area are $\left[529:16:929\right] + {q}_{1}^{4}$,
indexes of 26 tones of the 106-tone DRU 12 in the fourth data pilot area are $\left[537:16:937\right] + {q}_{1}^{4}$,
indexes of 26 tones of the 106-tone DRU 13 in the fourth data pilot area are $\left[527:16:927\right] + {q}_{1}^{4}$,
indexes of 26 tones of the 106-tone DRU 14 in the fourth data pilot area are $\left[535:16:935\right] + {q}_{1}^{4}$,
indexes of 26 tones of the 106-tone DRU 15 in the fourth data pilot area are $\left[531:16:931\right] + {q}_{1}^{4}$, and
indexes of 26 tones of the 106-tone DRU 16 in the fourth data pilot area are $\left[539:16:939\right] + {q}_{1}^{4}$.

When the any 106-tone DRU includes 27 tones in the fourth data pilot area, indexes may be represented as:
indexes of 27 tones of the 106-tone DRU 1 in the fourth data pilot area are $\left[524:16:940\right] + {q}_{2}^{4}$,
indexes of 27 tones of the 106-tone DRU 2 in the fourth data pilot area are $\left[532:16:948\right] + {q}_{2}^{4}$,
indexes of 27 tones of the 106-tone DRU 3 in the fourth data pilot area are $\left[528:16:944\right] + {q}_{2}^{4}$,
indexes of 27 tones of the 106-tone DRU 4 in the fourth data pilot area are $\left[536:16:952\right] + {q}_{2}^{4}$,
indexes of 27 tones of the 106-tone DRU 5 in the fourth data pilot area are $\left[526:16:942\right] + {q}_{2}^{4}$,
indexes of 27 tones of the 106-tone DRU 6 in the fourth data pilot area are $\left[534:16:950\right] + {q}_{2}^{4}$,
indexes of 27 tones of the 106-tone DRU 7 in the fourth data pilot area are $\left[530:16:946\right] + {q}_{2}^{4}$,
indexes of 27 tones of the 106-tone DRU 8 in the fourth data pilot area are $\left[538:16:954\right] + {q}_{2}^{4}$,
indexes of 27 tones of the 106-tone DRU 9 in the fourth data pilot area are $\left[525:16:941\right] + {q}_{2}^{4}$,
indexes of 27 tones of the 106-tone DRU 10 in the fourth data pilot area are $\left[533:16:949\right] + {q}_{2}^{4}$,
indexes of 27 tones of the 106-tone DRU 11 in the fourth data pilot area are $\left[529:16:945\right] + {q}_{2}^{4}$,
indexes of 27 tones of the 106-tone DRU 12 in the fourth data pilot area are $\left[537:16:953\right] + {q}_{2}^{4}$,
indexes of 27 tones of the 106-tone DRU 13 in the fourth data pilot area are $\left[527:16:943\right] + {q}_{2}^{4}$,
indexes of 27 tones of the 106-tone DRU 14 in the fourth data pilot area are $\left[535:16:951\right] + {q}_{2}^{4}$,
indexes of 27 tones of the 106-tone DRU 15 in the fourth data pilot area are $\left[531:16:947\right] + {q}_{2}^{4}$, and
indexes of 27 tones of the 106-tone DRU 16 in the fourth data pilot area are $\left[539:16:955\right] + {q}_{2}^{4}$.

The following describes examples of indexes of each 106-tone DRU.

The following describes the indexes of the 106-tone DRUs by using an example in which each shifting value is 0.

Example 1 is used as an example. To be specific, quantities of tones of any 106-tone DRU in the four data pilot areas are sequentially 26, 26, 27, and 27:
indexes of the 106-tone DRU 1 are [-1012:16:-612, -500:16:-100, 12:16:428, 524:16:940];
indexes of the 106-tone DRU 2 are [-1004:16:-604, -492:16:-92, 20:16:436, 532:16:948];
indexes of the 106-tone DRU 3 are [-1008:16:-608, -496:16:-96, 16:16:432, 528:16:944];
indexes of the 106-tone DRU 4 are [-1000:16:-600, -488:16:-88, 24:16:440, 536:16:952];
indexes of the 106-tone DRU 5 are [-1010:16:-610, -498:16:-98, 14:16:430, 526:16:942];
indexes of the 106-tone DRU 6 are [-1002:16:-602, -490:16:-90, 22:16:438, 534:16:950];
indexes of the 106-tone DRU 7 are [-1006:16:-606, -494:16:-94, 18:16:434, 530:16:946];
indexes of the 106-tone DRU 8 are [-998:16:-598, -486:16:-86, 26:16:442, 538:16:954];
indexes of the 106-tone DRU 9 are [-1011:16:-611, -499:16:-99, 13:16:429, 525:16:941];
indexes of the 106-tone DRU 10 are [-1003:16:-603, -491:16:-91, 21:16:437, 533:16:949];
indexes of the 106-tone DRU 11 are [-1007:16:-607, -495:16:-95, 17:16:433, 529:16:945];
indexes of the 106-tone DRU 12 are [-999:16:-599, -487:16:-87, 25:16:441, 537:16:953];
indexes of the 106-tone DRU 13 are [-1009:16:-609, -497:16:-97, 15:16:431, 527:16:943];
indexes of the 106-tone DRU 14 are [-1001:16:-601, -489:16:-89, 23:16:439, 535:16:951];
indexes of the 106-tone DRU 15 are [-1005:16:-605, -493:16:-93, 19:16:435, 531:16:947]; and
indexes of the 106-tone DRU 16 are [-997:16:-597, -485:16:-85, 27:16:443, 539:16:955].

Example 2 is used as an example. To be specific, quantities of tones of any 106-tone DRU in the four data pilot areas are sequentially 26, 27, 26, and 27:
indexes of the 106-tone DRU 1 are [-1012:16:-612, -500:16:-84, 12:16:412, 524:16:940];
indexes of the 106-tone DRU 2 are [-1004:16:-604, -492:16:-76, 20:16:420, 532:16:948];
indexes of the 106-tone DRU 3 are [-1008:16:-608, -496:16:-80, 16:16:416, 528:16:944];
indexes of the 106-tone DRU 4 are [-1000:16:-600, -488:16:-72, 24:16:424, 536:16:952];
indexes of the 106-tone DRU 5 are [-1010:16:-610, -498:16:-82, 14:16:414, 526:16:942];
indexes of the 106-tone DRU 6 are [-1002:16:-602, -490:16:-74, 22:16:422, 534:16:950];
indexes of the 106-tone DRU 7 are [-1006:16:-606, -494:16:-78, 18:16:418, 530:16:946];
indexes of the 106-tone DRU 8 are [-998:16:-598, -486:16:-70, 26:16:426, 538:16:954];
indexes of the 106-tone DRU 9 are [-1011:16:-611, -499:16:-83, 13:16:413, 525:16:941];
indexes of the 106-tone DRU 10 are [-1003:16:-603, -491:16:-75, 21:16:421, 533:16:949];
indexes of the 106-tone DRU 11 are [-1007:16:-607, -495:16:-79, 17:16:417, 529:16:945];
indexes of the 106-tone DRU 12 are [-999:16:-599, -487:16:-71, 25:16:425, 537:16:953];
indexes of the 106-tone DRU 13 are [-1009:16:-609, -497:16:-81, 15:16:415, 527:16:943];
indexes of the 106-tone DRU 14 are [-1001:16:-601, -489:16:-73, 23:16:423, 535:16:951];
indexes of the 106-tone DRU 15 are [-1005:16:-605, -493:16:-77, 19:16:419, 531:16:947]; and
indexes of the 106-tone DRU 16 are [-997:16:-597, -485:16:-69, 27:16:427, 539:16:955].

Example 3 is used as an example. To be specific, quantities of tones of any 106-tone DRU in four data pilot areas are sequentially 26, 27, 27, and 26:
indexes of the 106-tone DRU 1 are [-1012:16:-612, -500:16:-84, 12:16:428, 524:16:924];
indexes of the 106-tone DRU 2 are [-1004:16:-604, -492:16:-76, 20:16:436, 532:16:932];
indexes of the 106-tone DRU 3 are [-1008:16:-608, -496:16:-80, 16:16:432, 528:16:928];
indexes of the 106-tone DRU 4 are [-1000:16:-600, -488:16:-72, 24:16:440, 536:16:936];
indexes of the 106-tone DRU 5 are [-1010:16:-610, -498:16:-82, 14:16:430, 526:16:926];
indexes of the 106-tone DRU 6 are [-1002:16:-602, -490:16:-74, 22:16:438, 534:16:934];
indexes of the 106-tone DRU 7 are [-1006:16:-606, -494:16:-78, 18:16:434, 530:16:930];
indexes of the 106-tone DRU 8 are [-998:16:-598, -486:16:-70, 26:16:442, 538:16:938];
indexes of the 106-tone DRU 9 are [-1011:16:-611, -499:16:-83, 13:16:429, 525:16:925];
indexes of the 106-tone DRU 10 are [-1003:16:-603, -491:16:-75, 21:16:437, 533:16:933];
indexes of the 106-tone DRU 11 are [-1007:16:-607, -495:16:-79, 17:16:433, 529:16:929];
indexes of the 106-tone DRU 12 are [-999:16:-599, -487:16:-71, 25:16:441, 537:16:937];
indexes of the 106-tone DRU 13 are [-1009:16:-609, -497:16:-81, 15:16:431, 527:16:927];
indexes of the 106-tone DRU 14 are [-1001:16:-601, -489:16:-73, 23:16:439, 535:16:935];
indexes of the 106-tone DRU 15 are [-1005:16:-605, -493:16:-77, 19:16:435, 531:16:931]; and
indexes of the 106-tone DRU 16 are [-997:16:-597, -485:16:-69, 27:16:443, 539:16:939].

In this embodiment of this application, other indexes of the 106-tone DRUs may be further obtained based on the foregoing content. For brevity, the other indexes are not enumerated herein.

For example, with reference to 1A to 1D, the tone plan corresponding to 160 MHz may include:
two 996-tone DRUs (for indexes of the two 996-tone DRUs, refer to the indexes shown in 1A);
four 484-tone DRUs (for indexes of the four 484-tone DRUs, refer to Example 2 in 1B);
eight 242-tone DRUs (for indexes of the eight 242-tone DRUs, refer to Example 2 in 1C); and
sixteen 106-tone DRUs (for indexes of the sixteen 106-tone DRUs, refer to Example 2 in 1D).

Alternatively, the tone plan corresponding to 160 MHz may include:
two 996-tone DRUs (for indexes of the two 996-tone DRUs, refer to the indexes shown in 1A);
four 484-tone DRUs (for indexes of the four 484-tone DRUs, refer to Example 1 in 1B);
eight 242-tone DRUs (for indexes of the eight 242-tone DRUs, refer to Example 1 in 1C); and
sixteen 106-tone DRUs (for indexes of the sixteen 106-tone DRUs, refer to Example 1 in 1D).

The tone plan corresponding to 160 MHz may include:
two 996-tone DRUs (for indexes of the two 996-tone DRUs, refer to the indexes shown in 1A);
four 484-tone DRUs (for indexes of the four 484-tone DRUs, refer to Example 3 in 1B);
eight 242-tone DRUs (for indexes of the eight 242-tone DRUs, refer to Example 3 in 1C); and
sixteen 106-tone DRUs (for indexes of the sixteen 106-tone DRUs, refer to Example 3 in 1D).

The tone plan corresponding to 160 MHz may include:
two 996-tone DRUs (for indexes of the two 996-tone DRUs, refer to the indexes shown in 1A);
four 484-tone DRUs (for indexes of the four 484-tone DRUs, refer to Example 2 in 1B);
eight 242-tone DRUs (for indexes of the eight 242-tone DRUs, refer to Example 2 in 1C); and
sixteen 106-tone DRUs (for indexes of the sixteen 106-tone DRUs, refer to Example 1, Example 3, or the like in 1D).

The indexes of the DRUs are not enumerated herein.

### Second tone plan:

In a possible implementation, a tone plan corresponding to a first bandwidth may include a first guard area, a first data pilot area, a first direct current area, a second data pilot area, a second direct current area, a third data pilot area, a third direct current area, a fourth data pilot area, and a second guard area.

For descriptions of the areas, refer to the first tone plan. Details are not described herein again.

### 2A. 996-tone DRU

A 996-tone DRU 1 meets the following condition:
The 996-tone DRU 1 is distributed in the first data pilot area, the second data pilot area, the third data pilot area, and the fourth data pilot area; and the 996-tone DRU 1 includes odd-numbered tones in the first data pilot area, the second data pilot area, the third data pilot area, and the fourth data pilot area.

A 996-tone DRU 2 meets the following condition:
The 996-tone DRU 2 is distributed in the first data pilot area, the second data pilot area, the third data pilot area, and the fourth data pilot area; and the 996-tone DRU 2 includes even-numbered tones in the first data pilot area, the second data pilot area, the third data pilot area, and the fourth data pilot area.

In an example, the first data pilot area to the fourth data pilot area may not include a null tone. For example, a total quantity of tones in the four data pilot areas is 996*2=1992. In another example, the first data pilot area to the fourth data pilot area may include null tones. For example, a total quantity of remaining tones other than the null tones in the four data pilot areas may be 1992. For descriptions of the areas, refer to 1A. Details are not described herein again.

The 996-tone DRU 1 may meet the following condition:
A difference between an index of a last tone of the 996-tone DRU 1 in the first data pilot area and an index of a first tone of the 996-tone DRU 1 in the second data pilot area is an integer multiple of 2; a difference between an index of a last tone of the 996-tone DRU 1 in the second data pilot area and an index of a first tone of the 996-tone DRU 1 in the third data pilot area is an integer multiple of 2; and a difference between an index of a last tone of the 996-tone DRU 1 in the third data pilot area and an index of a first tone of the 996-tone DRU 1 in the fourth data pilot area is an integer multiple of 2.

The 996-tone DRU 2 may meet the following relationship:
A difference between an index of a last tone of the 996-tone DRU 2 in the first data pilot area and an index of a first tone of the 996-tone DRU 2 in the second data pilot area is an integer multiple of 2; a difference between an index of a last tone of the 996-tone DRU 2 in the second data pilot area and an index of a first tone of the 996-tone DRU 2 in the third data pilot area is an integer multiple of 2; and a difference between an index of a last tone of the 996-tone DRU 2 in the third data pilot area and an index of a first tone of the 996-tone DRU 2 in the fourth data pilot area is an integer multiple of 2.

For descriptions of the 996-tone DRU 1 and the 996-tone DRU 2, refer to 1A. Details are not described herein again.

In this embodiment of this application, the 996-tone DRU 1 or the 996-tone DRU 2 meets the conditions in the data pilot areas, so that it can be ensured that a peak to average power ratio (peak to average power ratio, PAPR) of the 996-tone DRU is relatively low.

When the conditions are met, indexes of the 996-tone DRUs may be designed in the four data pilot areas, so that not only a power amplification factor can be increased, but also the relatively low PAPR can be ensured.

In a possible implementation, indexes of the first data pilot area are [-1012:-515], indexes of the second data pilot area are [-509:-12], indexes of the third data pilot area are [12:509], and indexes of the fourth data pilot area are [515:1012].

Because an index of a first tone in the first data pilot area is an even number, an index of a first tone in the second data pilot area is an odd number, an index of a first tone in the third data pilot area is an even number, and an index of a first tone in the fourth data pilot area is an odd number, that the 996-tone DRU 1 includes odd-numbered tones in the first data pilot area, the second data pilot area, the third data pilot area, and the fourth data pilot area may be replaced with that the 996-tone DRU 1 includes a tone whose index is an even number in the first data pilot area, a tone whose index is an odd number in the second data pilot area, a tone whose index is an even number in the third data pilot area, and a tone whose index is an odd number in the fourth data pilot area. Similarly, that the 996-tone DRU 2 includes even-numbered tones in the first data pilot area, the second data pilot area, the third data pilot area, and the fourth data pilot area may be replaced with that the 996-tone DRU 1 includes a tone whose index is an odd number in the first data pilot area, a tone whose index is an even number in the second data pilot area, a tone whose index is an odd number in the third data pilot area, and a tone whose index is an even number in the fourth data pilot area.

For descriptions of the areas, refer to the implementation 1. Details are not described herein again.

The indexes of the 996-tone DRUs are shown as follows.
Indexes of tones in the 996-tone DRU 1 are [-1012:2:-516, -509:2:-13, 12:2:508, 515:2:1011]; and
indexes of tones in the 996-tone DRU 2 are [-1011:2:-515, -508:2:-12, 13:2:509, 516:2:1012].

In this embodiment of this application, the 996-tone DRU 1 or the 996-tone DRU 2 is evenly distributed in the four data pilot areas, which is more conducive to channel smoothing, and can also ensure the low PAPR.

### 2B. 484-tone DRU

A 484-tone DRU 1, a 484-tone DRU 2, a 484-tone DRU 3, and a 484-tone DRU 4 are all distributed in the first data pilot area, the second data pilot area, the third data pilot area, and the fourth data pilot area.

The 484-tone DRU 1 to the 484-tone DRU 4 meet at least one of the following:
An index difference between adjacent tones, of any one of the 484-tone DRU 1 to the 484-tone DRU 4, distributed in the first data pilot area is 4, an index difference between adjacent tones, of the any 484-tone DRU, distributed in the second data pilot area is 4, an index difference between adjacent tones, of the any 484-tone DRU, distributed in the third data pilot area is 4, and an index difference between adjacent tones, of the any 484-tone DRU, distributed in the fourth data pilot area is 4; and
a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

For descriptions of the index difference between adjacent tones and contiguity, refer to the condition 1 and the condition 2 in 1B. Details are not described herein again.

For example, the 484-tone DRUs may further meet the following condition:
Any 484-tone DRU includes 120 tones or 122 tones in the first data pilot area;
any 484-tone DRU includes 120 tones or 122 tones in the second data pilot area;
any 484-tone DRU includes 120 tones or 122 tones in the third data pilot area; and
any 484-tone DRU includes 120 tones or 122 tones in the fourth data pilot area.

For descriptions of the 120 tones or the 122 tones, refer to the condition 3 in 1B. For example, the foregoing example 1 to example 6 are also applicable to 2B, and details are not described herein again.

For example, the 484-tone DRUs may further meet the following condition:
For any 484-tone DRU, a difference between an index of a last tone of the 484-tone DRU in the first data pilot area and an index of a first tone of the 484-tone DRU in the second data pilot area is an integer multiple of 4, a difference between an index of a last tone of the 484-tone DRU in the second data pilot area and an index of a first tone of the 484-tone DRU in the third data pilot area is an integer multiple of 4, and a difference between an index of a last tone of the 484-tone DRU in the third data pilot area and an index of a first tone of the 484-tone DRU in the fourth data pilot area is an integer multiple of 4.

For descriptions of the index difference, refer to the condition 4 in 1B. Details are not described herein again.

For example, the 484-tone DRUs may further meet the following condition:
For any 484-tone DRU, 120 tones or 122 tones of the 484-tone DRU in the first data pilot area may be shifted in the first data pilot area, 120 tones or 122 tones of the 484-tone DRU in the second data pilot area may be shifted in the second data pilot area, 120 tones or 122 tones of the 484-tone DRU in the third data pilot area may be shifted in the third data pilot area, or 120 tones or 122 tones of the 484-tone DRU in the fourth data pilot area may be shifted in the fourth data pilot area.

For descriptions of shifting, refer to the condition 5 in 1B. Details are not described herein again.

In a possible implementation, indexes of the first data pilot area are [-1012:-515], indexes of the second data pilot area are [-509:-12], indexes of the third data pilot area are [12:509], and indexes of the fourth data pilot area are [515:1012].

For a design manner of the four data pilot areas and the 484-tone DRUs herein, refer to descriptions in 1B. Details are not described herein again.

In this embodiment of this application, when the 484-tone DRUs are independently designed in the four data pilot areas, because index ranges of corresponding data pilot areas listed in the second tone plan are the same as those listed in the first tone plan, the 484-tone DRUs in the second tone plan may be considered to be the same as the 484-tone DRUs in the first tone plan. However, when the 484-tone DRUs in the second tone plan are designed with reference to a 996-tone DRU, indexes of the 484-tone DRUs in the second tone plan and indexes of the 484-tone DRUs in the first tone plan are different.

The following describes a plurality of possibilities of the indexes of the 484-tone DRUs.

For the first data pilot area:
In a possible implementation, when the any 484-tone DRU includes 120 tones in the first data pilot area, indexes may be represented as:
indexes of 120 tones of the 484-tone DRU 1 in the first data pilot area are $\left[-1012:4:-536\right] + {k}_{1}^{1}$ ,
indexes of 120 tones of the 484-tone DRU 2 in the first data pilot area are $\left[-1010:4:-534\right] + {k}_{1}^{1}$ ,
indexes of 120 tones of the 484-tone DRU 3 in the first data pilot area are $\left[-1011:4:-535\right] + {k}_{1}^{1}$ , and
indexes of 120 tones of the 484-tone DRU 4 in the first data pilot area are $\left[-1009:4:-533\right] + {k}_{1}^{1}$ , where
${k}_{1}^{1} = 0 , 2 , 4 , 6 , 8 , 10 , 12 , 14 , 16$, or 18.

When the any 484-tone DRU includes 122 tones in the first data pilot area, indexes may be represented as:
indexes of 122 tones of the 484-tone DRU 1 in the first data pilot area are $\left[-1012:4:-528\right] + {k}_{2}^{1}$ ,
indexes of 122 tones of the 484-tone DRU 2 in the first data pilot area are $\left[-1010:4:-526\right] + {k}_{2}^{1}$ ,
indexes of 122 tones of the 484-tone DRU 3 in the first data pilot area are $\left[-1011:4:-527\right] + {k}_{2}^{1}$ , and
indexes of 122 tones of the 484-tone DRU 4 in the first data pilot area are $\left[-1009:4:-525\right] + {k}_{2}^{1}$ , where
${k}_{2}^{1} = 0 , 2 , 4 , 6 , 8 ,$, or 10.

For the second data pilot area:
In a possible implementation, when the any 484-tone DRU includes 120 tones in the second data pilot area, indexes may be represented as:
indexes of 120 tones of the 484-tone DRU 1 in the second data pilot area are $\left[-509:4:-33\right] + {k}_{1}^{2}$ ,
indexes of 120 tones of the 484-tone DRU 2 in the second data pilot area are $\left[-507:4:-31\right] + {k}_{1}^{2}$ ,
indexes of 120 tones of the 484-tone DRU 3 in the second data pilot area are $\left[-508:4:-32\right] + {k}_{1}^{2}$ , and
indexes of 120 tones of the 484-tone DRU 4 in the second data pilot area are $\left[-506:4:-30\right] + {k}_{1}^{2}$ , where
${k}_{1}^{2} = 0 , 2 , 4 , 6 , 8 , 10 , 12 , 14 , 16$, or 18.

When the any 484-tone DRU includes 122 tones in the second data pilot area, indexes may be represented as:
indexes of 122 tones of the 484-tone DRU 1 in the second data pilot area are $\left[-509:4:-25\right] + {k}_{2}^{2}$ ,
indexes of 122 tones of the 484-tone DRU 2 in the second data pilot area are $\left[-507:4:-23\right] + {k}_{2}^{2}$ ,
indexes of 122 tones of the 484-tone DRU 3 in the second data pilot area are $\left[-508:4:-24\right] + {k}_{2}^{2}$ , and
indexes of 122 tones of the 484-tone DRU 4 in the second data pilot area are $\left[-506:4:-22\right] + {k}_{2}^{2}$ , where
${k}_{2}^{2} = 0 , 2 , 4 , 6 , 8$, or 10.

For the third data pilot area:
In a possible implementation, when the any 484-tone DRU includes 120 tones in the third data pilot area, indexes may be represented as:
indexes of 120 tones of the 484-tone DRU 1 in the third data pilot area are $\left[12:4:488\right] + {k}_{1}^{3}$,
indexes of 120 tones of the 484-tone DRU 2 in the third data pilot area are $\left[14:4:490\right] + {k}_{1}^{3}$,
indexes of 120 tones of the 484-tone DRU 3 in the third data pilot area are $\left[13:4:489\right] + {k}_{1}^{3}$, and
indexes of 120 tones of the 484-tone DRU 4 in the third data pilot area are $\left[15:4:491\right] + {k}_{1}^{3}$, where
${k}_{1}^{3} = 0 , 2 , 4 , 6 , 8 , 10 , 12 , 14 , 16$, or 18.

When the any 484-tone DRU includes 122 tones in the third data pilot area, indexes may be represented as:
indexes of 122 tones of the 484-tone DRU 1 in the third data pilot area are $\left[12:4:496\right] + {k}_{2}^{3}$,
indexes of 122 tones of the 484-tone DRU 2 in the third data pilot area are $\left[14:4:498\right] + {k}_{2}^{3}$,
indexes of 122 tones of the 484-tone DRU 3 in the third data pilot area are $\left[13:4:497\right] + {k}_{2}^{3}$, and
indexes of 122 tones of the 484-tone DRU 4 in the third data pilot area are $\left[15:4:499\right] + {k}_{2}^{3}$, where
${k}_{2}^{3} = 0 , 2 , 4 , 6 , 8$, or 10.

For the fourth data pilot area:
In a possible implementation, when the any 484-tone DRU includes 120 tones in the fourth data pilot area, indexes may be represented as:
indexes of 120 tones of the 484-tone DRU 1 in the fourth data pilot area are $\left[515:4:991\right] + {k}_{1}^{4}$,
indexes of 120 tones of the 484-tone DRU 2 in the fourth data pilot area are $\left[517:4:993\right] + {k}_{1}^{4}$,
indexes of 120 tones of the 484-tone DRU 3 in the fourth data pilot area are $\left[516:4:992\right] + {k}_{1}^{4}$, and
indexes of 120 tones of the 484-tone DRU 4 in the fourth data pilot area are $\left[518:4:994\right] + {k}_{1}^{4}$, where ${k}_{1}^{4} = 0 , 2 , 4 , 6 , 8 , 10 , 12 , 14 , 16$, or 18; or
when the any 484-tone DRU includes 122 tones in the fourth data pilot area, indexes may be represented as:
   indexes of 122 tones of the 484-tone DRU 1 in the fourth data pilot area are $\left[515:4:999\right] + {k}_{2}^{4}$,
   indexes of 122 tones of the 484-tone DRU 2 in the fourth data pilot area are $\left[517:4:1001\right] + {k}_{2}^{4}$,
   indexes of 122 tones of the 484-tone DRU 3 in the fourth data pilot area are $\left[516:4:1000\right] + {k}_{2}^{4}$, and
   indexes of 122 tones of the 484-tone DRU 4 in the fourth data pilot area are $\left[518:4:1002\right] + {k}_{2}^{4}$, where
   ${k}_{2}^{4} = 0 , 2 , 4 , 6 , 8$, or 10.

The following describes examples of indexes of the 484-tone DRUs.

The following describes the indexes of the 484-tone DRUs by using an example in which each shifting value is 0.

In an example, quantities of tones of any 484-tone DRU in the four data pilot areas are sequentially 120, 120, 122, and 122:
indexes of the 484-tone DRU 1 are [-1012:4:-536, -509:4:-33, 12:4:496, 515:4:999];
indexes of the 484-tone DRU 2 are [-1010:4:-534, -507:4:-31, 14:4:498, 517:4:1001];
indexes of the 484-tone DRU 3 are [-1011:4:-535, -508:4:-32, 13:4:497, 516:4:1000]; and
indexes of the 484-tone DRU 4 are [-1009:4:-533, -506:4:-30, 15:4:499, 518:4:1002].

In another example, quantities of tones of any 484-tone DRU in the four data pilot areas are sequentially 120, 122, 120, and 122:
indexes of the 484-tone DRU 1 are [-1012:4:-536, -509:4:-25, 12:4:488, 515:4:999];
indexes of the 484-tone DRU 2 are [-1010:4:-534, -507:4:-23, 14:4:490, 517:4:1001];
indexes of the 484-tone DRU 3 are [-1011:4:-535, -508:4:-24, 13:4:489, 516:4:1000]; and
indexes of the 484-tone DRU 4 are [-1009:4:-533, -506:4:-22, 15:4:491, 518:4:1002].

In still another example, quantities of tones of any 484-tone DRU in the four data pilot areas are sequentially 120, 122, 122, and 120:
indexes of the 484-tone DRU 1 are [-1012:4:-536, -509:4:-25, 12:4:496, 515:4:991];
indexes of the 484-tone DRU 2 are [-1010:4:-534, -507:4:-23, 14:4:498, 517:4:993];
indexes of the 484-tone DRU 3 are [-1011:4:-535, -508:4:-24, 13:4:497, 516:4:992]; and
indexes of the 484-tone DRU 4 are [-1009:4:-533, -506:4:-22, 15:4:499, 518:4:994].

In this embodiment of this application, other indexes of the 484-tone DRUs may be further obtained based on the foregoing content. For brevity, the other indexes are not enumerated herein.

### 2C. 242-tone DRU

A 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are distributed in the first data pilot area, the second data pilot area, the third data pilot area, and the fourth data pilot area.

The 242-tone DRU 1 to the 242-tone DRU 8 meet at least one of the following:
An index difference between adjacent tones, of any one of the 242-tone DRU 1 to the 242-tone DRU 8, distributed in the first data pilot area is 8, an index difference between adjacent tones, of the any 242-tone DRU, distributed in the second data pilot area is 8, an index difference between adjacent tones, of the any 242-tone DRU, distributed in the third data pilot area is 8, and an index difference between adjacent tones, of the any 242-tone DRU, distributed in the fourth data pilot area is 8; and
a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

For example, any 242-tone DRU includes 60 tones or 61 tones in the first data pilot area;
any 242-tone DRU includes 60 tones or 61 tones in the second data pilot area;
any 242-tone DRU includes 60 tones or 61 tones in the third data pilot area; and
any 242-tone DRU includes 60 tones or 61 tones in the fourth data pilot area.

For example, for any 242-tone DRU, a difference between an index of a last tone of the 242-tone DRU in the first data pilot area and an index of a first tone of the 242-tone DRU in the second data pilot area is an integer multiple of 8, a difference between an index of a last tone of the 242-tone DRU in the second data pilot area and an index of a first tone of the 242-tone DRU in the third data pilot area is an integer multiple of 8, and a difference between an index of a last tone of the 242-tone DRU in the third data pilot area and an index of a first tone of the 242-tone DRU in the fourth data pilot area is an integer multiple of 8.

For example, for any 242-tone DRU, 60 tones or 61 tones of the 242-tone DRU in the first data pilot area may be shifted in the first data pilot area, 60 tones or 61 tones of the 242-tone DRU in the second data pilot area may be shifted in the second data pilot area, 60 tones or 61 tones of the 242-tone DRU in the third data pilot area may be shifted in the third data pilot area, or 60 tones or 61 tones of the 242-tone DRU in the fourth data pilot area may be shifted in the fourth data pilot area.

For specific descriptions of the foregoing content in 2C, refer to the conditions 1 to 5 in 1C. Details are not described herein again.

In a possible implementation, indexes of the first data pilot area are [-1012:-515], indexes of the second data pilot area are [-509:-12], indexes of the third data pilot area are [12:509], and indexes of the fourth data pilot area are [515:1012].

For a design manner of the four data pilot areas and the 242-tone DRUs herein, refer to the descriptions in 1C. Details are not described herein again.

In this embodiment of this application, when the 242-tone DRUs are independently designed in the four data pilot areas, because index ranges of corresponding data pilot areas listed in the second tone plan are the same as those listed in the first tone plan, the 242-tone DRUs in the second tone plan may be considered to be the same as the 242-tone DRUs in the first tone plan. However, when the 242-tone DURs in the second tone plan are designed with reference to a 996-tone DRU or a 484-tone DRU, the indexes of the 242-tone DRUs in the second tone plan and the indexes of the 242-tone DRUs in the first tone plan are different.

The following describes a plurality of possibilities of the indexes of the 242-tone DRUs.

For the first data pilot area:
In a possible implementation, when the any 242-tone DRU includes 60 tones in the first data pilot area, indexes may be represented as:
indexes of 60 tones of the 242-tone DRU 1 in the first data pilot area are $\left[-1012:8:-540\right] + {p}_{1}^{1}$ ,
indexes of 60 tones of the 242-tone DRU 2 in the first data pilot area are $\left[-1008:8:-536\right] + {p}_{1}^{1}$ ,
indexes of 60 tones of the 242-tone DRU 3 in the first data pilot area are $\left[-1010:8:-538\right] + {p}_{1}^{1}$ ,
indexes of 60 tones of the 242-tone DRU 4 in the first data pilot area are $\left[-1006:8:-\right.$ $\left.534\right] + {p}_{1}^{1}$,
indexes of 60 tones of the 242-tone DRU 5 in the first data pilot area are $\left[-1011:8:-539\right] + {p}_{1}^{1}$ ,
indexes of 60 tones of the 242-tone DRU 6 in the first data pilot area are $\left[-1007:8:-535\right] + {p}_{1}^{1}$ ,
indexes of 60 tones of the 242-tone DRU 7 in the first data pilot area are $\left[-1009:8:-537\right] + {p}_{1}^{1}$ , and
indexes of 60 tones of the 242-tone DRU 8 in the first data pilot area are $\left[-1005:8:-533\right] + {p}_{1}^{1}$ , where
${p}_{1}^{1} = 0 , 2 , 4 , 8 , 10 , 12 , 14 , 16$, or 18.

When the any 242-tone DRU includes 61 tones in the first data pilot area, indexes may be represented as:
indexes of 61 tones of the 242-tone DRU 1 in the first data pilot area are $\left[-1012:8:-532\right] + {p}_{2}^{1}$ ,
indexes of 61 tones of the 242-tone DRU 2 in the first data pilot area are $\left[-1008:8:-524\right] + {p}_{2}^{1}$ ,
indexes of 61 tones of the 242-tone DRU 3 in the first data pilot area are $\left[-1010:8:-530\right] + {p}_{2}^{1}$ ,
indexes of 61 tones of the 242-tone DRU 4 in the first data pilot area are $\left[-1006:8:-526\right] + {p}_{2}^{1}$ ,
indexes of 61 tones of the 242-tone DRU 5 in the first data pilot area are $\left[-1011:8:-531\right] + {p}_{2}^{1}$ ,
indexes of 61 tones of the 242-tone DRU 6 in the first data pilot area are $\left[-1007:8:-527\right] + {p}_{2}^{1}$ ,
indexes of 61 tones of the 242-tone DRU 7 in the first data pilot area are $\left[-1009:8:-529\right] + {p}_{2}^{1}$ , and
indexes of 61 tones of the 242-tone DRU 8 in the first data pilot area are $\left[-1005:8:-525\right] + {p}_{2}^{1}$ , where
${p}_{2}^{1} = 0 , 2 , 4 , 6 , 8$, or 10.

For the second data pilot area:
When the any 242-tone DRU includes 60 tones in the second data pilot area, indexes may be represented as:
indexes of 60 tones of the 242-tone DRU 1 in the second data pilot area are $\left[-509:8:-37\right] + {p}_{1}^{2}$ ,
indexes of 60 tones of the 242-tone DRU 2 in the second data pilot area are $\left[-505:8:-33\right] + {p}_{1}^{2}$ ,
indexes of 60 tones of the 242-tone DRU 3 in the second data pilot area are $\left[-507:8:-35\right] + {p}_{1}^{2}$ ,
indexes of 60 tones of the 242-tone DRU 4 in the second data pilot area are $\left[-503:8:-31\right] + {p}_{1}^{2}$ ,
indexes of 60 tones of the 242-tone DRU 5 in the second data pilot area are $\left[-508:8:-36\right] + {p}_{1}^{2}$ ,
indexes of 60 tones of the 242-tone DRU 6 in the second data pilot area are $\left[-504:8:-32\right] + {p}_{1}^{2}$ ,
indexes of 60 tones of the 242-tone DRU 7 in the second data pilot area are $\left[-506:8:-34\right] + {p}_{1}^{2}$ , and
indexes of 60 tones of the 242-tone DRU 8 in the second data pilot area are $\left[-502:8:-30\right] + {p}_{1}^{2}$ , where
${p}_{1}^{2} = 0 , 2 , 4 , 8 , 10 , 12 , 14 , 16$, or 18.

When the any 242-tone DRU includes 61 tones in the second data pilot area, indexes may be represented as:
indexes of 61 tones of the 242-tone DRU 1 in the second data pilot area are $\left[-509:8:-29\right] + {p}_{2}^{2}$ ,
indexes of 61 tones of the 242-tone DRU 2 in the second data pilot area are $\left[-505:8:-25\right] + {p}_{2}^{2}$ ,
indexes of 61 tones of the 242-tone DRU 3 in the second data pilot area are $\left[-507:8:-27\right] + {p}_{2}^{2}$ ,
indexes of 61 tones of the 242-tone DRU 4 in the second data pilot area are $\left[-503:8:-23\right] + {p}_{2}^{2}$ ,
indexes of 61 tones of the 242-tone DRU 5 in the second data pilot area are $\left[-508:8:-28\right] + {p}_{2}^{2}$ ,
indexes of 61 tones of the 242-tone DRU 6 in the second data pilot area are $\left[-504:8:-24\right] + {p}_{2}^{2}$ ,
indexes of 61 tones of the 242-tone DRU 7 in the second data pilot area are $\left[-506:8:-26\right] + {p}_{2}^{2}$ , and
indexes of 61 tones of the 242-tone DRU 8 in the second data pilot area are $\left[-502:8:-22\right] + {p}_{2}^{2}$ , where
${p}_{2}^{2} = 0 , 2 , 4 , 6 , 8$, or 10.

For the third data pilot area:
When the any 242-tone DRU includes 60 tones in the third data pilot area, indexes may be represented as:
indexes of 60 tones of the 242-tone DRU 1 in the third data pilot area are $\left[12:8:484\right] + {p}_{1}^{3}$,
indexes of 60 tones of the 242-tone DRU 2 in the third data pilot area are $\left[16:8:488\right] + {p}_{1}^{3}$,
indexes of 60 tones of the 242-tone DRU 3 in the third data pilot area are $\left[14:8:486\right] + {p}_{1}^{3}$,
indexes of 60 tones of the 242-tone DRU 4 in the third data pilot area are $\left[18:8:490\right] + {p}_{1}^{3}$,
indexes of 60 tones of the 242-tone DRU 5 in the third data pilot area are $\left[13:8:485\right] + {p}_{1}^{3}$,
indexes of 60 tones of the 242-tone DRU 6 in the third data pilot area are $\left[17:8:489\right] + {p}_{1}^{3}$,
indexes of 60 tones of the 242-tone DRU 7 in the third data pilot area are $\left[15:8:487\right] + {p}_{1}^{3}$, and
indexes of 60 tones of the 242-tone DRU 8 in the third data pilot area are $\left[19:8:491\right] + {p}_{1}^{3}$, where
${p}_{1}^{3} = 0 , 2 , 4 , 8 , 10 , 12 , 14 , 16$, or 18.

When the any 242-tone DRU includes 61 tones in the third data pilot area, indexes may be represented as:
indexes of 61 tones of the 242-tone DRU 1 in the third data pilot area are $\left[12:8:492\right] + {p}_{2}^{3}$,
indexes of 61 tones of the 242-tone DRU 2 in the third data pilot area are $\left[16:8:496\right] + {p}_{2}^{3}$,
indexes of 61 tones of the 242-tone DRU 3 in the third data pilot area are $\left[14:8:494\right] + {p}_{2}^{3}$,
indexes of 61 tones of the 242-tone DRU 4 in the third data pilot area are $\left[18:8:498\right] + {p}_{2}^{3}$,
indexes of 61 tones of the 242-tone DRU 5 in the third data pilot area are $\left[13:8:493\right] + {p}_{2}^{3}$,
indexes of 61 tones of the 242-tone DRU 6 in the third data pilot area are $\left[17:8:497\right] + {p}_{2}^{3}$,
indexes of 61 tones of the 242-tone DRU 7 in the third data pilot area are $\left[15:8:495\right] + {p}_{2}^{3}$, and
indexes of 61 tones of the 242-tone DRU 8 in the third data pilot area are $\left[19:8:499\right] + {p}_{2}^{3}$, where
${p}_{2}^{3} = 0 , 2 , 4 , 6 , 8$, or 10.

For the fourth data pilot area:
When the any 242-tone DRU includes 60 tones in the fourth data pilot area, indexes may be represented as:
indexes of 60 tones of the 242-tone DRU 1 in the fourth data pilot area are $\left[515:8:987\right] + {p}_{1}^{4}$,
indexes of 60 tones of the 242-tone DRU 2 in the fourth data pilot area are $\left[519:8:991\right] + {p}_{1}^{4}$,
indexes of 60 tones of the 242-tone DRU 3 in the fourth data pilot area are $\left[517:8:989\right] + {p}_{1}^{4}$,
indexes of 60 tones of the 242-tone DRU 4 in the fourth data pilot area are $\left[521:8:993\right] + {p}_{1}^{4}$,
indexes of 60 tones of the 242-tone DRU 5 in the fourth data pilot area are $\left[516:8:988\right] + {p}_{1}^{4}$,
indexes of 60 tones of the 242-tone DRU 6 in the fourth data pilot area are $\left[520:8:992\right] + {p}_{1}^{4}$,
indexes of 60 tones of the 242-tone DRU 7 in the fourth data pilot area are $\left[518:8:990\right] + {p}_{1}^{4}$, and
indexes of 60 tones of the 242-tone DRU 8 in the fourth data pilot area are $\left[522:8:994\right] + {p}_{1}^{4}$, where
${p}_{1}^{4} = 0 , 2 , 4 , 6 , 8 , 10 , 12 , 14 , 16$, or 18.

When the any 242-tone DRU includes 61 tones in the fourth data pilot area, indexes may be represented as:
indexes of 61 tones of the 242-tone DRU 1 in the fourth data pilot area are $\left[515:8:995\right] + {p}_{2}^{4}$,
indexes of 61 tones of the 242-tone DRU 2 in the fourth data pilot area are $\left[519:8:999\right] + {p}_{2}^{4}$,
indexes of 61 tones of the 242-tone DRU 3 in the fourth data pilot area are $\left[517:8:997\right] + {p}_{2}^{4}$,
indexes of 61 tones of the 242-tone DRU 4 in the fourth data pilot area are $\left[521:8:1001\right] + {p}_{2}^{4}$,
indexes of 61 tones of the 242-tone DRU 5 in the fourth data pilot area are $\left[516:8:996\right] + {p}_{2}^{4}$,
indexes of 61 tones of the 242-tone DRU 6 in the fourth data pilot area are $\left[520:8:1000\right] + {p}_{2}^{4}$,
indexes of 61 tones of the 242-tone DRU 7 in the fourth data pilot area are $\left[518:8:998\right] + {p}_{2}^{4}$, and
indexes of 61 tones of the 242-tone DRU 8 in the fourth data pilot area are $\left[522:8:1002\right] + {p}_{2}^{4}$, where
${p}_{2}^{4} = 0 , 2 , 4 , 6 , 8$, or 10.

The following describes examples of indexes of each 242-tone DRU.

The following describes the indexes of the 242-tone DRUs by using an example in which each shifting value is 0.

Quantities of tones of any 242-tone DRU in the four data pilot areas are sequentially 60, 60, 61, and 61:
indexes of the 242-tone DRU 1 are [-1012:8:-540, -509:8:-37, 12:8:492, 515:8:995];
indexes of the 242-tone DRU 2 are [-1008:8:-536, -505:8:-33, 16:8:496, 519:8:999];
indexes of the 242-tone DRU 3 are [-1010:8:-538, -507:8:-35, 14:8:494, 517:8:997];
indexes of the 242-tone DRU 4 are [-1006:8:-534, -503:8:-31, 18:8:498, 521:8:1001];
indexes of the 242-tone DRU 5 are [-1011:8:-539, -508:8:-36, 13:8:493, 516:8:996];
indexes of the 242-tone DRU 6 are [-1007:8:-535, -504:8:-32, 17:8:497, 520:8:1000];
indexes of the 242-tone DRU 7 are [-1009:8:-537, -506:8:-34, 15:8:495, 518:8:998]; and
indexes of the 242-tone DRU 8 are [-1005:8:-533, -502:8:-30, 19:8:499, 522:8:1002].

The quantities of tones of any 242-tone DRU in the four data pilot areas are sequentially 60, 61, 60, and 61:
indexes of the 242-tone DRU 1 are [-1012:8:-540, -509:8:-29, 12:8:484, 515:8:995];
indexes of the 242-tone DRU 2 are [-1008:8:-536, -505:8:-25, 16:8:488, 519:8:999];
indexes of the 242-tone DRU 3 are [-1010:8:-538, -507:8:-27, 14:8:486, 517:8:997];
indexes of the 242-tone DRU 4 are [-1006:8:-534, -503:8:-23, 18:8:490, 521:8:1001];
indexes of the 242-tone DRU 5 are [-1011:8:-539, -508:8:-28, 13:8:485, 516:8:996];
indexes of the 242-tone DRU 6 are [-1007:8:-535, -504:8:-24, 17:8:489, 520:8:1000];
indexes of the 242-tone DRU 7 are [-1009:8:-537, -506:8:-26, 15:8:487, 518:8:998]; and
indexes of the 242-tone DRU 8 are [-1005:8:-533, -502:8:-22, 19:8:491, 522:8:1002].

The quantities of tones of any 242-tone DRU in the four data pilot areas are sequentially 60, 61, 61, and 60:
indexes of the 242-tone DRU 1 are [-1012:8:-540, -509:8:-29, 12:8:492, 515:8:987];
indexes of the 242-tone DRU 2 are [-1008:8:-536, -505:8:-25, 16:8:496, 519:8:991];
indexes of the 242-tone DRU 3 are [-1010:8:-538, -507:8:-27, 14:8:494, 517:8:989];
indexes of the 242-tone DRU 4 are [-1006:8:-534, -503:8:-23, 18:8:498, 521:8:993];
indexes of the 242-tone DRU 5 are [-1011:8:-539, -508:8:-28, 13:8:493, 516:8:988];
indexes of the 242-tone DRU 6 are [-1007:8:-535, -504:8:-24, 17:8:497, 520:8:992];
indexes of the 242-tone DRU 7 are [-1009:8:-537, -506:8:-26, 15:8:495, 518:8:990]; and
indexes of the 242-tone DRU 8 are [-1005:8:-533, -502:8:-22, 19:8:499, 522:8:994].

In this embodiment of this application, other indexes of the 242-tone DRUs may be further obtained based on the foregoing content. For brevity, the other indexes are not enumerated herein.

When a 242-tone DRU is obtained based on a 484-tone DRU, for example, odd-numbered tones of each 484-tone DRU in 3B may form one 242-tone DRU, and even-numbered tones of the 484-tone DRU may form another 242-tone DRU. For a relationship between the 242-tone DRU and the 484-tone DRU herein, refer to the descriptions in 1C. Details are not described herein again.

### 2D. 106-tone DRU

A 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area, the second data pilot area, the third data pilot area, and the fourth data pilot area.

The 106-tone DRU 1 to the 106-tone DRU 16 meet at least one of the following:
An index difference between adjacent tones, of any one of the 106-tone DRU 1 to the 106-tone DRU 16, distributed in the first data pilot area is 16, an index difference between adjacent tones, of the any 106-tone DRU, distributed in the second data pilot area is 16, an index difference between adjacent tones, of the any 106-tone DRU, distributed in the third data pilot area is 8, and an index difference between adjacent tones, of the any 106-tone DRU, distributed in the fourth data pilot area is 16; and
a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous.

For example, any 106-tone DRU includes 26 tones or 27 tones in the first data pilot area;
any 106-tone DRU includes 26 tones or 27 tones in the second data pilot area;
any 106-tone DRU includes 26 tones or 27 tones in the third data pilot area; and
any 106-tone DRU includes 26 tones or 27 tones in the fourth data pilot area.

For example, for any 106-tone DRU, a difference between an index of a last tone of the 106-tone DRU in the first data pilot area and an index of a first tone of the 106-tone DRU in the second data pilot area is an integer multiple of 16, a difference between an index of a last tone of the 106-tone DRU in the second data pilot area and an index of the first tone of the 106-tone DRU in the third data pilot area is an integer multiple of 16, and a difference between an index of a last tone of the 106-tone DRU in the third data pilot area and an index of a first tone of the 106-tone DRU in the fourth data pilot area is an integer multiple of 16.

For example, for any 106-tone DRU, 26 tones or 27 tones of the 106-tone DRU in the first data pilot area may be shifted in the first data pilot area, 26 tones or 27 tones of the 106-tone DRU in the second data pilot area may be shifted in the second data pilot area, 26 tones or 27 tones of the 106-tone DRU in the third data pilot area may be shifted in the third data pilot area, or 26 tones or 27 tones of the 106-tone DRU in the fourth data pilot area may be shifted in the fourth data pilot area.

For specific descriptions of the foregoing content in 2D, refer to the conditions 1 to 5 in 1D. Details are not described herein again.

In a possible implementation, indexes of the first data pilot area are [-1012:-515], indexes of the second data pilot area are [-509:-12], indexes of the third data pilot area are [12:509], and indexes of the fourth data pilot area are [515:1012].

For a design manner of the four data pilot areas and the 242-tone DRUs, refer to the descriptions in 1D. Details are not described herein again.

In this embodiment of this application, when the 106-tone DRUs are independently designed in the four data pilot areas, because index ranges of corresponding data pilot areas listed in the second tone plan are the same as those listed in the first tone plan, the 106-tone DRUs in the second tone plan may be considered to be the same as the 106-tone DRUs in the first tone plan. However, when the 106-tone DURs in the second tone plan are designed with reference to a 996-tone DRU, a 484-tone DRU, or a 242-tone DRU, indexes of the 106-tone DRUs in the second tone plan and indexes of the 106-tone DRUs in the first tone plan are different.

The following describes a plurality of possibilities of indexes of the 106-tone DRUs.

For the first data pilot area:
In a possible implementation, when the any 106-tone DRU includes 26 tones in the first data pilot area, indexes may be represented as:
indexes of 26 tones of the 106-tone DRU 1 in the first data pilot area are $\left[-1012:16:-612\right] + {q}_{1}^{1}$ ,
indexes of 26 tones of the 106-tone DRU 2 in the first data pilot area are $\left[-1004:16:-604\right] + {q}_{1}^{1}$ ,
indexes of 26 tones of the 106-tone DRU 3 in the first data pilot area are $\left[-1008:16:-608\right] + {q}_{1}^{1}$ ,
indexes of 26 tones of the 106-tone DRU 4 in the first data pilot area are $\left[-1000:16:-600\right] + {q}_{1}^{1}$ ,
indexes of 26 tones of the 106-tone DRU 5 in the first data pilot area are $\left[-1010:16:-610\right] + {q}_{1}^{1}$ ,
indexes of 26 tones of the 106-tone DRU 6 in the first data pilot area are $\left[-1002:16:-602\right] + {q}_{1}^{1}$ ,
indexes of 26 tones of the 106-tone DRU 7 in the first data pilot area are $\left[-1006:16:-606\right] + {q}_{1}^{1}$ ,
indexes of 26 tones of the 106-tone DRU 8 in the first data pilot area are $\left[-998:16:-598\right] + {q}_{1}^{1}$ ,
indexes of 26 tones of the 106-tone DRU 9 in the first data pilot area are $\left[-1011:16:-611\right] + {q}_{1}^{1}$ ,
indexes of 26 tones of the 106-tone DRU 10 in the first data pilot area are $\left[-1003:16:-603\right] + {q}_{1}^{1}$ ,
indexes of 26 tones of the 106-tone DRU 11 in the first data pilot area are $\left[-1007:16:-607\right] + {q}_{1}^{1}$ ,
indexes of 26 tones of the 106-tone DRU 12 in the first data pilot area are $\left[-999:16:-599\right] + {q}_{1}^{1}$ ,
indexes of 26 tones of the 106-tone DRU 13 in the first data pilot area are $\left[-1009:16:-609\right] + {q}_{1}^{1}$ ,
indexes of 26 tones of the 106-tone DRU 14 in the first data pilot area are $\left[-1001:16:-601\right] + {q}_{1}^{1}$ ,
indexes of 26 tones of the 106-tone DRU 15 in the first data pilot area are $\left[-1005:16:-605\right] + {q}_{1}^{1}$ , and
indexes of 26 tones of the 106-tone DRU 16 in the first data pilot area are $\left[-997:16:-597\right] + {q}_{1}^{1}$ .

When the any 106-tone DRU includes 27 tones in the first data pilot area, indexes may be represented as:
indexes of 26 tones of the 106-tone DRU 1 in the first data pilot area are $\left[-1012:16:-596\right] + {q}_{2}^{1}$ ,
indexes of 26 tones of the 106-tone DRU 2 in the first data pilot area are $\left[-1004:16:-588\right] + {q}_{2}^{1}$ ,
indexes of 26 tones of the 106-tone DRU 3 in the first data pilot area are $\left[-1008:16:-592\right] + {q}_{2}^{1}$ ,
indexes of 26 tones of the 106-tone DRU 4 in the first data pilot area are $\left[-1000:16:-584\right] + {q}_{2}^{1}$ ,
indexes of 26 tones of the 106-tone DRU 5 in the first data pilot area are $\left[-1010:16:-594\right] + {q}_{2}^{1}$ ,
indexes of 26 tones of the 106-tone DRU 6 in the first data pilot area are $\left[-1002:16:-586\right] + {q}_{2}^{1}$ ,
indexes of 26 tones of the 106-tone DRU 7 in the first data pilot area are $\left[-1006:16:-590\right] + {q}_{2}^{1}$ ,
indexes of 26 tones of the 106-tone DRU 8 in the first data pilot area are $\left[-998:16:-592\right] + {q}_{2}^{1}$ ,
indexes of 26 tones of the 106-tone DRU 9 in the first data pilot area are $\left[-1011:16:-595\right] + {q}_{2}^{1}$ ,
indexes of 26 tones of the 106-tone DRU 10 in the first data pilot area are $\left[-1003:16:-587\right] + {q}_{2}^{1}$ ,
indexes of 26 tones of the 106-tone DRU 11 in the first data pilot area are $\left[-1007:16:-591\right] + {q}_{2}^{1}$ ,
indexes of 26 tones of the 106-tone DRU 12 in the first data pilot area are $\left[-999:16:-583\right] + {q}_{2}^{1}$ ,
indexes of 26 tones of the 106-tone DRU 13 in the first data pilot area are $\left[-1009:16:-593\right] + {q}_{2}^{1}$ ,
indexes of 26 tones of the 106-tone DRU 14 in the first data pilot area are $\left[-1001:16:-585\right] + {q}_{2}^{1}$ ,
indexes of 26 tones of the 106-tone DRU 15 in the first data pilot area are $\left[-1005:16:-589\right] + {q}_{2}^{1}$ , and
indexes of 26 tones of the 106-tone DRU 16 in the first data pilot area are $\left[-997:16:-581\right] + {q}_{2}^{1}$ .

For the second data pilot area:
When the any 106-tone DRU includes 26 tones in the second data pilot area, indexes may be represented as:
indexes of 26 tones of the 106-tone DRU 1 in the second data pilot area are $\left[-509:16:-109\right] + {q}_{1}^{2}$ ,
indexes of 26 tones of the 106-tone DRU 2 in the second data pilot area are $\left[-501:16:-101\right] + {q}_{1}^{2}$ ,
indexes of 26 tones of the 106-tone DRU 3 in the second data pilot area are $\left[-505:16:-105\right] + {q}_{1}^{2}$ ,
indexes of 26 tones of the 106-tone DRU 4 in the second data pilot area are $\left[-497:16:-97\right] + {q}_{1}^{2}$ ,
indexes of 26 tones of the 106-tone DRU 5 in the second data pilot area are $\left[-507:16:-107\right] + {q}_{1}^{2}$ ,
indexes of 26 tones of the 106-tone DRU 6 in the second data pilot area are $\left[-499:16:-99\right] + {q}_{1}^{2}$ ,
indexes of 26 tones of the 106-tone DRU 7 in the second data pilot area are $\left[-503:16:-103\right] + {q}_{1}^{2}$ ,
indexes of 26 tones of the 106-tone DRU 8 in the second data pilot area are $\left[-495:16:-95\right] + {q}_{1}^{2}$ ,
indexes of 26 tones of the 106-tone DRU 9 in the second data pilot area are $\left[-508:16:-108\right] + {q}_{1}^{2}$ ,
indexes of 26 tones of the 106-tone DRU 10 in the second data pilot area are $\left[-500:16:-100\right] + {q}_{1}^{2}$ ,
indexes of 26 tones of the 106-tone DRU 11 in the second data pilot area are $\left[-504:16:-104\right] + {q}_{1}^{2}$ ,
indexes of 26 tones of the 106-tone DRU 12 in the second data pilot area are $\left[-496:16:-96\right] + {q}_{1}^{2}$ ,
indexes of 26 tones of the 106-tone DRU 13 in the second data pilot area are $\left[-506:16:-106\right] + {q}_{1}^{2}$ ,
indexes of 26 tones of the 106-tone DRU 14 in the second data pilot area are $\left[-498:16:-98\right] + {q}_{1}^{2}$ ,
indexes of 26 tones of the 106-tone DRU 15 in the second data pilot area are $\left[-502:16:-102\right] + {q}_{1}^{2}$ , and
indexes of 26 tones of the 106-tone DRU 16 in the second data pilot area are $\left[-494:16:-94\right] + {q}_{1}^{2}$ .

When the any 106-tone DRU includes 27 tones in the second data pilot area, indexes may be represented as:
indexes of 27 tones of the 106-tone DRU 1 in the second data pilot area are $\left[-509:16:-93\right] + {q}_{2}^{2}$ ,
indexes of 27 tones of the 106-tone DRU 2 in the second data pilot area are $\left[-501:16:-85\right] + {q}_{2}^{2}$ ,
indexes of 27 tones of the 106-tone DRU 3 in the second data pilot area are $\left[-505:16:-89\right] + {q}_{2}^{2}$ ,
indexes of 27 tones of the 106-tone DRU 4 in the second data pilot area are $\left[-497:16:-81\right] + {q}_{2}^{2}$ ,
indexes of 27 tones of the 106-tone DRU 5 in the second data pilot area are $\left[-507:16:-91\right] + {q}_{2}^{2}$ ,
indexes of 27 tones of the 106-tone DRU 6 in the second data pilot area are $\left[-499:16:-83\right] + {q}_{2}^{2}$ ,
indexes of 27 tones of the 106-tone DRU 7 in the second data pilot area are $\left[-503:16:-87\right] + {q}_{2}^{2}$ ,
indexes of 27 tones of the 106-tone DRU 8 in the second data pilot area are $\left[-495:16:-79\right] + {q}_{2}^{2}$ ,
indexes of 27 tones of the 106-tone DRU 9 in the second data pilot area are $\left[-508:16:-92\right] + {q}_{2}^{2}$ ,
indexes of 27 tones of the 106-tone DRU 10 in the second data pilot area are $\left[-500:16:-84\right] + {q}_{2}^{2}$ ,
indexes of 27 tones of the 106-tone DRU 11 in the second data pilot area are $\left[-504:16:-88\right] + {q}_{2}^{2}$ ,
indexes of 27 tones of the 106-tone DRU 12 in the second data pilot area are $\left[-496:16:-80\right] + {q}_{2}^{2}$ ,
indexes of 27 tones of the 106-tone DRU 13 in the second data pilot area are $\left[-506:16:-90\right] + {q}_{2}^{2}$ ,
indexes of 27 tones of the 106-tone DRU 14 in the second data pilot area are $\left[-498:16:-82\right] + {q}_{2}^{2}$ ,
indexes of 27 tones of the 106-tone DRU 15 in the second data pilot area are $\left[-502:16:-86\right] + {q}_{2}^{2}$ , and
indexes of 27 tones of the 106-tone DRU 16 in the second data pilot area are $\left[-494:16:-78\right] + {q}_{2}^{2}$ .

For the third data pilot area:
When the any 106-tone DRU includes 26 tones in the third data pilot area, indexes may be represented as:
indexes of 26 tones of the 106-tone DRU 1 in the third data pilot area are $\left[12:16:412\right] + {q}_{1}^{3}$,
indexes of 26 tones of the 106-tone DRU 2 in the third data pilot area are $\left[20:16:420\right] + {q}_{1}^{3}$,
indexes of 26 tones of the 106-tone DRU 3 in the third data pilot area are $\left[16:16:416\right] + {q}_{1}^{3}$,
indexes of 26 tones of the 106-tone DRU 4 in the third data pilot area are $\left[24:16:424\right] + {q}_{1}^{3}$,
indexes of 26 tones of the 106-tone DRU 5 in the third data pilot area are $\left[14:16:414\right] + {q}_{1}^{3}$,
indexes of 26 tones of the 106-tone DRU 6 in the third data pilot area are $\left[22:16:422\right] + {q}_{1}^{3}$,
indexes of 26 tones of the 106-tone DRU 7 in the third data pilot area are $\left[18:16:418\right] + {q}_{1}^{3}$,
indexes of 26 tones of the 106-tone DRU 8 in the third data pilot area are $\left[26:16:426\right] + {q}_{1}^{3}$,
indexes of 26 tones of the 106-tone DRU 9 in the third data pilot area are $\left[13:16:413\right] + {q}_{1}^{3}$,
indexes of 26 tones of the 106-tone DRU 10 in the third data pilot area are $\left[21:16:421\right] + {q}_{1}^{3}$,
indexes of 26 tones of the 106-tone DRU 11 in the third data pilot area are $\left[17:16:417\right] + {q}_{1}^{3}$,
indexes of 26 tones of the 106-tone DRU 12 in the third data pilot area are $\left[25:16:425\right] + {q}_{1}^{3}$,
indexes of 26 tones of the 106-tone DRU 13 in the third data pilot area are $\left[15:16:415\right] + {q}_{1}^{3}$,
indexes of 26 tones of the 106-tone DRU 14 in the third data pilot area are $\left[23:16:423\right] + {q}_{1}^{3}$,
indexes of 26 tones of the 106-tone DRU 15 in the third data pilot area are $\left[19:16:419\right] + {q}_{1}^{3}$, and
indexes of 26 tones of the 106-tone DRU 16 in the third data pilot area are $\left[27:16:427\right] + {q}_{1}^{3}$.

When the any 106-tone DRU includes 27 tones in the third data pilot area, indexes may be represented as:
indexes of 27 tones of the 106-tone DRU 1 in the third data pilot area are $\left[12:16:428\right] + {q}_{1}^{3}$,
indexes of 27 tones of the 106-tone DRU 2 in the third data pilot area are $\left[20:16:436\right] + {q}_{1}^{3}$,
indexes of 27 tones of the 106-tone DRU 3 in the third data pilot area are $\left[16:16:432\right] + {q}_{1}^{3}$,
indexes of 27 tones of the 106-tone DRU 4 in the third data pilot area are $\left[24:16:440\right] + {q}_{1}^{3}$,
indexes of 27 tones of the 106-tone DRU 5 in the third data pilot area are $\left[14:16:430\right] + {q}_{1}^{3}$,
indexes of 27 tones of the 106-tone DRU 6 in the third data pilot area are $\left[22:16:438\right] + {q}_{1}^{3}$,
indexes of 27 tones of the 106-tone DRU 7 in the third data pilot area are $\left[18:16:434\right] + {q}_{1}^{3}$,
indexes of 27 tones of the 106-tone DRU 8 in the third data pilot area are $\left[26:16:442\right] + {q}_{1}^{3}$,
indexes of 27 tones of the 106-tone DRU 9 in the third data pilot area are $\left[13:16:429\right] + {q}_{1}^{3}$,
indexes of 27 tones of the 106-tone DRU 10 in the third data pilot area are $\left[21:16:437\right] + {q}_{1}^{3}$,
indexes of 27 tones of the 106-tone DRU 11 in the third data pilot area are $\left[17:16:433\right] + {q}_{1}^{3}$,
indexes of 27 tones of the 106-tone DRU 12 in the third data pilot area are $\left[25:16:441\right] + {q}_{1}^{3}$,
indexes of 27 tones of the 106-tone DRU 13 in the third data pilot area are $\left[15:16:431\right] + {q}_{1}^{3}$,
indexes of 27 tones of the 106-tone DRU 14 in the third data pilot area are $\left[23:16:439\right] + {q}_{1}^{3}$,
indexes of 27 tones of the 106-tone DRU 15 in the third data pilot area are $\left[19:16:435\right] + {q}_{1}^{3}$, and
indexes of 27 tones of the 106-tone DRU 16 in the third data pilot area are $\left[27:16:443\right] + {q}_{1}^{3}$.

For the fourth data pilot area:
When the any 106-tone DRU includes 26 tones in the fourth data pilot area, indexes may be represented as:
indexes of 26 tones of the 106-tone DRU 1 in the fourth data pilot area are $\left[515:16:915\right] + {q}_{1}^{4}$,
indexes of 26 tones of the 106-tone DRU 2 in the fourth data pilot area are $\left[523:16:923\right] + {q}_{1}^{4}$,
indexes of 26 tones of the 106-tone DRU 3 in the fourth data pilot area are $\left[519:16:919\right] + {q}_{1}^{4}$,
indexes of 26 tones of the 106-tone DRU 4 in the fourth data pilot area are $\left[527:16:927\right] + {q}_{1}^{4}$,
indexes of 26 tones of the 106-tone DRU 5 in the fourth data pilot area are $\left[517:16:917\right] + {q}_{1}^{4}$,
indexes of 26 tones of the 106-tone DRU 6 in the fourth data pilot area are $\left[525:16:925\right] + {q}_{1}^{4}$,
indexes of 26 tones of the 106-tone DRU 7 in the fourth data pilot area are $\left[521:16:921\right] + {q}_{1}^{4}$,
indexes of 26 tones of the 106-tone DRU 8 in the fourth data pilot area are $\left[529:16:929\right] + {q}_{1}^{4}$,
indexes of 26 tones of the 106-tone DRU 9 in the fourth data pilot area are $\left[516:16:916\right] + {q}_{1}^{4}$,
indexes of 26 tones of the 106-tone DRU 10 in the fourth data pilot area are $\left[524:16:924\right] + {q}_{1}^{4}$,
indexes of 26 tones of the 106-tone DRU 11 in the fourth data pilot area are $\left[520:16:920\right] + {q}_{1}^{4}$,
indexes of 26 tones of the 106-tone DRU 12 in the fourth data pilot area are $\left[528:16:928\right] + {q}_{1}^{4}$,
indexes of 26 tones of the 106-tone DRU 13 in the fourth data pilot area are $\left[518:16:918\right] + {q}_{1}^{4}$,
indexes of 26 tones of the 106-tone DRU 14 in the fourth data pilot area are $\left[526:16:926\right] + {q}_{1}^{4}$,
indexes of 26 tones of the 106-tone DRU 15 in the fourth data pilot area are $\left[522:16:922\right] + {q}_{1}^{4}$, and
indexes of 26 tones of the 106-tone DRU 16 in the fourth data pilot area are $\left[530:16:930\right] + {q}_{1}^{4}$.

When the any 106-tone DRU includes 27 tones in the fourth data pilot area, indexes may be represented as:
indexes of 27 tones of the 106-tone DRU 1 in the fourth data pilot area are $\left[515:16:931\right] + {q}_{2}^{4}$,
indexes of 27 tones of the 106-tone DRU 2 in the fourth data pilot area are $\left[523:16:939\right] + {q}_{2}^{4}$,
indexes of 27 tones of the 106-tone DRU 3 in the fourth data pilot area are $\left[519:16:935\right] + {q}_{2}^{4}$,
indexes of 27 tones of the 106-tone DRU 4 in the fourth data pilot area are $\left[527:16:943\right] + {q}_{2}^{4}$,
indexes of 27 tones of the 106-tone DRU 5 in the fourth data pilot area are $\left[517:16:933\right] + {q}_{2}^{4}$,
indexes of 27 tones of the 106-tone DRU 6 in the fourth data pilot area are $\left[525:16:941\right] + {q}_{2}^{4}$,
indexes of 27 tones of the 106-tone DRU 7 in the fourth data pilot area are $\left[521:16:937\right] + {q}_{2}^{4}$,
indexes of 27 tones of the 106-tone DRU 8 in the fourth data pilot area are $\left[529:16:945\right] + {q}_{2}^{4}$,
indexes of 27 tones of the 106-tone DRU 9 in the fourth data pilot area are $\left[516:16:932\right] + {q}_{2}^{4}$,
indexes of 27 tones of the 106-tone DRU 10 in the fourth data pilot area are $\left[524:16:940\right] + {q}_{2}^{4}$,
indexes of 27 tones of the 106-tone DRU 11 in the fourth data pilot area are $\left[520:16:936\right] + {q}_{2}^{4}$,
indexes of 27 tones of the 106-tone DRU 12 in the fourth data pilot area are $\left[528:16:944\right] + {q}_{2}^{4}$,
indexes of 27 tones of the 106-tone DRU 13 in the fourth data pilot area are $\left[518:16:934\right] + {q}_{2}^{4}$,
indexes of 27 tones of the 106-tone DRU 14 in the fourth data pilot area are $\left[526:16:942\right] + {q}_{2}^{4}$,
indexes of 27 tones of the 106-tone DRU 15 in the fourth data pilot area are $\left[522:16:938\right] + {q}_{2}^{4}$, and
indexes of 27 tones of the 106-tone DRU 16 in the fourth data pilot area are $\left[530:16:946\right] + {q}_{2}^{4}$.

The following describes indexes of the 242-tone DRUs by using an example in which each shifting value is 0.

Quantities of tones of any 106-tone DRU in the four data pilot areas are sequentially 26, 26, 27, and 27:
indexes of the 106-tone DRU 1 are [-1012:16:-612, -509:16:-109, 12:16:428, 515:16:931];
indexes of the 106-tone DRU 2 are [-1004:16:-604, -501:16:-101, 20:16:436, 523:16:939];
indexes of the 106-tone DRU 3 are [-1008:16:-608, -505:16:-105, 16:16:432, 519:16:935];
indexes of the 106-tone DRU 4 are [-1000:16:-600, -497:16:-97, 24:16:440, 527:16:943];
indexes of the 106-tone DRU 5 are [-1010:16:-610, -507:16:-107, 14:16:430, 517:16:933];
indexes of the 106-tone DRU 6 are [-1002:16:-602, -499:16:-99, 22:16:438, 525:16:941];
indexes of the 106-tone DRU 7 are [-1006:16:-606, -503:16:-103, 18:16:434, 521:16:937];
indexes of the 106-tone DRU 8 are [-998:16:-598, -495:16:-95, 26:16:442, 529:16:945];
indexes of the 106-tone DRU 9 are [-1011:16:-611, -508:16:-108, 13:16:429, 516:16:932];
indexes of the 106-tone DRU 10 are [-1003:16:-603, -500:16:-100, 21:16:437, 524:16:940];
indexes of the 106-tone DRU 11 are [-1007:16:-607, -504:16:-104, 17:16:433, 520:16:936];
indexes of the 106-tone DRU 12 are [-999:16:-599, -496:16:-96, 25:16:441, 528:16:944];
indexes of the 106-tone DRU 13 are [-1009:16:-609, -506:16:-106, 15:16:431, 518:16:934];
indexes of the 106-tone DRU 14 are [-1001:16:-601, -498:16:-98, 23:16:439, 526:16:942];
indexes of the 106-tone DRU 15 are [-1005:16:-605, -502:16:-102, 19:16:435, 522:16:938]; and
indexes of the 106-tone DRU 16 are [-997:16:-597, -494:16:-94, 27:16:443, 530:16:946].

The quantities of tones of any 242-tone DRU in the four data pilot areas are sequentially 26, 27, 26, and 27:
indexes of the 106-tone DRU 1 are [-1012:16:-612, -509:16:-93, 12:16:412, 515:16:931];
indexes of the 106-tone DRU 2 are [-1004:16:-604, -501:16:-85, 20:16:420, 523:16:939];
indexes of the 106-tone DRU 3 are [-1008:16:-608, -505:16:-89, 16:16:416, 519:16:935];
indexes of the 106-tone DRU 4 are [-1000:16:-600, -497:16:-81, 24:16:424, 527:16:943];
indexes of the 106-tone DRU 5 are [-1010:16:-610, -507:16:-91, 14:16:414, 517:16:933];
indexes of the 106-tone DRU 6 are [-1002:16:-602, -499:16:-83, 22:16:422, 525:16:941];
indexes of the 106-tone DRU 7 are [-1006:16:-606, -503:16:-87, 18:16:418, 521:16:937];
indexes of the 106-tone DRU 8 are [-998:16:-598, -495:16:-79, 26:16:426, 529:16:945];
indexes of the 106-tone DRU 9 are [-1011:16:-611, -508:16:-92, 13:16:413, 516:16:932];
indexes of the 106-tone DRU 10 are [-1003:16:-603, -500:16:-84, 21:16:421, 524:16:940];
indexes of the 106-tone DRU 11 are [-1007:16:-607, -504:16:-88, 17:16:417, 520:16:936];
indexes of the 106-tone DRU 12 are [-999:16:-599, -496:16:-80, 25:16:425, 528:16:944];
indexes of the 106-tone DRU 13 are [-1009:16:-609, -506:16:-90, 15:16:415, 518:16:934];
indexes of the 106-tone DRU 14 are [-1001:16:-601, -498:16:-82, 23:16:423, 526:16:942];
indexes of the 106-tone DRU 15 are [-1005:16:-605, -502:16:-86, 19:16:419, 522:16:938]; and
indexes of the 106-tone DRU 16 are [-997:16:-597, -494:16:-78, 27:16:427, 530:16:946].

The quantities of tones of any 242-tone DRU in the four data pilot areas are sequentially 26, 27, 27, and 26:
indexes of the 106-tone DRU 1 are [-1012:16:-612, -509:16:-93, 12:16:428, 515:16:915];
indexes of the 106-tone DRU 2 are [-1004:16:-604, -501:16:-85, 20:16:436, 523:16:923];
indexes of the 106-tone DRU 3 are [-1008:16:-608, -505:16:-89, 16:16:432, 519:16:919];
indexes of the 106-tone DRU 4 are [-1000:16:-600, -497:16:-81, 24:16:440, 527:16:927];
indexes of the 106-tone DRU 5 are [-1010:16:-610, -507:16:-91, 14:16:430, 517:16:917];
indexes of the 106-tone DRU 6 are [-1002:16:-602, -499:16:-83, 22:16:438, 525:16:925];
indexes of the 106-tone DRU 7 are [-1006:16:-606, -503:16:-87, 18:16:434, 521:16:921];
indexes of the 106-tone DRU 8 are [-998:16:-598, -495:16:-79, 26:16:442, 529:16:929];
indexes of the 106-tone DRU 9 are [-1011:16:-611, -508:16:-92, 13:16:429, 516:16:916];
indexes of the 106-tone DRU 10 are [-1003:16:-603, -500:16:-84, 21:16:437, 524:16:924];
indexes of the 106-tone DRU 11 are [-1007:16:-607, -504:16:-88, 17:16:433, 520:16:920];
indexes of the 106-tone DRU 12 are [-999:16:-599, -496:16:-80, 25:16:441, 528:16:928];
indexes of the 106-tone DRU 13 are [-1009:16:-609, -506:16:-90, 15:16:431, 518:16:918];
indexes of the 106-tone DRU 14 are [-1001:16:-601, -498:16:-82, 23:16:439, 526:16:926];
indexes of the 106-tone DRU 15 are [-1005:16:-605, -502:16:-86, 19:16:435, 522:16:922]; and
indexes of the 106-tone DRU 16 are [-997:16:-597, -494:16:-78, 27:16:443, 530:16:930].

For example, with reference to 2A to 2D, the tone plan corresponding to 160 MHz may include:
two 996-tone DRUs (for indexes of the two 996-tone DRUs, refer to the indexes shown in 2A);
four 484-tone DRUs (for indexes of the four 484-tone DRUs, refer to the indexes shown in 2B);
eight 242-tone DRUs (for indexes of the eight 242-tone DRUs, refer to the indexes shown in 2C); and
sixteen 106-tone DRUs (for indexes of the sixteen 106-tone DRUs, refer to the indexes shown in 2D).

The indexes of the DRUs are not enumerated herein.

For the first tone plan and the second tone plan shown above, areas obtained through division in the tone plans corresponding to the first bandwidth are the same, as shown in FIG. 5a. In a possible implementation, indexes of corresponding areas in the first tone plan and the second tone plan are the same. To be specific, indexes of the first guard area in the first tone plan are the same as indexes of the first guard area in the second tone plan, indexes of the first data pilot area in the first tone plan are the same as indexes of the first data pilot area in the second tone plan, and so on. This is not enumerated herein. In a possible implementation, indexes of 996-tone DRUs in the first tone plan and indexes of 996-tone DRUs in the second tone plan are different. For example, indexes of 484-tone DRUs designed based on the 996-tone DRU are also different. Similarly, indexes of 242-tone DRUs designed based on the 996-tone DRU or the 484-tone DRU are also different. Similarly, indexes of 106-tone DRUs designed based on the 996-tone DRU, the 484-tone DRU, or the 242-tone DRU are also different.

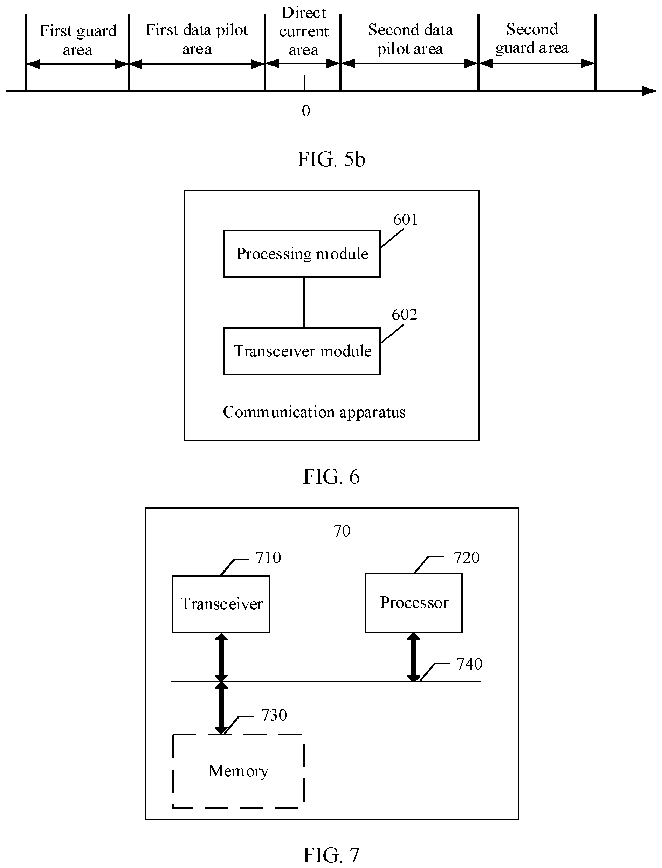

For the third tone plan and the fourth tone plan shown below, areas obtained through division in the tone plans corresponding to the first bandwidth are the same, as shown in FIG. 5b. In a possible implementation, indexes of direct current areas in the third tone plan and the fourth tone plan are different, indexes of first data pilot areas are different, and indexes of second data pilot areas are different. In a possible implementation, indexes of 996-tone DRUs designed based on the first data pilot area and the second data pilot area are different. Details are described below.

### Third tone plan:

In a possible implementation, a tone plan corresponding to a first bandwidth includes a first guard area, a first data pilot area, a direct current area, a second data pilot area, and a second guard area.

For example, tones in the first guard area and the second guard area may be guard tones. Generally, a tone in the direct current area may be a direct current tone. However, this is not limited in this application. The first data pilot area and the second data pilot area may include data tones and pilot tones. Optionally, the first data pilot area may include a null tone. Optionally, the second data pilot area may include a null tone. Names of the foregoing areas are merely examples, and are not limited in this application.

The first data pilot area is located between the first guard area and the direct current area, and the second data pilot area is located between the direct current area and the second guard area. FIG. 5b is another diagram of area division according to an embodiment of this application. FIG. 5b shows an example of frequency domain locations of the foregoing areas.

In this embodiment of this application, DRUs of different sizes are designed in the first data pilot area and the second data pilot area. For example, in the two data pilot areas, in this embodiment of this application, two 996-tone DRUs (for example, a 996-tone DRU 1 and a 996-tone DRU 2), four 484-tone DRUs (for example, a 484-tone DRU 1, a 484-tone DRU 2, a 484-tone DRU 3, and a 484-tone DRU 4), eight 242-tone DRUs (for example, a 242-tone DRU 1 to a 242-tone DRU 8), and sixteen 106-tone DRUs (for example, a 106-tone DRU 1 to a 106-tone DRU 16) are separately designed. DRUs of different sizes may be separate embodiments, or DRUs of different sizes may be combined into one embodiment. This is not limited in this application. The details are as follows.

### 3A. 996-tone DRU

The 996-tone DRU 1 is distributed in the first data pilot area and the second data pilot area. The 996-tone DRU 2 is distributed in the first data pilot area and the second data pilot area.

The 996-tone DRU 1 or the 996-tone DRU 2 may meet at least one of the following conditions.

Condition 1: An index difference between adjacent tones, of the 996-tone DRU 1 or the 996-tone DRU 2, distributed in the first data pilot area is 2, and an index difference between adjacent tones, of the 996-tone DRU 1 or the 996-tone DRU 2, distributed in the second data pilot area is 2.

In other words, for the 996-tone DRU 1 or the 996-tone DRU 2, an index difference between adjacent tones of the DRU distributed in each data pilot area is 2. For descriptions of adjacent tones, refer to descriptions in the first tone plan. Details are not described herein again.

In this embodiment of this application, the 996-tone DRU may achieve a higher power amplification factor by meeting the condition 1.

Condition 2: A p^{th} tone in the 996-tone DRU 1 and a p^{th} tone in the 996-tone DRU 2 are contiguous.

p may be a positive integer less than or equal to 996.

In this embodiment of this application, the 996-tone DRUs may ensure, by meeting the condition 2, that the two 996-tone DRUs form an overall shifting relationship, which facilitates index storage and sequence design simplification.

For example, the 996-tone DRUs may further meet the following condition 3.

Condition 3: The 996-tone DRU 1 or the 996-tone DRU 2 includes 498 tones in the first data pilot area, and the 996-tone DRU 1 or the 996-tone DRU 2 includes 498 tones in the second data pilot area.

In other words, the 996-tone DRU 1 or the 996-tone DRU 2 may be evenly distributed in the first data pilot area and the second data pilot area.

In this embodiment of this application, the first data pilot area includes the 498 tones of the 996-tone DRU 1 and the 498 tones of the 996-tone DRU 2, and the second data pilot area includes the 498 tones of the 996-tone DRU 1 and the 498 tones of the 996-tone DRU 2, so that the 996-tone DRUs are evenly distributed in the two data pilot areas. Therefore, when a 484-tone DRU, a 242-tone DRU, or a 106-tone DRU is designed based on the 996-tone DRU, DRUs of different sizes can form an overall shifting relationship, which facilitates index storage and reading.

For example, the 996-tone DRUs may further meet the following condition 4:
For the 996-tone DRU 1 or the 996-tone DRU 2, a difference between an index of a last tone of the 996-tone DRU 1 or the 996-tone DRU 2 in the first data pilot area and an index of a first tone of the 996-tone DRU 1 or the 996-tone DRU 2 in the second data pilot area is an integer multiple of 2.

In other words, for the 996-tone DRU 1 or the 996-tone DRU 2, the difference between the index of the last tone of the 996-tone DRU 1 or the 996-tone DRU 2 in the first data pilot area and the index of the first tone of the 996-tone DRU 1 or the 996-tone DRU 2 in the second data pilot area is an integer multiple of an index difference between adjacent tones of the 996-tone DRU 1 or the 996-tone DRU 2 in the first data pilot area (or the second data pilot area).

In this embodiment of this application, the 996-tone DRU may ensure that the PAPR of the 996-tone DRU is relatively low by meeting the condition 4.

When the conditions are met, indexes of the 996-tone DRUs may be designed in the four data pilot areas, so that not only the power amplification factor can be increased, but also the relatively low PAPR can be ensured.

For example, the 996-tone DRUs may further meet the following condition 5:
For any 996-tone DRU, 498 tones of the 996-tone DRU in the first data pilot area may be shifted in the first data pilot area, or 498 tones of the 996-tone DRU in the second data pilot area may be shifted in the second data pilot area.

For descriptions of shifting, refer to the index expressions shown below. For example, a 996-tone DRU may meet the condition 5 when meeting the conditions 1 to 4. In a specific implementation, when the 996-tone DRU meets the condition 5, one index may be determined from a plurality of different indexes of the two 996-tone DRUs. For example, one index may be defined in the standard as an index of the 996-tone DRU, or an index expression shown below may be defined. This is not limited this embodiment of this application.

When the conditions are met, the indexes of the 996-tone DRUs may be designed in the two data pilot areas in the tone plan, so that the power amplification factor can be increased, and the relatively low PAPR can be ensured.

In a possible implementation 2, indexes of the first data pilot area are [-1012:-12], and indexes of the second data pilot area are [12:1012].

For example, indexes of the first guard area may be [-1024:-1013], indexes of the direct current area may be [-11:11], and indexes of the second guard area may be [1013:1024]. To be specific, in ascending order of frequencies, the first to the twelfth tones in the 2048 tones are guard tones, the 1014^{th} to the 1036^{th} tones are direct current tones (or referred to as guard tones), and the 2038^{th} to the 2048^{th} tones are guard tones.

Certainly, index ranges of the areas listed in the implementation 2 are merely examples. For example, in a specific implementation, an index range of at least one of the first guard area, the second guard area, or the direct current area may be smaller. This is not limited in this embodiment of this application. When the index range of at least one of the first guard area, the second guard area, or the direct current area is smaller, an index range of the first data pilot area or the second data pilot area may be larger. In this case, the two data pilot areas may include null tones.

The following uses the index ranges listed in the implementation 2 as an example to describe a plurality of possibilities of the indexes of the 996-tone DRUs.

For the first data pilot area:
indexes of 498 tones of the 996-tone DRU 1 in the first data pilot area are [-1012:2:-18]+*t*¹, and
indexes of 498 tones of the 996-tone DRU 2 in the first data pilot area are [-1011:2:-17]+*t*¹, where
*t*¹=0, 2, or 4.

For the second data pilot area:
indexes of 498 tones of the 996-tone DRU 1 in the second data pilot area are [12:2:1006]+*t*², and
indexes of 498 tones of the 996-tone DRU 2 in the second data pilot area are [13:2:1007]+*t*², where
*t*²=0, 2, or 4.

In this embodiment of this application, *t*¹ may be referred to as a shifting value, and the superscript may be used to distinguish between different data pilot areas. For descriptions of the shifting value, refer to the descriptions in 1B. Details are not described herein again.

The following describes the indexes of the 996-tone DRUs.

Indexes of the 996-tone DRU 1 are [-1008:2:-14, 12:2:1006], and indexes of the 996-tone DRU 2 are [-1007:2:-13, 13:2:1007].

Examples of other shifting values are not enumerated herein.

### 3B. 484-tone DRU

A 484-tone DRU 1, a 484-tone DRU 2, a 484-tone DRU 3, and a 484-tone DRU 4 are all distributed in the first data pilot area and the second data pilot area.

The 484-tone DRU 1 to the 484-tone DRU 4 meet at least one of the following:
An index difference between adjacent tones, of any one of the 484-tone DRU 1 to the 484-tone DRU 4, distributed in the first data pilot area is 4, and an index difference between adjacent tones, of the any 484-tone DRU, distributed in the second data pilot area is 4;
a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous;
any 484-tone DRU includes 242 tones in the first data pilot area, and any 484-tone DRU includes 242 tones in the second data pilot area;
for any 484-tone DRU, a difference between an index of a last tone of the 484-tone DRU in the first data pilot area and an index of a first tone of the 484-tone DRU in the second data pilot area is an integer multiple of 4, in other words, for any 484-tone DRU, the difference between the index of the last tone of the first data pilot area and the index of the first tone of the second data pilot area is an integer multiple of an index difference between adjacent tones of the DRU in the first data pilot area (or the second data pilot area); and
for any 484-tone DRU, 242 tones of the 484-tone DRU in the first data pilot area may be shifted in the first data pilot area, or 242 tones of the 484-tone DRU in the second data pilot area may be shifted in the second data pilot area.

For the foregoing content of 3B, refer to the descriptions in 1B or 2B. Details are not described herein again.

In a possible implementation, indexes of the first data pilot area are [-1012:-12], and indexes of the second data pilot area are [12:1012]. For descriptions of the two data pilot areas, the first guard area, the second guard area, and the direct current area, refer to the implementation 2. Details are not described herein again.

In this embodiment of this application, four 484-tone DRUs may be independently designed in the two data pilot areas when at least one condition shown in 3B is met. Alternatively, four 484-tone DRUs may be designed in the two data pilot areas with reference to the indexes of the 996-tone DRUs shown in 3A. For a relationship between a 484-tone DRU and a 996-tone DRU, refer to the descriptions in FIG. 4. Details are not described herein again.

The following describes a plurality of possibilities of indexes of the 484-tone DRUs.

For the first data pilot area:
indexes of 242 tones of the 484-tone DRU 1 in the first data pilot area are [-988:4:-24]+k¹,
indexes of 242 tones of the 484-tone DRU 2 in the first data pilot area are [-986:4:-22]+k¹,
indexes of 242 tones of the 484-tone DRU 3 in the first data pilot area are [-987:4:-23]+k¹, and
indexes of 242 tones of the 484-tone DRU 4 in the first data pilot area are [-985:4:-21]+k¹, where
k¹=-24, -22, -20, -18, -16, -14, -12, -10, -8, -6, -4, -2, 0, 2, 4, 6, or 8.

For the second data pilot area:
indexes of 242 tones of the 484-tone DRU 1 in the first data pilot area are [12:4:976]+k²,
indexes of 242 tones of the 484-tone DRU 2 in the first data pilot area are [14:4:978]+k²,
indexes of 242 tones of the 484-tone DRU 3 in the first data pilot area are [13:4:977]+k², and
indexes of 242 tones of the 484-tone DRU 4 in the first data pilot area are [15:4:979]+k², where
k²=0, 2, 4, 6, 8, 10, 12, 14, 16, 18, 20, 22, 24, 26, 28, 30, or 32.

The following describes the indexes of the 484-tone DRUs by using an example in which the shifting value is 0.
Indexes of the 484-tone DRU 1 are [-988:4:-24, 12:4:976];
indexes of the 484-tone DRU 2 are [-986:4:-22, 14:4:978];
indexes of the 484-tone DRU 3 are [-987:4:-23, 13:4:977]; and
indexes of the 484-tone DRU 4 are [-985:4:-21, 15:4:979].

In this embodiment of this application, other indexes of the 484-tone DRUs may be further obtained based on the foregoing content. For brevity, the other indexes are not enumerated herein.

### 3C. 242-tone DRU

A 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area and the second data pilot area.

The 242-tone DRU 1 to the 242-tone DRU 8 meet at least one of the following:
An index difference between adjacent tones, of any one of the 242-tone DRU 1 to the 242-tone DRU 8, distributed in the first data pilot area is 8, and an index difference between adjacent tones, of the any 242-tone DRU, distributed in the second data pilot area is 8;
a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous;
any 242-tone DRU includes 121 tones in the first data pilot area; and any 242-tone DRU includes 121 tones in the second data pilot area;
for any 242-tone DRU, a difference between an index of a last tone of the 242-tone DRU in the first data pilot area and an index of a first tone of the 242-tone DRU in the second data pilot area is an integer multiple of 8; and
for any 242-tone DRU, 121 tones of the 242-tone DRU in the first data pilot area may be shifted in the first data pilot area, or 121 tones of the 242-tone DRU in the second data pilot area may be shifted in the second data pilot area.

For the foregoing content of 3C, refer to the descriptions in 1C or 2C. Details are not described herein again.

In a possible implementation, indexes of the first data pilot area are [-1012:-12], and indexes of the second data pilot area are [12:1012]. For descriptions of the two data pilot areas, the first guard area, the second guard area, and the direct current area, refer to the implementation 2. Details are not described herein again.

In this embodiment of this application, eight 242-tone DRUs may be independently designed in the two data pilot areas when at least one condition shown in 3C is met. Alternatively, eight 242-tone DRUs may be designed in the two data pilot areas with reference to the indexes of the 996-tone DRUs shown in 3A. Alternatively, eight 242-tone DRUs is designed in the two data pilot areas with reference to the indexes of the 484-tone DRUs shown in 3B. For a relationship between a 242-tone DRU, a 484-tone DRU, and a 996-tone DRU, refer to the descriptions in FIG. 4. Details are not described herein again.

The following describes a plurality of possibilities of indexes of the 242-tone DRUs.

For the first data pilot area:
indexes of the 242-tone DRU 1 in the first data pilot area are [-988:8:-28]+*p*¹;
indexes of the 242-tone DRU 2 in the first data pilot area are [-984:8:-24]+*p*¹;
indexes of the 242-tone DRU 3 in the first data pilot area are [-986:8:-26]+*p*¹;
indexes of the 242-tone DRU 4 in the first data pilot area are [-982:8:-22]+*p*¹;
indexes of the 242-tone DRU 5 in the first data pilot area are [-987:8:-27]+*p*¹;
indexes of the 242-tone DRU 6 in the first data pilot area are [-983:8:-23]+*p*¹;
indexes of the 242-tone DRU 7 in the first data pilot area are [-985:8:-25]+*p*¹; and
indexes of the 242-tone DRU 8 in the first data pilot area are [-981:8:-21]+*p*¹, where
*p*¹=-24, -22, -20, -18, -16, -14, -12, -10, -8, -6, -4, -2, 0, 2, 4, 6, or 8.

For the second data pilot area:
indexes of the 242-tone DRU 1 in the second data pilot area are [12:8:972]+*p*²;
indexes of the 242-tone DRU 2 in the second data pilot area are [16:8:976]+*p*²;
indexes of the 242-tone DRU 3 in the second data pilot area are [14:8:974]+*p*²;
indexes of the 242-tone DRU 4 in the second data pilot area are [18:8:978]+*p*²;
indexes of the 242-tone DRU 5 in the second data pilot area are [13:8:973]+*p*²;
indexes of the 242-tone DRU 6 in the second data pilot area are [17:8:977]+*p*²;
indexes of the 242-tone DRU 7 in the second data pilot area are [15:8:975]+*p*²; and
indexes of the 242-tone DRU 8 in the second data pilot area are [19:8:979]+*p*², where
*p*²=0, 2, 4, 6, 8, 10, 12, 14, 16, 18, 20, 22, 24, 26, 28, or 32.

For example, when the foregoing shifting values are 0, the indexes of the 242-tone DRUs may be:
indexes of the 242-tone DRU 1 are [-988:8:-28, 12:8:972];
indexes of the 242-tone DRU 2 are [-984:8:-24, 16:8:976];
indexes of the 242-tone DRU 3 are [-986:8:-26, 14:8:974],
indexes of the 242-tone DRU 4 are [-982:8:-22, 18:8:978];
indexes of the 242-tone DRU 5 are [-987:8:-27, 13:8:973];
indexes of the 242-tone DRU 6 are [-983:8:-23, 17:8:977];
indexes of the 242-tone DRU 7 are [-985:8:-25, 15:8:975]; and
indexes of the 242-tone DRU 8 are [-981:8:-21, 19:8:979].

When a 242-tone DRU is obtained based on a 484-tone DRU, for example, odd-numbered tones of each 484-tone DRU in 3B may form one 242-tone DRU, and even-numbered tones of the 484-tone DRU may form another 242-tone DRU. For a relationship between the 242-tone DRU and the 484-tone DRU, refer to the descriptions in 1C. Details are not described herein again.

### 3D. 106-tone DRU

A 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area and the second data pilot area.

The 106-tone DRU 1 to the 106-tone DRU 16 meet at least one of the following:
An index difference between adjacent tones, of any one of the 106-tone DRU 1 to the 106-tone DRU 16, distributed in the first data pilot area is 16, and an index difference between adjacent tones, of the any 106-tone DRU, distributed in the second data pilot area is 16;
a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous;
any 106-tone DRU includes 53 tones in the first data pilot area, and any 106-tone DRU includes 53 tones in the second data pilot area;
a difference between an index of a last tone of any 106-tone DRU in the first data pilot area and an index of a first tone of the 106-tone DRU in the second data pilot area is an integer multiple of 16; and
for any 106-tone DRU, 26 tones or 27 tones of the 106-tone DRU in the first data pilot area may be shifted in the first data pilot area, or 26 tones or 27 tones of the 106-tone DRU in the second data pilot area may be shifted in the second data pilot area.

In a possible implementation, indexes of the first data pilot area are [-1012:-12], and indexes of the second data pilot area are [12:1012]. For descriptions of the two data pilot areas, the first guard area, the second guard area, and the direct current area, refer to the implementation 2. Details are not described herein again.

In this embodiment of this application, sixteen 106-tone DRUs may be independently designed in the two data pilot areas when at least one condition shown in 3D is met. Alternatively, sixteen 106-tone DRUs may be designed in the two data pilot areas with reference to the indexes of the 996-tone DRUs shown in 3A. Alternatively, sixteen 106-tone DRUs is designed in the two data pilot areas with reference to the indexes of the 484-tone DRUs shown in 3B. For a relationship between a 106-tone DRU, a 242-tone DRU, a 484-tone DRU, and a 996-tone DRU, refer to the descriptions in FIG. 4. Details are not described herein again.

The following describes a plurality of possibilities of indexes of the 106-tone DRUs.

For the first data pilot area:
indexes of the 106-tone DRU 1 in the first data pilot area are [-868:16:-36]+*q*¹;
indexes of the 106-tone DRU 2 in the first data pilot area are [-860:16:-28]+*q*¹;
indexes of the 106-tone DRU 3 in the first data pilot area are [-864:16:-32]+*q*¹;
indexes of the 106-tone DRU 4 in the first data pilot area are [-856:16:-24]+*q*¹;
indexes of the 106-tone DRU 5 in the first data pilot area are [-866:16:-34]+*q*¹;
indexes of the 106-tone DRU 6 in the first data pilot area are [-858:16:-26]+*q*¹;
indexes of the 106-tone DRU 7 in the first data pilot area are [-862:16:-30]+*q*¹;
indexes of the 106-tone DRU 8 in the first data pilot area are [-854:16:-22]+*q*¹;
indexes of the 106-tone DRU 9 in the first data pilot area are [-867:16:-35]+*q*¹;
indexes of the 106-tone DRU 10 in the first data pilot area are [-859:16:-27]+*q*¹;
indexes of the 106-tone DRU 11 in the first data pilot area are [-863:16:-31]+*q*¹;
indexes of the 106-tone DRU 12 in the first data pilot area are [-855:16:-23]+*q*¹;
indexes of the 106-tone DRU 13 in the first data pilot area are [-865:16:-33]+*q*¹;
indexes of the 106-tone DRU 14 in the first data pilot area are [-857:16:-25]+*q*¹;
indexes of the 106-tone DRU 15 in the first data pilot area are [-861:16:-29]+*q*¹; and
indexes of the 106-tone DRU 16 in the first data pilot area are [-853:16:-21]+*q*¹.

For the second data pilot area:
indexes of the 106-tone DRU 1 in the second data pilot area are [12:16:844]+*q*²;
indexes of the 106-tone DRU 2 in the second data pilot area are [20:16:852]+*q*²;
indexes of the 106-tone DRU 3 in the second data pilot area are [16:16:848]+*q*²;
indexes of the 106-tone DRU 4 in the second data pilot area are [24:16:856]+*q*²;
indexes of the 106-tone DRU 5 in the second data pilot area are [14:16:846]+*q*²;
indexes of the 106-tone DRU 6 in the second data pilot area are [22:16:854]+*q*²;
indexes of the 106-tone DRU 7 in the second data pilot area are [18:16:850]+*q*²;
indexes of the 106-tone DRU 8 in the second data pilot area are [26:16:858]+*q*²;
indexes of the 106-tone DRU 9 in the second data pilot area are [13:16:845]+*q*²;
indexes of the 106-tone DRU 10 in the second data pilot area are [21:16:853]+*q*²;
indexes of the 106-tone DRU 11 in the second data pilot area are [17:16:849]+*q*²;
indexes of the 106-tone DRU 12 in the second data pilot area are [25:16:857]+*q*²;
indexes of the 106-tone DRU 13 in the second data pilot area are [15:16:847]+*q*²;
indexes of the 106-tone DRU 14 in the second data pilot area are [23:16:855]+*q*²;
indexes of the 106-tone DRU 15 in the second data pilot area are [19:16:851]+*q*²; and
indexes of the 106-tone DRU 16 in the second data pilot area are [27:16:859]+*q*².

For example, when the foregoing shifting values are 0, the indexes of the 106-tone DRUs may be:
indexes of the 106-tone DRU 1 are [-868:16:-36, 12:16:844];
indexes of the 106-tone DRU 2 are [-860:16:-28, 20:16:852];
indexes of the 106-tone DRU 3 are [-864:16:-32, 16:16:848];
indexes of the 106-tone DRU 4 are [-856:16:-24, 24:16:856];
indexes of the 106-tone DRU 5 are [-866:16:-34, 14:16:846];
indexes of the 106-tone DRU 6 are [-858:16:-26, 22:16:854];
indexes of the 106-tone DRU 7 are [-862:16:-30, 18:16:850];
indexes of the 106-tone DRU 8 are [-854:16:-22, 26:16:858];
indexes of the 106-tone DRU 9 are [-867:16:-35, 13:16:845];
indexes of the 106-tone DRU 10 are [-859:16:-27, 21:16:853];
indexes of the 106-tone DRU 11 are [-863:16:-31, 17:16:849];
indexes of the 106-tone DRU 12 are [-855:16:-23, 25:16:857];
indexes of the 106-tone DRU 13 are [-865:16:-33, 15:16:847];
indexes of the 106-tone DRU 14 are [-857:16:-25, 23:16:855];
indexes of the 106-tone DRU 15 are [-861:16:-29, 19:16:851]; and
indexes of the 106-tone DRU 16 are [-853:16:-21, 27:16:859].

For example, with reference to 3A to 3D, the tone plan corresponding to 160 MHz may include:
two 996-tone DRUs (for indexes of the two 996-tone DRUs, refer to the indexes shown in 3A);
four 484-tone DRUs (for indexes of the four 484-tone DRUs, refer to the indexes shown in 3B);
eight 242-tone DRUs (for indexes of the eight 242-tone DRUs, refer to the indexes shown in 3C); and
sixteen 106-tone DRUs (for indexes of the sixteen 106-tone DRUs, refer to the indexes shown in 3D).

The indexes of the DRUs are not enumerated herein.

### Fourth tone plan:

For area division of the tone plan corresponding to the first bandwidth, refer to the descriptions in the third tone plan. For conditions that a 996-tone DRU, a 484-tone DRU, a 242-tone DRU, and a 106-tone DRU meet, refer to the descriptions in the third tone plan.

In the third tone plan, the indexes of the direct current area are [-12:12]. The following uses an example in which the indexes of the direct current area are [-2:2] to describe each DRU. Because the indexes of the direct current area are different, indexes of different DRUs designed based on the indexes of the area in the fourth tone plan may also be different.

In a possible implementation 3, indexes of the first data pilot area are [-1012:-3], and indexes of the second data pilot area are [3:1012]. Indexes of the first guard area may be [-1024:-1013], the indexes of the direct current area may be [-2:2], and indexes of the second guard area may be [1013:1024].

Certainly, index ranges of the areas listed in the implementation 3 are merely examples. For example, in a specific implementation, an index range of at least one of the first guard area, the second guard area, or the direct current area may be smaller. This is not limited in this embodiment of this application. When the index range of at least one of the first guard area, the second guard area, or the direct current area is smaller, an index range of the first data pilot area or the second data pilot area may be larger. In this case, the two data pilot areas may include null tones.

The following uses the index ranges listed in the implementation 3 as an example to describe a plurality of possibilities of indexes of DRUs of different sizes.

### 4A. 996-tone DRU

A 996-tone DRU 1 and a 996-tone DRU 2 are all distributed in the first data pilot area and the second data pilot area.

For conditions that the 996-tone DRU meets, refer to the descriptions in 3A. Details are not described herein again.

For the first data pilot area:
indexes of 498 tones of the 996-tone DRU 1 in the first data pilot area are [-997:2:-3]+*t*¹, and
indexes of 498 tones of the 996-tone DRU 2 in the first data pilot area are [-998:2:-4]+*t*¹, where
*t*¹=-14, -12, -10, -8, -6, -4, -2, or 0.

For the second data pilot area:
indexes of 498 tones of the 996-tone DRU 1 in the second data pilot area are [5:2:999]+*t*², and
indexes of 498 tones of the 996-tone DRU 2 in the second data pilot area are [4:2:998]+*t*², where
*t*²=0, 2, 4, 6, 8, 10, or 12.

In a possible implementation, indexes of the 996-tone DRU 1 are [-997:2:-3, 5:2:999], and indexes of the 996-tone DRU 2 are [-998:2:-4, 4:2:998].

### 4B. 484-tone DRU

A 484-tone DRU 1, a 484-tone DRU 2, a 484-tone DRU 3, and a 484-tone DRU 4 are all distributed in the first data pilot area and the second data pilot area.

For conditions that the 484-tone DRU meets, refer to the descriptions in 3B. Details are not described herein again.

For the first data pilot area:
indexes of 242 tones of the 484-tone DRU 1 in the first data pilot area are [-967:4:-3]+k¹;
indexes of 242 tones of the 484-tone DRU 2 in the first data pilot area are [-969:4:-5]+k¹;
indexes of 242 tones of the 484-tone DRU 3 in the first data pilot area are [-968:4:-4]+k¹; and
indexes of 242 tones of the 484-tone DRU 4 in the first data pilot area are [-970:4:-6]+k¹, where
k¹=-42, -40, -38, -36, ..., -8, -6, -4, -2, or 0.

For the second data pilot area:
indexes of 242 tones of the 484-tone DRU 1 in the second data pilot area are [9:4:973]+k²;
indexes of 242 tones of the 484-tone DRU 2 in the second data pilot area are [7:4:971]+k²;
indexes of 242 tones of the 484-tone DRU 3 in the second data pilot area are [8:4:972]+k²; and
indexes of 242 tones of the 484-tone DRU 4 in the second data pilot area are [6:4:970]+k², where
k²=0, 2, 4, 6, 8, ..., 30, 32, 34, 36, or 38.

In a possible implementation, indexes of the 484-tone DRU 1 are [-967:4:-3, 9:4:973]; indexes of the 484-tone DRU 2 are [-969:4:-5, 7:4:971]; indexes of the 484-tone DRU 3 are [-968:4:-4, 8:4:972]; and indexes of the 484-tone DRU 4 are [-970:4:-6, 6:4:970].

### 4C. 242-tone DRU

A 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area and the second data pilot area.

For conditions that the 242-tone DRU meets, refer to the descriptions in 3C. Details are not described herein again.

For the first data pilot area:
indexes of the 242-tone DRU 1 in the first data pilot area are [-967:8:-7]+*p*¹;
indexes of the 242-tone DRU 2 in the first data pilot area are [-963:8:-3]+*p*¹;
indexes of the 242-tone DRU 3 in the first data pilot area are [-969:8:-9]+*p*¹;
indexes of the 242-tone DRU 4 in the first data pilot area are [-965:8:-5]+*p*¹;
indexes of the 242-tone DRU 5 in the first data pilot area are [-968:8:-8]+*p*¹;
indexes of the 242-tone DRU 6 in the first data pilot area are [-964:8:-4]+*p*¹;
indexes of the 242-tone DRU 7 in the first data pilot area are [-970:8:-10]+*p*¹; and
indexes of the 242-tone DRU 8 in the first data pilot area are [-966:8:-6]+*p*¹, where
*p*¹=-42, -40, -38, -36, ..., -8, -6, -4, -2, or 0.

For the second data pilot area:
indexes of the 242-tone DRU 1 in the second data pilot area are [9:8:969]+*p*²;
indexes of the 242-tone DRU 2 in the second data pilot area are [13:8:973]+*p*²;
indexes of the 242-tone DRU 3 in the second data pilot area are [7:8:967]+*p*²;
indexes of the 242-tone DRU 4 in the second data pilot area are [11:8:971]+*p*²;
indexes of the 242-tone DRU 5 in the second data pilot area are [8:8:968]+*p*²;
indexes of the 242-tone DRU 6 in the second data pilot area are [12:8:972]+*p*²;
indexes of the 242-tone DRU 7 in the second data pilot area are [6:8:966]+*p*²; and
indexes of the 242-tone DRU 8 in the second data pilot area are [10:8:970]+*p*², where
*p*²=0, 2, 4, 6, 8, ..., 30, 32, 34, 36, or 38.

In a possible implementation, indexes of the 242-tone DRU 1 are [-967:8:-7, 9:8:969], indexes of the 242-tone DRU 2 are [-963:8:-3, 13:8:973], indexes of the 242-tone DRU 3 are [-969:8:-9, 7:8:967], indexes of the 242-tone DRU 4 are [-965:8:-5, 11:8:971], indexes of the 242-tone DRU 5 are [-968:8:-8, 8:8:968], indexes of the 242-tone DRU 6 are [-964:8:-4, 12:8:972], indexes of the 242-tone DRU 7 are [-970:8:-10, 6:8:966], and indexes of the 242-tone DRU 8 are [-966:8:-6, 10:8:970].

When a 242-tone DRU is obtained based on a 484-tone DRU, for example, odd-numbered tones of each 484-tone DRU in 3B may form one 242-tone DRU, and even-numbered tones of the 484-tone DRU may form another 242-tone DRU. For a relationship between the 242-tone DRU and the 484-tone DRU, refer to the descriptions in 1C. Details are not described herein again.

### 4D. 106-tone DRU

A 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area and the second data pilot area.

For conditions that the 106-tone DRU meets, refer to the descriptions in 3D. Details are not described herein again.

For the first data pilot area:
indexes of the 106-tone DRU 1 in the first data pilot area are [-839:16:-7]+*q*¹;
indexes of the 106-tone DRU 2 in the first data pilot area are [-847:16:-15]+*q*¹;
indexes of the 106-tone DRU 3 in the first data pilot area are [-835:16:-3]+*q*¹;
indexes of the 106-tone DRU 4 in the first data pilot area are [-843:16:-11]+*q*¹;
indexes of the 106-tone DRU 5 in the first data pilot area are [-841:16:-9]+*q*¹;
indexes of the 106-tone DRU 6 in the first data pilot area are [-849:16:-17]+*q*¹;
indexes of the 106-tone DRU 7 in the first data pilot area are [-837:16:-5]+*q*¹;
indexes of the 106-tone DRU 8 in the first data pilot area are [-845:16:-13]+*q*¹;
indexes of the 106-tone DRU 9 in the first data pilot area are [-840:16:-8]+*q*¹;
indexes of the 106-tone DRU 10 in the first data pilot area are [-848:16:-16]+*q*¹;
indexes of the 106-tone DRU 11 in the first data pilot area are [-836:16:-4]+*q*¹;
indexes of the 106-tone DRU 12 in the first data pilot area are [-844:16:-12]+*q*¹;
indexes of the 106-tone DRU 13 in the first data pilot area are [-842:16:-10]+*q*¹;
indexes of the 106-tone DRU 14 in the first data pilot area are [-850:16:-18]+*q*¹;
indexes of the 106-tone DRU 15 in the first data pilot area are [-838:16:-6]+*q*¹; and
indexes of the 106-tone DRU 16 in the first data pilot area are [-846:16:-14]+*q*¹.

For the second data pilot area:
indexes of the 106-tone DRU 1 in the second data pilot area are [25:16:857]+*q*²;
indexes of the 106-tone DRU 2 in the second data pilot area are [17:16:849]+*q*²;
indexes of the 106-tone DRU 3 in the second data pilot area are [29:16:861]+*q*²;
indexes of the 106-tone DRU 4 in the second data pilot area are [21:16:853]+*q*²;
indexes of the 106-tone DRU 5 in the second data pilot area are [23:16:855]+*q*²;
indexes of the 106-tone DRU 6 in the second data pilot area are [15:16:847]+*q*²;
indexes of the 106-tone DRU 7 in the second data pilot area are [27:16:859]+*q*²;
indexes of the 106-tone DRU 8 in the second data pilot area are [19:16:851]+*q*²;
indexes of the 106-tone DRU 9 in the second data pilot area are [24:16:856]+*q*²;
indexes of the 106-tone DRU 10 in the second data pilot area are [16:16:848]+*q*²;
indexes of the 106-tone DRU 11 in the second data pilot area are [28:16:860]+*q*²;
indexes of the 106-tone DRU 12 in the second data pilot area are [20:16:852]+*q*²;
indexes of the 106-tone DRU 13 in the second data pilot area are [22:16:854]+*q*²;
indexes of the 106-tone DRU 14 in the second data pilot area are [14:16:846]+*q*²;
indexes of the 106-tone DRU 15 in the second data pilot area are [26:16:858]+*q*²; and
indexes of the 106-tone DRU 16 in the second data pilot area are [18:16:850]+*q*².

In a possible implementation,
indexes of the 106-tone DRU 1 are [-839:16:-7, 25:16:857];
indexes of the 106-tone DRU 2 are [-847:16:-15, 17:16:849];
indexes of the 106-tone DRU 3 are [-835:16:-3, 29:16:861];
indexes of the 106-tone DRU 4 are [-843:16:-11, 21:16:853];
indexes of the 106-tone DRU 5 are [-841:16:-9, 23:16:855];
indexes of the 106-tone DRU 6 are [-849:16:-17, 15:16:847];
indexes of the 106-tone DRU 7 are [-837:16:-5, 27:16:859];
indexes of the 106-tone DRU 8 are [-845:16:-13, 19:16:851];
indexes of the 106-tone DRU 9 are [-840:16:-8, 24:16:856];
indexes of the 106-tone DRU 10 are [-848:16:-16, 16:16:848];
indexes of the 106-tone DRU 11 are [-836:16:-4, 28:16:860];
indexes of the 106-tone DRU 12 are [-844:16:-12, 20:16:852];
indexes of the 106-tone DRU 13 are [-842:16:-10, 22:16:854];
indexes of the 106-tone DRU 14 are [-850:16:-18, 14:16:846];
indexes of the 106-tone DRU 15 are [-838:16:-6, 26:16:858]; and
indexes of the 106-tone DRU 16 are [-846:16:-14, 18:16:850].

For example, with reference to 4A to 4D, the tone plan corresponding to 160 MHz may include:
two 996-tone DRUs (for indexes of the two 996-tone DRUs, refer to the indexes shown in 4A);
four 484-tone DRUs (for indexes of the four 484-tone DRUs, refer to the indexes shown in 4B);
eight 242-tone DRUs (for indexes of the eight 242-tone DRUs, refer to the indexes shown in 4C); and
sixteen 106-tone DRUs (for indexes of the sixteen 106-tone DRUs, refer to the indexes shown in 4D).

The indexes of the DRUs are not enumerated herein.

In this application, for the first tone plan and the second tone plan, each DRU can reach a maximum power amplification factor, and each DRU is evenly distributed in the four data pilot areas. Therefore, channel smoothness is facilitated. In addition, for any DRU, a difference between an index of a last tone of the DRU in a previous data pilot area and an index of a first tone of the DRU in a next data pilot area is an integer multiple of an index difference between adjacent tones of the DRU in one data pilot area. This can ensure a low PAPR. The DRUs of a same size may comply with an overall shifting relationship. Therefore, when the direct current area is reserved, two local oscillators (local oscillator, LO) may be allowed to implement 160 MHz, thereby reducing implementation difficulty of a radio frequency front end.

In this application, for the third tone plan and the fourth tone plan, an entire bandwidth is divided into two data pilot areas, which is more conducive to channel smoothing and also helps reduce a PAPR of a DRU.

Communication apparatuses provided in embodiments of this application are described below.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In an actual implementation, another division manner may be used. The communication apparatuses in embodiments of this application are described below in detail with reference to FIG. 6 to FIG. 8.

FIG. 6 is a diagram of a structure of a communication apparatus according to an embodiment of this application. As shown in FIG. 6, the communication apparatus includes a processing module 601 and a transceiver module 602. The transceiver module 602 may implement a corresponding communication function, and the processing module 601 is configured to implement a corresponding processing function. For example, the transceiver module 602 may also be referred to as an interface, a communication interface, or a communication module.

In some embodiments of this application, the communication apparatus may be configured to perform an action performed by the first communication apparatus in the foregoing method embodiments. In this case, the first communication apparatus may be a Wi-Fi device, or may be a chip, a functional module, or the like that is configured in the device. The transceiver module 602 is configured to perform a sending/receiving-related operation of the first communication apparatus in the foregoing method embodiments, and the processing module 601 is configured to perform a processing-related operation of the first communication apparatus in the foregoing method embodiments.

The processing module 601 may be configured to generate an OFDM symbol. The transceiver module 602 may be configured to send or output the OFDM symbol on a first bandwidth. For a tone plan corresponding to the first bandwidth, refer to the foregoing description.

For example, the processing module 601 may include at least one of the following modules: a constellation mapping module, a stream cyclic shift module, a spatial and frequency mapping module, an IDFT module, and a cyclic prefix insertion and windowing module. For example, the transceiver module 602 may include a radio frequency module and an antenna module. For example, the transceiver module 602 may include a pin module.

FIG. 6 is reused. In some other embodiments of this application, the communication apparatus may be configured to perform an action performed by the second communication apparatus in the foregoing method embodiments. In this case, the communication apparatus may be a Wi-Fi device, or may be a chip, a functional module, or the like that is configured in the device. The transceiver module 602 is configured to perform a sending/receiving-related operation of the second communication apparatus in the foregoing method embodiments, and the processing module 601 is configured to perform a processing-related operation of the second communication apparatus in the foregoing method embodiments.

The transceiver module 602 may be configured to receive or input an OFDM symbol. The processing module 601 may be configured to parse the OFDM symbol.

For example, the processing module 601 may include at least one of the following components: a cyclic prefix removal module, a DFT module, a de-interleaving module, a de-constellation module, and a descrambling module. For example, the transceiver module 602 may include a radio frequency module and an antenna module. For example, the transceiver module 602 may include a pin module.

Optionally, in the foregoing embodiments, the communication apparatus may further include a storage module. The storage module may be configured to store instructions and/or data. The processing module 601 may read the instructions and/or the data in the storage module, so that the communication apparatus implements the foregoing method embodiments. For example, the storage module may store the tone plan shown above.

In the foregoing embodiments, for specific descriptions of terms, nouns, steps, or the like, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus in FIG. 6 falls within the protection scope of embodiments of this application. The following descriptions are merely examples, and the product form of the communication apparatus in embodiments of this application is not limited thereto.

In a possible implementation, in the communication apparatus shown in FIG. 6, the processing module 601 may be one or more processors, and the transceiver module 602 may be a transceiver; or the transceiver module 602 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner of the processor and the transceiver is not limited in embodiments of this application. In a process of performing the foregoing method, a process related to sending information in the foregoing method may be a process of outputting the information by the processor. When outputting the information, the processor outputs the information to the transceiver, so that the transceiver transmits the information. After the information is outputted by the processor, other processing may further need to be performed on the information before the information arrives at the transceiver. Similarly, a process related to receiving information in the foregoing method may be a process of receiving the input information by the processor. When the processor receives the input information, the transceiver receives the information, and inputs the information into the processor. Further, after the transceiver receives the information, other processing may need to be performed on the information before the information is input into the processor.

As shown in FIG. 7, the communication apparatus 70 includes one or more processors 720 and a transceiver 710.

In some embodiments of this application, the communication apparatus may be configured to perform steps, methods, or functions performed by the first communication apparatus. For example, the processor 720 may be configured to perform functions or steps implemented by the processing module 601 shown in FIG. 6; and the transceiver 710 may be configured to perform functions or steps implemented by the transceiver module 602 shown in FIG. 6. For specific descriptions of the processor 720 and the transceiver 710, refer to FIG. 6 or the foregoing method embodiments. Details are not described herein again.

In some other embodiments of this application, the communication apparatus is configured to perform steps, methods, or functions performed by the second communication apparatus. For example, the processor 720 may be configured to perform functions or steps implemented by the processing module 601 shown in FIG. 6; and the transceiver 710 may be configured to perform functions or steps implemented by the transceiver module 602 shown in FIG. 6. For specific descriptions of the processor 720 and the transceiver 710, refer to FIG. 6 or the foregoing method embodiments. Details are not described herein again.

In various implementations of the communication apparatus shown in FIG. 7, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 70 may further include one or more memories 730, configured to store program instructions and/or data. The memory 730 is coupled to the processor 720. Couplings in embodiments of this application are indirect couplings or communication connections between communication apparatuses, units, or modules; may be in an electrical form, a mechanical form, or another form; and are used for information exchange between the communication apparatuses, the units, or the modules. The processor 720 may cooperate with the memory 730. The processor 720 may execute the program instructions stored in the memory 730. Optionally, at least one of the one or more memories may be included in the processor.

A specific connection medium between the transceiver 710, the processor 720, and the memory 730 is not limited in this embodiment of this application. In this embodiment of this application, in FIG. 7, the memory 730, the processor 720, and the transceiver 710 are connected through a bus 740. The bus is represented by a bold line in FIG. 7. A manner of connections between other components is merely an example for description, and this application is not limited thereto. The bus may be classified into an address bus, a data bus, a control bus, and the like. For ease of representation, only one bold line is used for representation in FIG. 7, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented through a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 720 is mainly configured to: process a communication protocol and communication data, control the entire communication apparatus, execute a software program, and process data of the software program. The memory 730 is mainly configured to store the software program and the data. The transceiver 710 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. An input/output apparatus, for example, a touch screen, a display, a keyboard, is mainly configured to: receive data input by a user and output data to the user.

After the communication apparatus is powered on, the processor 720 may read the software program in the memory 730, interpret and execute instructions of the software program, and process data of the software program. When data needs to be sent in a wireless manner, the processor 720 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 720. The processor 720 converts the baseband signal into data and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

The communication apparatus shown in embodiments of this application may further have more components than those in FIG. 7, or the like. This is not limited in embodiments of this application. The methods performed by the processor and the transceiver are merely examples. For specific steps performed by the processor and the transceiver, refer to the methods described above.

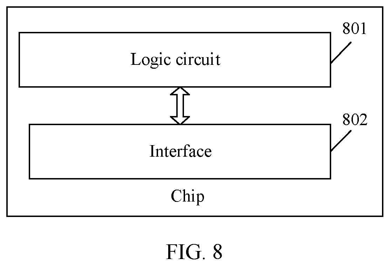

In another possible implementation, in the communication apparatus shown in FIG. 6, the processing module 601 may be one or more logic circuits, and the transceiver module 602 may be an input/output interface that is also referred to as a communication interface, an interface circuit, an interface, or the like. Alternatively, the transceiver module 602 may be a sending module and a receiving module. The sending module may be an output interface, and the receiving module may be an input interface. The sending module and the receiving module are integrated into one module, for example, an input/output interface. As shown in FIG. 8, a communication apparatus shown in FIG. 8 includes a logic circuit 801 and an interface 802. In other words, the processing module 601 may be implemented by the logic circuit 801, and the transceiver module 602 may be implemented by the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 is an example in which the foregoing communication apparatus is a chip. The chip includes the logic circuit 801 and the interface 802.

In this embodiment of this application, the logic circuit and the interface may be coupled to each other. A specific manner of a connection between the logic circuit and the interface is not limited in embodiments of this application. For example, the logic circuit 801 may be configured to perform the functions or the steps implemented by the processing module 601 shown in FIG. 6, and the interface 802 may be configured to perform the functions or the steps implemented by the transceiver module 602 shown in FIG. 6. For specific descriptions of the logic circuit 801 and the interface 802, refer to FIG. 6 or the foregoing method embodiments. Details are not described herein again.

The communication apparatus shown in this embodiment of this application may implement the methods provided in embodiments of this application in a form of hardware, or may implement the methods provided in embodiments of this application in a form of software. This is not limited in embodiments of this application.

In addition, an embodiment of this application further provides a communication system. The communication system includes a first communication apparatus and a second communication apparatus. The first communication apparatus and the second communication apparatus may be configured to perform the method in any one of the foregoing embodiments.

This application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by communication apparatuses in the method provided in this application.

This application further provides a computer program product. The computer program product includes computer code or a computer program. When the computer code or the computer program is run on a computer, operations and/or processing performed in the method provided in this application are/is performed.

In the several embodiments provided in this application, it should be understood that the disclosed system, communication apparatus, and method may be implemented in other manners. For example, the described communication apparatus embodiments are merely examples. For example, the foregoing module division is merely logical function division and there may be another division manner during actual implementations. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and parts displayed as modules may or may not be physical modules, may be located in one location, or may be distributed on a plurality of network modules. Some or all of the modules may be selected according to an actual requirement to achieve the technical effect of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A communication method, wherein the method comprises:
sending or receiving an orthogonal frequency division multiplexing OFDM symbol based on a tone plan corresponding to a first bandwidth, wherein
the tone plan corresponding to the first bandwidth comprises a first guard area, a first data pilot area, a first direct current area, a second data pilot area, a second direct current area, a third data pilot area, a third direct current area, a fourth data pilot area, and a second guard area;
the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area;
a 996-tone DRU 1 is distributed in the first data pilot area, the second data pilot area, the third data pilot area, and the fourth data pilot area, and the 996-tone DRU 1 comprises tones whose indexes are even numbers in the first data pilot area, the second data pilot area, the third data pilot area, and the fourth data pilot area; and
a 996-tone DRU 2 is distributed in the first data pilot area, the second data pilot area, the third data pilot area, and the fourth data pilot area, and the 996-tone DRU 2 comprises tones whose indexes are odd numbers in the first data pilot area, the second data pilot area, the third data pilot area, and the fourth data pilot area.

2. The method according to claim 1, wherein
indexes of the first data pilot area are [-1012:-515], indexes of the second data pilot area are [-509:-12], indexes of the third data pilot area are [12:509], and indexes of the fourth data pilot area are [515:1012].

3. A communication method, wherein the method comprises:
sending or receiving an orthogonal frequency division multiplexing OFDM symbol based on a tone plan corresponding to a first bandwidth, wherein
the tone plan corresponding to the first bandwidth comprises a first guard area, a first data pilot area, a first direct current area, a second data pilot area, a second direct current area, a third data pilot area, a third direct current area, a fourth data pilot area, and a second guard area;
the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area;
a 484-tone DRU 1, a 484-tone DRU 2, a 484-tone DRU 3, and a 484-tone DRU 4 are all distributed in the first data pilot area, the second data pilot area, the third data pilot area, and the fourth data pilot area; and
the 484-tone DRU 1 to the 484-tone DRU 4 meet at least one of the following:
an index difference between adjacent tones, of any one of the 484-tone DRU 1 to the 484-tone DRU 4, distributed in the first data pilot area is 4, an index difference between adjacent tones, of the any 484-tone DRU, distributed in the second data pilot area is 4, an index difference between adjacent tones, of the any 484-tone DRU, distributed in the third data pilot area is 4, and an index difference between adjacent tones, of the any 484-tone DRU, distributed in the fourth data pilot area is 4; and
a p^{th} tone in the 484-tone DRU 1, a p^{th} tone in the 484-tone DRU 2, a p^{th} tone in the 484-tone DRU 3, and a p^{th} tone in the 484-tone DRU 4 are contiguous.

4. The method according to claim 3, wherein
the any 484-tone DRU comprises 120 tones or 122 tones in the first data pilot area;
the any 484-tone DRU comprises 120 tones or 122 tones in the second data pilot area;
the any 484-tone DRU comprises 120 tones or 122 tones in the third data pilot area; and
the any 484-tone DRU comprises 120 tones or 122 tones in the fourth data pilot area.

5. The method according to claim 3 or 4, wherein
for the any 484-tone DRU, a difference between an index of a last tone of the 484-tone DRU in the first data pilot area and an index of a first tone of the 484-tone DRU in the second data pilot area is an integer multiple of 4, a difference between an index of a last tone of the 484-tone DRU in the second data pilot area and an index of a first tone of the 484-tone DRU in the third data pilot area is an integer multiple of 4, and a difference between an index of a last tone of the 484-tone DRU in the third data pilot area and an index of a first tone of the 484-tone DRU in the fourth data pilot area is an integer multiple of 4.

6. The method according to any one of claims 3 to 5, wherein
indexes of the first data pilot area are [-1012:-515], indexes of the second data pilot area are [-509:-12], indexes of the third data pilot area are [12:509], and indexes of the fourth data pilot area are [515:1012].

7. The method according to claim 6, wherein
that the any 484-tone DRU comprises 120 tones in the first data pilot area comprises:
indexes of 120 tones of the 484-tone DRU 1 in the first data pilot area are $\left[-1012:4:-536\right] + {k}_{1}^{1}$,
indexes of 120 tones of the 484-tone DRU 2 in the first data pilot area are $\left[-1010:4:-534\right] + {k}_{1}^{1}$,
indexes of 120 tones of the 484-tone DRU 3 in the first data pilot area are $\left[-1011:4:-535\right] + {k}_{1}^{1}$, and
indexes of 120 tones of the 484-tone DRU 4 in the first data pilot area are $\left[-1009:4:-533\right] + {k}_{1}^{1}$, wherein
${k}_{1}^{1} = 0 , 2 , 4 , 6 , 8 , 10 , 12 , 14 , 16$, or 18; or
that the any 484-tone DRU comprises 122 tones in the first data pilot area comprises:
indexes of 122 tones of the 484-tone DRU 1 in the first data pilot area are $\left[-1012:4:-528\right] + {k}_{2}^{1}$,
indexes of 122 tones of the 484-tone DRU 2 in the first data pilot area are $\left[-1010:4:-526\right] + {k}_{2}^{1}$,
indexes of 122 tones of the 484-tone DRU 3 in the first data pilot area are $\left[-1011:4:-527\right] + {k}_{2}^{1}$, and
indexes of 122 tones of the 484-tone DRU 4 in the first data pilot area are $\left[-1009:4:-525\right] + {k}_{2}^{1}$, wherein
${k}_{2}^{1} = 0 , 2 , 4 , 6 , 8$, or 10.

8. The method according to claim 6 or 7, wherein
that the any 484-tone DRU comprises 120 tones in the second data pilot area comprises:
indexes of 120 tones of the 484-tone DRU 1 in the second data pilot area are $\left[-508:4:-32\right] + {k}_{1}^{2}$,
indexes of 120 tones of the 484-tone DRU 2 in the second data pilot area are $\left[-506:4:-30\right] + {k}_{1}^{2}$,
indexes of 120 tones of the 484-tone DRU 3 in the second data pilot area are $\left[-507:4:-31\right] + {k}_{1}^{2}$, and
indexes of 120 tones of the 484-tone DRU 4 in the second data pilot area are $\left[-505:4:-29\right] + {k}_{1}^{2}$, wherein
${k}_{1}^{2} = 0 , 2 , 4 , 6 , 8 , 10 , 12 , 14$, or 16; or
that the any 484-tone DRU comprises 122 tones in the second data pilot area comprises:
indexes of 122 tones of the 484-tone DRU 1 in the second data pilot area are $\left[-508:4:-24\right] + {k}_{2}^{2}$,
indexes of 122 tones of the 484-tone DRU 2 in the second data pilot area are $\left[-506:4:-22\right] + {k}_{2}^{2}$,
indexes of 122 tones of the 484-tone DRU 3 in the second data pilot area are $\left[-507:4:-23\right] + {k}_{2}^{2}$, and
indexes of 122 tones of the 484-tone DRU 4 in the second data pilot area are $\left[-505:4:-21\right] + {k}_{2}^{2}$, wherein
${k}_{2}^{2} = 0 , 2 , 4 , 6$, or 8.

9. The method according to any one of claims 6 to 8, wherein
that the any 484-tone DRU comprises 120 tones in the third data pilot area comprises:
indexes of 120 tones of the 484-tone DRU 1 in the third data pilot area are $\left[12:4:488\right] + {k}_{1}^{3}$,
indexes of 120 tones of the 484-tone DRU 2 in the third data pilot area are $\left[14:4:490\right] + {k}_{1}^{3}$,
indexes of 120 tones of the 484-tone DRU 3 in the third data pilot area are $\left[13:4:489\right] + {k}_{1}^{3}$, and
indexes of 120 tones of the 484-tone DRU 4 in the third data pilot area are $\left[15:4:491\right] + {k}_{1}^{3}$, wherein
${k}_{1}^{3} = 0 , 2 , 4 , 6 , 8 , 10 , 12 , 14 , 16$, or 18; or
that the any 484-tone DRU comprises 122 tones in the third data pilot area comprises:
indexes of 122 tones of the 484-tone DRU 1 in the third data pilot area are $\left[12:4:496\right] + {k}_{2}^{3}$,
indexes of 122 tones of the 484-tone DRU 2 in the third data pilot area are $\left[14:4:498\right] + {k}_{2}^{3}$,
indexes of 122 tones of the 484-tone DRU 3 in the third data pilot area are $\left[13:4:497\right] + {k}_{2}^{3}$, and
indexes of 122 tones of the 484-tone DRU 4 in the third data pilot area are $\left[15:4:499\right] + {k}_{2}^{3}$, wherein
${k}_{2}^{3} = 0 , 2 , 4 , 6 , 8$, or 10.

10. method according to any one of claims 6 to 9, wherein
that the any 484-tone DRU comprises 120 tones in the fourth data pilot area comprises:
indexes of 120 tones of the 484-tone DRU 1 in the fourth data pilot area are $\left[516:4:992\right] + {k}_{1}^{4}$,
indexes of 120 tones of the 484-tone DRU 2 in the fourth data pilot area are $\left[518:4:994\right] + {k}_{1}^{4}$,
indexes of 120 tones of the 484-tone DRU 3 in the fourth data pilot area are $\left[517:4:993\right] + {k}_{1}^{4}$, and
indexes of 120 tones of the 484-tone DRU 4 in the fourth data pilot area are $\left[519:4:995\right] + {k}_{1}^{4}$, wherein
${k}_{1}^{4} = 0 , 2 , 4 , 6 , 8 , 10 , 12 , 14$, or 16; or
that the any 484-tone DRU comprises 122 tones in the fourth data pilot area comprises:
indexes of 122 tones of the 484-tone DRU 1 in the fourth data pilot area are $\left[516:4:1000\right] + {k}_{2}^{4}$,
indexes of 122 tones of the 484-tone DRU 2 in the fourth data pilot area are $\left[518:4:1002\right] + {k}_{2}^{4}$,
indexes of 122 tones of the 484-tone DRU 3 in the fourth data pilot area are $\left[517:4:1001\right] + {k}_{2}^{4}$, and
indexes of 122 tones of the 484-tone DRU 4 in the fourth data pilot area are $\left[519:4:1003\right] + {k}_{2}^{4}$, wherein
${k}_{2}^{4} = 0 , 2 , 4 , 6$, or 8.

11. The method according to any one of claims 6 to 10, wherein
indexes of the 484-tone DRU 1 are [-1012:4:-536, -508:4:-24, 12:4:488, 516:4:1000];
indexes of the 484-tone DRU 2 are [-1010:4:-534, -506:4:-22, 14:4:490, 518:4:1002];
indexes of the 484-tone DRU 3 are [-1011:4:-535, -507:4:-23, 13:4:489, 517:4:1001]; and
indexes of the 484-tone DRU 4 are [-1009:4:-533, -505:4:-21, 15:4:491, 519:4:1003].

12. A communication method, wherein the method comprises:
sending or receiving an orthogonal frequency division multiplexing OFDM symbol based on a tone plan corresponding to a first bandwidth, wherein
the tone plan corresponding to the first bandwidth comprises a first guard area, a first data pilot area, a first direct current area, a second data pilot area, a second direct current area, a third data pilot area, a third direct current area, a fourth data pilot area, and a second guard area;
the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area;
a 242-tone DRU 1, a 242-tone DRU 2, a 242-tone DRU 3, a 242-tone DRU 4, a 242-tone DRU 5, a 242-tone DRU 6, a 242-tone DRU 7 and a 242-tone DRU 8 are all distributed in the first data pilot area, the second data pilot area, the third data pilot area, and the fourth data pilot area; and
the 242-tone DRU 1 to the 242-tone DRU 8 meet at least one of the following:
an index difference between adjacent tones, of any one of the 242-tone DRU 1 to the 242-tone DRU 8, distributed in the first data pilot area is 8, an index difference between adjacent tones, of the any 242-tone DRU, distributed in the second data pilot area is 8, an index difference between adjacent tones, of the any 242-tone DRU, distributed in the third data pilot area is 8, and an index difference between adjacent tones, of the any 242-tone DRU, distributed in the fourth data pilot area is 8; and
a p^{th} tone in the 242-tone DRU 1, a p^{th} tone in the 242-tone DRU 2, a p^{th} tone in the 242-tone DRU 3, a p^{th} tone in the 242-tone DRU 4, a p^{th} tone in the 242-tone DRU 5, a p^{th} tone in the 242-tone DRU 6, a p^{th} tone in the 242-tone DRU 7, and a p^{th} tone in the 242-tone DRU 8 are contiguous.

13. The method according to claim 12, wherein
the any 242-tone DRU comprises 60 tones or 61 tones in the first data pilot area;
the any 242-tone DRU comprises 60 tones or 61 tones in the second data pilot area;
the any 242-tone DRU comprises 60 tones or 61 tones in the third data pilot area; and
the any 242-tone DRU comprises 60 tones or 61 tones in the fourth data pilot area.

14. The method according to claim 12 or 13, wherein
for the any 242-tone DRU, a difference between an index of a last tone of the 242-tone DRU in the first data pilot area and an index of a first tone of the 242-tone DRU in the second data pilot area is an integer multiple of 8, a difference between an index of a last tone of the 242-tone DRU in the second data pilot area and an index of a first tone of the 242-tone DRU in the third data pilot area is an integer multiple of 8, and a difference between an index of a last tone of the 242-tone DRU in the third data pilot area and an index of a first tone of the 242-tone DRU in the fourth data pilot area is an integer multiple of 8.

15. The method according to any one of claims 12 to 14, wherein
indexes of the first data pilot area are [-1012:-515], indexes of the second data pilot area are [-509:-12], indexes of the third data pilot area are [12:509], and indexes of the fourth data pilot area are [515:1012].

16. The method according to claim 15, wherein
that the any 242-tone DRU comprises 60 tones in the first data pilot area comprises:
indexes of 60 tones of the 242-tone DRU 1 in the first data pilot area are $\left[-1012:8:-540\right] + {p}_{1}^{1}$,
indexes of 60 tones of the 242-tone DRU 2 in the first data pilot area are $\left[-1008:8:-536\right] + {p}_{1}^{1}$,
indexes of 60 tones of the 242-tone DRU 3 in the first data pilot area are $\left[-1010:8:-538\right] + {p}_{1}^{1}$,
indexes of 60 tones of the 242-tone DRU 4 in the first data pilot area are $\left[-1006:8:-534\right] + {p}_{1}^{1}$,
indexes of 60 tones of the 242-tone DRU 5 in the first data pilot area are $\left[-1011:8:-539\right] + {p}_{1}^{1}$,
indexes of 60 tones of the 242-tone DRU 6 in the first data pilot area are $\left[-1007:8:-535\right] + {p}_{1}^{1}$,
indexes of 60 tones of the 242-tone DRU 7 in the first data pilot area are $\left[-1009:8:-537\right] + {p}_{1}^{1}$, and
indexes of 60 tones of the 242-tone DRU 8 in the first data pilot area are $\left[-1005:8:-533\right] + {p}_{1}^{1}$, wherein
${p}_{1}^{1} = 0 , 2 , 4 , 8 , 10 , 12 , 14 , 16$, or 18; or
that the any 242-tone DRU comprises 61 tones in the first data pilot area comprises:
indexes of 61 tones of the 242-tone DRU 1 in the first data pilot area are $\left[-1012:8:-532\right] + {p}_{2}^{1}$,
indexes of 61 tones of the 242-tone DRU 2 in the first data pilot area are $\left[-1008:8:-528\right] + {p}_{2}^{1}$,
indexes of 61 tones of the 242-tone DRU 3 in the first data pilot area are $\left[-1010:8:-530\right] + {p}_{2}^{1}$,
indexes of 61 tones of the 242-tone DRU 4 in the first data pilot area are $\left[-1006:8:-526\right] + {p}_{2}^{1}$,
indexes of 61 tones of the 242-tone DRU 5 in the first data pilot area are $\left[-1011:8:-531\right] + {p}_{2}^{1}$,
indexes of 61 tones of the 242-tone DRU 6 in the first data pilot area are $\left[-1007:8:-527\right] + {p}_{2}^{1}$,
indexes of 61 tones of the 242-tone DRU 7 in the first data pilot area are $\left[-1009:8:-529\right] + {p}_{2}^{1}$, and
indexes of 61 tones of the 242-tone DRU 8 in the first data pilot area are $\left[-1005:8:-525\right] + {p}_{2}^{1}$, wherein
${p}_{2}^{1} = 0 , 2 , 4 , 6 , 8$, or 10.

17. The method according to claim 15 or 16, wherein
that the any 242-tone DRU comprises 60 tones in the second data pilot area comprises:
indexes of 60 tones of the 242-tone DRU 1 in the second data pilot area are $\left[-508:8:-36\right] + {p}_{1}^{2}$,
indexes of 60 tones of the 242-tone DRU 2 in the second data pilot area are $\left[-504:8:-32\right] + {p}_{1}^{2}$,
indexes of 60 tones of the 242-tone DRU 3 in the second data pilot area are $\left[-506:8:-34\right] + {p}_{1}^{2}$,
indexes of 60 tones of the 242-tone DRU 4 in the second data pilot area are $\left[-502:8:-30\right] + {p}_{1}^{2}$,
indexes of 60 tones of the 242-tone DRU 5 in the second data pilot area are $\left[-507:8:-35\right] + {p}_{1}^{2}$,
indexes of 60 tones of the 242-tone DRU 6 in the second data pilot area are $\left[-503:8:-31\right] + {p}_{1}^{2}$,
indexes of 60 tones of the 242-tone DRU 7 in the second data pilot area are $\left[-505:8:-33\right] + {p}_{1}^{2}$, and
indexes of 60 tones of the 242-tone DRU 8 in the second data pilot area are $\left[-501:8:-29\right] + {p}_{1}^{2}$, wherein
${p}_{1}^{2} = 0 , 2 , 4 , 8 , 10 , 12 , 14$, or 16; or
that the any 242-tone DRU comprises 61 tones in the second data pilot area comprises:
indexes of 61 tones of the 242-tone DRU 1 in the second data pilot area are $\left[-508:8:-28\right] + {p}_{2}^{2}$,
indexes of 61 tones of the 242-tone DRU 2 in the second data pilot area are $\left[-504:8:-24\right] + {p}_{2}^{2}$,
indexes of 61 tones of the 242-tone DRU 3 in the second data pilot area are $\left[-506:8:-26\right] + {p}_{2}^{2}$,
indexes of 61 tones of the 242-tone DRU 4 in the second data pilot area are $\left[-502:8:-22\right] + {p}_{2}^{2}$,
indexes of 61 tones of the 242-tone DRU 5 in the second data pilot area are $\left[-507:8:-27\right] + {p}_{2}^{2}$,
indexes of the 61 tones of the 242-tone DRU 6 in the second data pilot area are $\left[-503:8:-23\right] + {p}_{2}^{2}$ ,
indexes of the 61 tones of the 242-tone DRU 7 in the second data pilot area are $\left[-505:8:-25\right] + {p}_{2}^{2}$ , and
indexes of the 61 tones of the 242-tone DRU 8 in the second data pilot area are $\left[-501:8:-21\right] + {p}_{2}^{2}$ , wherein
${p}_{2}^{2} = 0 , 2 , 4 , 6$, or 8.

18. The method according to any one of claims 15 to 17, wherein
that the any 242-tone DRU comprises 60 tones in the third data pilot area comprises:
indexes of 60 tones of the 242-tone DRU 1 in the third data pilot area are $\left[12:8:484\right] + {p}_{1}^{3}$,
indexes of 60 tones of the 242-tone DRU 2 in the third data pilot area are $\left[16:8:488\right] + {p}_{1}^{3}$,
indexes of 60 tones of the 242-tone DRU 3 in the third data pilot area are $\left[14:8:486\right] + {p}_{1}^{3}$,
indexes of 60 tones of the 242-tone DRU 4 in the third data pilot area are $\left[18:8:490\right] + {p}_{1}^{3}$,
indexes of 60 tones of the 242-tone DRU 5 in the third data pilot area are $\left[13:8:485\right] + {p}_{1}^{3}$,
indexes of 60 tones of the 242-tone DRU 6 in the third data pilot area are $\left[17:8:489\right] + {p}_{1}^{3}$,
indexes of 60 tones of the 242-tone DRU 7 in the third data pilot area are $\left[15:8:487\right] + {p}_{1}^{3}$, and
indexes of 60 tones of the 242-tone DRU 8 in the third data pilot area are $\left[19:8:491\right] + {p}_{1}^{3}$, wherein
${p}_{1}^{3} = 0 , 2 , 4 , 8 , 10 , 12 , 14 , 16$, or 18; or
that the any 242-tone DRU comprises 61 tones in the third data pilot area comprises:
indexes of 61 tones of the 242-tone DRU 1 in the third data pilot area are $\left[12:8:492\right] + {p}_{2}^{3}$,
indexes of 61 tones of the 242-tone DRU 2 in the third data pilot area are $\left[16:8:496\right] + {p}_{2}^{3}$,
indexes of 61 tones of the 242-tone DRU 3 in the third data pilot area are $\left[14:8:494\right] + {p}_{2}^{3}$,
indexes of 61 tones of the 242-tone DRU 4 in the third data pilot area are $\left[18:8:498\right] + {p}_{2}^{3}$,
indexes of 61 tones of the 242-tone DRU 5 in the third data pilot area are $\left[13:8:493\right] + {p}_{2}^{3}$,
indexes of 61 tones of the 242-tone DRU 6 in the third data pilot area are $\left[17:8:497\right] + {p}_{2}^{3}$,
indexes of 61 tones of the 242-tone DRU 7 in the third data pilot area are $\left[15:8:495\right] + {p}_{2}^{3}$, and
indexes of 61 tones of the 242-tone DRU 8 in the third data pilot area are $\left[19:8:499\right] + {p}_{2}^{3}$, wherein
${p}_{2}^{3} = 0 , 2 , 4 , 6 , 8$, or 10.

19. The method according to any one of claims 15 to 18, wherein
that the any 242-tone DRU comprises 60 tones in the fourth data pilot area comprises:
indexes of 60 tones of the 242-tone DRU 1 in the fourth data pilot area are $\left[516:8:988\right] + {p}_{1}^{4}$,
indexes of 60 tones of the 242-tone DRU 2 in the fourth data pilot area are $\left[520:8:992\right] + {p}_{1}^{4}$,
indexes of 60 tones of the 242-tone DRU 3 in the fourth data pilot area are $\left[518:8:990\right] + {p}_{1}^{4}$,
indexes of 60 tones of the 242-tone DRU 4 in the fourth data pilot area are $\left[522:8:994\right] + {p}_{1}^{4}$,
indexes of 60 tones of the 242-tone DRU 5 in the fourth data pilot area are $\left[517:8:989\right] + {p}_{1}^{4}$,
indexes of 60 tones of the 242-tone DRU 6 in the fourth data pilot area are $\left[521:8:993\right] + {p}_{1}^{4}$,
indexes of 60 tones of the 242-tone DRU 7 in the fourth data pilot area are $\left[519:8:991\right] + {p}_{1}^{4}$, and
indexes of 60 tones of the 242-tone DRU 8 in the fourth data pilot area are $\left[523:8:995\right] + {p}_{1}^{4}$, wherein
${p}_{1}^{4} = 0 , 2 , 4 , 6 , 8 , 10 , 12 , 14$, or 16; or
that the any 242-tone DRU comprises 61 tones in the fourth data pilot area comprises:
indexes of 61 tones of the 242-tone DRU 1 in the fourth data pilot area are $\left[516:8:996\right] + {p}_{2}^{4}$,
indexes of 61 tones of the 242-tone DRU 2 in the fourth data pilot area are $\left[520:8:1000\right] + {p}_{2}^{4}$,
indexes of 61 tones of the 242-tone DRU 3 in the fourth data pilot area are $\left[518:8:998\right] + {p}_{2}^{4}$,
indexes of 61 tones of the 242-tone DRU 4 in the fourth data pilot area are $\left[522:8:1002\right] + {p}_{2}^{4}$,
indexes of 61 tones of the 242-tone DRU 5 in the fourth data pilot area are $\left[517:8:997\right] + {p}_{2}^{4}$,
indexes of 61 tones of the 242-tone DRU 6 in the fourth data pilot area are $\left[521:8:1001\right] + {p}_{2}^{4}$,
indexes of 61 tones of the 242-tone DRU 7 in the fourth data pilot area are $\left[519:8:999\right] + {p}_{2}^{4}$, and
indexes of 61 tones of the 242-tone DRU 8 in the fourth data pilot area are $\left[523:8:1003\right] + {p}_{2}^{4}$, wherein
${p}_{2}^{4} = 0 , 2 , 4 , 6$, or 8.

20. The method according to any one of claims 15 to 19, wherein
indexes of the 242-tone DRU 1 is [-1012:8:-540, -508:8:-28, 12:8:484, 516:8:996];
indexes of the 242-tone DRU 2 are [-1008:8:-536, -504:8:-24, 16:8:488, 520:8:1000];
indexes of the 242-tone DRU 3 are [-1010:8:-538, -506:8:-26, 14:8:486, 518:8:998];
indexes of the 242-tone DRU 4 are [-1006:8:-534, -502:8:-22, 18:8:490, 522:8:1002];
indexes of the 242-tone DRU 5 are [-1011:8:-539, -507:8:-27, 13:8:485, 517:8:997];
indexes of the 242-tone DRU 6 are [-1007:8:-535, -503:8:-23, 17:8:489, 521:8:1001];
indexes of the 242-tone DRU 7 are [-1009:8:-537, -505:8:-25, 15:8:487, 519:8:999]; and
indexes of the 242-tone DRU 8 are [-1005:8:-533, -501:8:-21, 19:8:491, 523:8:1003].

21. A communication method, wherein the method comprises:
sending or receiving an orthogonal frequency division multiplexing OFDM symbol based on a tone plan corresponding to a first bandwidth, wherein
the tone plan corresponding to the first bandwidth comprises a first guard area, a first data pilot area, a first direct current area, a second data pilot area, a second direct current area, a third data pilot area, a third direct current area, a fourth data pilot area, and a second guard area;
the first data pilot area is located between the first guard area and the first direct current area, the second data pilot area is located between the first direct current area and the second direct current area, the third data pilot area is located between the second direct current area and the third direct current area, and the fourth data pilot area is located between the third direct current area and the second guard area;
a 106-tone DRU 1, a 106-tone DRU 2, a 106-tone DRU 3, a 106-tone DRU 4, a 106-tone DRU 5, a 106-tone DRU 6, a 106-tone DRU 7, a 106-tone DRU 8, a 106-tone DRU 9, a 106-tone DRU 10, a 106-tone DRU 11, a 106-tone DRU 12, a 106-tone DRU 13, a 106-tone DRU 14, a 106-tone DRU 15 and a 106-tone DRU 16 are all distributed in the first data pilot area, the second data pilot area, the third data pilot area, and the fourth data pilot area; and
the 106-tone DRU 1 to the 106-tone DRU 16 meet at least one of the following:
an index difference between adjacent tones, of any one of the 106-tone DRU 1 to the 106-tone DRU 16, distributed in the first data pilot area is 16, an index difference between adjacent tones, of the any 106-tone DRU, distributed in the second data pilot area is 16, an index difference between adjacent tones, of the any 106-tone DRU, distributed in the third data pilot area is 8, and an index difference between adjacent tones, of the any 106-tone DRU, distributed in the fourth data pilot area is 16; and
a p^{th} tone in the 106-tone DRU 1, a p^{th} tone in the 106-tone DRU 2, a p^{th} tone in the 106-tone DRU 3, a p^{th} tone in the 106-tone DRU 4, a p^{th} tone in the 106-tone DRU 5, a p^{th} tone in the 106-tone DRU 6, a p^{th} tone in the 106-tone DRU 7, a p^{th} tone in the 106-tone DRU 8, a p^{th} tone in the 106-tone DRU 9, a p^{th} tone in the 106-tone DRU 10, a p^{th} tone in the 106-tone DRU 11, a p^{th} tone in the 106-tone DRU 12, a p^{th} tone in the 106-tone DRU 13, a p^{th} tone in the 106-tone DRU 14, a p^{th} tone in the 106-tone DRU 15, and a p^{th} tone in the 106-tone DRU 16 are contiguous.

22. The method according to claim 21, wherein
the any 106-tone DRU comprises 26 tones or 27 tones in the first data pilot area;
the any 106-tone DRU comprises 26 tones or 27 tones in the second data pilot area;
the any 106-tone DRU comprises 26 tones or 27 tones in the third data pilot area; and
the any 106-tone DRU comprises 26 tones or 27 tones in the fourth data pilot area.

23. The method according to claim 21 or 22, wherein
for the any 106-tone DRU, a difference between an index of a last tone of the 106-tone DRU in the first data pilot area and an index of a first tone of the 106-tone DRU in the second data pilot area is an integer multiple of 16, a difference between an index of a last tone of the 106-tone DRU in the second data pilot area and an index of a first tone of the 106-tone DRU in the third data pilot area is an integer multiple of 16, and a difference between an index of a last tone of the 106-tone DRU in the third data pilot area and an index of a first tone of the 106-tone DRU in the fourth data pilot area is an integer multiple of 16.

24. The method according to any one of claims 21 to 23, comprising:
indexes of the first data pilot area are [-1012:-515], indexes of the second data pilot area are [-509:-12], indexes of the third data pilot area are [12:509], and indexes of the fourth data pilot area are [515:1012].

25. The method according to claim 24, wherein
that the any 106-tone DRU comprises 26 tones in the first data pilot area comprises:
indexes of 26 tones of the 106-tone DRU 1 in the first data pilot area are $\left[-1012:16:-612\right] + {q}_{1}^{1}$,
indexes of 26 tones of the 106-tone DRU 2 in the first data pilot area are $\left[-1004:16:-604\right] + {q}_{1}^{1}$,
indexes of 26 tones of the 106-tone DRU 3 in the first data pilot area are $\left[-1008:16:-608\right] + {q}_{1}^{1}$,
indexes of 26 tones of the 106-tone DRU 4 in the first data pilot area are $\left[-1000:16:-600\right] + {q}_{1}^{1}$,
indexes of 26 tones of the 106-tone DRU 5 in the first data pilot area are $\left[-1010:16:-610\right] + {q}_{1}^{1}$,
indexes of 26 tones of the 106-tone DRU 6 in the first data pilot area are $\left[-1002:16:-602\right] + {q}_{1}^{1}$,
indexes of 26 tones of the 106-tone DRU 7 in the first data pilot area are $\left[-1006:16:-606\right] + {q}_{1}^{1}$,
indexes of 26 tones of the 106-tone DRU 8 in the first data pilot area are $\left[-998:16:-598\right] + {q}_{1}^{1}$,
indexes of 26 tones of the 106-tone DRU 9 in the first data pilot area are $\left[-1011:16:-611\right] + {q}_{1}^{1}$,
indexes of 26 tones of the 106-tone DRU 10 in the first data pilot area are $\left[-1003:16:-603\right] + {q}_{1}^{1}$ ,
indexes of 26 tones of the 106-tone DRU 11 in the first data pilot area are $\left[-1007:16:-607\right] + {q}_{1}^{1}$,
indexes of 26 tones of the 106-tone DRU 12 in the first data pilot area are $\left[-999:16:-599\right] + {q}_{1}^{1}$,
indexes of 26 tones of the 106-tone DRU 13 in the first data pilot area are $\left[-1009:16:-609\right] + {q}_{1}^{1}$ ,
indexes of 26 tones of the 106-tone DRU 14 in the first data pilot area are $\left[-1001:16:-601\right] + {q}_{1}^{1}$ ,
indexes of 26 tones of the 106-tone DRU 15 in the first data pilot area are $\left[-1005:16:-605\right] + {q}_{1}^{1}$ , and
indexes of 26 tones of the 106-tone DRU 16 in the first data pilot area are $\left[-997:16:-597\right] + {q}_{1}^{1}$;
or
that the any 106-tone DRU comprises 27 tones in the first data pilot area comprises:
indexes of 27 tones of the 106-tone DRU 1 in the first data pilot area are $\left[-1012:16:-596\right] + {q}_{2}^{1}$,
indexes of 27 tones of the 106-tone DRU 2 in the first data pilot area are $\left[-1004:16:-588\right] + {q}_{2}^{1}$,
indexes of 27 tones of the 106-tone DRU 3 in the first data pilot area are $\left[-1008:16:-592\right] + {q}_{2}^{1}$,
indexes of 27 tones of the 106-tone DRU 4 in the first data pilot area are $\left[-1000:16:-584\right] + {q}_{2}^{1}$,
indexes of 27 tones of the 106-tone DRU 5 in the first data pilot area are $\left[-1010:16:-594\right] + {q}_{2}^{1}$,
indexes of 27 tones of the 106-tone DRU 6 in the first data pilot area are $\left[-1002:16:-586\right] + {q}_{2}^{1}$,
indexes of 27 tones of the 106-tone DRU 7 in the first data pilot area are $\left[-1006:16:-590\right] + {q}_{2}^{1}$,
indexes of 27 tones of the 106-tone DRU 8 in the first data pilot area are $\left[-998:16:-592\right] + {q}_{2}^{1}$,
indexes of 27 tones of the 106-tone DRU 9 in the first data pilot area are $\left[-1011:16:-595\right] + {q}_{2}^{1}$,
indexes of 27 tones of the 106-tone DRU 10 in the first data pilot area are $\left[-1003:16:-587\right] + {q}_{2}^{1}$ ,
indexes of 27 tones of the 106-tone DRU 11 in the first data pilot area are $\left[-1007:16:-591\right] + {q}_{2}^{1}$,
indexes of 26 tones of the 106-tone DRU 12 in the first data pilot area are $\left[-999:16:-583\right] + {q}_{2}^{1}$,
indexes of 26 tones of the 106-tone DRU 13 in the first data pilot area are $\left[-1009:16:-593\right] + {q}_{2}^{1}$ ,
indexes of 26 tones of the 106-tone DRU 14 in the first data pilot area are $\left[-1001:16:-585\right] + {q}_{2}^{1}$ ,
indexes of 26 tones of the 106-tone DRU 15 in the first data pilot area are $\left[-1005:16:-589\right] + {q}_{2}^{1}$ , and
indexes of 26 tones of the 106-tone DRU 16 in the first data pilot area are $\left[-997:16:-581\right] + {q}_{2}^{1}$.

26. The method according to claim 24 or 25, wherein
that the any 106-tone DRU comprises 26 tones in the second data pilot area comprises:
indexes of 26 tones of the 106-tone DRU 1 in the second data pilot area are $\left[-500:16:-100\right] + {q}_{1}^{2}$ ,
indexes of 26 tones of the 106-tone DRU 2 in the second data pilot area are $\left[-492:16:-92\right] + {q}_{1}^{2}$,
indexes of 26 tones of the 106-tone DRU 3 in the second data pilot area are $\left[-496:16:-96\right] + {q}_{1}^{2}$,
indexes of 26 tones of the 106-tone DRU 4 in the second data pilot area are $\left[-488:16:-88\right] + {q}_{1}^{2}$,
indexes of 26 tones of the 106-tone DRU 5 in the second data pilot area are $\left[-498:16:-986\right] + {q}_{1}^{2}$ ,
indexes of 26 tones of the 106-tone DRU 6 in the second data pilot area are $\left[-490:16:-90\right] + {q}_{1}^{2}$,
indexes of 26 tones of the 106-tone DRU 7 in the second data pilot area are $\left[-494:16:-94\right] + {q}_{1}^{2}$,
indexes of 26 tones of the 106-tone DRU 8 in the second data pilot area are $\left[-486:16:-86\right] + {q}_{1}^{2}$,
indexes of 26 tones of the 106-tone DRU 9 in the second data pilot area are $\left[-499:16:-99\right] + {q}_{1}^{2}$,
indexes of 26 tones of the 106-tone DRU 10 in the second data pilot area are $\left[-491:16:-91\right] + {q}_{1}^{2}$ ,
indexes of 26 tones of the 106-tone DRU 11 in the second data pilot area are $\left[-495:16:-95\right] + {q}_{1}^{2}$ ,
indexes of 26 tones of the 106-tone DRU 12 in the second data pilot area are $\left[-487:16:-87\right] + {q}_{1}^{2}$ ,
indexes of 26 tones of the 106-tone DRU 13 in the second data pilot area are $\left[-497:16:-97\right] + {q}_{1}^{2}$ ,
indexes of 26 tones of the 106-tone DRU 14 in the second data pilot area are $\left[-489:16:-89\right] + {q}_{1}^{2}$ ,
indexes of 26 tones of the 106-tone DRU 15 in the second data pilot area are $\left[-493:16:-93\right] + {q}_{1}^{2}$ , and
indexes of 26 tones of the 106-tone DRU 16 in the second data pilot area are $\left[-485:16:-85\right] + {q}_{1}^{2}$ ;
or
that the any 106-tone DRU comprises 27 tones in the second data pilot area comprises:
indexes of 27 tones of the 106-tone DRU 1 in the second data pilot area are $\left[-500:16:-84\right] + {q}_{2}^{2}$,
indexes of 27 tones of the 106-tone DRU 2 in the second data pilot area are $\left[-492:16:-76\right] + {q}_{2}^{2}$,
indexes of 27 tones of the 106-tone DRU 3 in the second data pilot area are $\left[-496:16:-80\right] + {q}_{2}^{2}$,
indexes of 27 tones of the 106-tone DRU 4 in the second data pilot area are $\left[-488:16:-72\right] + {q}_{2}^{2}$,
indexes of 27 tones of the 106-tone DRU 5 in the second data pilot area are $\left[-498:16:-82\right] + {q}_{2}^{2}$,
indexes of 27 tones of the 106-tone DRU 6 in the second data pilot area are $\left[-490:16:-74\right] + {q}_{2}^{2}$,
indexes of 27 tones of the 106-tone DRU 7 in the second data pilot area are $\left[-494:16:-78\right] + {q}_{2}^{2}$,
indexes of 27 tones of the 106-tone DRU 8 in the second data pilot area are $\left[-486:16:-70\right] + {q}_{2}^{2}$,
indexes of 27 tones of the 106-tone DRU 9 in the second data pilot area are $\left[-499:16:-83\right] + {q}_{2}^{2}$,
indexes of 27 tones of the 106-tone DRU 10 in the second data pilot area are $\left[-491:16:-75\right] + {q}_{2}^{2}$ ,
indexes of 27 tones of the 106-tone DRU 11 in the second data pilot area are $\left[-495:16:-79\right] + {q}_{2}^{2}$ ,
indexes of 27 tones of the 106-tone DRU 12 in the second data pilot area are $\left[-487:16:-71\right] + {q}_{2}^{2}$ ,
indexes of 27 tones of the 106-tone DRU 13 in the second data pilot area are $\left[-497:16:-82\right] + {q}_{2}^{2}$ ,
indexes of 27 tones of the 106-tone DRU 14 in the second data pilot area are $\left[-489:16:-73\right] + {q}_{2}^{2}$ ,
indexes of 27 tones of the 106-tone DRU 15 in the second data pilot area are $\left[-493:16:-77\right] + {q}_{2}^{2}$ , and
indexes of 27 tones of the 106-tone DRU 16 in the second data pilot area are $\left[-485:16:-69\right] + {q}_{2}^{2}$ .

27. The method according to any one of claims 24 to 26, wherein
that the any 106-tone DRU comprises 26 tones in the third data pilot area comprises:
indexes of 26 tones of the 106-tone DRU 1 in the third data pilot area are $\left[12:16:412\right] + {q}_{1}^{3}$,
indexes of 26 tones of the 106-tone DRU 2 in the third data pilot area are $\left[20:16:420\right] + {q}_{1}^{3}$,
indexes of 26 tones of the 106-tone DRU 3 in the third data pilot area are $\left[16:16:416\right] + {q}_{1}^{3}$,
indexes of 26 tones of the 106-tone DRU 4 in the third data pilot area are $\left[24:16:424\right] + {q}_{1}^{3}$,
indexes of 26 tones of the 106-tone DRU 5 in the third data pilot area are $\left[14:16:414\right] + {q}_{1}^{3}$,
indexes of 26 tones of the 106-tone DRU 6 in the third data pilot area are $\left[22:16:422\right] + {q}_{1}^{3}$,
indexes of 26 tones of the 106-tone DRU 7 in the third data pilot area are $\left[18:16:418\right] + {q}_{1}^{3}$,
indexes of 26 tones of the 106-tone DRU 8 in the third data pilot area are $\left[26:16:426\right] + {q}_{1}^{3}$,
indexes of 26 tones of the 106-tone DRU 9 in the third data pilot area are $\left[13:16:413\right] + {q}_{1}^{3}$,
indexes of 26 tones of the 106-tone DRU 10 in the third data pilot area are $\left[21:16:421\right] + {q}_{1}^{3}$,
indexes of 26 tones of the 106-tone DRU 11 in the third data pilot area are $\left[17:16:417\right] + {q}_{1}^{3}$,
indexes of 26 tones of the 106-tone DRU 12 in the third data pilot area are $\left[25:16:425\right] + {q}_{1}^{3}$,
indexes of 26 tones of the 106-tone DRU 13 in the third data pilot area are $\left[15:16:415\right] + {q}_{1}^{3}$,
indexes of 26 tones of the 106-tone DRU 14 in the third data pilot area are $\left[23:16:423\right] + {q}_{1}^{3}$,
indexes of 26 tones of the 106-tone DRU 15 in the third data pilot area are $\left[19:16:419\right] + {q}_{1}^{3}$, and
indexes of 26 tones of the 106-tone DRU 16 in the third data pilot area are $\left[27:16:427\right] + {q}_{1}^{3}$;
or
that the any 106-tone DRU comprises 27 tones in the third data pilot area comprises:
indexes of 27 tones of the 106-tone DRU 1 in the third data pilot area are $\left[12:16:428\right] + {q}_{1}^{3}$,
indexes of 27 tones of the 106-tone DRU 2 in the third data pilot area are $\left[20:16:436\right] + {q}_{1}^{3}$,
indexes of 27 tones of the 106-tone DRU 3 in the third data pilot area are $\left[16:16:432\right] + {q}_{1}^{3}$,
indexes of 27 tones of the 106-tone DRU 4 in the third data pilot area are $\left[24:16:440\right] + {q}_{1}^{3}$,
indexes of 27 tones of the 106-tone DRU 5 in the third data pilot area are $\left[14:16:430\right] + {q}_{1}^{3}$,
indexes of 27 tones of the 106-tone DRU 6 in the third data pilot area are $\left[22:16:438\right] + {q}_{1}^{3}$,
indexes of 27 tones of the 106-tone DRU 7 in the third data pilot area are $\left[18:16:434\right] + {q}_{1}^{3}$,
indexes of 27 tones of the 106-tone DRU 8 in the third data pilot area are $\left[26:16:442\right] + {q}_{1}^{3}$,
indexes of 27 tones of the 106-tone DRU 9 in the third data pilot area are $\left[13:16:429\right] + {q}_{1}^{3}$,
indexes of 27 tones of the 106-tone DRU 10 in the third data pilot area are $\left[21:16:437\right] + {q}_{1}^{3}$,
indexes of 27 tones of the 106-tone DRU 11 in the third data pilot area are $\left[17:16:433\right] + {q}_{1}^{3}$,
indexes of 27 tones of the 106-tone DRU 12 in the third data pilot area are $\left[25:16:441\right] + {q}_{1}^{3}$,
indexes of 27 tones of the 106-tone DRU 13 in the third data pilot area are $\left[15:16:431\right] + {q}_{1}^{3}$,
indexes of 27 tones of the 106-tone DRU 14 in the third data pilot area are $\left[23:16:439\right] + {q}_{1}^{3}$,
indexes of 27 tones of the 106-tone DRU 15 in the third data pilot area are $\left[19:16:435\right] + {q}_{1}^{3}$, and
indexes of 27 tones of the 106-tone DRU 16 in the third data pilot area are $\left[27:16:443\right] + {q}_{1}^{3}$.

28. The method according to any one of claims 24 to 27, wherein
that the any 106-tone DRU comprises 26 tones in the fourth data pilot area comprises:
indexes of 26 tones of the 106-tone DRU 1 in the fourth data pilot area are $\left[524:16:924\right] + {q}_{1}^{4}$,
indexes of 26 tones of the 106-tone DRU 2 in the fourth data pilot area are $\left[532:16:932\right] + {q}_{1}^{4}$,
indexes of 26 tones of the 106-tone DRU 3 in the fourth data pilot area are $\left[528:16:928\right] + {q}_{1}^{4}$,
indexes of 26 tones of the 106-tone DRU 4 in the fourth data pilot area are $\left[536:16:936\right] + {q}_{1}^{4}$,
indexes of 26 tones of the 106-tone DRU 5 in the fourth data pilot area are $\left[526:16:926\right] + {q}_{1}^{4}$,
indexes of 26 tones of the 106-tone DRU 6 in the fourth data pilot area are $\left[534:16:934\right] + {q}_{1}^{4}$,
indexes of 26 tones of the 106-tone DRU 7 in the fourth data pilot area are $\left[530:16:930\right] + {q}_{1}^{4}$,
indexes of 26 tones of the 106-tone DRU 8 in the fourth data pilot area are $\left[538:16:938\right] + {q}_{1}^{4}$,
indexes of 26 tones of the 106-tone DRU 9 in the fourth data pilot area are $\left[529:16:925\right] + {q}_{1}^{4}$,
indexes of 26 tones of the 106-tone DRU 10 in the fourth data pilot area are $\left[533:16:933\right] + {q}_{1}^{4}$,
indexes of 26 tones of the 106-tone DRU 11 in the fourth data pilot area are $\left[529:16:929\right] + {q}_{1}^{4}$,
indexes of 26 tones of the 106-tone DRU 12 in the fourth data pilot area are $\left[537:16:937\right] + {q}_{1}^{4}$,
indexes of 26 tones of the 106-tone DRU 13 in the fourth data pilot area are $\left[527:16:927\right] + {q}_{1}^{4}$,
indexes of 26 tones of the 106-tone DRU 14 in the fourth data pilot area are $\left[535:16:935\right] + {q}_{1}^{4}$,
indexes of 26 tones of the 106-tone DRU 15 in the fourth data pilot area are $\left[531:16:931\right] + {q}_{1}^{4}$, and
indexes of 26 tones of the 106-tone DRU 16 in the fourth data pilot area are $\left[539:16:939\right] + {q}_{1}^{4}$;
or
that the any 106-tone DRU comprises 27 tones in the fourth data pilot area comprises:
indexes of 27 tones of the 106-tone DRU 1 in the fourth data pilot area are $\left[524:16:940\right] + {q}_{2}^{4}$,
indexes of 27 tones of the 106-tone DRU 2 in the fourth data pilot area are $\left[532:16:948\right] + {q}_{2}^{4}$,
indexes of 27 tones of the 106-tone DRU 3 in the fourth data pilot area are $\left[528:16:944\right] + {q}_{2}^{4}$,
indexes of 27 tones of the 106-tone DRU 4 in the fourth data pilot area are $\left[536:16:952\right] + {q}_{2}^{4}$,
indexes of 27 tones of the 106-tone DRU 5 in the fourth data pilot area are $\left[526:16:942\right] + {q}_{2}^{4}$,
indexes of 27 tones of the 106-tone DRU 6 in the fourth data pilot area are $\left[534:16:950\right] + {q}_{2}^{4}$,
indexes of 27 tones of the 106-tone DRU 7 in the fourth data pilot area are $\left[530:16:946\right] + {q}_{2}^{4}$,
indexes of 27 tones of the 106-tone DRU 8 in the fourth data pilot area are $\left[538:16:954\right] + {q}_{2}^{4}$,
indexes of 27 tones of the 106-tone DRU 9 in the fourth data pilot area are $\left[525:16:941\right] + {q}_{2}^{4}$,
indexes of 27 tones of the 106-tone DRU 10 in the fourth data pilot area are $\left[533:16:949\right] + {q}_{2}^{4}$,
indexes of 27 tones of the 106-tone DRU 11 in the fourth data pilot area are $\left[529:16:945\right] + {q}_{2}^{4}$,
indexes of 27 tones of the 106-tone DRU 12 in the fourth data pilot area are $\left[537:16:953\right] + {q}_{2}^{4}$,
indexes of 27 tones of the 106-tone DRU 13 in the fourth data pilot area are $\left[527:16:943\right] + {q}_{2}^{4}$,
indexes of 27 tones of the 106-tone DRU 14 in the fourth data pilot area are $\left[535:16:951\right] + {q}_{2}^{4}$,
indexes of 27 tones of the 106-tone DRU 15 in the fourth data pilot area are $\left[531:16:947\right] + {q}_{2}^{4}$, and
indexes of 27 tones of the 106-tone DRU 16 in the fourth data pilot area are $\left[539:16:955\right] + {q}_{2}^{4}$.

29. The method according to any one of claims 24 to 28, wherein
indexes of the 106-tone DRU 1 are [-1012:16:-612, -500:16:-84, 12:16:412, 524:16:940];
indexes of the 106-tone DRU 2 are [-1004:16:-604, -492:16:-76, 20:16:420, 532:16:948];
indexes of the 106-tone DRU 3 are [-1008:16:-608, -496:16:-80, 16:16:416, 528:16:944];
indexes of the 106-tone DRU 4 are [-1000:16:-600, -488:16:-72, 24:16:424, 536:16:952];
indexes of the 106-tone DRU 5 are [-1010:16:-610, -498:16:-82, 14:16:414, 526:16:942];
indexes of the 106-tone DRU 6 are [-1002:16:-602, -490:16:-74, 22:16:422, 534:16:950];
indexes of the 106-tone DRU 7 are [-1006:16:-606, -494:16:-78, 18:16:418, 530:16:946];
indexes of the 106-tone DRU 8 are [-998:16:-598, -486:16:-70, 26:16:426, 538:16:954],
indexes of the 106-tone DRU 9 are [-1011:16:-611, -499:16:-83, 13:16:413, 525:16:941];
indexes of the 106-tone DRU 10 are [-1003:16:-603, -491:16:-75, 21:16:421, 533:16:949];
indexes of the 106-tone DRU 11 are [-1007:16:-607, -495:16:-79, 17:16:417, 529:16:945],
indexes of the 106-tone DRU 12 are [-999:16:-599, -487:16:-71, 25:16:425, 537:16:953];
indexes of the 106-tone DRU 13 are [-1009:16:-609, -497:16:-81, 15:16:415, 527:16:943];
indexes of the 106-tone DRU 14 are [-1001:16:-601, -489:16:-73, 23:16:423, 535:16:951];
indexes of the 106-tone DRU 15 are [-1005:16:-605, -493:16:-77, 19:16:419, 531:16:947]; and
indexes of the 106-tone DRU 16 are [-997:16:-597, -485:16:-69, 27:16:427, 539:16:955].

30. A communication apparatus, comprising a module configured to perform the method according to any one of claims 1 to 29.

31. A communication apparatus, comprising a processor, wherein the processor is configured to perform the method according to any one of claims 1 to 29.

32. A communication apparatus, comprising a logic circuit and an interface, wherein the logic circuit is coupled to the interface; and
the interface is configured to input and/or output information, and the logic circuit is configured to perform the method according to any one of claims 1 to 29.

33. A computer-readable storage medium, wherein the computer-readable storage medium is configured to store a computer program; and when the computer program is executed, the method according to any one of claims 1 to 29 is performed.

34. A computer program product, wherein when the computer program product is executed, the method according to any one of claims 1 to 29 is performed.
